(19) **Europäisches Patentamt European Patent Office Office européen des brevets**

(11) **EP 4 769 994 A1**

(12) **EUROPEAN PATENT APPLICATION**
published in accordance with Art. 153(4) EPC

(43) Date of publication:
01.07.2026 Bulletin 2026/27

(21) Application number: 24867275.0

(22) Date of filing: 30.08.2024

(51) International Patent Classification (IPC):
*H04L 5/00* (2006.01)

(52) Cooperative Patent Classification (CPC):
H04L 5/00

(86) International application number:
PCT/CN2024/116120

(87) International publication number:
WO 2025/060863 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 CN 202311243077

(71) Applicant: HUAWEI TECHNOLOGIES CO., LTD.
Shenzhen 518129 (CN)

(72) Inventors:
• ZOU, Tong
  Shenzhen, Guangdong 518129 (CN)
• GONG, Mingxin
  Shenzhen, Guangdong 518129 (CN)
• QU, Bingyu
  Shenzhen, Guangdong 518129 (CN)

(74) Representative: **Isarpatent**
**Patent- und Rechtsanwälte Part G mbB**
**Friedrichstrasse 31**
**80801 München (DE)**

(54) **COMMUNICATION METHOD AND RELATED APPARATUS**

(57) This application provides a communication method and a related apparatus, to reduce a quantity of bit storage units needed when correlation detection is performed on a preamble, a postamble, or a mid-amble. The method includes: A first device determines a first signal based on a first sequence and sends the first signal, where the first sequence and a first generalized Golay sequence meet a preset relationship, an n-level register is configured to generate the first generalized Golay sequence, a storage depth of a $k^{th}$-level register in the n-level register is (I), a value of $P_k$ is an integer from 0 to n-1, and a value of $P_n$ is n-1; when i≠j, $P_i \neq P_j$, where values of i and j are integers from 0 to n-1; and a value of k is any integer from 1 to n, n is a positive integer, a length of the first sequence is N, and $N=2^n$. The first device receives the first signal, detects the first signal by using $1^{st}$-level to $(n-1)^{th}$-level registers in the n-level register, and determines a start location and/or an end location of the first sequence in the first signal.

300

First device

S301: Determine a
first signal based on a
first sequence

S302: First signal

Second device

S303: Detect the first signal,
and determine a start location
and/or an end location of the
first sequence in the first signal

FIG. 3

EP 4 769 994 A1

## Description

This application claims priority to Chinese Patent Application No. 202311243077.7, filed with the China National Intellectual Property Administration on September 22, 2023 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

Due to constraints of power consumption and costs, an active internet of things (internet of things, IoT) tag and a passive IoT tag are usually modulated in an on-off-keying (on-off-keying, OOK) modulation scheme. In OOK modulation, 1 and 0 are indicated by sending or not sending a signal. For the passive IoT tag, when transmitting uplink data, the passive IoT tag adds a preamble (preamble) before the data signal, adds a postamble (postamble) after the data, or inserts a mid-amble (mid-amble) in the middle of the data signal. A network device performs timing by detecting the preamble and/or the postamble, to determine a location of the data, and corrects a residual symbol error in a timely manner by detecting the mid-amble. Similarly, when the active IoT tag transmits downlink data, the network device adds a preamble before the data signal, adds a postamble after the data, or inserts a mid-amble in the middle of the data signal. The active IoT tag performs timing by detecting the preamble and/or the postamble, to determine a location of the data, and corrects a residual symbol error in a timely manner by detecting the mid-amble. A specific detection method is as follows: A receive end generates a local preamble, postamble, or mid-amble signal, performs sliding correlation on the signal and a received signal, and determines a location with a largest correlation value as a location of the preamble, postamble, or mid-amble.

Currently, when correlation detection is performed on the preamble, postamble, or mid-amble signal in uplink and downlink signals, a large quantity of bit storage units are needed, and storage complexity is high.

## SUMMARY

This application provides a communication method and a related apparatus, to reduce a quantity of bit storage units needed for performing correlation detection on a preamble, a postamble, or a mid-amble, to reduce storage complexity.

According to a first aspect, this application provides a communication method. The method may be applied to a first device. For example, the method may be performed by the first device, or may be performed by a component (for example, a chip or a chip system) configured in the first device, or may be implemented by a logical module or software that can implement all or a part of functions of the first device. This is not limited in this application.

For example, the method includes: receiving a first signal; detecting the first signal, and determining a start location and/or an end location of a first sequence in the first signal, where the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i \neq P_j$, where values of i and j are integers from 1 to n-1; and a value of k is any integer from 1 to n, n is a positive integer, a length of the first sequence is N, and N= $2^n$ .

The detecting the first signal includes: detecting the first signal by using $1^{st}$-level to (n-1)$^{th}$-level registers in the n-level register.

The storage depth of the $k^{th}$-level register is $2^{P_k}$ , that is, the $k^{th}$-level register includes $2^{P_k}$ storage units.

It may be understood that the first generalized Golay sequence corresponding to the first sequence is generated by the n-level register. Therefore, usually, when a second device performs correlation detection on the first signal including the first sequence, the n-level register is also needed to detect the first signal, and $2^n$ -1 bit storage units are needed in this process. When a storage depth of an n$^{th}$-level register is $2^{n-1}$ , in this application, the first signal including the first sequence with a length of N may be detected by using a first (n-1)-level register in the n-level register, and the n$^{th}$-level register in the n-level register is no longer needed. In this process, $2^{n-1}$ bit storage units are needed. In comparison with $2^{n-1}$ bit storage units, storage units needed for performing correlation detection in the method provided in this application are reduced by $2^{n-1}$ bit storage units, and storage complexity can be reduced by half.

According to a second aspect, this application provides a communication method. The method may be applied to a second device. For example, the method may be performed by the second device, or may be performed by a component (for example, a chip or a chip system) configured in the second device, or may be implemented by a logical module or software that can implement all or a part of functions of the second device. This is not limited in this application.

For example, the method includes: determining a first signal based on a first sequence, where the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i$≠$P_j$, where values of i and j are integers from 0 to n-1; and a value of k is any integer from 1 to n, n is a positive integer, a length of the first sequence is N, and N= $2^n$ ; and sending the first signal.

For example, that a first device determines the first signal based on the first sequence includes: The first device obtains to-be-sent data, adds the first sequence before or after the to-be-sent data, to obtain a target sequence 1, and performs encoding and modulation (for example, OOK modulation) on the target sequence 1, to obtain the first signal.

According to a third aspect, this application provides a communication method. The method includes: A first device determines a first signal based on a first sequence and sends the first information to a second device, where the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i$≠$P_j$, where values of i and j are integers from 0 to n-1; and a value of k is any integer from 1 to n, n is a positive integer, a length of the first sequence is N, and N= $2^n$. The second device receives the first signal from the first device, detects the first signal, and determines a start location and/or an end location of the first sequence in the first signal.

For example, that the second device detects the first signal includes: The second device detects the first signal by using $1^{st}$-level to $(n-1)^{th}$-level registers in the n-level register.

Optionally, N=256, and the first sequence is any sequence in a first sequence set, or the first sequence is an equivalent sequence of any sequence in the first sequence set. For descriptions of the first sequence set, refer to the following Example 1. Details are not described herein.

Optionally, N=128, and the first sequence is any sequence in a first sequence set, or the first sequence is an equivalent sequence of any sequence in the first sequence set. For descriptions of the first sequence set, refer to the following Example 2. Details are not described herein.

Optionally, N=64, and the first sequence is any sequence in a first sequence set, or the first sequence is an equivalent sequence of any sequence in the first sequence set. For descriptions of the first sequence set, refer to the following Example 3. Details are not described herein.

Optionally, N=32, and the first sequence is any sequence in a first sequence set, or the first sequence is an equivalent sequence of any sequence in the first sequence set. For descriptions of the first sequence set, refer to the following Example 4. Details are not described herein.

Optionally, N=16, and the first sequence is any sequence in a first sequence set, or the first sequence is an equivalent sequence of any sequence in the first sequence set. For descriptions of the first sequence set, refer to the following Example 5. Details are not described herein.

Optionally, N=8, and the first sequence is any sequence in a first sequence set, or the first sequence is an equivalent sequence of any sequence in the first sequence set. For descriptions of the first sequence set, refer to the following Example 6. Details are not described herein.

In this application, an equivalent sequence of any sequence in the first sequence set is a sequence obtained through negation, reversal, or negation and reversal on the any sequence.

With reference to the first aspect to the third aspect, in some implementations, the preset relationship satisfies any one of the following:

$$Y_q = 1 - 2X_q, \quad Y_q = 2X_q - 1, \quad Y_q = 1 - 2X_{N+1-q}, \quad \text{or} \quad Y_q = 2X_{N+1-q} - 1,$$

where

$Y_q$ is a $q^{th}$ element in the first generalized Golay sequence, $X_q$ is a $q^{th}$ element in the first sequence, $X_{N+1-q}$ is an $(N+1-q)^{th}$ element in the first sequence, and a value of q is any integer from 1 to N.

For example, when the first sequence is any sequence in the first sequence set, the preset relationship satisfies: $Y_q = 1-2X_q$.

For example, when the first sequence is an equivalent sequence of any sequence in the first sequence set, the preset relationship satisfies: $Y_q = 2X_q -1$, $Y_q = 1-2X_{N+1-q}$, or $Y_q = 2X_{N+1-q} -1$.

With reference to the first aspect to the third aspect, in some implementations, a value of an element in the first sequence is 0 or 1, and a quantity of elements 0 and a quantity of elements 1 in the first sequence are the same. This feature can improve anti-noise performance of the first sequence.

With reference to the first aspect to the third aspect, in some implementations, the $q^{th}$ element $Y_q = a_{M+1}(q)$ in the first generalized Golay sequence satisfies:

$$a_{k+1}(q) = a_k(q) + W_{1,k} b_k\left(q - 2^{p_k}\right),$$

and

$$b_{k+1}(q) = a_k(q) - W_{2,k} b_k\left(q - 2^{p_k}\right),$$

where

$a_{M+1}(q)$ is $a_{M+1}(q)$ when k=M+1, $a_1(q)=\delta(q-1)$, $b_1(q) = \delta(q-1)$, and the value of $q$ is any integer from 1 to N; when $q=1$, $\delta(q-1)$ =1, or when $q\neq1$, $\delta(q-1)$ =0; and $W_{1,k}$ is a k$^{th}$ element in a second sequence $[W_1]$, $W_{2,k}$ is a k$^{th}$ element in a third sequence $[W_2]$, lengths of both the second sequence $[W_1]$ and the third sequence $[W_2]$ are n, values of elements in the second sequence $[W_1]$ are 1 and/or -1, and values of elements in the third sequence $[W_2]$ are 1 and/or -1.

According to a fourth aspect, this application provides a communication apparatus, including a module or a unit configured to implement the method according to any one of the foregoing aspects and any possible implementation of any one of the foregoing aspects.

It should be understood that each module or unit may implement a corresponding function by executing a computer program.

According to a fifth aspect, this application provides a communication apparatus, including a processor, where the processor is configured to perform the method according to any one of the foregoing aspects and any possible implementation of any one of the foregoing aspects.

The communication apparatus may further include a memory, configured to store instructions and data. The memory is coupled to the processor. When the processor executes the instructions stored in the memory, the methods described in the foregoing aspects may be implemented.

The communication apparatus may further include a communication interface. The communication interface is used by the apparatus to communicate with another device. For example, the communication interface may be a transceiver, a circuit, a bus, a module, or another type of communication interface.

According to a sixth aspect, this application provides a chip system. The chip system includes at least one processor, configured to support implementation of functions in any one of the foregoing aspects and any possible implementation of any one of the foregoing aspects, for example, receiving or processing data and/or information in the foregoing method.

In a possible design, the chip system further includes a memory. The memory is configured to store program instructions and data, and the memory is located inside or outside the processor.

The chip system may include a chip, or may include a chip and another discrete device.

According to a seventh aspect, this application provides a computer-readable storage medium, including a computer program. When the computer program is run on a computer, the computer is enabled to implement the method according to any one of the foregoing aspects and any possible implementation of any one of the foregoing aspects.

According to an eighth aspect, this application provides a computer program product. The computer program product includes a computer program (which may also be referred to as code or instructions), and when the computer program is run, a computer is enabled to perform the method according to any one of the foregoing aspects and any possible implementation of any one of the foregoing aspects.

According to a ninth aspect, this application provides a communication system, including the foregoing first device and second device.

It should be understood that the second aspect to the ninth aspect of this application correspond to the technical solutions of the first aspect of this application, and beneficial effects achieved by the aspects and corresponding feasible implementations are similar. Details are not described again.

**BRIEF DESCRIPTION OF DRAWINGS**

FIG. 1 is a diagram of an architecture of a communication system applicable to a method according to an embodiment of this application;
FIG. 2 is a diagram of a location relationship between a preamble, a postamble, a mid-amble, and data according to an embodiment of this application;
FIG. 3 is a schematic flowchart of a communication method according to an embodiment of this application;
FIG. 4 is a diagram of a correlator according to an embodiment of this application;
FIG. 5 is a diagram of performing correlation by using a generalized Golay sequence with a length of 4 according to an embodiment of this application;

FIG. 6 is a diagram of a correlation process of a sequence A, a sequence B, and a received sequence R according to an embodiment of this application;

FIG. 7 is another diagram of a correlator according to an embodiment of this application;

FIG. 8 is a diagram of a correlation process of a sequence A, a sequence C, and a received sequence R according to an embodiment of this application;

FIG. 9 is a diagram of autocorrelation performance according to an embodiment of this application;

FIG. 10 is a diagram of cumulative probability distribution of a computational complexity reduction proportion of a sequence in a candidate set of a first sequence when N=32 according to an embodiment of this application; and

FIG. 11 and FIG. 12 are block diagrams of apparatuses according to embodiments of this application.

## DESCRIPTION OF EMBODIMENTS

The following describes technical solutions of this application with reference to accompanying drawings.

For ease of understanding of embodiments of this application, the following descriptions are first provided.

First, in embodiments of this application, prefix terms such as "first" and "second" are merely used for distinguishing and describing different things belonging to a same name category, and are not intended to limit a sequence, sizes, or a quantity of things. For example, a "first device" and a "second device" are merely different devices, and a quantity or a priority relationship of the devices is not limited. For another example, a "first sequence" and a "second sequence" are merely different sequences, and a length or a priority relationship of the sequences is not limited.

Second, "sending" and "receiving" in embodiments of this application indicate signal transfer directions. For example, "the first device sends a first signal to the second device" may be understood as that a destination end of the signal is the second device, and may include direct sending through an air interface, or include indirect sending through an air interface by another unit or module. "The second device receives the first signal from the first device" may be understood as that a source end of the signal is the first device, and may include direct receiving from the second device through an air interface, or may include indirect receiving from the second device through an air interface from another unit or module. "Sending" may alternatively be understood as "outputting" of a chip interface, and "receiving" may alternatively be understood as "inputting" of a chip interface.

In other words, sending and receiving may be performed between devices, for example, between a first device and a second device; or may be performed inside a device, for example, sending or receiving between components, modules, chips, software modules, or hardware modules inside the device through a bus, a cable, or an interface.

It may be understood that, before the signal is sent from the source to the destination, necessary processing such as encoding and modulation may be performed. After receiving the information from the source, the destination may also perform corresponding processing such as decoding and demodulation, to interpret valid information from the source. Similar descriptions in this application may be understood similarly. Details are not described again.

Third, in embodiments of this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects, but does not exclude an "and" relationship between the associated objects. A specific indicated meaning may be understood with reference to the context. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c. a, b, and c each may be singular or plural.

Fourth, predefinition in this application may be understood as definition, predefinition, storage, prestorage, pre-negotiation, pre-configuration, solidifying, or pre-burning.

The technical solutions provided in this application may be applied to various communication systems, such as a long term evolution (long term evolution, LTE) system, an LTE frequency division duplex (frequency division duplex, FDD) system, an LTE time division duplex (time division duplex, TDD) system, a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a radio network. The radio access network device may be a node in the radio access network, referred to as a RAN node for short.

In a possible scenario, the RAN node may be a base station (base station, BS), an evolved NodeB (evolved NodeB, eNodeB), a transmission reception point (transmission reception point, TRP), a home evolved NodeB (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation base station in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an internet of things (internet of things, IoT) communication system. Alternatively, the RAN node may be a RAN node in a non-terrestrial network (non-terrestrial network, NTN). In other words, the RAN node may be deployed on a high-altitude platform or a satellite. The RAN node may be a macro base station, may be a micro base station or an indoor base station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, a plurality of RAN nodes coordinate to assist a terminal in implementing radio access, and different RAN nodes respectively implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any one of the CU (or the CU-CP or the CU-UP), the DU, and the RU may be implemented via a software module, a hardware module, or a combination of a software module and a hardware module. In other words, the radio access network device in this application may be a virtualized device, for example, implemented by using general-purpose hardware and an instantiated virtualization function, or by using dedicated hardware and an instantiated virtualization function. The general-purpose hardware may be a server, for example, a cloud server.

A terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), an uncrewed aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, for example, various smart bands or smart jewelry for monitoring physical signs.

In addition, the terminal device may alternatively be a terminal device in an IoT system. IoT is an important component in future information technology development. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

The terminal device in this application may be a virtualized device, for example, implemented by using general-purpose hardware and an instantiated virtualization function, or by using dedicated hardware and an instantiated virtualization function. The general-purpose hardware may be a server, for example, a cloud server.

It should be understood that a specific form of the radio access network device and a specific form of the terminal device are not limited in this application.

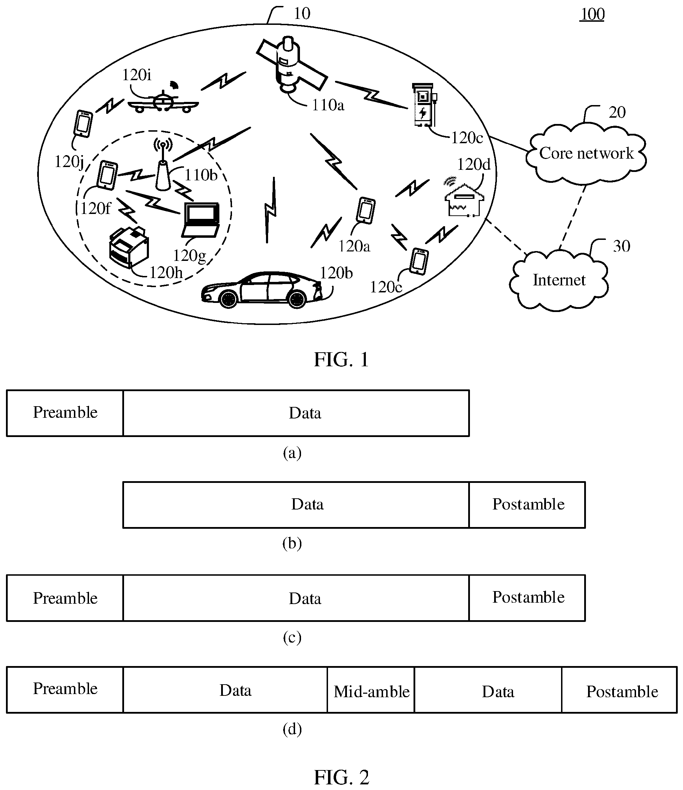

FIG. 1 is a diagram of an architecture of a communication system 100 applicable to a method according to an embodiment of this application. As shown in FIG. 1, the communication system 100 includes a radio access network 10 and a core network 20. Optionally, the communication system 100 may further include an internet 30. The radio access network 10 may include at least one radio access network device (for example, 110a and 110b in FIG. 1), and may further include at least one terminal device (for example, 120a to 120j in FIG. 1).

The terminal device may be connected to the radio access network device in a wireless manner, and the radio access network device may be connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for a connection between terminals and a connection between radio access network devices.

Communication between a radio access network device and a terminal device, between radio access network devices, and between terminal devices may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The radio access network device may be a base station deployed in the air, for example, may be a satellite base station 110a; or may be a base station deployed indoors, for example, may be a micro base station or indoor base station 110b.

The terminal device may be a terminal device deployed in the air, for example, a helicopter or an uncrewed aerial vehicle 120i in FIG. 1; or may be a terminal device deployed on the ground, for example, a mobile phone 120a, a mobile phone 120e, a mobile phone 120f, a mobile phone 120j, a vehicle 120b, a computer 120g, or a printer 120h in FIG. 1.

The radio access network device and the terminal device may be at fixed locations, or may be movable. For example, the radio access network device and the terminal device may be deployed on land, including an indoor device, an outdoor device, a handheld device, or a vehicle-mounted device; or may be deployed on water; or may be deployed on an airplane, a balloon, or an artificial satellite in the air.

Roles of the radio access network device and the terminal device may be relative. For example, the helicopter or uncrewed aerial vehicle 120i in FIG. 1 may be configured as a mobile base station. For 120j that accesses the radio access network 10 via 120i, 120i is a base station, while for 110a, 120i is a terminal, that is, 110a and 120i communicate with each other according to a radio air interface protocol. Certainly, 110a and 120i may alternatively communicate with each other according to an interface protocol between radio access network devices. In this case, for 110a, 120i is also a base station. Therefore, both the radio access network device and the terminal may be collectively referred to as a communication device. 110a, 110b, and 120a to 120j in FIG. 1 may be referred to as communication devices having respective corresponding functions, for example, a communication device having a base station function or a communication device having a terminal function.

It should be understood that, FIG. 1 is merely a diagram. The communication system may further include other devices, for example, may further include a wireless relay device and a wireless backhaul device, which are not shown in FIG. 1.

Passive IoT is a low-cost and low-power internet of things solution, and may be widely applied to scenarios such as automatic warehousing, sensors, and positioning. Due to constraints of power consumption and costs, a passive IoT tag cannot generate carriers autonomously. Energy of the passive IoT tag needs to be obtained by collecting energy of a carrier sent by the access network device. That is, during uplink transmission, the passive IoT tag can only transmit uplink information through backscatter (backscatter), where backscatter means that a tag directly reflects a received carrier back after OOK modulation.

When transmitting uplink data, the passive IoT tag adds a preamble before the data, and/or adds a postamble after the data. The access network device may perform timing by detecting the preamble and/or the postamble, to determine a location of the data.

Active IoT is also a low-cost and low-power internet of things solution, and may achieve longer coverage than the passive IoT. Due to constraints of power consumption and costs, an active IoT tag can only be modulated in a non-coherent receiving manner like envelope detection, for example, OOK modulation.

When the active IoT tag transmits downlink data, the access network device adds a preamble before the data signal, and/or adds a postamble after the data. The active IoT tag performs timing by detecting the preamble and/or the postamble, to determine a location of the data.

FIG. 2 shows a location relationship between a preamble, a postamble, a mid-amble, and data. As shown in (a) in FIG. 2, only a preamble is added before data; as shown in (b) in FIG. 2, only a postamble is added after data; as shown in (c) in FIG. 2, a preamble is added before data, and a postamble is added after the data; and as shown in (d) in FIG. 2, a preamble is added before data, a postamble is added after the data, and a mid-amble is inserted into the data.

For example, a preamble and/or postamble detection method by an access network device or an active IoT tag is as follows: receiving a signal in a time window in which the preamble and/or the postamble may arrive, generating a local preamble and/or postamble signal, performing sliding correlation on the signal and the received signal, and determining a location with a largest correlation value as a timing location of the preamble and/or the postamble.

Because timing of the preamble may have an error, when a passive IoT tag transmits uplink data, or when the active IoT tag transmits downlink data, a mid-amble (mid-amble) may be further inserted in the middle of the data signal, to correct a residual symbol error in a timely manner. A mid-amble detection manner is similar to the preamble (or postamble) detection method. Details are not described herein again.

Currently, when correlation detection is performed on a preamble sequence, a postamble sequence, or a mid-amble sequence with a length of N ($N = 2^n$), a large quantity of bit storage units are needed (for example, when correlation detection is performed by using an n-level register, a quantity of needed bit storage units is $2^n - 1$), and as a sequence length increases, the quantity of needed bit storage units also greatly increases.

In view of this, embodiments of this application provide a communication method and a related apparatus. In the method, a preamble sequence or a postamble sequence that is with a length of N ($N = 2^n$) and that is included in a received signal is detected by using a first (n-1)-level register in an n-level register, and a total of $2^{n-1} - 1$ bit storage units are needed. In comparison with a manner in which detection is performed by using an n-level register, a quantity of needed bit storage units is $2^n - 1$. The method can reduce the quantity of bit storage units by half, greatly reducing storage complexity.

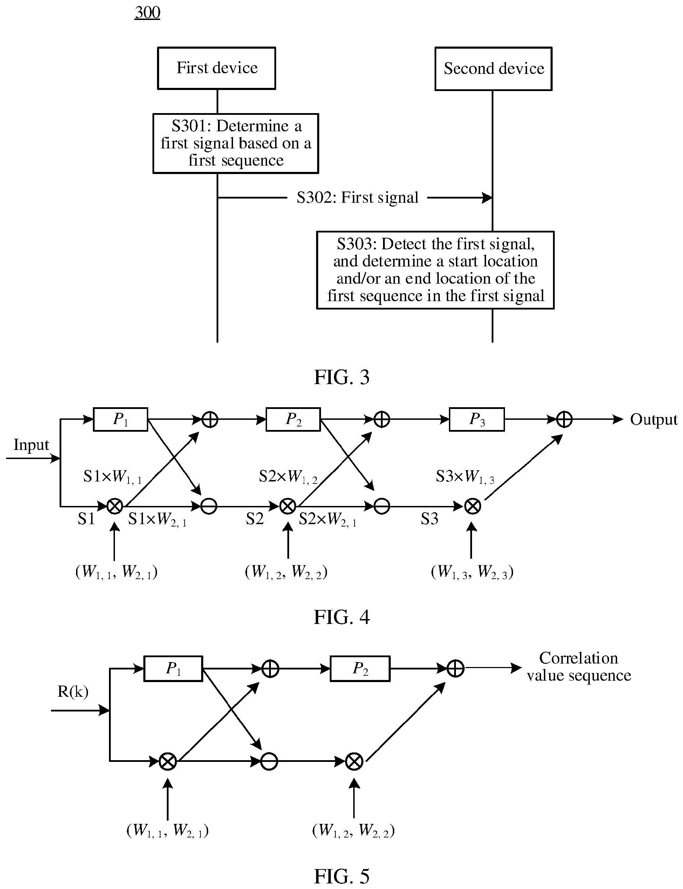

With reference to FIG. 3, the following describes in detail the method provided in embodiments of this application. The method may be applied to the communication system shown in FIG. 1. However, this is not limited in embodiments of this application.

It should be understood that a first device in FIG. 3 may be the terminal device or the access network device shown in FIG. 1, and a second device in FIG. 3 is the access network device or the terminal device shown in FIG. 1.

In a flowchart shown in FIG. 3, the method is shown from a perspective of interaction between communication devices. However, an execution body of the method is not limited in this application. For example, the first device in FIG. 3 may be a chip, a chip system, or a processor that supports the first device in implementing the method, or may be a logical module or software that can implement all or a part of functions of the first device. The second device in FIG. 3 may be a chip, a chip system, or a processor that supports the network device in implementing the method, or may be a logical module or software that can implement all or a part of functions of the second device.

FIG. 3 is a schematic flowchart of a communication method 300 according to an embodiment of this application. As shown in FIG. 3, the method 300 may include S301 to S303. The following describes in detail the steps in the method 300.

S301: A first device determines a first signal based on a first sequence.

The first sequence and a first generalized Golay sequence meet a preset relationship. In other words, when the first generalized Golay sequence is known, the first sequence may be determined based on the preset relationship and the first generalized Golay sequence; or when the first sequence is known, the first generalized Golay sequence may be determined based on the preset relationship and the first sequence.

For example, that the first device determines the first signal based on the first sequence includes: The first device determines the first sequence, inserts the first sequence before, after, or in the middle of to-be-sent data, to obtain a target sequence 1, and then performs encoding and modulation (for example, OOK modulation) on the target sequence 1, to obtain the first signal.

It should be noted that during specific implementation, the first device may directly determine the first sequence, and then obtain the first signal based on the first sequence; or the first device may first determine a generalized Golay (Golay) sequence, then determine the first sequence based on a preset relationship between the generalized Golay sequence and the first sequence, and then obtain the first signal based on the first sequence; or the first device determines the first sequence in another manner. This is not limited in this embodiment.

Optionally, an n-level register may be configured to generate the first generalized Golay sequence, a storage depth of a $k^{th}$-level register in the n-level register is $2^{P_k}$, a value of $P_k$ is an integer from 0 to n-1, a value of k is any integer from 1 to n, and a value of $P_n$ is n-1; when i≠j, $P_i \neq P_j$, where values of i and j are integers from 1 to n-1; and n is a positive integer, a length of the first sequence is N, and N= $2^n$. That the storage depth of the $k^{th}$-level register in the n-level register is $2^{P_k}$ may be understood as that the $k^{th}$-level register includes $2^{P_k}$ bit storage units.

Each level of register in $1^{st}$-level to $(n-1)^{th}$-level registers in the n-level register corresponds to one adder, one multiplier, and one subtractor, and an $n^{th}$-level register in the n-level register corresponds to one adder and one multiplier. In this application, a register architecture including an n-level register, n adders, n multipliers, and n-1 subtractors is referred to as a correlator. That is, that the n-level register may be configured to generate the first generalized Golay sequence means that a correlator including an n-level register, n adders, n multipliers, and n-1 subtractors may be configured to generate the first generalized Golay sequence.

The following uses n=3 as an example to describe the n-level register with reference to FIG. 4. When n=3, in a three-level register, a storage depth of a $1^{st}$-level register is $2^{P_1}$, a storage depth of a $2^{nd}$-level register is $2^{P_2}$, and a storage depth of a $3^{rd}$-level register is $2^{P_3}$. $P_3$ =2, and values of $P_1$ and $P_2$ are respectively 0 and 1. For example, $P_1$ =0 and $P_2$ =1; or $P_1$ =1 and $P_2$ =0.

FIG. 4 is a diagram of a correlator according to an embodiment of this application. As shown in FIG. 4, the correlator includes a three-level register ($P_1$, $P_2$, and $P_3$), three adders, two subtractors, and three multipliers. If the three adders, the two subtractors, and the three multipliers in the correlator shown in FIG. 4 are sequentially numbered from left to right, a $1^{st}$-level correlator corresponds to a $1^{st}$ adder, a $1^{st}$ subtractor, and a $1^{st}$ multiplier, a $2^{nd}$-level correlator corresponds to a $2^{nd}$ adder, a $2^{nd}$ subtractor, and a $2^{nd}$ multiplier, and a $3^{rd}$-level correlator corresponds to a $3^{rd}$ adder and a $3^{rd}$ multiplier. Each multiplier includes one input and two outputs, each adder includes two inputs and one output, and each subtractor includes two inputs and one output. When one output of an $l^{th}$ multiplier is used as one input of an $l^{th}$ ($l$ is an integer greater than 0 and less than 4) adder, an $l^{th}$ element in a second sequence [$W_1$] may be used as one input of the $l^{th}$ multiplier. When the other output of the $l^{th}$ multiplier is used as one input of an $l^{th}$ subtractor, an $l^{th}$ element in a third sequence [$W_2$] may be used as one input of the $l^{th}$ multiplier.

As shown in FIG. 4, when the input of the $1^{st}$ multiplier is an element S1, one output of the $1^{st}$ multiplier is S1× $W_{1,1}$ (as an input of the $1^{st}$ adder), and the other output is S1× $W_{2,1}$ (as an input of the $1^{st}$ subtractor); when the input of the $2^{nd}$ multiplier is an element S2, one output of the $2^{nd}$ multiplier is S2× $W_{1,2}$ (as an input of the $2^{nd}$ adder), and the other output is S2× $W_{2,2}$ (as an input of the $2^{nd}$ subtractor); and when the input of the $3^{rd}$ multiplier is an element S3, one output of the $2^{nd}$ multiplier is S3× $W_{1,3}$ (as an input of the $3^{rd}$ adder).

For example, a specific implementation process of generating the first generalized Golay (Golay) sequence by the n-level register is as follows: An input sequence of the correlator is $a_1(n)=\delta(n$-1), where 1≤n≤N. Specifically, an input at a moment $T_k$ is $a_1(k)$, and k is a positive integer less than or equal to N. When a delay caused by correlator computation is not considered, an output of the correlator at the moment $T_k$ is $a_{M+1}(N$+1-k). Finally, the correlator outputs a sequence [$a_{M+1}(N)$, $a_{M+1}(N$-1), ..., $a_{M+1}(1)$] including N values, and the generalized Golay sequence may be obtained by reversing the sequence. For descriptions of reversal, refer to the following detailed descriptions.

That is, the reverse sequence of the generalized Golay sequence may be obtained by inputting an impulse function to the correlator. In other words, an impulse response function of the correlator is the reverse sequence of the generalized Golay sequence. If the received signal is input to the correlator, it may be equivalent to performing convolution on the received signal and the reverse sequence of the generalized Golay sequence, and this process may be further equivalent to performing aperiodic correlation on the received signal and the generalized Golay sequence.

When an input of the correlator shown in FIG. 4 is an impulse function, a reverse sequence of a generalized Golay sequence with a length of 8 may be output, and the generalized Golay sequence with a length of 8 is obtained based on the reverse sequence of the generalized Golay sequence with a length of 8.

S302: The first device sends the first signal to a second device. Correspondingly, the second device receives the first signal from the first device.

S303: The second device detects the first signal, and determines a start location and/or an end location of the first sequence in the first signal.

For example, the first sequence is added before the to-be-sent data, and the second device determines the start location of the first sequence in the first signal.

For example, the first sequence is added after the to-be-sent data, and the second device determines the end location of the first sequence in the first signal.

For example, the first sequence is added in the to-be-sent sequence, and the second device determines the start location and the end location of the first sequence in the first signal.

That the second device detects the first signal may include: The second device detects the first signal by using the $1^{st}$-level to $(n-1)^{th}$-level registers instead of the $n^{th}$-level register in the n-level register. In other words, the second device detects the first signal by using only the first (n-1)-level register in the n-level register.

Optionally, when detecting the first signal, the second device may directly detect the target sequence 1 obtained through demodulation by using the 1st-level to (n-1)th-level registers in the n-level register; or may first convert the target sequence 1 obtained through demodulation into a target sequence 2, and then detect the target sequence 2 by using the 1st-level to (n-1)th-level registers in the n-level register.

For example, the target sequence 1 and the target sequence 2 meet the preset relationship. For example, the preset relationship is Z=1-2V, where V is the target sequence 1, and Z is the target sequence 2.

It may be understood that the first (n-1)-level register in the n-level register is a correlator obtained by removing, from the correlator corresponding to the n-level register, the nth-level register and the adder and the multiplier that correspond to the nth-level register.

Therefore, that the second device detects the first signal by using only the first (n-1)-level register in the n-level register may be understood as that the second device detects the first signal by using a correlator including an (n-1)-level register, n-1 adders, n-1 multipliers, and n-1 subtractors. FIG. 5 to FIG. 8 below show a process of detecting the first signal by using a correlator.

With reference to the foregoing descriptions, it can be learned that when an input of the correlator is the first signal (which may be understood as inputting the target sequence 1 or inputting the target sequence 2), it may be equivalent to performing convolution on the first signal and a reverse sequence that is of a generalized Golay sequence with a length of N and that is output when the input of the correlator is an impulse function. A convolution process may be equivalent to performing aperiodic correlation on the first signal and the generalized Golay sequence with a length of N, or a process of performing correlation detection on the first signal by using the n-level register, or performing correlation on the first signal by using the generalized Golay sequence with a length of N.

To more intuitively understand a process of performing correlation by using the generalized Golay sequence with a length of N, the following describes in detail a process of performing correlation by using a generalized Golay sequence with a length of 4 with reference to FIG. 5.

FIG. 5 is a diagram of performing correlation by using a generalized Golay sequence with a length of 4 according to an embodiment of this application. As shown in FIG. 5, a correlator includes a two-level register ($P_1$ and $P_2$), two adders, one subtractor, and two multipliers. For descriptions of an input and an output of the multiplier, refer to related descriptions in FIG. 4. Details are not described herein again.

Assuming that $P_1$ =0, a corresponding register depth is $2^0 = 1$. Assuming that $P_2$ =1, a corresponding register depth is $2^1 = 2$. $W_{1,k} = W_{2,k}=[1, -1]$. A received sequence R=[1, 1, -1, 1, 0, 0, 0], and a sliding window size L=3. The following uses D1=[0] to indicate a bit storage status of a 1st-level register $P_1$, and uses D2=[0, 0] to indicate a bit storage status of a 2nd-level register $P_2$, to describe a process of obtaining a correlation value sequence after the sequence [1, 1, -1, 1, 0, 0, 0] is input to the correlator shown in FIG. 5.

For example, each element in the sequence [1, 1, -1, 1, 0, 0, 0] is sequentially input, to obtain a correlation value, and sequentially obtained correlation values are arranged, to obtain a correlation value sequence.

At a moment $T_1$, R(1)=1 is input, an output correlation value is 1, D1 is updated to [1], and D2 is updated to [1, 0].

At a moment $T_2$, R(2)=1 is input, an output correlation value is 0, D1 is updated to [1], and D2 is updated to [2, 1].

At a moment $T_3$, R(3)=-1 is input, an output correlation value is -1, D1 is updated to [-1], and D2 is updated to [0, 2].

At a moment $T_4$, R(4)=1 is input, an output correlation value is 4, D1 is updated to [1], and D2 is updated to [0, 0].

At a moment $T_5$, R(5)=0 is input, an output correlation value is -1, D1 is updated to [0], and D2 is updated to [0, 1].

At a moment $T_6$, R(6)=0 is input, an output correlation value is 0, D1 is updated to [0], and D2 is updated to [0, 0].

At a moment $T_7$, R(7)=0 is input, an output correlation value is 1, D1 is updated to [0], and D2 is updated to [0, 0].

That is, the sequence [1, 1, -1, 1, 0, 0, 0] is detected by using the two-level register, to obtain a correlation value sequence [1, 0, -1, 4, -1, 0, 1]. Last L+1 correlation values are valid output values, that is, the valid output values are [4, -1, 0, 1]. An end location of the first sequence in the received sequence is determined based on a largest value of the last L+1 correlation values. In the foregoing example, the largest value of the valid output values is 4. Therefore, the moment $T_4$ is a synchronization location, in other words, R(4)=1 is the end location of the first sequence in the received sequence.

In conclusion, it can be learned that the correlation value sequence [1, 0, -1, 4, -1, 0, 1] is a sequence obtained by detecting the sequence [1, 1, -1, 1, 0, 0, 0] by using the two-level register. When detection is performed by using the two-level register, a total of $2^0 + 2^1 = 2^2 - 1 = 3$ bit storage units are needed.

It may be understood that, when there is an n-level register and a value of $P_n$ is n-1, an impulse function is input to the correlator shown in FIG. 4 or FIG. 5, and based on a sequence output by the correlator, an obtained first generalized Golay sequence may be split into two sequences [A, B=$w \times$C] with a length of $2^{n-1}$, where w is a last element in the second sequence [$W_1$].

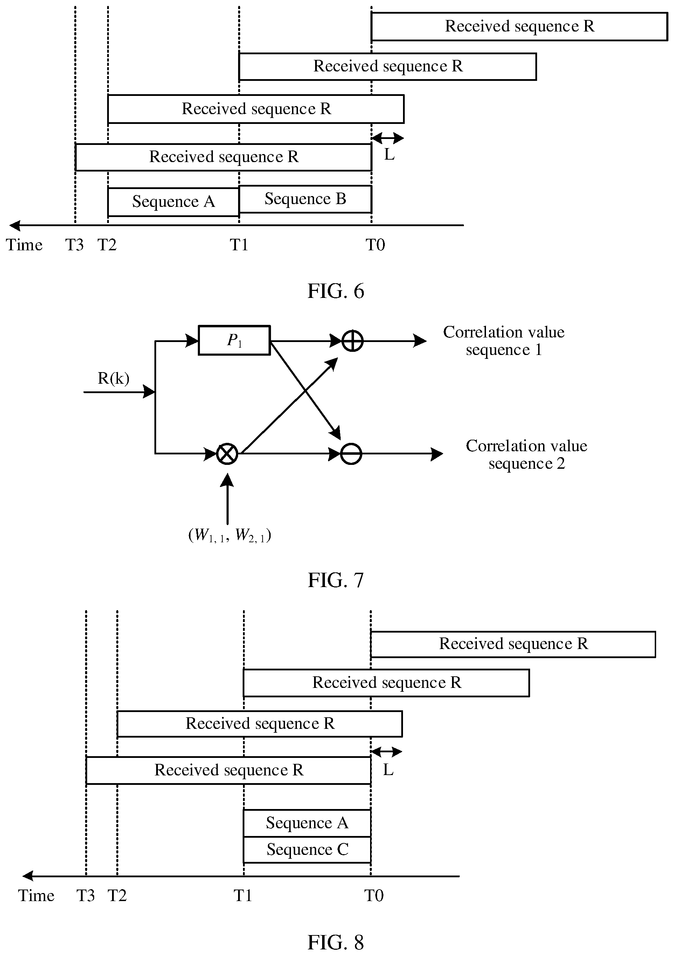

For example, when $P_1$ =0, $P_2$ =1, and $W_{1,k} = W_{2,k}$ =[1, -1], a first generalized Golay sequence S=[1, 1, -1, 1] with a length of 4 may be obtained, and the sequence S may be split into two sequences: A=[1, 1] and B=[-1, 1]. In this case, when the second device performs correlation detection on the received sequence R including the sequence S and the local sequence S, correlation detection may be converted into correlation detection performed on the sequence R and both the sequence A and the sequence B, as shown in FIG. 6.

FIG. 6 shows a correlation process of a sequence A, a sequence B, and a received sequence R. As shown in FIG.

6, L is a sliding window size, T0 to T3 is time needed for the received sequence R, and a length of an obtained correlation value sequence is T3-T0, that is, a length of the received sequence R. A correlation value generated in a time window from T2 to T3 is a valid output value in a sliding window. At any moment in the time window from T2 to T3, a correlation operation performed on the received sequence R and a sequence S may be split into correlation operations respectively performed on the received sequence R and the sequence A and on the received sequence R and the sequence B.

For example, if a first generalized Golay sequence obtained based on the correlator shown in FIG. 5 is the sequence S, a last-level register in the correlator shown in FIG. 5 and an adder and a multiplier that correspond to the last-level register may be deleted, to obtain a correlator shown in FIG. 7. The correlator shown in FIG. 7 includes a one-level register, one adder, one subtractor, and one multiplier. For descriptions of an input and an output of the multiplier, refer to the foregoing descriptions in FIG. 4. Details are not described herein again.

If the correlator shown in FIG. 7 is used to process a received sequence R, two correlation value sequences may be obtained, which is equivalent to performing correlation on the received sequence R=[1, 1, -1, 1, 0, 0, 0] and both a sequence A and a sequence C. A correlation process is shown in FIG. 8, and lengths of both the correlation value sequences are a length of the received sequence R.

The following uses $P_1 = 0$, $P_2 = 1$, and $W_{1,k} = W_{2,k} = [1, -1]$ as an example to describe in detail a process of detecting the received sequence R based on the correlator shown in FIG. 7.

At a moment $T_1$, R(1)=1 is input, an output adder correlation value is 1, a subtractor correlation value is -1, and D1 is updated to [1].

At a moment $T_2$, R(2)=1 is input, an output adder correlation value is 2, a subtractor correlation value is 0, and D1 is updated to [1].

At a moment $T_3$, R(3)=-1 is input, an output adder correlation value is 0, a subtractor correlation value is 2, and D1 is updated to [-1].

At a moment $T_4$, R(4)=1 is input, an output adder correlation value is 0, a subtractor correlation value is -2, and D1 is updated to [1].

At a moment $T_5$, R(5)=0 is input, an output adder correlation value is 1, a subtractor correlation value is 1, and D1 is updated to [0].

At a moment $T_6$, R(6)=0 is input, an output adder correlation value is 0, a subtractor correlation value is 0, and D1 is updated to [0].

At a moment $T_7$, R(7)=0 is input, an output adder correlation value is 0, a subtractor correlation value is 0, and D1 is updated to [0].

For an output of the subtractor, last L+1 correlation values are valid output values. For an output of the adder, $(N/2)^{th}$ to $(N/2+L)^{th}$ correlation values are valid output values (N is a length of a first sequence). It is assumed that a valid output value sequence of the adder is $cor_1$, a valid output value sequence of the subtractor is $cor_2$, and a final valid output is $cor_1 + w \times cor_2$.

In the example shown in FIG. 7, the output of the subtractor is [-1, 0, 2, -2, 1, 0, 0], and the last L+1 (L=3) correlation values of the subtractor are valid output values [-2, 1, 0, 0]. The output of the adder is [1, 2, 0, 0, 1, 0, 1], and the $(N/2)^{th}$ to $(N/2+L)^{th}$ (L=3 and N=4) correlation values are valid output values [2, 0, 0, 1]. In this case, the final valid output is [2, 0, 0, 1] +(-1)×[-2, 1, 0, 0]=[4, -1, 0, 1]. It can be found that a valid output of a correlation value obtained through correlation detection by using the first (n-1)-level register is the same as a valid output of a correlation value obtained through correlation detection by using the n-level register, and computational complexity also remains unchanged, but storage complexity may be reduced by about 50%.

Therefore, in this application, the first signal may be detected by using the first (n-1)-level register in the n-level register configured to generate the first generalized Golay sequence. In addition, this application uses a manner in which the first signal is detected by using the first (n-1)-level register in the n-level register configured to generate the first generalized Golay sequence. In comparison with a manner in which the first signal is detected by using the n-level register configured to generate the first generalized Golay sequence, half of bit storage units can be reduced, and half of the storage complexity can be reduced.

Optionally, the preset relationship satisfies any one of the following:

$$Y_q = 1 - 2X_q \qquad\qquad (1)$$

$$Y_q = 2X_q - 1 \qquad\qquad (2)$$

$$Y_q = 1 - 2X_{N+1-q} \qquad\qquad (3)$$

$$Y_q = 2X_{N+1-q} - 1 \qquad (4)$$

$Y_q$ is a $q^{th}$ element in the first generalized Golay sequence, $X_q$ is a $q^{th}$ element in the first sequence, $X_{N+1-q}$ is an $(N+1-q)^{th}$ element in the first sequence, and a value of $q$ is any integer from 1 to N.

Optionally, when the first generalized Golay sequence is known, the first device or the second device may obtain the first sequence based on the first generalized Golay sequence and any one of the foregoing formula (1) to formula (4).

For example, when the preset relationship is $Y_q = 1-2X_q$, the $q^{th}$ element $X_q$ in the first sequence satisfies:

$$X_q = \frac{1-Y_q}{2} \qquad (5)$$

Similarly, $X_q = \frac{1+Y_q}{2}$, $X_{N+1-q} = \frac{1-Y_q}{2}$, or $X_{N+1-q} = \frac{1+Y_q}{2}$.

The $q^{th}$ element $Y_q = a_{M+1}(q)$ in the first generalized Golay sequence satisfies:

$$a_{k+1}(q) = a_k(q) + W_{1,k} b_k\left(q - 2^{p_k}\right) \qquad (6)$$

$$b_{k+1}(q) = a_k(q) - W_{2,k} b_k\left(q - 2^{p_k}\right) \qquad (7)$$

$a_{M+1}(q)$ is $a_k(q)$ when k=M+1, $a_1(q) = \delta(q-1)$, $b_1(q) = \delta(q-1)$, and the value of $q$ is any integer from 1 to N; when q=1, $\delta(q-1)=1$, or when $q \neq 1$, $\delta(q-1)=0$; and $W_{1,k}$ is a $k^{th}$ element in the second sequence $[W_1]$, $W_{2,k}$ is a $k^{th}$ element in the third sequence $[W_2]$, lengths of both the second sequence $[W_1]$ and the third sequence $[W_2]$ are n, values of elements in the second sequence $[W_1]$ are 1 and/or -1, and values of elements in the third sequence $[W_2]$ are 1 and/or -1.

Optionally, a value of an element in the first sequence is 0 or 1, and a quantity of elements 0 and a quantity of elements 1 in the first sequence are the same. A feature that the quantity of elements 0 and the quantity of elements 1 in the first sequence are the same can improve anti-noise performance of the first sequence.

Optionally, the first sequence may be any sequence in a predefined first sequence set, or an equivalent sequence of any sequence in the predefined first sequence set. A value of an element included in each sequence in the first sequence set is 0 or 1.

For example, an equivalent sequence of a sequence F is a sequence obtained through negation, reversal, or negation and reversal on the sequence F. The sequence F may be any sequence in the predefined sequence set.

Negation on the sequence F is replacing an element 0 in the sequence F with an element 1, and replacing an element 1 with an element 0. That is, a $q^{th}$ element $X_q$ in the sequence F and a $q^{th}$ element $X'_q$ in the equivalent sequence of the sequence F satisfy: $X_q \oplus 1 = X'_q$. $\oplus$ is an exclusive OR operator, and the value of q is any integer from 1 to N.

A reverse sequence of the sequence F is a sequence obtained through exchange of locations of an $f^{th}$ element and an $(N-f+1)^{th}$ element in the sequence F, and a value of f is any integer from 1 to N/2. That is, the $q^{th}$ element $X_q$ in the sequence F is the same as an $(N+1-q)^{th}$ element $X'_{N+1-q}$ in the equivalent sequence of the sequence A.

Negation and reversal on the sequence F may be: first performing negation on the sequence F to obtain the sequence F, and then performing reversal on the sequence F; or first performing reversal on the sequence F to obtain a sequence G, and then performing negation on the sequence G. That is, the $q^{th}$ element $X_q$ in the sequence F and the $(N+1-q)^{th}$ element $X'_{N+1-q}$ in the equivalent sequence of the sequence F satisfy: $X_q \oplus 1 = X'_{N+1-q}$.

The following uses an example in which the first sequence is any sequence in the first sequence set and an example in which the first sequence is an equivalent sequence of any sequence in the first sequence set to separately describe the preset relationship that is met between the first sequence and the first generalized Golay sequence.

In a first possible implementation, when the first sequence is any sequence in the predefined first sequence set, the first sequence and the first generalized Golay sequence meet the preset relationship shown in the formula (1).

In a second possible implementation, the first sequence is the equivalent sequence of the sequence F in the predefined first sequence set, and the sequence F is any sequence in the first sequence set.

1. When the equivalent sequence is a sequence obtained through negation on the sequence F, the first sequence and the first generalized Golay sequence meet the preset relationship shown in the formula (2).

2. When the equivalent sequence is the sequence obtained through reversal on the sequence F, the first sequence and the first generalized Golay sequence meet the preset relationship shown in the formula (3).

3. When the equivalent sequence is a sequence obtained through reversal and reversal on the sequence F, the first sequence and the first generalized Golay sequence meet the preset relationship shown in the formula (4).

The following uses an example in which a value of N is 256, 128, 64, 32, 16, or 8 to describe sequences included in the first sequence set.

**Example** 1: N=256, and the predefined first sequence set may include the following sequences:

a sequence 1: [0, 1, 0, 1, 0, 1, 0, 1, 1, 0, 1, 0, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 0, 1, 0, 0, 1, 0, 1, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 0, 1];

a sequence 2: [0, 1, 0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 1, 0, 1, 0, 0, 1, 1, 0, 0, 1, 1, 0, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 1, 0, 0, 1, 0, 1, 0, 1];

a sequence 3: [0, 1, 1, 0, 0, 1, 1, 0, 1, 0, 0, 1, 1, 0, 0, 1, 1, 0, 1, 0, 0, 1, 0, 1, 0, 1, 1, 0, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 1, 0, 1, 0, 1, 0, 1, 0, 0, 1, 0, 1, 0, 1, 0, 1, 1, 0, 1, 0, 0, 1, 1, 0, 0, 1, 0, 1, 1, 0, 0, 1, 1, 0, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1];

a sequence 4: [0, 1, 1, 0, 0, 1, 1, 0, 1, 0, 0, 1, 1, 0, 0, 1, 1, 0, 1, 0, 0, 1, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 0, 1, 1, 0, 1, 0, 0, 1, 1, 0, 1, 0, 1, 0, 0, 1, 1, 0, 0, 1, 1, 0, 1, 0, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 1, 0, 1, 0, 0, 1, 0, 1, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 0, 1, 1, 0, 0, 1, 1, 0, 0, 1];

a sequence 5: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 1, 0, 1, 0, 1, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 0, 1, 1, 0, 1, 0, 1, 0, 0, 1, 1, 0, 1, 0, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 0, 1, 1, 0, 1, 0, 1, 0, 0, 1, 0, 1];

a sequence 6: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 0, 1, 0, 1, 1, 0, 1, 0, 1, 0, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1, 0, 1, 0, 1, 0, 1, 0, 1, 0, 1, 0, 1, 1, 0, 1, 0, 1, 0, 0, 1, 1, 0, 0, 1, 0, 1, 1, 0, 0, 1, 0, 1, 1, 0, 1, 0, 1, 0, 1, 0, 1, 0, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 1, 0, 1, 0];

a sequence 7: [0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 1, 0, 1, 0, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 1, 0, 1, 0, 0, 1];

a sequence 8: [0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 0, 1, 0, 1, 0, 1, 1, 0, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 1, 0, 0, 1, 0, 1, 1, 0, 1, 0, 1, 0, 0, 1, 1, 0, 0, 1, 0, 1, 0, 1, 0, 1, 0, 1, 0, 1, 1, 0, 1, 0, 1, 0, 1, 0, 1, 0, 0, 1, 0, 1, 1, 0, 0, 1, 1, 0, 0, 1, 1, 0, 1, 0, 0, 1];

a sequence 9: [0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 0, 1, 0, 1, 0, 0, 1, 0, 1, 1, 0, 0, 1, 1, 0, 0, 1, 1, 0, 1, 0, 0, 1, 1, 0, 1, 0, 1, 1, 0, 1, 0, 0, 1, 0, 1, 1, 0, 1, 0, 0, 1, 1, 0, 1, 0, 1, 0, 0, 1, 0, 1, 1, 0, 0, 1, 1, 0, 0, 1, 1, 0, 0, 1, 1, 0, 1, 0, 1, 0, 0, 0, 1, 0, 1, 1, 0, 1, 0, 0, 1, 1, 0, 1, 0, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1];

a sequence 10: [0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 0, 1, 0, 1, 1, 0, 0, 1, 0, 1, 0, 1, 0, 1, 0, 1, 0, 1, 0, 1, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1];

a sequence 11: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 1, 0, 0, 1, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 0, 1, 1, 0, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1, 1, 0, 1, 0, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 0, 1, 1, 0, 1, 0, 1, 0];

a sequence 12: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 0, 1, 1, 0, 1, 0, 1, 0, 0, 1, 1, 0, 0, 1, 0, 1, 1, 0, 0, 1, 1, 0, 1, 0, 0, 1, 1, 0, 0, 1, 0, 1, 1, 0, 0, 1, 1, 0, 1, 0, 0, 1, 0, 1, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 1, 0, 1, 0, 0, 1, 0, 1, 0, 1, 1, 0, 1, 0, 1, 0];

a sequence 13: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 1, 0, 0, 1, 0, 1, 1, 0, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 1, 0, 1, 0, 0, 0, 1, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 1, 0, 1, 0, 0, 1, 1, 0, 0, 1, 1];

a sequence 14: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 0, 1, 1, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 0, 1, 0, 1, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 1, 0, 1, 0, 0, 1, 1, 0, 0, 1, 1];

a sequence 15: [0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 1, 0, 1, 0, 0, 1, 0, 1, 1, 0, 1, 0, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 0, 1, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 1, 0, 1, 0, 0, 0, 1, 1, 0, 0, 1, 1, 0, 0, 1, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 0, 1, 0, 1, 0, 1, 1, 0, 1, 0, 1, 0, 1, 0, 1, 0, 0, 1, 0, 1, 0, 1, 0, 1];

a sequence 16: [0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 1, 0, 0, 1, 1, 0, 1, 0, 0, 1, 1, 0, 0, 1, 1, 0, 1, 0, 1, 0, 0, 1, 0, 1, 0, 1, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 1, 0, 1, 0, 0, 0, 1, 1, 0, 1, 0, 0, 0, 1, 0, 1, 1, 0, 1, 0, 0, 0, 1, 0, 1, 1, 0, 1, 0, 0, 0, 1, 0, 1, 0, 1, 0, 1, 1, 0, 1, 0, 1, 0, 1, 0, 0, 0, 1, 0, 1, 1, 0, 0, 1, 1, 0, 1, 0, 0, 1];

a sequence 17: [0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 0, 1, 1, 0, 1, 0, 1, 0, 1, 0, 0, 1, 1, 0, 1, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 1, 0, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 0, 1, 0, 1];

a sequence 18: [0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 1, 0, 0, 1, 1, 0, 0, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 0, 1, 1, 0, 1, 0, 1, 0, 0, 1, 0, 1, 0, 1, 1, 0, 1, 0, 1, 0, 0, 1, 0, 1, 0, 1, 1, 0, 0, 1, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1];

a sequence 19: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 0, 1, 0, 1, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 1, 0, 1, 0, 1, 0, 1];

a sequence 20: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 0, 1, 1, 0, 1, 0, 1, 0, 1, 0, 0, 1, 1, 0, 1, 0, 1, 0, 1, 0, 1, 0, 1];

a sequence 21: [0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 1, 0, 0, 1, 0, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1];

a sequence 22: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 1, 0, 0, 1, 0, 1, 1, 0, 0, 1, 1, 0, 0, 1, 0, 1, 0, 1, 1, 0, 1, 0, 1, 0, 1, 0, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 0, 1, 0, 1, 0, 1, 0, 1];

a sequence 23: [0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 0, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 1, 0, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 0, 1, 0, 1, 0, 1, 1, 0, 1, 0, 1, 0, 0, 1, 0, 1, 1, 0, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 0, 1, 1, 0, 0, 1, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1];

a sequence 24: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1, 1, 0, 0, 1, 0, 1, 0, 1, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 0, 1, 1, 0, 1, 0, 1, 0, 0, 1, 1, 0, 1, 0, 1, 0, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 1, 0, 1, 0, 1, 0, 1, 0, 0, 1, 1, 0, 0, 1, 0, 1, 0, 1, 0];

a sequence 25: [0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 0, 1, 0, 1, 0, 1, 1, 0, 0, 1, 0, 1, 1, 0, 0, 1, 0, 1, 0, 1, 0, 1, 0, 1, 0, 1, 1, 0, 1, 0, 0, 1, 1, 0, 1, 0, 1, 0, 1, 0, 1, 0, 0, 1, 1, 0, 1, 0, 1, 0, 0, 1, 0, 1, 1, 0, 1, 0, 1, 0, 1, 0, 0, 1, 1, 0, 0, 1, 0, 1, 1, 0, 0, 1, 0, 1, 0, 1, 0, 1, 1, 0, 0, 1, 1, 0, 0, 1, 0, 1, 0, 1, 0, 1, 0, 1, 0, 1, 1, 0, 0, 1, 0, 1, 0, 1, 1, 0, 1, 0, 1, 0, 1, 0, 0, 1, 1, 0, 0, 1, 0, 1, 1, 0, 0, 1, 0, 1, 0, 1, 0, 1, 0, 0, 1, 1, 0, 0, 1, 1, 0, 1, 0, 1, 0, 0, 1, 1, 0, 0, 1, 1, 0, 1, 0, 1, 0, 1, 0, 1, 0, 1, 0, 0, 1, 1, 0, 1, 0, 1, 0, 0, 1];

a sequence 26: [0, 1, 1, 0, 1, 0, 0, 1, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 1, 0, 0, 1, 0, 1, 0, 1, 1, 0, 0, 1, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 0, 1, 1, 0, 1, 0, 1, 0, 0, 1, 1, 0, 1, 0, 1, 0, 0, 1, 1, 0, 1, 0, 1, 0, 1, 0, 1, 0, 1, 0, 0, 1, 1, 0, 0, 1, 1, 0, 1, 0, 1, 0, 0, 1, 0, 1, 1, 0, 1, 0, 1, 0, 1, 0, 1, 0, 0, 1, 1, 0, 1, 0, 1, 0, 1, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0];

a sequence 27: [0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 1, 0, 0, 1, 0, 1, 0, 1, 1, 0, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 1, 0, 0, 1, 0, 1, 0, 1, 1, 0, 0, 1, 1, 0, 0, 1, 0, 1, 0, 1, 1, 0, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 1, 0, 0, 1, 0, 1, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 1, 0, 1, 0, 1, 0, 0, 1];

a sequence 28: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 1, 0, 1, 0, 0, 1, 1, 0, 0, 1, 0, 1, 1, 0, 1, 0, 1, 0, 1, 0, 0, 1, 1, 0, 0, 1, 1, 0, 0, 1, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 1, 0, 0, 1, 0, 1, 0, 1, 1,0,0, 1, 1, 0, 1, 0, 1, 0,0, 1, 0, 1, 0, 1, 1, 0,0, 1, 1, 0,0, 1, 1, 0,0, 1, 1, 0, 1, 0, 1, 0,0, 1, 0, 1, 1, 0, 0, 1, 1, 0,0, 1, 0, 1, 0, 1, 1, 0, 1, 0, 1, 0, 1, 0, 1, 0, 1, 0,0, 1, 1, 0, 1, 0,0, 1, 0, 1, 0, 1, 0, 1, 0, 1, 1,0,0, 1, 0, 1, 1, 0, 1, 0,0, 1, 1, 0, 0, 1, 0, 1, 0, 1, 1, 0, 1, 0, 1, 0,0, 1, 1, 0,0, 1, 0, 1, 0, 1, 1, 0, 1, 0, 1, 0, 1, 0, 1, 0, 1, 0,0, 1, 1, 0, 1, 0,0, 1, 1, 0, 1, 0, 1, 0, 1, 0, 0, 1, 1, 0, 1, 0, 0, 1];

a sequence 29: [0, 1, 0, 1, 0, 1, 0, 1, 0, 1, 0, 1, 0, 1, 0, 1, 0, 1, 1, 0,0, 1, 1, 0, 1, 0,0, 1, 1, 0,0, 1, 0, 1, 1, 0, 1, 0,0, 1, 0, 1, 1, 0, 1, 0, 0, 1, 0, 1, 0, 1, 1, 0, 1, 0, 1, 0, 1, 0,0, 1, 0, 1, 0, 1, 0, 1, 0, 1, 1, 0, 1, 0, 1, 0, 1, 0, 1, 0,0, 1, 1, 0,0, 1, 1, 0,0, 1, 1, 0,0, 1, 1, 0, 0, 1, 1, 0, 1, 0,0, 1, 1, 0,0, 1, 0, 1, 1, 0,0, 1, 0, 1, 1, 0, 1, 0,0, 1, 0, 1, 1, 0, 1, 0,0, 1, 0, 1, 1, 0, 1, 0,0, 1, 0, 1, 1, 0, 1, 0,0, 1, 1, 0, 1, 0,0, 1, 1, 0, 1, 0, 0, 1, 1, 0,0, 1, 1, 0,0, 1, 1, 0,0, 1, 1, 0, 1, 0, 1, 0, 1, 0, 1, 1, 0, 1, 0, 1, 0, 1, 0, 1, 0, 1, 0, 0, 1, 0, 1, 0, 1, 0,0, 1, 0, 1, 0, 1, 1, 0, 1, 0,0, 1, 0, 1, 1, 0, 1, 0,0, 1, 0, 1, 1, 0,0, 1, 0, 1, 1, 0,0, 1, 0, 1, 0, 1, 0, 1, 0, 1, 0, 1, 0, 0, 1, 0, 1, 0, 1, 0, 1];

a sequence 30: [0, 1, 0, 1, 0, 1, 0, 1, 0, 1, 0, 1, 0, 1, 0, 1, 1, 0,0, 1, 1, 0, 1, 0,0, 1, 1, 0,0, 1, 0, 1, 0, 1, 1, 0, 1, 0,0, 1, 0, 1, 1, 0, 1, 0,0, 1, 0, 1, 0, 1, 1, 0, 1, 0, 1, 0, 1, 0,0, 1, 0, 1, 1, 0, 1, 0, 1, 0, 1, 0,0, 1, 0, 1, 0, 1, 0, 1, 1, 0,0, 1, 1, 0,0, 1, 1, 0,0, 1, 1, 0,0, 1, 1, 0, 0, 1, 1, 0,0, 1, 0, 1, 1, 0,0, 1, 1, 0, 1, 0,0, 1, 1, 0, 1, 0,0, 1, 0, 1, 1, 0, 1, 0,0, 1, 0, 1, 1, 0, 1, 0,0, 1, 0, 1, 1, 0, 1, 0,0, 1, 0, 1, 1, 0, 0, 1, 0, 1, 1, 0,0, 1, 1, 0, 1, 0,0, 1, 1, 0, 1, 0,0, 1, 1, 0, 1, 0, 1, 0, 1, 0, 1, 0, 1, 0, 1, 0, 1, 0, 1, 0, 1, 0, 1, 0, 1, 1, 0, 1, 0, 1, 0,0, 1, 0, 1, 0, 1, 1, 0, 1, 0,0, 1, 0, 1, 1, 0, 1, 0,0, 1, 0, 1, 1, 0,0, 1, 0, 1, 1, 0,0, 1, 0, 1, 0, 1, 0, 1, 0, 1, 0, 1, 0, 1, 0, 1, 0, 1];

a sequence 31: [0, 1, 0, 1, 0, 1, 0, 1, 0, 1, 0, 1, 0, 1, 1, 0,0, 1, 1, 0,0, 1, 0, 1, 1, 0,0, 1, 1, 0,0, 1, 1, 0, 1, 0,0, 1, 0, 1, 1, 0, 1, 0,0, 1, 0, 1, 1, 0, 1, 0,0, 1, 0, 1, 0, 1, 0, 1, 1, 0, 1, 0, 1, 0, 1, 0,0, 1, 0, 1, 0, 1, 0, 1, 0,0, 1, 1, 0,0, 1, 1, 0,0, 1, 1, 0, 0, 1, 0, 1, 1, 0, 1, 0,0, 1, 1, 0, 1, 0, 0, 1, 0, 1, 1, 0, 1, 0,0, 1, 0, 1, 1, 0, 1, 0,0, 1, 0, 1, 1, 0, 1, 0,0, 1, 0, 1, 0, 1, 0, 1, 0, 1, 0, 0, 1, 1, 0,0, 1, 1, 0, 1, 0, 0, 1, 1, 0, 1, 0, 1, 0,0, 1, 1, 0,0, 1, 0, 1, 1, 0, 1, 0,0, 1, 1, 0,0, 1, 1, 0, 0, 1, 0, 1, 0, 1, 0, 1, 0, 1, 0, 1, 1, 0, 1, 0, 1, 0, 1, 0, 1, 0, 1, 0,0, 1, 1, 0, 1, 0, 1, 0,0, 1, 0, 1, 1, 0, 1, 0,0, 1, 0, 1, 1, 0,0, 1, 1, 0,0, 1, 1, 0,0, 1, 0, 1, 1, 0,0, 1, 0, 1, 0, 1, 0, 1, 0, 1, 0, 1, 0, 1, 0, 1];

a sequence 32: [0, 1, 0, 1, 0, 1, 0, 1, 0, 1, 0, 1, 0, 1, 1, 0,0, 1, 1, 0,0, 1, 0, 1, 1, 0,0, 1, 1, 0,0, 1, 1, 0, 1, 0,0, 1, 0, 1, 1, 0, 0, 1, 1, 0,0, 1, 0, 1, 0, 1, 0, 1, 0, 1, 1, 0, 1, 0, 1, 0, 1, 0, 1, 0, 1, 0,0, 1, 0, 1, 0, 1, 0, 1, 1, 0,0, 1, 1, 0,0, 1, 1, 0,0, 1, 1, 0, 1, 0,0, 1, 0, 1, 1, 0,0, 1, 1, 0, 1, 0,0, 1, 0, 1, 0, 1, 1, 0, 1, 0,0, 1, 0, 1, 1, 0, 1, 0,0, 1, 0, 1, 1, 0, 1, 0, 1, 0, 1, 0, 0, 1, 0, 1, 1, 0, 0, 1, 1, 0, 1, 0,0, 1, 0, 1, 1, 0,0, 1, 1, 0,0, 1, 1, 0,0, 1, 1, 0, 1, 0, 1, 0, 1, 0, 1, 0, 1, 0,0, 1, 0, 1, 0, 1, 0, 1, 1, 0, 1, 0,0, 0, 1, 0, 1, 0, 1, 0, 1, 1, 0, 1, 0,0, 1, 1, 0, 1, 0, 1, 0,0, 1, 0, 1, 1, 0, 1, 0,0, 1, 1, 0,0, 1, 1, 0,0, 1, 0, 1, 1, 0,0, 1, 1, 0,0, 1, 0, 1, 0, 1, 0, 1, 0, 1, 0, 1, 0, 1, 0, 1];

a sequence 33: [0, 1, 1, 0, 0, 1, 1, 0, 0, 1, 1, 0,0, 1, 1, 0, 1, 0, 1, 0, 1, 0, 1, 0,0, 1, 0, 1, 0, 1, 0, 1, 0, 1, 0, 1, 1, 0, 1, 0, 0, 1, 0, 1, 1, 0, 1, 0, 1, 0,0, 1, 0, 1, 1, 0,0, 1, 1, 0, 1, 0, 1, 0,0, 1, 0, 1, 1, 0,0, 1, 1, 0, 1, 0, 1, 0,0, 1, 1, 0,0, 1, 1, 0, 1, 0, 1, 0, 1, 0, 1, 0, 1, 0, 1, 0, 1, 0, 1, 0, 1, 0,0, 1, 0, 1, 1, 0, 1, 0, 1, 0, 1, 0,0, 1, 0, 1, 1, 0,0, 1, 0, 1, 1, 0, 1, 0,0, 1, 0, 1, 1, 0,0, 1, 1, 0, 1, 0,0, 1, 0, 1, 1, 0, 1, 0,0, 1, 1, 0, 1, 0,0, 1, 0, 1, 1, 0, 1, 0,0, 1, 1, 0, 0, 1, 0, 1, 0, 1, 0, 1, 0, 1, 1, 0,0, 1, 1, 0,0, 1, 0, 1, 1, 0,0, 1, 1, 0,0, 1, 1, 0,0, 1, 1, 0, 1, 0, 1, 0,0, 1, 1, 0, 0, 1, 1, 0, 1, 0, 1, 0,0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0,0, 1, 1, 0, 0, 1, 1, 0, 0, 1, 0, 1, 1, 0, 1, 0,0, 1, 0, 1, 0, 1, 0, 1, 0, 1, 0, 1, 0, 1, 1, 0, 1, 0, 1, 0, 1, 0, 1, 0, 0, 1, 1, 0, 0, 1];

a sequence 34: [0, 1, 1, 0, 0, 1, 1, 0, 0, 1, 1, 0,0, 1, 1, 0, 1, 0, 1, 0, 1, 0, 1, 0,0, 1, 0, 1, 0, 1, 0, 1, 0, 1, 0, 1, 1, 0, 1, 0, 1, 0, 0, 1, 0, 1, 1, 0, 1, 0,0, 1, 1, 0, 1, 0,0, 1, 1, 0,0, 1, 0, 1, 1, 0, 1, 0,0, 1, 1, 0, 1, 0,0, 1, 0, 1, 1, 0, 1, 0,0, 1, 1, 0,0, 1, 0, 1, 1, 0, 1, 0, 1, 0, 1, 0, 1, 0, 1, 0, 1, 0, 1, 0, 1, 0, 1, 0, 1, 0, 1, 0,0, 1, 1, 0, 1, 0, 0, 1, 0, 1, 0, 1, 0, 1, 1, 0, 1, 0,0, 1, 0, 1, 1, 0, 1, 0, 1, 0,0, 1, 1, 0,0, 1, 0, 1, 1, 0, 1, 0,0, 1, 1, 0,0, 1, 0, 1, 1, 0, 1, 0,0, 1, 1, 0, 0, 1, 0, 1, 1, 0, 1, 0,0, 1, 1, 0,0, 1, 0, 1, 1, 0, 1, 0,0, 1, 0, 1, 1, 0, 1, 0,0, 1, 0, 1, 1, 0, 1, 0, 1, 0, 1, 0, 1, 0, 1, 0, 1, 0, 1, 0, 1, 0,0, 1, 1, 0,0, 1, 1, 0, 1, 0, 1, 0,0, 1, 1, 0,0, 1, 0, 1, 1, 0, 1, 0,0, 1, 0, 1, 0, 1, 0, 1, 0, 1, 0, 1, 0, 1, 1, 0, 1, 0, 1, 0, 1, 0, 1, 0, 1, 0,0, 1, 1, 0, 0, 1, 1, 0, 0, 1, 1, 0, 0, 1];

a sequence 35: [0, 1, 0, 1, 1, 0, 1, 0, 1, 0, 1, 0,0, 1, 0, 1, 0, 1, 1, 0, 1, 0, 1, 0,0, 1, 0, 1, 1, 0, 1, 0,0, 1, 0, 1, 1, 0,0, 1, 1, 0, 1, 0,0, 1, 0, 1, 1, 0,0, 1, 1, 0, 1, 0,0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 1, 0,0, 1, 0, 1, 1, 0, 1, 0, 1, 0,0, 1, 1, 0, 1, 0,0, 1, 1, 0, 1, 0,0, 1, 1, 0, 1, 0, 1, 0,0, 1, 1, 0, 0, 1, 0, 1, 1, 0,0, 1, 1, 0, 1, 0,0, 1, 1, 0,0, 1, 1, 0,0, 1, 1, 0, 1, 0, 1, 0, 1, 0, 1, 0,0, 1, 0, 1, 1, 0, 1, 0, 1, 0, 1, 0, 1, 0, 1, 0, 1, 1, 0, 1, 0, 1, 0, 1, 0, 1, 0, 1, 0,0, 1, 0, 1, 1, 0,0, 1, 1, 0, 1, 0,0, 1, 0, 1, 1, 0,0, 1, 1, 0, 1, 0, 1, 0,0, 1, 1, 0, 1, 0,0, 1, 0, 1, 0, 1, 0, 1, 0, 1, 0, 1, 0, 1, 0, 1, 0, 1, 0, 1, 0, 1, 1, 0,0, 1, 1, 0, 1, 0,0, 1, 1, 0,0, 1, 0, 1, 1, 0, 1, 0,0, 1, 0, 1, 1, 0, 1, 0, 1, 0, 1, 0, 1, 0, 0, 1, 0, 1, 0, 0, 1, 0, 1];

a sequence 36: [0, 1, 0, 1, 1, 0, 1, 0, 1, 0, 1, 0,0, 1, 0, 1, 0, 1, 1, 0, 1, 0, 1, 0,0, 1, 0, 1, 1, 0, 1, 0,0, 1, 0, 1, 1, 0,0, 1, 1, 0, 1, 0,0, 1, 0, 1, 1, 0,0, 1, 1, 0, 1, 0,0, 1, 0, 1, 1, 0, 1, 0, 0, 1, 0, 1, 0, 1, 0, 1, 0, 1, 0, 1, 0, 1, 0, 1, 1, 0, 1, 0,0, 1, 0, 1, 1, 0, 1, 0,0, 1, 0, 1, 1, 0, 1, 0,0, 1, 0, 1, 1, 0, 1, 0,0, 1, 0, 1, 1, 0, 1, 0,0, 1, 1, 0, 0, 1, 1, 0,0, 1, 1, 0,0, 1, 1, 0,0, 1, 1, 0, 1, 0, 1, 0, 1, 0, 1, 0,0, 1, 0, 1, 0, 1, 0, 1, 1, 0, 1, 0, 1, 0, 1, 0, 1, 0, 1, 0, 1, 0, 1, 1, 0, 0, 1, 1, 0,0, 1, 1, 0,0, 1, 1, 0,0, 1, 0, 1, 1, 0,0, 1, 1, 0, 1, 0,0, 1, 0, 1, 1, 0,0, 1, 1, 0, 1, 0, 0, 1, 0, 1, 1, 0, 1, 0, 0, 1, 0, 1, 0, 1, 0, 1, 0, 1, 0, 1, 1, 0,0, 1, 1, 0, 1, 0,0, 1, 1, 0,0, 1, 0, 1, 1, 0, 1, 0,0, 1, 0, 1, 1, 0, 1, 0, 1, 0, 1, 0, 1, 0, 0, 1, 0, 1, 0, 0, 1, 0, 1];

a sequence 37: [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 1, 0, 0, 1, 0, 0, 1, 0, 1, 1, 0, 1, 0, 1, 0, 1, 0, 1, 0, 1, 0, 1, 0, 1, 0,0, 1, 0, 1, 1, 0, 1, 0,0, 1, 0, 1, 1, 0, 1, 0, 1, 0,0, 1, 0, 1, 1, 0, 1, 0, 1, 0,0, 1, 0, 1, 1, 0, 1, 0, 0, 1, 0, 1, 1, 0, 0, 1, 1, 0,0, 1, 1, 0,0, 1, 1, 0, 1, 0, 1, 0, 1, 0, 1, 0,0, 1, 0, 1, 0, 1, 1, 0, 1, 0, 1, 0, 1, 0, 1, 1, 0, 1, 0, 1, 0, 1, 0, 1, 0, 1, 0, 0, 1, 1, 0,0, 1, 1, 0,0, 1, 1, 0, 1, 0, 0, 1, 0, 1, 1, 0,0, 1, 1, 0, 1, 0,0, 1, 0, 1, 1, 0, 1, 0,0, 1, 1, 0, 1, 0, 1, 0,0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 0, 1];

a sequence 38: [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 1, 0, 1, 0, 1, 0, 1, 0, 1, 0, 0, 1, 0, 1];

a sequence 39: [0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1];

a sequence 40: [0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 1, 0, 0, 1, 1, 0, 0, 1, 0, 1, 1, 0, 1, 0, 1, 0, 1, 0, 1, 0, 1, 0, 0, 1, 1, 0, 0, 1, 0, 1, 1, 0, 1, 0, 1, 0, 1, 1, 0, 1, 0, 0, 1, 0, 1, 0, 1, 0, 1, 1, 0, 1, 0, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1];

a sequence 41: [0, 1, 0, 1, 0, 1, 0, 1, 0, 1, 0, 1, 0, 1, 1, 0, 1, 0, 1, 0, 0, 1, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 1, 0, 1, 0, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1, 1, 0, 1, 0, 0, 1, 1, 0, 1, 0, 1, 0, 0, 1, 1, 0, 0, 1, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1];

a sequence 42: [0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1];

a sequence 43: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 0, 1, 0, 1, 0, 1, 1, 0, 1, 0, 0, 1, 1, 0, 0, 1, 1, 0, 0, 1];

a sequence 44: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 0, 1, 1, 0, 1, 0, 0, 1, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 0, 1];

a sequence 45: [0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1];

a sequence 46: [0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 1, 0, 0, 1, 0, 1, 1, 0, 0, 1, 0, 1, 1, 0, 0, 1, 0, 1, 1, 0, 0, 1, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1];

a sequence 47: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 0, 1, 1, 0, 1, 0, 0, 1, 0, 1, 0, 1, 1, 0, 0, 1, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1,

0, 1, 0, 0, 1, 0, 1, 0, 1, 0, 1,0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1];

a sequence 48: [0, 1, 1, 0, 0, 1, 1, 0, 0, 1, 1,0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 1, 0, 0, 1, 1, 0, 0, 1];

a sequence 49: [0, 1, 0, 1, 1, 0, 1, 0, 0, 1, 0, 1, 1, 0, 1, 0, 1, 0, 1, 0, 1, 0, 1,0,0, 1, 0, 1, 0, 1, 0, 1, 1, 0, 0, 1, 1, 0, 0, 1, 1, 0, 0, 1, 1, 0, 0, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1];

a sequence 50: [0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 0, 1, 1, 0, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 0, 1, 1, 0, 1, 0, 0, 1, 0, 1, 1, 0, 1, 0,0, 1, 1,0,0, 1, 0, 1, 1,0,0, 1, 1, 0, 1,0,0, 1, 1,0,0, 1, 0, 1, 1,0,0, 1, 1, 0, 1,0,0, 1, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1];

a sequence 51: [0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 1, 0, 1, 0, 0, 1, 1, 0, 1, 0, 1, 0, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1];

a sequence 52: [0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1,0,0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1,0,0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1];

a sequence 53: [0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 1, 0, 1, 0, 0, 1, 0, 1, 1, 0, 1, 0, 1, 0, 0, 1, 1, 0, 1, 0, 1, 0, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 0, 1, 0, 1, 0, 1, 0, 1];

a sequence 54: [0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 0, 1, 1, 0, 1, 0, 0, 1, 0, 1, 0, 1, 1, 0, 0, 1, 0, 1, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 1, 0, 1, 0, 0, 1, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 0, 1, 0, 1];

a sequence 55: [0, 1, 1, 0, 0, 1, 1, 0, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1];

a sequence 56: [0, 1, 1, 0, 0, 1, 1, 0, 1,0, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 1, 0,0, 1, 0, 1, 1, 0, 1, 0, 0, 1, 0, 1, 0, 1, 0, 1, 1, 0, 0, 1, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1];

a sequence 57: [0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1,0,0, 1, 1, 0, 0, 1, 1, 0, 1, 0, 0, 1, 1, 0, 1, 0, 0, 1, 1, 0, 0, 1, 1, 0, 0, 1, 1,0,0, 1, 1, 0, 0, 1, 0, 1, 1, 0, 1, 0, 0, 1, 0, 1, 1,

0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1,
0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 0, 1, 1,
0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0,
0, 1, 0, 1, 0, 1, 0, 1];

a sequence 58: [0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0,
1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0,
1, 0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 1, 0,
1, 0, 0, 1, 0, 1, 0, 1, 1, 0, 1, 0, 1, 0, 0, 1, 0, 1, 1, 0, 1, 0, 1, 0, 0, 1, 0, 1, 1, 0, 0, 1, 1, 0, 0, 1, 1, 0, 1, 0, 0, 1, 1, 0, 0, 1, 1,
0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0,
0, 1, 0, 1, 0, 1, 0, 1];

a sequence 59: [0, 1, 1, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1,
1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0,
1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0,
0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 0, 1, 0, 1, 0,
1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0,
1, 0, 0, 1, 1, 0, 0, 1];

a sequence 60: [0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1,
1, 0, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1,
0, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1,
1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 0,
1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0,
1, 0, 0, 1, 1, 0, 0, 1];

a sequence 61: [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0,
0, 1, 1, 0, 0, 1, 1, 0, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0,
1, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0,
1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 1,
0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0,
1, 0, 1, 0, 0, 1, 0, 1];

a sequence 62: [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0,
0, 1, 1, 0, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1,
0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1,
0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 1, 0, 1, 1, 0, 1,
0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0,
1, 0, 1, 0, 0, 1, 0, 1];

a sequence 63: [0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1,
0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1,
0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 0, 1,
1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 0,
1, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0,
0, 1, 1, 0, 1, 0, 0, 1];

a sequence 64: [0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1,
0, 1, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0,
1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0,
0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0,
1, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0,
0, 1, 1, 0, 1, 0, 0, 1];

a sequence 65: [0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0,
1, 0, 0, 1, 0, 1, 0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1,
0, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 0, 1, 0, 1, 1, 0, 1, 0, 1, 0, 1, 0, 1, 0, 0, 1,
1, 0, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1,
0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 0, 1, 0, 1, 0, 1,
0, 1, 0, 1, 0, 1, 0, 1];

a sequence 66: [0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0,
1, 0, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 0,
1, 1, 0, 0, 1, 1, 0, 0, 1, 1, 0, 0, 1, 1, 0, 1, 0, 1, 0, 1, 0, 0, 1, 0, 1, 0, 1, 1, 0, 1, 0, 1, 0, 1, 0, 1, 0, 0, 1, 0, 1, 0, 1, 1, 0, 1, 0, 1, 0, 1, 1, 0,
0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 1, 0, 1, 0, 0, 1, 1,
0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 0, 1, 0, 1, 0, 1, 0, 1, 0, 1, 0, 1,
0, 1, 0, 1, 0, 1, 0, 1];

a sequence 67: [0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 0, 1, 0, 1, 1, 0, 1, 0, 1, 0, 1, 0, 0, 1, 0, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 0, 1, 0, 0, 1, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 0, 1, 0, 1, 0, 1, 0, 1];

a sequence 68: [0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 0, 1, 0, 1, 0, 1, 1, 0, 1, 0, 0, 1, 0, 1, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 0, 1, 1, 0, 1, 0, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 0, 1, 0, 1, 0, 1, 0, 1];

a sequence 69: [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 1, 0, 0, 1];

a sequence 70: [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 0, 1, 1, 0, 1, 0, 1, 0, 1, 0, 0, 1, 0, 1, 1, 0, 0, 1, 1, 0, 1, 0, 1, 0, 1, 0, 1, 0, 1, 0, 0, 1, 0, 1, 1, 1, 0, 1, 0, 1, 0, 1, 0, 1, 0, 1, 0, 1, 0, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 1, 0, 0, 1];

a sequence 71: [0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 1, 0, 0, 1, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 0, 1, 1, 0, 1, 0, 0, 1, 0, 1, 0, 1, 1, 0, 1, 0, 1, 0, 1, 0, 0, 1, 0, 1];

a sequence 72: [0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 0, 1, 0, 1, 0, 1, 1, 0, 0, 1, 1, 0, 1, 0, 0, 1, 0, 1, 0, 1, 1, 0, 1, 0, 1, 0, 1];

a sequence 73: [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 0, 1, 1, 0, 0, 1, 1, 0, 1, 0, 0, 1, 1, 0, 1, 0, 0, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 0, 1, 0, 1, 1, 0, 1, 0, 0, 1, 0, 1, 0, 1, 0, 1];

a sequence 74: [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 1, 0, 0, 1, 1, 0, 0, 1, 0, 1, 0, 1, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 0, 1, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 0, 1, 1, 0, 0, 1, 1, 0, 1, 0, 0, 1, 0, 1, 1, 0, 1, 0, 0, 1, 0, 1, 0, 1, 0, 1];

a sequence 75: [0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 0, 1, 0, 1, 1, 0, 0, 1, 1, 0, 1, 0, 0, 1];

a sequence 76: [0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 0, 1, 1, 0, 0, 1, 0, 1, 1, 0, 0, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1];

a sequence 77: [0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 1, 0, 0, 1, 0, 1, 0, 1, 1, 0, 0, 1, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 0, 1, 1, 0, 0, 1, 1, 0, 0, 1, 0, 1, 0, 1];

a sequence 78: [0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1];

a sequence 79: [0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 0, 1, 1, 0, 0, 1, 0, 1, 0, 1, 0, 1, 1, 0, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 0, 1, 1, 0, 0, 1, 1, 0, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0];

a sequence 80: [0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 0, 1, 1, 0, 0, 1, 0, 1, 1, 0];

a sequence 81: [0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 0, 1, 1, 0, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 1, 0, 1, 0, 0, 1, 0, 1, 0, 1, 0, 1, 0, 1, 1, 0, 1, 0, 0, 1, 0, 1, 0, 1, 0, 1, 0, 1];

a sequence 82: [0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 0, 1, 0, 1, 0, 1, 1, 0, 0, 1, 0, 1, 0, 1, 0, 1];

a sequence 83: [0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 0, 1, 0, 1, 1, 0, 1, 0, 1, 0, 1, 1, 0, 1, 0, 0, 1, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 1, 0, 1, 0, 1, 0, 1, 0];

a sequence 84: [0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 1, 0, 1, 0, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 1, 0, 0, 1, 1, 0, 0, 1, 1, 0, 1, 0, 0, 1, 0, 1, 1, 0, 0, 1, 1, 0, 1, 0, 1, 0, 1, 0, 1, 0];

a sequence 85: [0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 0, 1, 0, 1, 0, 1, 0, 1];

a sequence 86: [0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 0, 1, 0, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1,

0, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1];

a sequence 87: [0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 0, 1, 0, 1, 0, 1, 0, 1, 0, 1];

a sequence 88: [0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 0, 1, 0, 1, 0, 1, 0, 1, 0, 1, 0, 1, 0, 1, 0, 0, 1, 0, 1, 0, 1, 0, 1, 0, 1];

a sequence 89: [0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1];

a sequence 90: [0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1];

a sequence 91: [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 1, 0, 1, 0, 0, 1, 0, 1, 0, 1, 0, 1, 0, 1, 0, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1];

a sequence 92: [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 1, 0, 0, 1, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0];

a sequence 93: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1];

a sequence 94: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 0, 1, 1, 0, 1, 0, 1, 0, 1, 0, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1, 1, 0, 0, 1];

a sequence 95: [0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 1, 0, 0, 1, 0, 1, 1, 0, 0, 1, 1, 0, 0, 1, 0, 1, 0, 1, 0, 1, 0, 0, 1, 0, 1, 1, 0, 0, 1, 1, 0, 0, 1, 1, 0, 0, 1, 1, 0, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1];

a sequence 96: [0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0,
0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1,
0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0,
1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 1, 0, 1,
0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0,
1, 0, 0, 1, 1, 0, 0, 1];
a sequence 97: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0,
0, 1, 0, 1, 0, 1, 0, 1, 0, 1, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1,
0, 1, 0, 1, 0, 0, 1, 0, 1, 0, 1, 1, 0, 1, 0, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 0, 1,
0, 1, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 1, 0, 1, 0, 1,
0, 1, 0, 0, 1, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 0, 1, 1, 0, 0, 1,
1, 0, 0, 1, 1, 0, 0, 1];
a sequence 98: [0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0,
0, 1, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0,
1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0,
1, 0, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 1,
0, 1, 0, 0, 1, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 0, 1, 1, 0, 0, 1,
1, 0, 0, 1, 1, 0, 0, 1];
a sequence 99: [0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1,
1, 0, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 0,
1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0,
1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0,
1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0,
1, 0, 0, 1, 1, 0, 0, 1];
a sequence 100: [0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0,
1, 1, 0, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1,
1, 0, 0, 1, 0, 1, 1, 0, 1, 0,0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0,
1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 1,0, 0, 1, 1, 0, 0, 1, 1, 0, 0, 1, 0, 1, 0, 1,
0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1,
0, 1, 0, 0, 1, 1, 0, 0, 1];
a sequence 101: [0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1,
0, 1, 0, 1, 0, 0, 1, 0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0,
0, 1, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1,
0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1,
1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0,
1, 0, 1, 1, 0, 1, 0, 0, 1];
a sequence 102: [0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1,
0, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1,
1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0,
1, 0, 1, 0, 1, 0, 1, 1, 0, 1, 0, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1,
1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0,
1, 0, 1, 1, 0, 1, 0, 0, 1];
a sequence 103: [0, 1, 1, 0, 1, 0, 0, 1, 1, 0, 0, 1, 0, 1, 1, 0, 1, 0, 0, 1, 1, 0, 0, 1, 1, 0, 0, 1, 1,0, 0, 1, 1, 0, 1, 0, 1, 0, 1, 0, 0, 1, 0, 1,
0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1,
0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 0, 0, 1,
0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 0,
1, 0, 1, 1, 0, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0,
0, 1, 1, 0, 1, 0, 0, 1];
a sequence 104: [0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0,
1, 0, 1, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 1, 0, 1, 0, 0, 1, 1, 0,
0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1, 1,
0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 0, 1, 0, 1, 0,
1, 0, 1, 1, 0, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 1,
0, 0, 1, 1, 0, 1, 0, 0, 1];
a sequence 105: [0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0,
1, 1, 0, 0, 1, 1, 0, 0, 1, 1, 0, 0, 1, 0, 1, 1, 0, 0, 1, 0, 1, 1, 0, 1, 0, 1, 0, 0, 1, 1, 0, 1, 0, 1, 0, 1, 0, 1, 0, 0, 1, 1, 0, 0, 1,
1, 0, 1, 0, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0,
1, 1,0, 1, 0, 0, 1, 1, 0, 1, 0, 0, 1, 0, 1, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 0, 1,

0, 1, 1, 0, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0, 1, 0, 0, 1, 1, 0, 0, 1, 1, 0, 0, 1, 0, 1, 0, 1, 0, 1];

a sequence 106: [0, 1, 0, 1, 0, 1, 0, 1, 1, 0, 0, 1, 1, 0, 0, 1, 1, 0, 1, 0, 0, 1, 0, 1, 0, 1, 1, 0, 1, 0,0, 1, 1, 0, 1, 0, 1, 0, 1, 0, 1, 0, 0, 1, 1, 0, 0, 1, 1, 0, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1];

a sequence 107: [0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 1, 0, 1, 0, 0, 1, 0, 1, 0, 1, 0, 1, 0, 1, 1, 0, 0, 1, 1, 0, 1, 0, 0, 1, 0, 1, 0, 1, 1, 0, 1, 0, 1, 0, 0, 1, 0, 1, 0, 1, 0, 1, 0, 1, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1];

a sequence 108: [0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 1, 0, 0, 1, 0, 1, 1, 0, 1, 0, 1, 0, 0, 1, 0, 1, 1, 0, 0, 1, 1, 0, 0, 1, 0, 1, 1, 0, 1, 0, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 1, 0, 1, 0, 0, 1, 1, 0, 0, 1, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 0, 1, 0, 1, 0, 1, 1, 0, 0, 1, 1, 0, 0, 1, 1, 0, 1, 0, 1];

a sequence 109: [0, 1, 0, 1, 1, 0, 0, 1, 0, 1, 0, 1, 1, 0, 0, 1, 0, 1, 1, 0, 1, 0, 1, 0, 0, 1, 1, 0, 1, 0, 1, 0, 1, 0, 1, 0, 1, 0, 0, 1, 0, 1, 0, 1, 0, 1, 1, 0, 1, 0, 0, 1, 1, 0, 1, 0, 0, 1, 1, 0, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 0, 1, 0, 1, 0, 1, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 0, 1, 1, 0, 0, 1, 0, 1, 0, 1, 0, 0, 1, 1, 0, 1, 0, 0, 1, 0, 1, 1, 0, 0, 1, 1, 1, 0, 0, 1, 0, 1, 0, 1, 1, 0, 0, 1, 0, 1, 0, 1, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 1, 0, 1, 0, 1, 0, 0, 1, 0, 1, 1, 0, 0, 1, 0, 1, 1, 0, 0, 1, 0, 1];

a sequence 110: [0, 1, 0, 1, 1, 0, 0, 1, 0, 1, 0, 1, 1, 0, 0, 1, 0, 1, 1, 0, 1, 0, 1, 0, 1, 0, 0, 1, 1, 0, 1, 0, 1, 0, 1, 0, 1, 0, 1, 0, 0, 1, 0, 1, 0, 0, 1, 1, 0, 1, 0, 1, 0, 0, 1, 1, 0, 1, 0, 0, 1, 1, 0, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 1, 0, 1, 0, 0, 1, 1, 0, 1, 0, 1, 0, 0, 1, 1, 0, 0, 1, 1, 0, 1, 0, 1, 0, 0, 1, 0, 1, 0, 1, 0, 1, 0, 1, 0, 1, 0, 0, 1, 1, 0, 0, 1,0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 1, 0, 0, 1, 0, 1, 1, 0, 0, 1, 0];

a sequence 111: [0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 0, 0, 1, 1, 0, 0, 1, 0, 1, 0, 1, 1, 0, 0, 1, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 1, 0, 0, 1, 1, 0, 1, 0, 1, 0, 1, 0, 1, 0, 1, 0, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 1, 0, 1, 0, 0, 1, 1, 0, 0, 1, 1, 0, 0, 1];

a sequence 112: [0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 1, 0, 0, 1, 0, 1, 0, 1, 0, 0, 1, 1, 0, 0, 1, 0, 1, 1, 0, 0, 1, 0, 1,0, 1, 1, 0, 0, 1, 0, 1, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 1, 0, 1, 0, 1, 0, 0, 1, 1, 0, 0, 1, 0, 1, 0, 1, 0, 1, 0, 1, 0, 1, 1, 0, 1, 0, 1, 0, 1, 0, 1, 0, 0, 1, 1, 0, 0, 1, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 1, 0, 0, 1, 0, 1, 0, 1, 0, 0, 1, 1, 0, 1, 0, 0, 1];

a sequence 113: [0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 1, 0, 0, 1, 0, 1, 0, 1, 1, 0, 0, 1, 1, 0, 1, 0, 1, 0, 0, 1, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 1, 0, 1, 0, 1, 0, 0, 1, 1, 0, 1, 0, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 1, 0, 1];

a sequence 114: [0, 1, 0, 1, 1, 0, 0, 1, 1, 0, 1, 0, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 1, 0, 0, 1, 0, 1, 1, 0, 0, 1, 0, 1, 0, 1, 1, 0, 0, 1, 0, 1, 1, 0, 1, 0, 1, 0, 0, 1, 1, 0, 1, 0, 1, 0, 0, 1, 1, 0, 0, 1, 1, 0, 0, 1, 1, 0, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 1, 0, 0, 1, 0, 1, 1, 0, 0, 1, 1, 0, 1, 0, 1, 0, 1, 0, 1, 0, 0, 1, 0, 1, 1, 0, 0, 1, 1, 0, 1, 0, 1, 0, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 1, 0, 1, 0, 0, 1, 1, 0, 0, 1, 1, 0, 0, 1, 0, 1];

a sequence 115: [0, 1, 1, 0, 1, 0, 1, 0, 1, 0, 0, 1, 0, 1, 0, 1, 1, 0, 1, 0, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 0, 1, 1, 0, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 1, 0, 1, 0, 0, 1, 1, 0, 0, 1, 0, 1, 1, 0, 0, 1, 0, 1, 1, 0, 0, 1, 0, 1, 0, 1, 1, 0, 0, 1, 0, 1, 0, 1, 0, 1, 0, 1, 1, 0, 0, 1, 0, 1, 0, 1, 1, 0, 1, 0, 0, 1, 0, 1, 0, 1, 1, 0, 0, 1, 0, 1, 0, 1, 1, 0, 1, 0, 0, 1, 1, 0, 0, 1, 0, 1, 0, 1, 1, 0, 1, 0, 0, 1, 1, 0, 0, 1, 0, 1, 0, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 1, 0, 0, 1;

a sequence 116: [0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 0, 1, 1, 0, 0, 1, 0, 1, 0, 1, 1, 0, 1, 0, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 1, 0, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 1, 0, 0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 1;
0, 1, 0, 1, 0, 1, 0, 0, 1];

a sequence 117: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 0, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 0, 1, 0, 1, 1, 0, 0, 1, 1, 0, 0, 1, 1, 0, 1, 0, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0, 1, 0, 0, 1, 1, 0, 1, 0, 1, 0, 1, 0, 0, 1, 1, 0, 0, 1, 1, 0, 0, 1, 0, 1, 1;
0, 0, 1, 0, 1, 0, 1, 0, 1];

a sequence 118: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 1, 0, 0, 1, 0, 1, 0, 1, 1, 0, 1, 0, 0, 1, 0, 1, 0, 1, 1, 0, 0, 1, 1, 0, 1, 0, 0, 1, 0, 1, 1, 0, 0, 1, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 0, 1, 1, 0, 1, 0, 1;
0, 0, 1, 1, 0, 0, 1, 0, 1, 0, 1, 1, 0, 1, 0, 1, 0, 1, 0, 1, 0, 1, 0, 1, 0, 0, 1, 1, 0, 1, 0, 1, 0, 0, 1, 0, 1, 1, 0, 0, 1, 1, 0, 1, 0, 1, 0, 1, 0, 0, 1, 0, 1, 0, 1, 0, 1, 1;
1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 1, 0, 0, 1, 0, 1, 1;
0, 0, 1, 0, 1, 0, 1, 0, 1];

a sequence 119: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 1, 0, 1, 0, 1, 0, 0, 1;
0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 0, 1, 0, 1, 1, 0, 1, 0, 1, 0, 0, 1, 1, 0, 0, 1, 1;
0, 0, 1, 0, 1, 1, 0, 0, 1, 0, 1, 0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 0, 1, 0, 1, 0, 1, 0, 1, 0, 1;
0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 0, 1, 1, 0, 0, 1, 1;
0, 1, 0, 1, 0, 0, 1, 0, 1];

a sequence 120: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 1, 0, 0, 1, 0, 1, 0, 1, 1;
0, 0, 1, 1, 0, 1, 0, 0, 1, 0, 1, 1, 0, 0, 1, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1;
0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 0, 1, 1, 0, 0;
1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 1, 0;
1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1;
0, 1, 0, 1, 0, 0, 1, 0, 1];

a sequence 121: [0, 1, 0, 1, 0, 1, 0, 1, 1, 0, 0, 1, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 0, 1, 0, 1, 1, 0, 0, 1, 0, 1, 0, 1, 0, 1, 0, 1, 0, 1, 1, 0, 0, 1, 0, 1, 0, 1, 1, 0, 1, 0, 0, 1, 1, 0, 0, 1, 0, 1, 0, 1, 0, 1, 0, 1;
1, 0, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 0, 1, 1;
0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1;
1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 0, 1, 1;
0, 0, 1, 0, 1, 0, 1, 0, 1];

a sequence 122: [0, 1, 0, 1, 0, 1, 0, 1, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 0, 1, 1;
0, 1, 0, 0, 1, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 1, 0, 1, 0, 1, 0;
1, 0, 1, 0, 1, 0, 0, 1, 0, 1, 0, 1, 1, 0, 0, 1, 1, 0, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 1, 0, 0;
1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 1, 0, 1, 0;
0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 1, 0, 0, 1, 0, 1, 1;
0, 0, 1, 0, 1, 0, 1, 0, 1];

a sequence 123: [0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 1, 0, 0, 1, 1;
0, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1;
0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 0;
1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 1, 0, 1, 0, 0, 1, 1, 0, 1, 0, 1, 0, 1, 0, 1, 0, 1, 0;
1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 0, 1, 1, 0, 0, 1, 0, 1, 1, 0, 0, 1, 1, 0, 0, 1, 1;
0, 1, 0, 1, 0, 0, 1, 0, 1];

a sequence 124: [0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 0, 1, 0, 1, 0, 1, 1;
0, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1;
0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 1;
0, 0, 1, 0, 1, 1, 0, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1;
0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 0, 1, 1;
0, 1, 0, 1, 0, 0, 1, 0, 1];

a sequence 125: [0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 0, 1, 0, 1, 0, 1, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1];

a sequence 126: [0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 1, 0, 1, 0, 0, 1, 1, 0, 0, 1, 0, 1, 1, 0, 1, 0, 0, 1, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1];

a sequence 127: [0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0, 0, 1, 1, 0, 0, 1, 0, 1, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 0, 1];

a sequence 128: [0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 1, 0, 0, 1, 1, 0, 1, 0, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1];

a sequence 129: [0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 0, 1, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1];

a sequence 130: [0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1];

a sequence 131: [0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 1, 0, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 1, 0, 0, 1, 0, 1, 1, 0, 1, 0, 1, 0, 0, 1, 0, 1, 0, 1, 1, 0, 0, 1, 0, 1, 0, 1, 1, 0, 0, 1, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1];

a sequence 132: [0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1];

a sequence 133: [0, 1, 0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1, 1, 0, 1, 0, 1, 0, 0, 1, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 0, 1, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 0, 1, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 1, 0, 0, 1, 1, 0, 1, 0, 0, 1, 0, 1, 0, 1, 0, 1, 0, 1, 0, 1, 0, 1, 0, 1, 0, 1];

a sequence 134: [0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 1, 0, 0, 1, 1, 0, 1, 0, 1, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 0, 1, 1, 0, 1, 0, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 1, 0, 0, 1, 1, 0, 1, 0, 1, 0, 1, 0, 1, 1, 0, 0, 1, 1, 0, 1, 0, 0, 1, 1, 0, 1, 0, 0, 1, 1, 0, 0, 1, 0, 1, 1, 0, 0, 1, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 0, 1, 0, 1, 0, 1, 0,
1, 0, 1, 0, 1, 0, 1, 0, 1];

a sequence 135: [0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0,
1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0,
0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 0,
1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0,
0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0,
1, 1, 0, 1, 0, 0, 1, 0, 1];

a sequence 136: [0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0,
1, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1,
1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 1,
0, 1, 0, 0, 1, 0, 1, 0, 1, 1, 0, 1, 0, 0, 1, 1, 0, 0, 1, 1, 0, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0,
0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0,
1, 1, 0, 1, 0, 0, 1, 0, 1];

a sequence 137: [0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0,
1, 1, 0, 1, 0, 0, 1, 1, 0, 1, 0, 0, 1, 0, 1, 1, 0, 1, 0, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 1, 0,
0, 1, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1,
0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 0, 1, 0, 1, 1, 0, 1, 0, 0, 1, 1, 0,
1, 0, 0, 1, 0, 1, 1, 0, 1, 0, 0, 1, 1, 0, 1, 0, 0, 1, 0, 1, 0, 1, 1, 0, 1, 0, 1, 0, 1, 0,0, 1, 1, 0, 0, 1, 0, 1, 1, 0, 0, 1, 1, 0, 0, 1, 0, 1, 0, 1, 0,
1, 0, 1, 0, 1, 0, 1, 0, 1];

a sequence 138: [0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0,
1, 1, 0, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 1, 0, 0, 1, 0, 1,
1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0,
1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 1, 0,
1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 0, 1, 0, 1, 0, 1, 0,
1, 0, 1, 0, 1, 0, 1, 0, 1];

a sequence 139: [0, 1, 0, 1, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 0,
1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1,
1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 0,
1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 0, 1,
1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0,
1, 1, 0, 1, 0, 0, 1, 0, 1];

a sequence 140: [0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 0,
1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 1, 0, 0, 1, 1, 0,
0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1,
0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 1, 0,0, 1,
1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0,
1, 1, 0, 1, 0, 0, 1, 0, 1];

a sequence 141: [0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 0, 1, 1,
0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1,
0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 0, 1, 0,
1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 1, 0, 0, 1, 0, 1, 1, 0, 0, 1, 0, 1,
1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0,
1, 1, 0, 0, 1, 1, 0, 0, 1];

a sequence 142: [0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 0, 1, 1,
0, 1, 0, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 1, 0,
1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0,
0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 0, 1,
1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0,
1, 1, 0, 0, 1, 1, 0, 0, 1];

a sequence 143: [0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 0, 1, 1, 0, 0, 1, 0, 1, 1,
0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0,
1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1,
0, 0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0,
1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 0, 1, 1, 0, 1, 0, 0,
1, 0, 1, 1, 0, 1, 0, 0, 1];

a sequence 144: [0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 0, 1, 1, 0, 0, 1, 0, 1, 1,
0, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1,

0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 0,
1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 1, 0,
1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 0, 0,
1, 0, 1, 1, 0, 1, 0, 0, 1];

a sequence 145: [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1,
0, 1, 0, 0, 1, 0, 1, 0, 1, 1, 0, 1, 0, 0, 1, 0, 1, 1, 0, 1, 0, 0, 0, 1, 1, 0, 1, 0, 0, 1, 0, 1, 1, 0, 1, 0, 0, 0, 1, 1, 0, 1, 0, 0, 0, 1, 0, 1, 0, 1, 0, 1, 1, 0,
1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 0,
1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0,
0, 1, 0, 1, 1, 0, 1, 0, 0, 1, 0, 1, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 1, 0, 0, 1, 1, 0, 0,
1, 1, 0, 0, 1, 1, 0, 0, 1];

a sequence 146: [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1,
0, 1, 0, 0, 1, 0, 1, 0, 1, 1, 0, 1, 0, 0, 1, 0, 1, 1, 0, 1, 0, 1, 0, 0, 1, 0, 1, 1, 0, 1, 0, 0, 0, 1, 0, 1, 1, 0, 1, 0, 1, 0, 1, 0, 1, 0, 1, 0, 1, 0, 1, 0, 0, 1,
0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 1,
0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 0, 1, 1, 0, 1, 0, 0, 0, 1, 0, 1, 1, 0, 1, 0, 0, 0, 1, 1, 0, 1, 0,
0, 1, 0, 1, 1, 0, 1, 0, 0, 1, 0, 1, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 1, 0, 1, 0, 0,
1, 1, 0, 0, 1, 1, 0, 0, 1];

a sequence 147: [0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1,
0, 0, 1, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1,
0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1,
0, 0, 1, 0, 1, 1, 0, 0, 1, 1, 0, 1, 0, 0, 0, 1, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1,
0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 0, 1, 1, 0, 1, 0, 0, 0,
1, 0, 1, 1, 0, 1, 0, 0, 1];

a sequence 148: [0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1,
0, 0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0,
1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0,
1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 0, 1,
0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 0, 1, 1, 0, 1, 0, 0, 0,
1, 0, 1, 1, 0, 1, 0, 0, 1];

a sequence 149: [0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1,
0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1,
0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 0, 1, 0, 1, 0, 1, 1, 0, 1, 0, 0, 0, 1, 1,
0, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0,
1, 0, 1, 0, 0, 1, 1, 0, 0, 1, 1, 0, 1, 0, 0, 0, 1, 1, 0, 0, 1, 0, 1, 0, 1, 0, 1, 0, 1, 0, 1, 1, 0, 1, 0, 0, 0, 1, 0, 1, 0, 1, 1, 0, 1, 0, 0, 0, 1, 0, 1, 1, 0, 1, 0, 0, 0,
1, 1, 0, 1, 0, 0, 1, 0, 1];

a sequence 150: [0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1,
0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0,
1, 0, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 0, 1, 0, 1, 1, 0, 1, 0, 0,
1, 1, 0, 1, 0, 0, 1, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0,
1, 0, 1, 0, 0, 1, 1, 0, 0, 1, 1, 0, 1, 0, 0, 0, 1, 1, 0, 0, 1, 0, 1, 0, 1, 0, 1, 0, 1, 0, 1, 1, 0, 1, 0, 0, 0, 1, 0, 1, 0, 1, 1, 0, 1, 0, 0, 0, 1, 0, 1, 1, 0, 1, 0, 0, 0,
1, 1, 0, 1, 0, 0, 1, 0, 1];

a sequence 151: [0, 1, 1, 0, 1, 0, 0, 1, 0, 1, 0, 1, 1, 0, 1, 0, 0, 1, 0, 1, 1, 0, 1, 0, 0, 0, 1, 0, 1, 1, 0, 1, 0, 0, 0, 1, 0, 1, 0, 0, 1, 0, 1, 1, 0, 0, 1, 1, 0, 0, 0, 1, 0, 1,
0, 1, 0, 1, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1,
0, 0, 1, 1, 0, 1, 0, 0, 0, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 1, 0, 1, 0, 0, 1, 0, 1, 0, 1, 0, 1,
0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0,
1, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 0, 1, 0, 1, 1, 0, 1, 0, 0, 0, 1, 0, 1,
0, 1, 1, 0, 1, 0, 0, 1];

a sequence 152: [0, 1, 1, 0, 1, 0, 0, 1, 0, 1, 0, 1, 1, 0, 1, 0, 0, 1, 0, 1, 1, 0, 1, 0, 0, 0, 1, 0, 1, 0, 0, 1, 1, 0, 0, 1, 0, 1, 1, 0, 0, 1, 1, 0, 0, 0, 1, 0,
1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 1, 0,
0, 1, 1, 0, 0, 1, 0, 1, 1, 0, 1, 0, 1, 0, 0, 1, 0, 1, 0, 1, 1, 0, 1, 0, 0, 1, 1, 0, 1, 0, 0, 1, 1, 0, 0, 1, 0, 1, 1, 0, 0, 1, 0, 1, 1, 0, 1, 0, 1, 0, 1,
0, 1, 0, 0, 1, 0, 1, 0, 1, 1, 0, 1, 0, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 0,
0, 1, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 0, 1, 0, 1, 1, 0, 1, 0, 0, 0, 1, 0,
1, 0, 1, 1, 0, 1, 0, 0, 1];

a sequence 153: [0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 0, 1, 1, 0, 1, 0, 1, 0, 0,
1, 0, 1, 1, 0, 1, 0, 0, 1, 0, 1, 1, 0, 0, 1, 0, 1, 1, 0, 1, 0, 0, 0, 1, 0, 1, 1, 0, 1, 0, 1, 0, 0, 1, 0, 1, 1, 0, 0, 1, 1, 0, 1, 0, 0, 0, 1, 1, 0, 1, 0, 0, 0, 1,
0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 1,
0, 0, 1, 1, 0, 0, 1, 1, 0, 1, 0, 1, 0, 1, 0, 1, 0, 0, 1, 0, 1, 1, 0, 0, 1, 0, 1, 1, 0, 0, 1, 1, 0, 1, 0, 0, 0, 1, 0, 1, 1, 0, 1, 0, 1, 0, 1, 0, 1, 0,
0, 1, 0, 1, 1, 0, 0, 1, 0, 1, 1, 0, 1, 0, 0, 0, 1, 0, 1, 1, 0, 1, 0, 1, 0, 0, 1, 0, 1, 1, 0, 0, 1, 1, 0, 0, 1, 0, 1, 1, 0, 0, 1, 0, 1, 1, 0, 0, 1, 1,
0, 0, 1, 0, 1, 0, 1, 0, 1];

a sequence 154: [0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 0, 1, 0, 1, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 1, 0, 0, 1, 0, 1, 1, 0, 1, 0, 1, 0, 1, 0, 1, 0, 1, 1, 0, 1, 0, 0, 1, 1, 0, 1, 0, 0, 1, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 0];

a sequence 155: [0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 0, 0, 1, 1, 0, 0, 1];

a sequence 156: [0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 1, 0, 0, 1, 0, 1, 1, 0, 1, 0, 0, 1, 0, 1, 0, 1, 1, 0, 1, 0, 0, 1, 0, 1, 1, 0, 0, 1, 0, 1, 1, 0, 0, 1, 0, 1, 1, 0, 1, 0, 1, 0, 1, 0, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 0, 1, 0, 1, 1, 0, 1, 0, 0, 1, 0, 1, 1, 0, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 1, 0, 0, 1, 0, 0, 1, 1, 0, 0, 1];

a sequence 157: [0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 1, 0, 1, 0, 1, 0, 1, 0, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 0, 0, 1, 0, 1, 0, 1, 1, 0, 0, 1, 1, 0, 1, 0, 1, 0, 1, 0, 0];

a sequence 158: [0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 1, 0, 1, 0, 1, 0, 1, 0, 0, 1, 1, 0, 0, 1, 0, 1, 0, 1, 0, 1, 0, 0, 1, 0, 1, 0, 1, 1, 0, 0, 1, 0, 1, 0, 1, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 0, 1, 0, 1, 1, 0, 0, 1, 0, 1, 0, 1, 0, 0, 1, 0, 1, 0, 1, 1, 0, 0, 1, 1, 0, 1, 0, 1, 0, 0];

a sequence 159: [0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 0, 1, 1, 0, 0, 1, 0, 1, 0, 1, 1, 0, 1, 0, 0, 1, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 0, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0];

a sequence 160: [0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 1, 0, 0, 1, 1, 0, 1, 0, 1, 0, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 1, 0, 1, 0, 1, 0, 1, 0, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 0, 1, 1, 0, 0, 1, 0];

a sequence 161: [0, 1, 0, 1, 0, 1, 0, 1, 1, 0, 0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0];

a sequence 162: [0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 0, 1, 0, 1, 1, 0, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 0, 1, 1, 0, 0, 1, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 0, 1, 0, 1, 0, 1, 1, 0, 0, 1, 0, 1, 1, 0, 0, 1, 1, 0, 0, 1, 1, 0, 0, 1, 0, 1, 0, 1, 1, 0, 0, 1, 0, 1, 1, 0, 0, 1, 1, 0, 1, 0, 0, 1, 1, 0, 0, 1, 1, 0, 0, 1, 0, 1, 0, 1, 0, 1, 0, 1];

a sequence 163: [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 0, 1, 1, 0, 1, 0, 0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 0, 1,

0, 1, 0, 1, 1, 0, 0, 1, 1, 0, 0, 1, 1, 0, 1, 0, 0, 1, 0, 1, 1, 0, 0, 1,0, 1, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 1, 0, 0, 1];

a sequence 164: [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 1, 0, 1, 0, 0, 1, 0, 1, 0, 1, 1, 0, 1, 0, 0, 1, 0, 1, 0, 1, 0, 1, 0, 1, 0, 1, 1, 0, 0, 1, 1, 0, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 1, 0, 0, 1];

a sequence 165: [0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 1, 0, 0, 1, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 0, 1, 1, 0, 1, 0, 0, 1, 1, 0, 1, 0, 0, 1, 0, 1, 0, 1, 1, 0, 1, 0, 0, 1, 1, 0, 0, 1, 1, 0, 1, 0, 1, 0, 0, 1, 1, 0, 0, 1, 1, 0, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1];

a sequence 166: [0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 1, 0, 0, 1, 1, 0, 1, 0, 1, 0, 0, 1, 1, 0, 0, 1, 1, 0, 1, 0, 0, 1, 1, 0, 0, 1, 0, 1, 0, 1, 0, 1, 0, 1, 0, 1];

a sequence 167: [0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 0, 1, 1, 0, 0, 1, 1, 0, 1, 0, 0, 1, 1, 0, 0, 1, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0, 1, 0, 0, 1, 1, 0, 1, 0, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 0, 1, 1, 0, 0, 1, 1, 0, 0, 1];

a sequence 168: [0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 0, 1, 1, 0, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 1, 0, 1, 0, 1, 0, 0, 1, 0, 0, 1, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 1, 0, 0, 1, 1, 0, 0, 1, 0, 1, 1, 0, 1, 0, 1, 0, 0, 1, 1, 0, 0, 1, 0, 1, 1, 0, 1, 0, 0, 1, 1, 0, 0, 1, 1, 0, 1, 0, 1, 0, 0, 1, 1, 0, 1, 0, 1, 0, 0, 1, 1, 0, 0, 1, 1, 0, 0, 1];

a sequence 169: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 0, 1, 0, 1, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 0, 1, 0, 1, 0, 1, 1, 0, 0, 1, 1, 0, 0, 1, 0, 1, 0, 1, 0, 0, 1, 0, 1];

a sequence 170: [0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 1, 0, 1, 0, 0, 1, 0, 1, 0, 1, 0, 0, 1, 0, 1];

a sequence 171: [0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 0, 1, 1, 0, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 0, 1, 0, 1, 1, 0, 0, 1, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 0, 1, 1, 0, 0, 1, 1, 0, 1, 0, 0, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 1, 0, 0, 1];

a sequence 172: [0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 0, 1, 0, 1, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 1, 0, 0, 1];

a sequence 173: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 0, 1, 0, 1, 0, 1, 1, 0, 0, 1, 1, 0, 0, 1, 0, 1, 0, 1, 1, 0, 0, 1, 0, 1, 1, 0, 0, 1, 0, 1, 1, 0, 0, 1, 0, 1, 1, 0,

0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 1, 0, 1,
0, 1, 0, 1, 0, 0, 1, 1, 0, 1, 0, 0, 1, 1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 0, 1,
0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 1, 0, 0, 1, 1, 0, 1,
0, 1, 0, 0, 1, 0, 1, 0, 1];

a sequence 174: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1,
0, 1, 0, 1, 0, 1, 0, 0, 1, 1, 0, 1, 0, 1, 0, 0, 1, 0, 1, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1,
1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0,
1, 0, 1, 0, 1, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 0, 1,
0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 1, 0, 0, 1, 1, 0, 1,
0, 1, 0, 0, 1, 0, 1, 0, 1];

a sequence 175: [0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 1, 0, 0,
1, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 0, 0, 1,
1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 0,
1, 0, 1, 0, 1, 1, 0, 0, 1, 0, 1, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 0, 1,
0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1,
0, 1, 0, 0, 1, 0, 1, 0, 1];

a sequence 176: [0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 1, 0, 0, 1, 1, 0, 0, 1, 0, 1, 1, 0, 0,
1, 0, 1, 0, 1, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 1, 0,
0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1,
0, 1, 0, 1, 0, 0, 1, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 0, 1, 0, 1,
0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1,
0, 1, 0, 0, 1, 0, 1, 0, 1];

a sequence 177: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 1, 0, 0, 1, 0, 1, 0, 1, 0, 1, 0, 1, 1, 0, 0,
1, 0, 1, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1,
0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 1,
0, 1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 1, 0,
1, 0, 0, 1, 1, 0, 1, 0, 1, 0, 1, 0, 0, 1, 1, 0, 1, 0, 0, 0, 1, 1, 0, 1, 0, 1, 0, 1, 0, 1, 0, 0, 1, 1, 0, 1, 0, 0, 0, 1, 1, 0, 1, 0, 1, 0, 1, 0, 1, 0, 0, 1, 0, 1, 1,
0, 0, 1, 0, 1, 0, 1, 0, 1];

a sequence 178: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 1, 0, 0, 1, 1, 0, 1, 0, 1, 0, 1, 0, 0, 0, 1, 1,
0, 1, 0, 0, 1, 1, 0, 1, 0, 1, 0, 1, 0, 0, 1, 1, 0, 1, 0, 0, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 0, 1,
0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 1, 0, 1, 1, 0, 0, 1, 1, 0, 0,
1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0, 0, 1,
0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 0, 1, 1, 0, 1, 0, 1, 0, 1, 0, 1, 0, 0, 1, 0, 1, 1,
0, 0, 1, 0, 1, 0, 1, 0, 1];

a sequence 179: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 1, 0, 0, 1, 1, 0, 1,
0, 1, 0, 1, 0, 0, 1, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0,
0, 1, 0, 1, 0, 1, 1, 0, 1, 0, 1, 0, 0, 1, 1, 0, 0, 1, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 0, 1, 0, 1, 1,
0, 0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1,
0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 1, 0, 1, 0, 1,
0, 0, 1, 1, 0, 1, 0, 0, 1];

a sequence 180: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 1, 0, 0, 1, 0, 1, 1, 0, 0, 1, 0,
1, 0, 1, 0, 1, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 0, 1, 1, 0,
0, 1, 1, 0, 1, 0, 1, 0, 0, 1, 0, 1, 0, 1, 1, 0, 0, 1, 1, 0, 0, 1, 0, 1, 1, 0, 1, 0, 1, 0, 0, 1, 1, 0, 0, 1, 1, 0, 0, 1, 0, 1, 0, 1, 1, 0, 0, 1, 0, 1, 0, 1, 1, 0, 1, 0, 0,
1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 1, 0,
1, 0, 1, 0, 0, 1, 1, 0, 1, 0, 0, 1, 1, 0, 1, 0, 1, 0, 1, 0, 0, 1, 1, 0, 1, 0, 0, 1, 0, 1, 0, 1, 0, 1, 1, 0, 0, 1, 0, 1, 1, 0, 1, 0, 1, 0, 1, 0, 1, 0, 1,
0, 0, 1, 1, 0, 1, 0, 0, 1];

a sequence 181: [0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1,
0, 0, 1, 0, 1, 0, 1, 1, 0, 0, 1, 1, 0, 1, 0, 0, 1, 1, 0, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1,
1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0,
1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0,
0, 1, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 0, 1, 0, 1, 0,
1, 0, 1, 0, 1, 0, 1, 0, 1];

a sequence 182: [0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 1,
0, 0, 1, 0, 1, 0, 1, 1, 0, 0, 1, 1, 0, 1, 0, 0, 1, 1, 0, 1, 0, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0,
0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1,
0, 1, 0, 0, 1, 0, 1, 1, 0, 1, 0, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 0, 1, 0, 1, 0, 1, 0, 1, 1, 0,
0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0,
1, 0, 1, 0, 1, 0, 1, 0, 1];

a sequence 183: [0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1]；

a sequence 184: [0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 1, 0, 1, 0, 0, 1, 0, 1, 0, 1, 0, 1, 1, 0, 1, 0, 0, 1, 0, 1, 1, 0, 1, 0, 1, 0, 0, 1, 0, 1, 0, 1, 0, 1, 0, 1]；

a sequence 185: [0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1]；

a sequence 186: [0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 1, 0, 1, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 1, 0, 0, 1, 0, 1, 0, 1, 0, 1]；

a sequence 187: [0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 0, 1, 0, 1]；

a sequence 188: [0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 0, 1, 1, 0, 1, 0, 1, 0, 1, 0, 0, 1, 0, 1, 0, 1, 0, 1, 1, 0, 0, 1, 1, 0, 1, 0, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1]；

a sequence 189: [0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 1, 0, 1, 0, 0, 1, 0, 1, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1]；

a sequence 190: [0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 0, 1, 1, 0, 0, 1, 0, 1, 1, 0, 1, 0, 1, 0, 1, 0, 1, 0, 1, 0, 0, 1, 0, 1, 1, 0, 0, 1, 0, 1, 1, 0, 0, 1, 0, 1, 0, 1, 1, 0, 0, 1, 1, 0, 0, 1, 1, 0, 0, 1, 0, 1, 1, 0, 0, 1, 0, 1, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 0, 1, 1, 0, 0, 1, 0, 1, 0, 1, 0, 1, 0, 1]；

a sequence 191: [0, 1, 0, 1, 0, 1, 0, 1, 0, 1, 0, 1, 0, 1, 1, 0, 0, 1, 0, 1, 1, 0, 1, 0, 0, 1, 0, 1, 0, 1, 0, 1, 1, 0, 1, 0, 0, 1, 1, 0, 1, 0, 0, 1, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 1, 0, 0, 1, 0, 1, 0, 1, 0, 1, 0, 1, 1, 0, 1, 0, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 0, 1, 0, 1, 0, 1, 1, 0, 1, 0, 0, 1, 0, 1, 1, 0, 1, 0, 1, 0, 0, 1, 0, 1, 1, 0, 0, 1, 0, 1, 0, 1, 0, 1, 0, 1]；

a sequence 192: [0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 1, 0, 1, 0, 1, 0, 0, 1, 0, 1, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 0, 1, 1, 0]；

0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 0, 1];

a sequence 193: [0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 1, 0, 1, 0, 0, 1, 1, 0, 1, 0, 0, 1, 1, 0, 1, 0, 0, 1, 1, 0, 1, 0, 0, 1, 0, 1, 1, 0, 0, 1, 1, 0, 0, 1, 0, 1, 0, 1, 0];

a sequence 194: [0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 1, 0, 0, 1, 1, 0, 1, 0, 0, 1, 0, 1, 1, 0, 1, 0, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 0, 1, 1, 0, 1, 0, 0, 1, 1, 0, 1, 0, 0, 1, 1, 0, 1, 0, 0, 1, 1, 0, 1, 0, 0, 1, 1, 0, 1, 0, 0, 1, 1, 0, 1, 0, 0, 1, 1, 0, 0, 1, 0, 1, 0, 1, 0];

a sequence 195: [0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 1, 1, 0, 1, 0, 1, 0, 0, 1, 0, 1, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 0, 1, 1, 0, 0, 1, 1, 0, 0, 1, 1, 0, 0, 1];

a sequence 196: [0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 0, 1, 0, 1, 1, 0, 0, 1, 0, 1, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 0, 1];

a sequence 197: [0, 1, 1, 0, 0, 1, 1, 0, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 0, 1, 1, 0, 1, 0, 0, 1, 0, 1, 1, 0, 0, 1, 0, 1, 1, 0, 0, 1, 1, 0, 0];

a sequence 198: [0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0];

a sequence 199: [0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1];

a sequence 200: [0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1];

a sequence 201: [0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 1, 0, 0, 1];

a sequence 202: [0, 1, 1, 0, 1, 0, 0, 1, 1, 0, 0, 1, 0, 1, 1, 0, 0, 1, 0, 1, 0, 1, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 0, 1, 1, 0, 1, 0, 0, 1];

a sequence 203: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 0, 1, 0, 1, 0, 1, 1, 0, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 1, 0, 1, 0, 0, 0, 1, 0, 1, 1, 0, 1, 0, 0, 0, 1, 0, 1, 1, 0, 1, 0, 0, 0, 1, 1, 0, 1, 0, 0, 0, 1, 0, 1, 0, 1, 0, 1, 1, 0, 1, 0, 0, 0, 1, 1, 0, 0, 0, 1, 1, 0, 0, 0, 1];

a sequence 204: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 1, 0, 1, 0, 1, 0, 0, 1, 0, 1, 1, 0, 1, 0, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 1, 0, 0, 1, 0, 1, 1, 0, 1, 0, 1, 0, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 1, 0, 1, 0, 0, 0, 1, 0, 1, 1, 0, 1, 0, 0, 1, 0, 1, 0, 1, 1, 0, 1, 0, 0, 0, 1, 0, 1, 1, 0, 1, 0, 1, 0, 0, 0, 1, 1, 0, 0, 0, 1, 1, 0, 0, 0, 1, 1, 0, 1, 0, 1, 0, 1];

a sequence 205: [0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 1, 0, 0, 1, 1, 0, 0, 1, 1];

a sequence 206: [0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 0, 1, 0, 1, 0, 1, 1, 0, 1, 0, 0, 0, 1, 0, 1, 1, 0, 1, 0, 0, 0, 1, 1, 0, 1, 0, 0, 0, 1, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 1, 0, 0, 0, 1, 1, 0, 1, 0, 0, 1, 0, 1, 1, 0, 1, 0, 1, 0, 0, 1, 1, 0, 1, 0, 0, 1, 1, 0, 1, 0, 1, 0, 0, 1, 1, 0, 0, 1, 0, 1, 0, 1, 0, 1, 0, 1, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 0, 1, 1];

a sequence 207: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 1, 0, 0, 1, 1, 0, 0, 1, 1, 0, 0, 1, 1, 0, 1, 0, 0, 1, 1, 0, 1, 0, 0, 1, 1, 0, 1, 0, 1, 0, 1, 0, 0, 1, 0, 1, 1, 0, 1, 0, 0, 0, 1, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 1, 0, 1, 0, 0, 0, 1, 1, 0, 1, 0, 0, 0, 1, 1, 0, 1, 0, 0, 0, 1, 0, 1, 1, 0, 1, 0, 0, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 1, 0, 1, 0, 0, 0, 1, 1, 0, 0, 0, 1, 1, 0, 0, 0, 1];

a sequence 208: [0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 0, 0, 1, 1, 0, 0, 1, 1];

a sequence 209: [0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 0, 0, 1, 1, 0, 1, 0, 1, 0, 0, 1, 1, 0, 0, 1, 0, 1, 1, 0, 1, 0, 0, 0, 1, 1, 0, 1, 0, 0, 0, 1, 0, 1, 1, 0, 1, 0, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 1, 0, 0, 1, 0, 1, 1, 0, 1, 0, 0, 1, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 0, 1, 0, 1, 1, 0, 1, 0, 0, 1, 1, 0, 0, 0, 1, 1, 0, 1, 0, 1, 0, 1, 0, 0, 0, 1, 0, 1, 1, 0, 1, 0, 1, 0, 1, 0, 0, 0, 1, 0, 1, 0, 1, 1, 0, 1, 0, 0, 0, 1, 1, 0, 1, 0, 1, 0, 0, 1, 0, 1, 0, 1, 0, 1, 0, 0, 1, 1, 0, 1, 0, 1, 0, 1];

a sequence 210: [0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 1, 1, 0, 0, 1, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 1, 0, 1, 0, 0, 1, 1, 0, 0, 1, 0, 1, 0, 1, 0, 1, 0, 1, 0, 1, 0, 1, 0, 0, 1, 1, 0, 1, 0, 1, 0, 1, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 0, 1, 1, 0, 0, 1, 1, 0, 1, 0, 1, 0, 0, 1, 0, 1, 0, 1, 0, 1, 0, 1, 0, 1, 1, 0, 1, 0, 0, 1, 0, 1, 1, 0, 0, 1, 1, 0, 1, 0, 1, 0, 0, 0, 1, 0, 1, 0, 1, 0, 1, 0, 1, 0, 0];

a sequence 211: [0, 1, 1, 0, 1, 0, 0, 1, 0, 1, 1, 0, 0, 1, 1, 0, 1, 0, 1, 0, 0, 0, 1, 0, 1, 0, 1, 0, 1, 0, 1, 0, 1, 1, 0, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 0, 1, 0, 1, 0, 1, 1, 0, 0, 1, 1, 0, 0, 1, 1, 0, 1, 0, 0, 0, 1, 1, 0, 1, 0, 1, 0, 1, 0, 0, 1, 1, 0, 1, 0, 0, 0, 1, 0, 1, 1, 0, 0, 1, 1, 0, 0, 1, 0, 1, 1, 0, 0, 1, 0, 1, 1, 0, 0, 1, 0, 1, 1, 0, 1, 0, 1, 0, 0, 1, 0, 1, 1, 0, 1, 0, 0, 0, 1, 0, 1, 1, 0, 1, 0, 1, 0, 1, 0, 0, 0, 1, 1, 0, 1, 0, 0, 0, 1, 1, 0, 0, 1, 1, 0, 0, 1, 1, 0, 1, 0, 1, 0, 0, 1, 0, 1, 1, 0, 0, 1, 1, 0, 1, 0, 0, 0, 1, 0, 1, 0, 1, 0, 1, 0, 0, 1, 0, 1, 0, 1, 0, 1, 0, 1, 1, 0, 0, 1, 1, 0, 1, 0, 1, 0, 0, 1, 0, 1, 0, 1, 0, 1, 0, 1, 1, 0, 1, 0, 1, 0, 0, 0, 1, 1, 0, 0, 1, 0, 1, 1, 0, 1, 1, 0, 1, 0, 0, 1];

a sequence 212: [0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 1, 0, 1, 0, 1, 0, 0, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 0, 1];

a sequence 213: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 0, 1, 1, 0, 0, 1, 1, 0, 0, 1, 0, 1, 0, 1, 1, 0, 1, 0, 0, 1, 1, 0, 0, 1, 0, 1, 0, 1, 1, 0, 1, 0, 1, 0, 0, 1, 1, 0, 1, 0, 1, 0, 0, 1, 0, 1, 0, 1, 1, 0, 1, 0, 0, 1, 1, 0, 0, 1, 0, 1, 0, 1, 1, 0, 1, 0, 0, 1, 1, 0, 1, 0, 1, 0, 0, 1, 1, 0, 1, 0, 1, 0, 0, 1, 0, 1, 0, 1, 1, 0, 0, 1, 0, 1, 0, 1, 0, 1];

a sequence 214: [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 0, 1, 1, 0, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 0, 1, 0, 1, 0, 1, 0, 1, 1, 0, 1, 0, 0, 1, 1, 0, 1, 0, 1, 0, 1, 0, 1, 0, 1, 1, 0, 1, 0, 0, 1, 1, 0, 1, 0, 1, 0, 1, 0, 1, 0, 1, 1, 0, 1, 0, 0, 1, 1, 0, 1, 0, 1, 0, 1, 0, 1, 0, 0, 1, 0, 1, 0, 1, 0, 1];

a sequence 215: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 1, 0, 1, 0, 0, 1, 1, 0, 0, 1, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 0, 1, 1, 0, 0, 1, 0, 1, 1, 0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1];

a sequence 216: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 1, 0, 1, 0, 1, 0, 1, 0, 0, 1, 1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1];

a sequence 217: [0, 1, 0, 1, 0, 1, 0, 1, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 0, 1, 0, 1, 1, 0, 1, 0, 1, 0, 0, 1, 1, 0, 1, 0, 0, 1, 1, 0, 0, 1, 0, 1, 0, 1, 0, 1, 0, 1];

a sequence 218: [0, 1, 0, 1, 0, 1, 0, 1, 0, 1, 1, 0, 0, 1, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 1, 0, 0, 1, 1, 0, 0, 1, 1, 0, 1, 0, 1, 0, 0, 1, 1, 0, 0, 1, 1, 0, 0, 1, 1, 0, 1, 0, 1, 0, 0, 1, 1, 0, 1, 0, 0, 1, 0, 1, 1, 0, 1, 0, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 1, 0, 0, 1, 1, 0, 1, 0, 1, 0, 1, 0, 1];

a sequence 219: [0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 1, 0, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 1, 0, 1, 0, 0, 1, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 1, 0, 1, 0, 0, 1, 1, 0, 1, 0, 0, 1, 1, 0, 1, 0, 0, 1, 0, 1, 0, 1, 0, 1, 0, 1, 1, 0, 1, 0, 0, 1, 1, 0, 1, 0, 1, 0, 1, 0, 1, 0, 0, 1, 0, 1, 1, 0, 0, 1, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0, 0, 1, 0, 1, 0, 1, 1, 0, 1, 0, 0, 1, 1, 0, 1, 0, 1, 0, 0, 1, 0, 1, 1, 0, 1, 0, 1, 0, 0, 1, 0, 1];

a sequence 220: [0, 1, 0, 1, 1, 0, 1, 0, 1, 0, 0, 1, 0, 1, 1, 0, 1, 0, 0, 1, 1, 0, 0, 1, 0, 1, 1, 0, 0, 1, 0, 1, 0, 1, 0, 1, 1, 0, 1, 0, 0, 1, 0, 1, 0, 1, 1, 0, 1, 0, 0, 1, 1, 0, 1, 0, 0, 1, 0, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 0, 1, 1, 0, 1, 0, 1, 0, 0, 1, 1, 0, 1, 0, 0, 1, 0, 1, 1, 0, 0, 1, 1, 0, 0, 1, 0, 1, 1, 0, 1, 0, 0, 1, 0, 1, 1, 0, 0, 1, 0, 1, 1, 0, 0, 1, 0, 1, 0, 1, 1, 0, 1, 0, 0, 1, 0, 1, 1, 0, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 1, 0, 0, 1, 1, 0, 1, 0, 0, 1, 0, 1, 1, 0, 1, 0, 0, 1];

a sequence 221: [0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1,

0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1];

a sequence 222: [0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 1, 0, 0, 1, 1, 0, 0, 1, 1, 0, 0, 1, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 0, 1, 1, 0, 1, 0, 1, 0, 1, 0, 1, 0, 1, 0, 1, 0, 1, 0, 1, 1, 0, 1, 0, 0, 1, 0, 1, 1, 0, 0, 1, 1, 0, 1, 0, 1, 0, 1, 0, 1, 0, 1];

a sequence 223: [0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0, 1, 0, 0, 1, 1, 0, 1, 0, 1, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 0, 1];

a sequence 224: [0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1];

a sequence 225: [0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 0, 1, 0, 1, 0, 1, 0, 0, 1, 1, 0, 1, 0, 0, 1, 0, 1, 1, 0, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 0, 1, 0, 1, 0, 1, 0, 0, 1, 1, 0, 1, 0, 1, 0, 1, 0, 0, 1, 0, 0, 1, 1, 0, 1, 0, 0, 1];

a sequence 226: [0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 0, 1, 1, 0, 1, 0, 1, 0, 1, 0, 0, 1, 1, 0, 0, 1, 0, 1, 1, 0, 1, 0, 1, 0, 0, 1, 0, 1, 1, 0, 1, 0, 1, 0, 1, 0, 1, 1, 0, 0, 1, 0, 1, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 1, 0, 0, 1, 0, 1, 1, 0, 0, 1, 0, 1, 1, 0, 1, 0, 1, 0, 1, 0, 0, 1, 0, 1, 0, 1, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1];

a sequence 227: [0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 0, 1, 1, 0, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 0, 1, 1, 0, 0, 1, 0, 1, 1, 0, 1, 0, 1, 0, 0, 1, 1, 0, 0, 1, 0, 1, 1, 0, 1, 0, 1, 0, 1, 0, 1, 0, 0, 1, 0, 1, 0, 1, 1, 0, 1, 0, 1, 0, 1, 0, 1, 0, 1, 0, 1, 0, 1, 0, 1, 0, 0, 1, 1, 0, 1, 0, 0, 1];

a sequence 228: [0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 0, 1, 0, 0, 1, 1, 0, 1, 0, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 1, 0, 0, 1, 0, 1, 1, 0, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 0, 1, 1, 0, 0, 1, 1, 0, 1, 0, 0, 1, 1, 0, 1, 0, 0, 1, 1, 0, 1, 0, 0, 1];

a sequence 229: [0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1];

a sequence 230: [0, 1, 0, 1, 0, 1, 1, 0, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 0, 1, 0, 1, 0, 1, 0, 1, 0, 1, 0, 0, 1, 1, 0, 1, 0, 0, 1, 1, 0, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 1, 0, 1, 0, 1, 0, 0, 1, 1, 0, 0, 1, 0, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 0, 1, 1, 0, 1, 0, 0, 1, 0, 1, 1, 0, 0, 1, 0, 1, 0, 1, 1, 0, 0, 1, 0, 1, 0, 1, 0, 1, 1, 0, 0, 1, 1, 0, 1, 0, 0, 1, 1, 0, 1, 0, 0, 1, 1, 0, 0, 1, 0, 1, 1, 0, 0, 1, 0, 1, 1, 0, 1, 0, 0, 1];

a sequence 231: [0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 1, 0, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1,

0, 1, 1, 0, 0, 1, 1, 0, 1, 0, 1, 0, 0, 1, 0, 1, 0, 1, 0, 1, 1, 0, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 1, 0, 1,
0, 1, 0, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0,
1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1,
0, 0, 1, 0, 1, 1, 0, 0, 1];
a sequence 232: [0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 0, 1, 1,
0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1,
0, 1, 0, 1, 1, 0, 0, 1, 0, 1, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0,
1, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0,
0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1,
0, 0, 1, 0, 1, 1, 0, 0, 1];
a sequence 233: [0, 1, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 0, 1, 1, 0, 0, 1, 0, 1, 0, 1, 0, 1, 1,
0, 0, 1, 0, 1, 1, 0, 1, 0, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 1, 0, 0, 1, 1, 0, 0, 1, 0, 1, 1, 0,
0, 1, 1, 0, 0, 1, 1, 0, 1, 0, 1, 0, 0, 1, 1, 0, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 0, 1, 1, 0, 1, 0, 1, 0, 0,
1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 0, 1, 0, 1, 0, 1, 0, 1, 1, 0, 0, 1, 0, 1, 0, 1, 1, 0, 1, 0, 1, 0, 0, 1,
0, 1, 0, 1, 0, 1, 1, 0, 1, 0, 1, 0, 0, 1, 0, 1, 1, 0, 0, 1, 0, 1, 0, 1, 1, 0, 0, 1, 0, 1, 1, 0, 0, 1, 0, 1, 1, 0, 1, 0, 1, 0, 1, 0, 1, 0, 1, 0, 0,
1, 1, 0, 1, 0, 1, 0, 0, 1];
a sequence 234: [0, 1, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 0, 1, 1, 0, 0, 1, 0, 1, 0, 1, 0, 1, 1,
0, 0, 1, 0, 1, 1, 0, 1, 0, 1, 0, 0, 1, 0, 1, 0, 1, 0, 1, 1, 0, 1, 0, 0, 1, 0, 1, 0, 1, 1, 0, 0, 1, 0, 1, 0, 1, 1, 0, 0, 1, 0, 1, 0, 1, 0, 1, 0, 1, 1, 0, 0, 1, 1, 0, 1, 0, 1, 0, 0, 1,
1, 0, 0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 1, 0, 1, 0, 1, 0, 1, 0, 0, 1, 0, 1, 0, 1, 1,
0, 1, 0, 0, 1, 1, 0, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 0, 1, 1, 0, 1, 0, 1, 0, 1, 0, 0, 1, 1, 0, 0, 1,
0, 1, 0, 1, 0, 1, 1, 0, 1, 0, 1, 0, 0, 1, 0, 1, 1, 0, 0, 1, 0, 1, 0, 1, 1, 0, 0, 1, 0, 1, 1, 0, 0, 1, 0, 1, 1, 0, 1, 0, 1, 0, 1, 0, 1, 0, 1, 0, 0,
1, 1, 0, 1, 0, 1, 0, 0, 1];
a sequence 235: [0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 0, 1, 1, 0, 1, 0, 0, 1, 1, 0, 1, 0, 0, 1, 1,
0, 0, 1, 0, 1, 0, 1, 0, 1, 1, 0, 0, 1, 0, 1, 0, 1, 1, 0, 0, 1, 1, 0, 1, 0, 1, 0, 1, 0, 1, 0, 0, 1, 0, 1, 0, 1, 1, 0, 1, 0, 1, 0, 0, 1, 1, 0, 1, 0, 1, 0, 1, 0, 0, 1,
1, 0, 0, 1, 1, 0, 0, 1, 0, 1, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 0,
1, 0, 1, 1, 0, 0, 1, 1, 0, 1, 0, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 1, 0, 0, 1,
0, 1, 0, 1, 1, 0, 0, 1, 0, 1, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 1,
0, 1, 0, 1, 0, 1, 0, 0, 1];
a sequence 236: [0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 0, 1, 1, 0, 1, 0, 0, 1, 1, 0, 1, 0, 0, 1, 1,
0, 0, 1, 0, 1, 0, 1, 0, 1, 1, 0, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 0, 1, 0, 1, 0, 1, 1, 0, 1, 0, 1, 0, 1, 0,
0, 1, 1, 0, 0, 1, 1, 0, 1, 0, 0, 1, 1, 0, 0, 1, 0, 1, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 1,
0, 1, 0, 0, 1, 1, 0, 0, 1, 0, 1, 1, 0, 0, 1, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1,
0, 1, 0, 1, 1, 0, 0, 1, 0, 1, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 1,
0, 1, 0, 1, 0, 1, 0, 0, 1];
a sequence 237: [0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 0,
1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 1, 0,
0, 1, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1, 0, 0, 1, 0, 1, 1, 0, 1, 0, 0,
1, 0, 1, 0, 1, 0, 1, 1, 0, 0, 1, 1, 0, 0, 1, 1, 0, 0, 1, 0, 1, 1, 0, 1, 0, 1, 0, 1, 0, 0, 1, 0, 1, 0, 1, 0, 1, 0, 1, 0, 1, 1, 0, 0, 1, 1, 0, 1, 0, 0, 0, 1,
0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 1, 0, 0, 1, 0, 1, 0, 1, 1, 0, 1, 0, 1, 0, 1, 0, 1, 0, 1,
0, 1, 0, 0, 1, 1, 0, 0, 1];
a sequence 238: [0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 0,
1, 0, 1, 0, 1, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 1, 0, 0, 1, 0, 1,
1, 0, 0, 1, 1, 0, 0, 1, 1, 0, 0, 1, 0, 1, 0, 1, 0, 1, 1, 0, 1, 0, 1, 0, 0, 1, 0, 1, 1, 0, 0, 1, 0, 1, 1, 0, 1, 0, 1, 0, 0, 1, 1, 0, 1, 0, 1, 0, 1, 0, 1, 0, 0, 1, 0, 1,
0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1,
0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 1, 0, 0, 1, 0, 1, 0, 1, 1, 0, 1, 0, 1, 0, 1, 0, 1, 0, 1,
0, 1, 0, 0, 1, 1, 0, 0, 1];
a sequence 239: [0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1,
0, 0, 1, 0, 1, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1,
1, 0, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0,
1, 0, 1, 1, 0, 1, 0, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0, 0, 1, 1,
0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 1, 0, 1, 0, 0,
1, 1, 0, 1, 0, 0, 1];
a sequence 240: [0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1,
0, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 1, 1, 0, 0, 1, 1, 0,
0, 1, 1, 0, 0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1,
0, 1, 0, 0, 1, 0, 1, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1,
1, 0, 0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 1, 0, 1,
0, 0, 1, 1, 0, 1, 0, 0, 1];

a sequence 241: [0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 0, 1, 1, 0, 0, 1];

a sequence 242: [0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 1, 0, 1, 0, 1, 0, 0, 1, 1, 0, 0, 1, 0, 1, 1, 0, 1, 0, 1, 0, 1, 0, 0, 1, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 0, 1, 0, 0, 1, 1, 0, 0, 1];

a sequence 243: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 0, 1, 0, 1, 1, 0, 1, 0, 1, 0, 0, 1, 1, 0, 0, 1, 1, 0, 1, 0, 1, 0, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 1, 0, 0, 1, 0, 1, 0, 1, 1, 0, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1];

a sequence 244: [0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 1, 0, 1, 0, 0, 1];

a sequence 245: [0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 1, 0, 1, 0, 1, 0, 0, 1, 0, 1, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 1, 0, 1, 0, 1, 0, 1, 0, 0, 1, 0, 1, 0, 1, 0, 1, 0, 1, 0, 1];

a sequence 246: [0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 1, 0, 1, 0, 1, 0, 0, 1, 1, 0, 1, 0, 1, 0, 0, 1, 0, 1, 1, 0, 0, 1, 1, 0, 1, 0, 1, 0, 1, 0, 0, 1, 0, 1, 0, 1, 0, 1, 0, 1, 0, 1];

a sequence 247: [0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 0, 1, 0, 1, 0, 1, 0, 1, 0, 1, 1, 0, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 0, 1, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 0, 1, 0, 1, 0, 1, 1, 0, 0, 1, 0, 0, 1, 0, 1];

a sequence 248: [0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 1, 0, 1, 0, 1, 0, 1, 0, 0, 1, 0, 1, 1, 0, 0, 1, 1, 0, 1, 0, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 1, 0, 0, 1, 0, 1, 1, 0, 1, 0, 1, 0, 1, 0, 1, 0, 1, 0, 1, 0, 0, 1, 0, 1];

a sequence 249: [0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 1, 0, 1, 0, 0, 1, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 1, 0, 1, 0, 1, 0, 0, 1, 1, 0, 0, 1, 0, 1, 0, 1, 0, 1, 0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 1];

a sequence 250: [0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 1, 0, 0, 1, 1, 0, 0, 1, 1, 0, 0, 1, 0, 1, 1, 0, 1, 0, 1, 0, 0, 1, 0, 1, 0, 1, 0, 1, 0, 1, 1, 0, 0, 1, 1, 0, 1, 0, 0, 1, 0, 1, 1, 0, 0, 1, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 1, 0, 1, 0, 1, 0, 1, 0, 1, 0, 1, 0, 0, 1, 0, 1, 1, 0, 0, 1,

0, 1, 1, 0, 0, 1, 1, 0, 0, 1, 1, 0, 0, 1, 0, 1, 0, 1, 0, 1, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 1, 0, 1];

a sequence 251: [0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 0, 1, 1, 0, 0, 1, 1];

a sequence 252: [0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 0, 1, 1, 0, 1, 0, 0, 1, 1, 0, 0, 1, 0, 1, 1, 0, 1, 0, 1, 0, 1, 0, 1, 0, 1, 0, 1, 0, 1, 1, 0, 1, 0, 0, 1, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 1];

a sequence 253: [0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 1, 0, 1, 0, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 0, 1, 0, 1, 0, 0, 1, 0, 1];

a sequence 254: [0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 0, 1];

a sequence 255: [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 0, 1, 1, 0, 1, 0, 0, 1, 0, 1, 0, 1, 1, 0, 1, 0, 0, 1, 1, 0, 1, 0, 0, 1, 1, 0, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 1, 0, 0, 1, 0, 1, 1, 0, 1];

a sequence 256: [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 0, 1, 1, 0, 1, 0, 0, 1, 0, 1, 0, 1, 1, 0, 1, 0, 0, 1, 1, 0, 1, 0, 0, 1, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 0, 1, 0, 1, 0, 0, 1, 1, 0, 0, 1, 0, 1, 0, 1, 0, 1, 1, 0, 1, 0, 0, 0, 1, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 0, 1, 0, 1, 0, 0, 1, 1, 0, 1, 0, 0, 0, 1, 1, 0, 1, 0, 0, 1, 0, 1, 0, 1, 0, 1, 0, 1, 0, 1, 1, 0, 0, 1, 1, 0, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 1, 0, 1, 0, 0, 1];

a sequence 257: [0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 1, 0, 1, 0, 1, 0, 0, 1, 1, 0, 1, 0, 1, 0, 1, 0, 1, 0, 0, 1, 0, 1, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 0, 1, 1, 0, 0, 1, 0, 1, 0, 1, 1, 0, 0, 1, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1];

a sequence 258: [0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 1, 0, 1, 1, 0, 0, 1, 0, 1, 1, 0, 0, 1, 0, 1, 0, 1, 1, 0, 1, 0, 1, 0, 0, 1, 0, 1, 1, 0, 0, 1, 0, 1, 0, 1, 1, 0, 1, 0, 0, 1, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1];

a sequence 259: [0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1];

a sequence 260: [0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1];

a sequence 261: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 0, 1, 1, 0, 0, 1, 0, 1, 1, 0, 1, 0, 1, 0, 0, 1, 1, 0, 0, 1, 0, 1, 0, 1, 1, 0, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 0, 1, 1, 0, 0, 1, 0, 1, 0, 1, 1, 0, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 0, 1, 0, 1, 0, 0, 1, 1, 0];

a sequence 262: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 0, 1, 1, 0, 0, 1, 1, 0, 0, 1, 0, 1, 0, 1, 0, 1, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 1, 0, 0, 1, 0, 1, 0, 1, 1, 0, 0, 1];

a sequence 263: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 0, 1, 0, 1, 1, 0, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 0, 1, 1, 0, 1, 0, 0, 1, 0, 1, 0, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 0, 1, 1, 0, 0, 1, 0, 1, 0, 1, 0, 0, 1, 0, 1]; and

a sequence 264: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 1, 0, 1, 0, 0, 1, 1, 0, 1, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 0, 1, 0, 1, 0, 1, 0, 0, 1, 0, 1].

Example 2: N=128, and the predefined first sequence set may include the following sequences:

a sequence 1: [0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1];

a sequence 2: [0, 1, 0, 1, 0, 1, 0, 1, 0, 1, 0, 1, 1, 0, 1, 0, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 0, 1, 1, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1];

a sequence 3: [0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1];

a sequence 4: [0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1];

a sequence 5: [0, 1, 0, 1, 0, 1, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 0, 1];

a sequence 6: [0, 1, 0, 1, 0, 1, 0, 1, 1, 0, 0, 1, 1, 0, 1, 0, 1, 0, 0, 1, 0, 1, 0, 1, 1, 0, 1, 0, 0, 1, 1, 0, 1, 0, 0, 1, 0, 1, 1, 0, 0, 1, 0, 1, 1, 0, 1, 0, 1, 0, 0, 1, 1, 0, 1, 0, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 0, 1, 1, 0, 0, 1, 1, 0, 1, 0, 0, 1, 0, 1, 0, 1, 1, 0, 0, 1, 0, 1, 0, 1, 1, 0, 1, 0, 1, 0, 0, 1, 1, 0, 1, 0, 0, 1, 0, 1, 0, 1];

a sequence 7: [0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 0, 1, 0, 1, 0, 1, 1, 0, 1, 0, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 0, 1, 0, 1];

a sequence 8: [0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 1, 0, 1, 0, 1, 0, 0, 1, 0, 1, 0, 1, 1, 0, 1, 0, 1, 0, 0, 1, 1, 0, 0, 1, 0, 1, 0, 1, 0, 1, 0, 1, 1, 0, 0, 1, 1, 0, 0, 1, 1, 0, 1, 0, 1, 0, 1, 0, 0, 1, 1, 0, 1, 0, 0, 1, 1, 0, 0, 1];

a sequence 9: [0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 1, 0, 1, 0, 0, 1, 1, 0, 0, 1, 0, 1, 0, 1, 1, 0, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 0, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1];

a sequence 10: [0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1];

a sequence 11: [0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 1, 0, 1, 0, 0, 1, 1, 0, 0, 1];

a sequence 12: [0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1];

a sequence 13: [0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 1, 0, 1, 0, 1, 0, 1, 0, 1, 1, 0, 0, 1, 1, 0, 1, 0, 1, 0, 1, 0, 1, 0, 1, 0, 1, 0, 1, 0, 1, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 0, 1, 1, 0, 0, 1, 0, 1, 1, 0, 0, 1, 0, 1, 1, 0, 0, 1, 1, 0, 0, 1];

a sequence 14: [0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 0, 1, 1, 0, 1, 0, 1, 0, 0, 1, 0, 1, 1, 0, 0, 1, 1, 0, 1, 0, 0, 1, 0, 1, 1, 0, 1, 0, 1, 0, 1, 0, 0, 1, 1, 0, 0, 1, 0, 1, 0, 1, 0, 1, 0, 1, 0, 0, 1, 1, 0, 1, 0, 0, 1, 0, 1, 1, 0, 0, 1, 0, 1, 0, 1, 0, 1, 1, 0, 0, 1, 1, 0, 0, 1];

a sequence 15: [0, 1, 1, 0, 1, 0, 0, 1, 0, 1, 0, 1, 1, 0, 1, 0, 1, 0, 0, 1, 1, 0, 0, 1, 0, 1, 0, 1, 0, 1, 0, 1, 0, 1, 0, 1, 1, 0, 1, 0, 0, 1, 1, 0, 1, 0, 1, 0, 0, 1, 1, 0, 1, 0, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 0, 1, 0, 1, 1, 0, 0, 1, 1, 0, 1, 0, 1, 0, 1, 0, 0, 1, 0, 1, 0, 1, 1, 0, 1, 0, 0, 1];

a sequence 16: [0, 1, 1, 0, 1, 0, 0, 1, 0, 1, 0, 1, 1, 0, 1, 0, 1, 0, 0, 1, 1, 0, 0, 1, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 0, 1, 1, 0, 0, 1, 1, 0, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 0, 1, 1, 0, 1, 0, 0, 1, 1, 0, 1, 0, 0, 1, 0, 1, 0, 1, 0, 1, 0, 1, 0, 1, 1, 0, 0, 1, 1, 0, 1, 0, 1, 0, 1, 0, 0, 1, 0, 1, 0, 1, 1, 0, 1, 0, 0, 1];

a sequence 17: [0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 1, 0, 1, 0, 0, 1, 0, 1, 0, 1, 1, 0, 0, 1, 0, 1, 1, 0, 1, 0, 0, 1, 1, 0, 0, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 0, 1];

a sequence 18: [0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 1, 0, 0, 1, 1, 0, 1, 0, 1, 0, 0, 1, 0, 1, 0, 1, 1, 0, 0, 1, 0, 1, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 0, 1, 0, 1, 1, 0, 0, 1, 1, 0, 0, 1, 0, 1, 0, 1, 0, 1, 1, 0, 1, 0, 1, 0, 0, 1, 0, 1, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 1];

a sequence 19: [0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 0, 1, 1, 0, 0, 1, 0, 1, 0, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 0, 1, 0, 1, 1, 0, 0, 1, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 0, 1];

a sequence 20: [0, 1, 0, 1, 1, 0, 1, 0, 1, 0, 0, 1, 1, 0, 0, 1, 1, 0, 1, 0, 1, 0, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 0, 1, 1, 0, 0, 1, 0, 1, 0, 1, 0, 1, 0, 0, 1, 0, 1, 1, 0, 0, 1, 0, 1, 0, 1, 0, 1, 1, 0, 0, 1, 1, 0, 1, 0, 1, 0, 0, 1, 0, 1, 1, 0, 0, 1, 1, 0, 1, 0, 1, 0, 0, 1, 0, 1];

a sequence 21: [0, 1, 0, 1, 0, 1, 1, 0, 1, 0, 1, 0, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 1, 0, 1, 0, 1, 0, 0, 1, 1, 0, 0, 1, 1, 0, 1, 0, 1, 0, 0, 1, 1, 0, 0, 1, 0, 1, 1, 0, 1, 0, 1, 0, 1, 0, 0, 1, 1, 0, 1, 0, 1, 0, 1, 0, 0, 1, 0, 1, 0, 1];

a sequence 22: [0, 1, 0, 1, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 1, 0, 0, 1, 1, 0, 1, 0, 1, 0, 0, 1, 1, 0, 0, 1, 0, 1, 0, 1, 1, 0, 0, 1, 0, 1, 0, 0, 1, 1, 0, 1, 0, 1, 0, 0, 1, 1, 0, 1, 0, 1, 0, 1, 0, 0, 1, 1, 0, 0, 1];

a sequence 23: [0, 1, 0, 1, 1, 0, 0, 1, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 1, 0, 0, 1, 1, 0, 0, 1, 1, 0, 1, 0, 1, 0, 0, 1, 1, 0, 1, 0, 1, 0, 0, 1, 0, 1];

a sequence 24: [0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 1, 0, 0, 1];

a sequence 25: [0, 1, 1, 0, 0, 1, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 0, 1, 1, 0, 0, 1, 1, 0, 0, 1];

a sequence 26: [0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 1, 0, 0, 1, 0, 1, 1, 0, 1, 0, 1, 0, 0, 1, 0, 1, 1, 0, 0, 1, 1, 0, 1, 0, 0, 1, 0, 1, 0, 1, 0, 1, 1, 0, 1, 0, 1, 0, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 1, 0, 0, 1];

a sequence 27: [0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 0, 1, 1, 0, 0, 1, 0, 1, 1, 0, 0, 1, 0, 1, 1, 0, 0, 1, 1, 0, 1, 0, 0, 1, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 0, 1, 1, 0, 0, 1, 1, 0, 0, 1, 1, 0, 1, 0, 1, 0, 1, 0, 0, 1, 1, 0, 0, 1];

a sequence 28: [0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 1, 0, 1, 0, 1, 0, 1, 0, 0, 1, 1, 0, 0, 1];

a sequence 29: [0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1,

0, 1, 1, 0, 1, 0, 1, 0, 0, 1, 1, 0, 0, 1, 0, 1, 1, 0, 0, 1, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1,
0, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1];

a sequence 30: [0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 0, 1, 1, 0, 1, 0,
1, 0, 0, 1, 1, 0, 1, 0, 0, 1, 1, 0, 1, 0, 1, 0, 0, 1, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1,
0, 1, 0, 0, 1, 1, 0, 1, 0, 1, 0, 0, 1, 1, 0, 1, 0, 1, 0, 0, 1, 0, 1, 0, 1, 1, 0, 0, 1, 0, 1, 0, 1];

a sequence 31: [0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 0, 1, 0, 1,
1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 1,
0, 0, 1, 1, 0, 1, 0, 1, 0, 1, 0, 0, 1, 0, 1, 0, 1, 1, 0, 0, 1, 1, 0, 1, 0, 0, 1, 1, 0, 1, 0, 1];

a sequence 32: [0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 0, 1, 1, 0, 1, 0, 1, 0,
0, 1, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1,
0, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1];

a sequence 33: [0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1,
0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 1,
0, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1];

a sequence 34: [0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0,
1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 0, 1, 1,
0, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1];

a sequence 35: [0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1,
0, 1, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1,
0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1];

a sequence 36: [0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0,
1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1,
0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1];

a sequence 37: [0, 1, 1, 0, 0, 1, 1, 0, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 1, 0, 1, 0, 0, 1, 0, 1, 1, 0, 0, 1,
0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 1, 0, 1,
0, 0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1];

a sequence 38: [0, 1, 1, 0, 0, 1, 1, 0, 1, 0, 1, 0, 1, 0, 1, 0, 0, 1, 1, 0, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 0, 1, 1, 0,
1, 0, 0, 1, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1,
0, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1];

a sequence 39: [0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1,
0, 1, 1, 0, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 1,
0, 1, 0, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1];

a sequence 40: [0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 0, 1, 1, 0,
1, 0, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1,
0, 0, 1, 0, 1, 1, 0, 1, 0, 1, 0, 0, 1, 0, 1, 1, 0, 0, 1, 0, 1, 0, 1, 0, 1, 1, 0, 0, 1, 1, 0, 0, 1];

a sequence 41: [0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0,
0, 1, 0, 1, 1, 0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1,
0, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1];

a sequence 42: [1, 0, 1, 0, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 1, 0,
0, 1, 0, 1, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1];

a sequence 43: [0, 1, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 1, 0, 1, 0,
0, 1, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1,
0, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1];

a sequence 44: [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0,
1, 0, 1, 0, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1,
0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1];

a sequence 45: [0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 1, 0, 1, 0, 1, 0, 1, 0, 0, 1, 1, 0,
0, 1, 1, 0, 0, 1, 0, 1, 1, 0, 1, 0, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 0, 1, 0, 1, 0, 1, 1, 0, 1,
0, 1, 0, 0, 1, 1, 0, 0, 1, 0, 1, 0, 1, 0, 1, 0, 1, 1, 0, 1, 0, 0, 1, 1, 0, 1, 0, 1, 0, 0, 1, 0, 1];

a sequence 46: [0, 1, 0, 1, 1, 0, 1, 0, 0, 1, 1, 0, 1, 0, 0, 1, 0, 1, 0, 1, 0, 1, 0, 1, 0, 1, 1, 0, 0, 1, 1, 0, 1, 0, 1, 0, 0, 1, 0, 1, 0, 1, 1, 0,
1, 0, 0, 1, 0, 1, 0, 1, 0, 1, 0, 1, 1, 0, 0, 1, 1, 0, 0, 1, 1, 0, 0, 1, 0, 1, 1, 0, 1, 0, 1, 0, 0, 1, 0, 1, 1, 0, 0, 1, 1, 0, 0, 1, 1, 0, 1, 0, 1, 0, 1, 0, 1,
0, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1];

a sequence 47: [0, 1, 0, 1, 0, 1, 0, 1, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 0, 1,
1, 0, 0, 1, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1,
0, 0, 1, 1, 0, 0, 1, 1, 0, 0, 1, 0, 1, 0, 1, 0, 1, 1, 0, 0, 1, 0, 1, 1, 0, 1, 0, 1, 0, 0, 1, 0, 1];

a sequence 48: [0, 1, 0, 1, 1, 0, 1, 0, 1, 0, 0, 1, 0, 1, 1, 0, 0, 1, 0, 1, 0, 1, 0, 1, 1, 0, 0, 1, 1, 0, 0, 1, 1, 0, 1, 0, 0, 1, 0, 1, 1, 0, 0, 0, 1,
0, 1, 1, 0, 0, 1, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 0, 1, 0, 1, 1, 0, 0, 1, 1, 0, 1, 0, 1, 0, 1, 0, 1,
0, 1, 0, 0, 1, 0, 1, 1, 0, 1, 0, 1, 0, 0, 1, 0, 1, 0, 1, 1, 0, 0, 1, 1, 0, 0, 1, 0, 1, 0, 1, 0, 1];

a sequence 49: [0, 1, 1, 0, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1];

a sequence 50: [0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 1, 0, 0, 1, 1, 0, 1, 0, 1, 0, 0, 1, 1, 0, 1, 0, 1, 0, 0, 1, 1, 0, 0, 1, 0, 1, 1, 0, 0, 1];

a sequence 51: [0, 1, 1, 0, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 1, 0, 0, 1, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0, 0, 1, 0, 1, 0, 1, 1, 0, 1, 0, 1, 0, 1, 0, 0, 1]; and

a sequence 52: [0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 0, 1, 0, 1, 1, 0, 0, 1].

Example 3: N=64, and the predefined first sequence set may include the following sequences:

a sequence 1: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1];

a sequence 2: [0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 1, 0, 0, 1, 1, 0, 1, 0, 1, 0, 0, 1, 0, 1, 0, 1, 0, 1];

a sequence 3: [0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1];

a sequence 4: [0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 0, 1, 1, 0, 0, 1, 0, 1, 0, 0, 1, 0, 1, 0, 1, 1, 0, 0, 1, 0, 1];

a sequence 5: [0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 0, 1, 0, 1, 1, 0, 0, 1, 0, 1, 0, 1, 0, 1];

a sequence 6: [0, 1, 0, 1, 0, 1, 1, 0, 0, 1, 0, 1, 1, 0, 1, 0, 1, 0, 0, 1, 0, 1, 0, 1, 1, 0, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 0, 1, 0];

a sequence 7: [0, 1, 0, 1, 1, 0, 1, 0, 1, 0, 0, 1, 1, 0, 0, 1, 0, 1, 0, 1, 0, 1, 1, 0, 0, 1, 0, 1, 1, 0, 0, 1, 1, 0, 1, 0, 0, 1, 1, 0, 0, 1, 1, 0, 1, 0, 1, 0, 0, 1, 0, 1, 0, 1, 0, 0, 1, 1, 0, 0, 1, 1, 0, 1, 0, 1, 0, 0, 1, 0, 1];

a sequence 8: [0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 0, 1, 1, 0, 1, 0, 1, 0, 0, 1, 0, 1];

a sequence 9: [0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0, 0, 1, 0, 1, 0, 1, 1, 0, 0, 1, 0, 1, 1, 0, 0, 1, 0, 1, 1, 0, 0, 1];

a sequence 10: [0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 0, 1, 0, 1, 1, 0, 1, 0, 1, 0, 0, 1, 1, 0, 1, 0, 0, 1];

a sequence 11: [0, 1, 1, 0, 1, 0, 0, 1, 1, 0, 1, 0, 1, 0, 1, 0, 0, 1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1];

a sequence 12: [0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 1, 0, 0, 1];

a sequence 13: [0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 0, 1, 1, 0, 0, 1, 0, 1, 0, 1, 1, 0];

a sequence 14: [0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 1, 0, 1, 0, 1, 0, 1, 0, 0, 1, 1, 0, 0, 1, 0, 1, 1, 0, 0, 1, 0, 1, 0, 1, 0];

a sequence 15: [0, 1, 1, 0, 0, 1, 1, 0, 1, 0, 1, 0, 0, 1, 0, 1, 0, 1, 0, 1, 0, 1, 1, 0, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 0, 1];

a sequence 16: [0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 0, 1, 1, 0, 0, 1, 0, 1];

a sequence 17: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 1, 0, 1, 0, 0, 1, 0, 1];

a sequence 18: [0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 1, 0, 0, 1, 1, 0, 1, 0, 1, 0, 0, 1, 0];

a sequence 19: [0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1, 0, 1, 0, 0, 1, 1, 0, 1, 0, 0, 1];

a sequence 20: [0, 1, 1, 0, 1, 0, 0, 1, 1, 0, 1, 0, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 1, 0, 1, 0, 1, 0, 0, 1, 1, 0, 1, 0, 0, 1];

a sequence 21: [0, 1, 1, 0, 0, 1, 0, 1, 0, 1, 1, 0, 1, 0, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 0, 1, 0, 1, 1, 0, 0, 1];

a sequence 22: [0, 1, 1, 0, 0, 1, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1,

0, 1, 0, 1, 1, 0, 1, 0, 1, 0, 0, 1, 0, 1, 0, 1, 1, 0, 0, 1];

a sequence 23: [0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 1, 0, 1, 0, 1, 0, 0, 1, 1, 0, 1, 0, 0, 1, 1, 0, 1, 0, 1, 0, 0, 1, 0, 1, 0, 1];

a sequence 24: [0, 1, 0, 1, 0, 1, 1, 0, 1, 0, 1, 0, 0, 1, 1, 0, 1, 0, 0, 1, 1, 0, 1, 0, 0, 1, 1, 0, 1, 0, 1, 0, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1];

a sequence 25: [0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 0, 1, 0, 1];

a sequence 26: [0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1];

a sequence 27: [0, 1, 1, 0, 0, 1, 0, 1, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1];

a sequence 28: [0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1];

a sequence 29: [0, 1, 0, 1, 0, 1, 1, 0, 0, 1, 0, 1, 0, 1, 1, 0, 1, 0, 0, 1, 1, 0, 1, 0, 0, 1, 1, 0, 0, 1, 0, 1, 1, 0, 1, 0, 0, 1, 1, 0, 1, 0, 1, 0, 0, 1, 1, 0, 1, 0, 1, 0, 0, 1, 1, 0, 0, 1, 1, 0, 1, 0, 1, 0, 1, 0, 0, 1, 0, 1, 0, 1];

a sequence 30: [0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1];

a sequence 31: [0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 1, 0, 1, 0, 0, 1, 1, 0, 0, 1, 0, 1, 1, 0, 0, 1];

a sequence 32: [0, 1, 1, 0, 0, 1, 0, 1, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 0, 1, 0, 1, 1, 0, 1, 0, 1, 0, 0, 1, 0, 1, 1, 0, 0, 1, 0, 1, 1, 0, 0, 1, 0, 1, 1, 0, 0, 1];

a sequence 33: [0, 1, 0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 1, 0, 1, 0, 1, 0, 0, 1, 1, 0, 1, 0, 1, 0, 0, 1, 1, 0, 0, 1, 1, 0, 0, 1, 1, 0, 1, 0, 0, 1, 1, 0, 0, 1, 0, 1, 0, 1];

a sequence 34: [0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1];

a sequence 35: [0, 1, 1, 0, 1, 0, 1, 0, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 1, 0, 1, 0, 0, 1];

a sequence 36: [0, 1, 1, 0, 1, 0, 1, 0, 1, 0, 0, 1, 0, 1, 0, 1, 0, 1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 0, 1];

a sequence 37: [0, 1, 0, 1, 0, 1, 0, 1, 0, 1, 1, 0, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 0, 1, 1, 0, 1, 0, 0, 1, 0, 1, 0, 1, 0, 1];

a sequence 38: [0, 1, 0, 1, 0, 1, 0, 1, 1, 0, 1, 0, 1, 0, 0, 1, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 0, 1, 0, 1, 1, 0, 1, 0, 0, 1, 0, 1, 0, 1];

a sequence 39: [0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1];

a sequence 40: [0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1];

a sequence 41: [0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 0, 1, 0, 1, 0, 1];

a sequence 42: [0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1];

a sequence 43: [0, 1, 1, 0, 0, 1, 1, 0, 0, 1, 1, 0, 1, 0, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1];

a sequence 44: [0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 1, 0, 1, 0, 0, 1, 1, 0, 0, 1, 1, 0, 0, 1];

a sequence 45: [0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 0, 1];

a sequence 46: [0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1];

a sequence 47: [0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1];

a sequence 48: [0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 1, 0, 0, 1, 0, 1, 1, 0, 1, 0, 1, 0, 1, 0, 0, 1];

a sequence 49: [0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 0, 1, 0, 1, 1, 0, 1, 0, 0, 1, 1, 0, 1, 0, 1, 0, 1, 0, 0, 1];

a sequence 50: [0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1];

a sequence 51: [0, 1, 0, 1, 0, 1, 1, 0, 0, 1, 0, 1, 1, 0, 0, 1, 1, 0, 0, 1, 1, 0, 0, 1, 1, 0, 1, 0, 1, 0, 0, 1, 1, 0, 1, 0, 1, 0, 1, 0, 0, 1, 1, 0, 1, 0,

0, 1, 1, 0, 1, 0, 0, 1, 1, 0, 1, 0, 1, 0, 0, 1, 0, 1, 0, 1];

a sequence 52: [0, 1, 0, 1, 0, 1, 1, 0, 1, 0, 1, 0, 0, 1, 1, 0, 1, 0, 0, 1, 1, 0, 1, 0, 0, 1, 1, 0, 1, 0, 1, 0, 0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1];

a sequence 53: [0, 1, 0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1];

a sequence 54: [0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1];

a sequence 55: [0, 1, 1, 0, 0, 1, 1, 0, 0, 1, 0, 1, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 1, 0, 0, 1];

a sequence 56: [0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 0, 1, 0, 1, 0, 1, 1, 0, 0, 1, 1, 0, 0, 1];

a sequence 57: [0, 1, 0, 1, 0, 1, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 0, 1];

a sequence 58: [0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1];

a sequence 59: [0, 1, 1, 0, 0, 1, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 0, 1, 1, 0, 0, 1];

a sequence 60: [0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 0, 1, 1, 0, 0, 1, 0, 1, 1, 0, 1, 0, 0, 1, 0, 1, 0, 1, 1, 0, 0, 1, 1, 0, 0, 1];

a sequence 61: [0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 0, 1, 1, 0, 1, 0, 0, 1, 0, 1, 1, 0, 1, 0, 1, 0, 0, 1, 0, 1];

a sequence 62: [0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 1, 0, 0, 1, 1, 0, 0, 1, 1, 0, 1, 0, 0, 1, 0, 1];

a sequence 63: [0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 1, 0, 1, 0, 0, 1];

a sequence 64: [0, 1, 1, 0, 1, 0, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 1, 0, 1, 0, 0, 1, 0, 1];

a sequence 65: [0, 1, 1, 0, 1, 0, 1, 0, 0, 1, 0, 1, 1, 0, 0, 1, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 0, 1];

a sequence 66: [0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1];

a sequence 67: [0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 0, 1, 1, 0, 1, 0, 1, 0, 1, 0, 0, 1, 0, 1];

a sequence 68: [0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 0, 1];

a sequence 69: [0, 1, 0, 1, 0, 1, 0, 1, 1, 0, 0, 1, 1, 0, 1, 0, 1, 0, 0, 1, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 1, 0, 1, 0, 0, 1, 1, 0, 1, 0, 0, 1, 0, 1];

a sequence 70: [0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 1, 0, 1, 0, 1, 0, 0, 1, 0, 1, 0, 1, 0, 1, 1, 0, 1, 0, 1, 0, 0, 1, 1, 0, 0, 1, 0, 1, 0, 1, 0, 1, 0, 1];

a sequence 71: [0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1];

a sequence 72: [0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 1, 0, 0, 1, 1, 0, 0, 1, 0, 1, 0, 1, 0, 1];

a sequence 73: [0, 1, 0, 1, 0, 1, 0, 1, 1, 0, 1, 0, 0, 1, 0, 1, 0, 1, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1];

a sequence 74: [0, 1, 0, 1, 1, 0, 1, 0, 1, 0, 1, 0, 1, 0, 0, 1, 1, 0, 1, 0, 0, 1, 0, 1, 1, 0, 0, 1, 1, 0, 0, 1, 1, 0, 0, 1, 1, 0, 1, 0, 1, 0, 0, 1, 1, 0, 0, 1, 0, 1, 0, 1, 1, 0, 1, 0, 0, 1, 0, 1, 0, 1, 0, 1, 0, 1];

a sequence 75: [0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 1, 0, 0, 1, 0, 1];

a sequence 76: [0, 1, 0, 1, 0, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1];

a sequence 77: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1];

a sequence 78: [0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1];

a sequence 79: [0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1];

a sequence 80: [0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 0, 1, 0, 1,

0, 1, 0, 1, 0, 1, 0, 1, 1, 0, 1, 0, 1, 0, 0, 1, 1, 0, 0, 1];

a sequence 81: [0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1];

a sequence 82: [0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1, 0, 1, 0, 1, 0, 1];

a sequence 83: [0, 1, 1, 0, 0, 1, 1, 0, 0, 1, 0, 1, 1, 0, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 0, 1, 0, 1, 0, 1, 0, 1, 1, 0, 1, 0, 0, 1];

a sequence 84: [0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 1, 0, 0, 1, 1, 0, 0, 1];

a sequence 85: [0, 1, 1, 0, 0, 1, 0, 1, 0, 1, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1];

a sequence 86: [0, 1, 1, 0, 1, 0, 1, 0, 0, 1, 1, 0, 1, 0, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 0, 1, 1, 0, 0, 1];

a sequence 87: [0, 1, 1, 0, 0, 1, 0, 1, 0, 1, 1, 0, 0, 1, 0, 1, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 1, 0, 1, 0, 1, 0, 1, 0, 0, 1];

a sequence 88: [0, 1, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 1, 0, 1, 0, 0, 1, 0, 1, 1, 0, 0, 1, 0, 1, 0, 1, 1, 0, 0, 1];

a sequence 89: [0, 1, 0, 1, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1];

a sequence 90: [0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 0, 1, 1, 0, 0, 1, 1, 0, 0, 1, 0, 1];

a sequence 91: [0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1];

a sequence 92: [0, 1, 0, 1, 1, 0, 0, 1, 1, 0, 0, 1, 0, 1, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 0, 1, 0, 1, 0, 1];

a sequence 93: [0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1];

a sequence 94: [0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 1, 0, 1, 0, 0, 1, 0, 1, 1, 0, 0, 1, 1, 0, 1, 0, 1, 0, 0, 1, 0, 1, 0, 1, 0, 1, 1, 0, 1, 0];

a sequence 95: [0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1];

a sequence 96: [0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 0, 1, 1, 0, 1, 0, 0, 1, 1, 0, 0, 1, 1, 0, 0, 1, 0, 1, 1, 0, 1, 0];

a sequence 97: [0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 1, 0, 0, 1, 1, 0, 1, 0, 1, 0, 0, 1, 1, 0, 0, 1, 1, 0, 1, 0, 1, 0, 1, 0, 0, 1, 1, 0, 0, 1, 0, 1];

a sequence 98: [0, 1, 1, 0, 1, 0, 1, 0, 0, 1, 1, 0, 1, 0, 1, 0, 0, 1, 1, 0, 0, 1, 0, 1, 1, 0, 0, 1, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1];

a sequence 99: [0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1];

a sequence 100: [0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 1, 0, 1, 0, 1, 0, 0, 1, 1, 0, 0, 1, 0, 1, 0, 1, 1, 0, 0, 1, 0, 1];

a sequence 101: [0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 0, 1, 0, 0, 1, 1, 0, 1, 0, 0, 1, 1, 0, 1, 0, 1, 0, 0, 1, 0, 1];

a sequence 102: [0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 0, 1, 1, 0, 0, 1, 0, 1, 0, 1, 1, 0, 1, 0, 1, 0, 1, 0, 0, 1, 0, 1, 0, 1];

a sequence 103: [0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 0, 1];

a sequence 104: [0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 0, 1, 1, 0, 0, 1, 0, 1];

a sequence 105: [0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 0, 1, 1, 0, 1, 0, 1, 0, 0, 1, 0, 0, 1, 1, 0, 0, 1, 0, 1, 0, 1, 1, 0, 0, 1, 0, 1, 1, 0, 0, 1]; and

a sequence 106: [0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 0, 1, 0, 1].

**Example** 4: N=32, and the predefined first sequence set may include the following sequences:

a sequence 1: [0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0];
a sequence 2: [0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0];

a sequence 3: [0, 1, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0];

a sequence 4: [0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 1, 0];

a sequence 5: [0, 1, 0, 1, 0, 1, 1, 0, 0, 1, 1, 0, 0, 1, 0, 1, 1, 0, 1, 0, 1, 0, 0, 1, 1, 0, 0, 1, 1, 0, 1, 0];

a sequence 6: [0, 1, 1, 0, 0, 1, 0, 1, 1, 0, 1, 0, 1, 0, 0, 1, 1, 0, 0, 1, 1, 0, 1, 0, 0, 1, 0, 1, 0, 1, 1, 0];

a sequence 7: [0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1];

a sequence 8: [0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1];

a sequence 9: [0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0];

a sequence 10: [0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0];

a sequence 11: [0, 1, 1, 0, 0, 1, 1, 0, 0, 1, 0, 1, 1, 0, 1, 0, 1, 0, 0, 1, 1, 0, 0, 1, 1, 0, 1, 0, 0, 1, 0, 1];

a sequence 12: [0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 1, 0];

a sequence 13: [0, 1, 0, 1, 1, 0, 1, 0, 0, 1, 1, 0, 0, 1, 1, 0, 1, 0, 1, 0, 0, 1, 0, 1, 1, 0, 0, 1, 1, 0, 0, 1];

a sequence 14: [0, 1, 0, 1, 1, 0, 1, 0, 1, 0, 0, 1, 1, 0, 0, 1, 1, 0, 1, 0, 0, 1, 0, 1, 0, 1, 1, 0, 0, 1, 1, 0];

a sequence 15: [0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1];

a sequence 16: [0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1];

a sequence 17: [0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0];

a sequence 18: [0, 1, 1, 0, 1, 0, 0, 1, 1, 0, 1, 0, 0, 1, 0, 1, 0, 1, 1, 0, 1, 0, 1, 0, 1, 0, 0, 1, 0, 1, 1, 0];

a sequence 19: [0, 1, 0, 1, 0, 1, 1, 0, 0, 1, 0, 1, 1, 0, 0, 1, 0, 1, 1, 0, 0, 1, 0, 1, 0, 1, 1, 0, 1, 0, 1, 0];

a sequence 20: [0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1];

a sequence 21: [0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1];

a sequence 22: [0, 1, 0, 1, 0, 1, 1, 0, 1, 0, 1, 0, 0, 1, 1, 0, 1, 0, 0, 1, 1, 0, 1, 0, 0, 1, 1, 0, 1, 0, 1, 0];

a sequence 23: [0, 1, 0, 1, 1, 0, 0, 1, 0, 1, 0, 1, 0, 1, 1, 0, 0, 1, 1, 0, 1, 0, 1, 0, 0, 1, 1, 0, 0, 1, 0, 1];

a sequence 24: [0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 1, 0];

a sequence 25: [0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0];

a sequence 26: [0, 1, 0, 1, 1, 0, 0, 1, 1, 0, 1, 0, 1, 0, 0, 1, 1, 0, 0, 1, 0, 1, 0, 1, 1, 0, 0, 1, 0, 1, 0, 1];

a sequence 27: [0, 1, 1, 0, 0, 1, 0, 1, 0, 1, 1, 0, 1, 0, 1, 0, 0, 1, 0, 1, 0, 1, 1, 0, 0, 1, 0, 1, 1, 0, 0, 1];

a sequence 28: [0, 1, 1, 0, 0, 1, 0, 1, 0, 1, 1, 0, 1, 0, 1, 0, 1, 0, 1, 0, 0, 1, 1, 0, 1, 0, 0, 1, 1, 0, 1, 0];

a sequence 29: [0, 1, 1, 0, 0, 1, 0, 1, 1, 0, 0, 1, 0, 1, 0, 1, 0, 1, 0, 1, 1, 0, 1, 0, 1, 0, 0, 1, 0, 1, 1, 0];

a sequence 30: [0, 1, 1, 0, 0, 1, 0, 1, 1, 0, 0, 1, 0, 1, 0, 1, 1, 0, 1, 0, 1, 0, 0, 1, 0, 1, 0, 1, 1, 0, 0, 1];

a sequence 31: [0, 1, 1, 0, 1, 0, 1, 0, 0, 1, 1, 0, 0, 1, 0, 1, 0, 1, 1, 0, 0, 1, 0, 1, 0, 1, 0, 1, 1, 1, 0];

a sequence 32: [0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1];

a sequence 33: [0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1];

a sequence 34: [0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0];

a sequence 35: [0, 1, 0, 1, 0, 1, 1, 0, 0, 1, 1, 0, 0, 1, 0, 1, 0, 1, 1, 0, 0, 1, 0, 1, 1, 0, 1, 0, 1, 0];

a sequence 36: [0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 1];

a sequence 37: [0, 1, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1];

a sequence 38: [0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0];

a sequence 39: [0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1];

a sequence 40: [0, 1, 1, 0, 0, 1, 0, 1, 0, 1, 0, 1, 0, 1, 1, 0, 1, 0, 0, 1, 0, 1, 0, 1, 1, 0, 1, 0, 0, 1, 1, 0];

a sequence 41: [0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0];

a sequence 42: [0, 1, 1, 0, 0, 1, 0, 1, 1, 0, 1, 0, 1, 0, 0, 1, 1, 0, 0, 1, 0, 1, 0, 1, 0, 1, 0, 1, 1, 0, 0, 1];

a sequence 43: [0, 1, 0, 1, 1, 0, 0, 1, 0, 1, 1, 0, 1, 0, 1, 0, 0, 1, 0, 1, 0, 1, 1, 0, 0, 1, 1, 0, 0, 1, 0, 1];

a sequence 44: [0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0];

a sequence 45: [0, 1, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0];

a sequence 46: [0, 1, 0, 1, 1, 0, 0, 1, 1, 0, 0, 1, 0, 1, 0, 1, 1, 0, 1, 0, 1, 0, 0, 1, 0, 1, 1, 0, 0, 1, 0, 1];

a sequence 47: [0, 1, 1, 0, 1, 0, 1, 0, 0, 1, 0, 1, 1, 0, 0, 1, 0, 1, 1, 0, 0, 1, 0, 1, 0, 1, 0, 1, 0, 1, 1, 0];

a sequence 48: [0, 1, 1, 0, 1, 0, 1, 0, 0, 1, 0, 1, 1, 0, 0, 1, 1, 0, 1, 0, 1, 0, 1, 0, 1, 0, 1, 0, 1, 0, 0, 1];

a sequence 49: [0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1];

a sequence 50: [0, 1, 1, 0, 1, 0, 1, 0, 1, 0, 1, 0, 0, 1, 1, 0, 1, 0, 0, 1, 1, 0, 1, 0, 0, 1, 0, 1, 0, 1, 1, 0];

a sequence 51: [0, 1, 0, 1, 0, 1, 0, 1, 1, 0, 1, 0, 0, 1, 0, 1, 1, 0, 0, 1, 1, 0, 0, 1, 0, 1, 1, 0, 1, 0];

a sequence 52: [0, 1, 0, 1, 0, 1, 0, 1, 1, 0, 1, 0, 0, 1, 1, 0, 0, 1, 1, 0, 0, 1, 1, 0, 1, 0, 0, 1, 0, 1];

a sequence 53: [0, 1, 0, 1, 1, 0, 1, 0, 0, 1, 1, 0, 0, 1, 1, 0, 0, 1, 1, 0, 1, 0, 0, 1, 0, 1, 0, 1, 0, 1];

a sequence 54: [0, 1, 0, 1, 1, 0, 1, 0, 0, 1, 1, 0, 0, 1, 1, 0, 1, 0, 0, 1, 0, 1, 1, 0, 1, 0, 1, 0, 1, 0];

a sequence 55: [0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1];

a sequence 56: [0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0];

a sequence 57: [0, 1, 0, 1, 1, 0, 1, 0, 1, 0, 0, 1, 1, 0, 0, 1, 0, 1, 1, 0, 0, 1, 1, 0, 1, 0, 1, 0, 1, 0];

a sequence 58: [0, 1, 0, 1, 1, 0, 1, 0, 1, 0, 0, 1, 1, 0, 0, 1, 0, 1, 1, 0, 0, 1, 0, 1, 0, 1, 0, 1, 0, 1];

a sequence 59: [0, 1, 1, 0, 0, 1, 1, 0, 0, 1, 0, 1, 1, 0, 1, 0, 0, 1, 0, 1, 0, 1, 0, 1, 1, 0, 1, 0, 0, 1];

a sequence 60: [0, 1, 1, 0, 0, 1, 1, 0, 0, 1, 0, 1, 1, 0, 1, 0, 1, 0, 1, 0, 1, 0, 1, 0, 1, 0, 0, 1, 0, 1, 1, 0];

a sequence 61: [0, 1, 1, 0, 1, 0, 0, 1, 0, 1, 0, 1, 0, 1, 0, 1, 0, 1, 0, 1, 1, 0, 1, 0, 0, 1, 1, 0, 0, 1, 1, 0];
a sequence 62: [0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1];
a sequence 63: [0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0];
a sequence 64: [0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1];
a sequence 65: [0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1];
a sequence 66: [0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0];
a sequence 67: [0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0];
a sequence 68: [0, 1, 0, 1, 0, 1, 1, 0, 0, 1, 1, 0, 0, 1, 0, 1, 1, 0, 1, 0, 1, 0, 0, 1, 0, 1, 1, 0, 0, 1, 0, 1];
a sequence 69: [0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1];
a sequence 70: [0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0];
a sequence 71: [0, 1, 1, 0, 0, 1, 0, 1, 0, 1, 0, 1, 0, 1, 1, 0, 0, 1, 1, 0, 0, 1, 0, 1, 1, 0, 1, 0, 1, 0, 0, 1];
a sequence 72: [0, 1, 1, 0, 0, 1, 0, 1, 0, 1, 0, 1, 0, 1, 1, 0, 1, 0, 0, 1, 1, 0, 1, 0, 0, 1, 0, 1, 0, 1, 1, 0];
a sequence 73: [0, 1, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0];
a sequence 74: [0, 1, 1, 0, 1, 0, 1, 0, 0, 1, 0, 1, 1, 0, 0, 1, 1, 0, 0, 1, 0, 1, 0, 1, 0, 1, 0, 1, 1, 0, 0, 1];
a sequence 75: [0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1];
a sequence 76: [0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0];
a sequence 77: [0, 1, 0, 1, 1, 0, 0, 1, 1, 0, 0, 1, 0, 0, 1, 0, 1, 0, 1, 1, 0, 0, 1, 0, 1, 1, 0, 1, 0, 1, 0];
a sequence 78: [0, 1, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1];
a sequence 79: [0, 1, 1, 0, 0, 1, 0, 1, 1, 0, 1, 0, 1, 0, 0, 1, 0, 1, 1, 0, 0, 1, 0, 1, 0, 1, 0, 1, 0, 1, 1, 0];
a sequence 80: [0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1];
a sequence 81: [0, 1, 1, 0, 1, 0, 1, 0, 1, 0, 1, 0, 0, 1, 1, 0, 0, 1, 1, 0, 1, 0, 1, 0, 0, 1, 0, 1, 1, 0, 0, 1];
a sequence 82: [0, 1, 1, 0, 1, 0, 1, 0, 1, 0, 1, 0, 0, 1, 1, 0, 1, 0, 0, 1, 0, 1, 0, 1, 1, 0, 1, 0, 0, 1, 1, 0];
a sequence 83: [0, 1, 0, 1, 0, 1, 0, 1, 0, 1, 1, 0, 1, 0, 0, 1, 1, 0, 1, 0, 0, 1, 0, 1, 1, 0, 0, 1, 1, 0, 0, 1];
a sequence 84: [0, 1, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1];
a sequence 85: [0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1];
a sequence 86: [0, 1, 0, 1, 0, 1, 0, 1, 1, 0, 0, 1, 0, 1, 1, 0, 1, 0, 1, 0, 0, 1, 0, 1, 0, 1, 1, 0, 0, 1, 1, 0];
a sequence 87: [0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0];
a sequence 88: [0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1];
a sequence 89: [0, 1, 0, 1, 1, 0, 1, 0, 0, 1, 1, 0, 0, 1, 1, 0, 1, 0, 1, 0, 1, 0, 1, 0, 0, 1, 0, 1, 1, 0, 1, 0];
a sequence 90: [0, 1, 1, 0, 1, 0, 0, 1, 0, 1, 0, 1, 0, 1, 0, 1, 1, 0, 0, 1, 1, 0, 0, 1, 0, 1, 1, 0, 1, 0];
a sequence 91: [0, 1, 0, 1, 1, 0, 1, 0, 0, 1, 1, 0, 0, 1, 0, 1, 0, 1, 0, 1, 1, 0, 0, 1, 0, 1, 1, 0];
a sequence 92: [0, 1, 0, 1, 1, 0, 1, 0, 1, 0, 0, 1, 1, 0, 0, 1, 0, 1, 0, 1, 0, 1, 0, 0, 1, 1, 0, 1, 0, 0, 1];
a sequence 93: [0, 1, 1, 0, 1, 0, 0, 1, 1, 0, 1, 0, 1, 0, 1, 0, 0, 1, 1, 0, 0, 1, 1, 0, 1, 0, 1, 0, 0, 1, 0, 1];
a sequence 94: [0, 1, 1, 0, 1, 0, 0, 1, 1, 0, 1, 0, 1, 0, 1, 0, 0, 1, 1, 0, 0, 1, 0, 1, 0, 1, 1, 0, 1, 0];
a sequence 95: [0, 1, 0, 1, 0, 1, 1, 0, 0, 1, 0, 1, 1, 0, 0, 1, 0, 1, 0, 1, 0, 1, 1, 0, 1, 0, 1, 0, 0, 1, 1, 0];
a sequence 96: [0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0];
a sequence 97: [0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1];
a sequence 98: [0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0];
a sequence 99: [0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0];
a sequence 100: [0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1];
a sequence 101: [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1];
a sequence 102: [0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1];
a sequence 103: [0, 1, 0, 1, 1, 0, 0, 1, 1, 0, 1, 0, 1, 0, 0, 1, 0, 1, 0, 1, 1, 0, 0, 1, 0, 1, 0, 1, 0, 1, 1, 0];
a sequence 104: [0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1];
a sequence 105: [0, 1, 1, 0, 1, 0, 1, 0, 1, 0, 0, 1, 1, 0, 1, 0, 0, 1, 1, 0, 1, 0, 1, 0, 0, 1, 1, 0, 0, 1, 0, 1]; and
a sequence 106: [0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0].

**Example 5:** N=16, and the predefined first sequence set may include the following sequences:

a sequence 1: [0, 1, 0, 1, 0, 1, 1, 0, 0, 1, 1, 0, 0, 1, 0, 1];
a sequence 2: [0, 1, 0, 1, 0, 1, 1, 0, 1, 0, 0, 1, 1, 0, 1, 0];
a sequence 3: [0, 1, 0, 1, 1, 0, 0, 1, 0, 1, 1, 0, 1, 0, 1, 0];
a sequence 4: [0, 1, 0, 1, 1, 0, 0, 1, 1, 0, 0, 1, 0, 1, 0, 1];
a sequence 5: [0, 1, 1, 0, 0, 1, 0, 1, 0, 1, 0, 1, 0, 1, 1, 0];
a sequence 6: [0, 1, 1, 0, 1, 0, 1, 0, 1, 0, 1, 0, 0, 1, 1, 0];
a sequence 7: [0, 1, 0, 1, 0, 1, 1, 0, 1, 0, 1, 0, 0, 1, 1, 0]; and
a sequence 8: [0, 1, 1, 0, 0, 1, 0, 1, 0, 1, 1, 0, 1, 0, 1, 0].

**Example 6:** N=8, and the predefined first sequence set may include the following sequences:

a sequence 1: [0, 0, 1, 1, 0, 1, 1, 0];
a sequence 2: [0, 1, 0, 0, 1, 0, 1, 1];
a sequence 3: [0, 1, 1, 0, 1, 0, 0, 1];
a sequence 4: [0, 1, 0, 0, 1, 1, 1, 0];
a sequence 5: [0, 1, 1, 0, 1, 1, 0, 0];
a sequence 6: [0, 1, 1, 1, 0, 0, 1, 0];
a sequence 7: [0, 0, 1, 0, 1, 1, 0, 1];
a sequence 8: [0, 1, 0, 1, 1, 0, 0, 1];
a sequence 9: [0, 1, 0, 0, 1, 0, 0, 0];
a sequence 10: [0, 1, 1, 0, 0, 1, 0, 1];
a sequence 11: [0, 0, 1, 0, 1, 1, 1, 0];
a sequence 12: [0, 1, 1, 1, 0, 1, 0, 0]; and
a sequence 13: [0, 0, 0, 1, 0, 0, 1, 0].

It may be understood that the first sequence sets corresponding to the foregoing lengths may include more or fewer sequences than the sequences shown in Example 1 to Example 6.

It may be further understood that the sequence included in the first sequence set is not limited in this application, and a quantity of sequences included in the first sequence set is not limited either. For example, the first sequence set may include only one sequence, and the sequence may be any one of the sequences included in the first sequence set shown in Example 1 to Example 6. Alternatively, the first sequence set includes a plurality of sequences with different lengths, and the plurality of sequences with different lengths may be from the sequences included in the first sequence set shown in Example 1 to Example 6.

Autocorrelation performance of the sequence shown in Example 1 to Example 6 is good. Therefore, when the sequence shown in Example 1 to Example 6 is used as the first sequence, or an equivalent sequence of the sequence shown in Example 1 to Example 6 is used as the first sequence, timing precision can be improved, in other words, an error between a location of the first sequence detected by the second device in the first signal and an actual location of the first sequence in the first signal is small.

The sequence [0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1] shown in Example 3 is used as an example, and an autocorrelation value of the sequence is described with reference to FIG. 8.

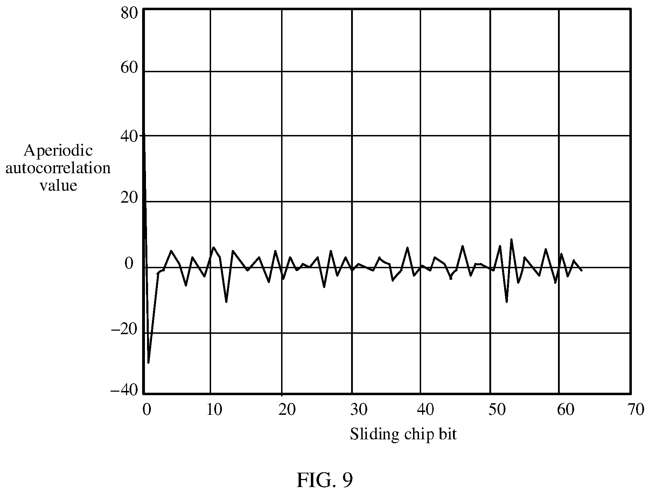

FIG. 9 is a diagram of autocorrelation performance according to an embodiment of this application. As shown in FIG. 9, that 0-bit chip slides indicates ideal synchronization, and a corresponding aperiodic autocorrelation value is equal to a sequence length 64; when 1-bit chip slides, a corresponding aperiodic autocorrelation value is -31; when 2-bit chip slides, a corresponding aperiodic autocorrelation value is -2; and when another bit (other than 1-bit and 2-bit) of chip slides, an obtained aperiodic autocorrelation value does not exceed 10. A smaller correlation value obtained by sliding another bit of chip indicates better autocorrelation performance. Therefore, the sequence provided in this application has high synchronization timing precision.

It can be learned from the foregoing formula (6) and formula (7) that, when the first generalized Golay sequence is determined, in addition to the n-level register, the second sequence $[W_1]$ and the third sequence $[W_2]$ need to be known. A depth of each level of register in the n-level register is $2^{P_k}$. In this application, a sequence including $P_k$ is referred to as a register sequence, that is, the register sequence includes $P_1$, $P_2$, $P_3$, ..., and $P_n$, where P=n-1.

The following uses an example in which a value of n is 8, 7, 6, 5, 4, or 3 to describe the register sequence, the second sequence, and the third sequence. The register sequence may be any sequence in a register sequence set, the second sequence may be any sequence in a second sequence set, and the third sequence may be any sequence in a third sequence set. The register sequence set, the second sequence set, and the third sequence set may be predefined.

**Example 7:** n=8.

1. The register sequence set may include the following sequences:

a register sequence 1: [0, 5, 3, 6, 1, 4, 2, 7];
a register sequence 2: [0, 5, 3, 6, 1, 4, 2, 7];
a register sequence 3: [0, 5, 3, 6, 1, 4, 2, 7];
a register sequence 4: [0, 5, 3, 6, 1, 4, 2, 7];

a register sequence 5: [0, 5, 3, 6, 1, 4, 2, 7];
a register sequence 6: [0, 5, 3, 6, 1, 4, 2, 7];
a register sequence 7: [0, 5, 3, 6, 1, 4, 2, 7];
a register sequence 8: [0, 5, 3, 6, 1, 4, 2, 7];
a register sequence 9: [0, 5, 3, 6, 2, 4, 1, 7];
a register sequence 10: [0, 5, 3, 6, 2, 4, 1, 7];
a register sequence 11: [0, 5, 3, 6, 2, 4, 1, 7];
a register sequence 12: [0, 5, 3, 6, 2, 4, 1, 7];
a register sequence 13: [0, 5, 3, 6, 2, 4, 1, 7];
a register sequence 14: [0, 5, 3, 6, 2, 4, 1, 7];
a register sequence 15: [0, 5, 3, 6, 2, 4, 1, 7];
a register sequence 16: [0, 5, 3, 6, 2, 4, 1, 7];
a register sequence 17: [0, 6, 4, 3, 2, 1, 5, 7];
a register sequence 18: [0, 6, 4, 3, 2, 1, 5, 7];
a register sequence 19: [0, 6, 4, 3, 2, 1, 5, 7];
a register sequence 20: [0, 6, 4, 3, 2, 1, 5, 7];
a register sequence 21: [0, 4, 6, 5, 1, 3, 2, 7];
a register sequence 22: [0, 4, 6, 5, 1, 3, 2, 7];
a register sequence 23: [0, 4, 6, 5, 1, 3, 2, 7];
a register sequence 24: [0, 4, 6, 5, 1, 3, 2, 7];
a register sequence 25: [0, 4, 6, 5, 1, 3, 2, 7];
a register sequence 26: [0, 4, 6, 5, 1, 3, 2, 7];
a register sequence 27: [0, 4, 6, 5, 1, 3, 2, 7];
a register sequence 28: [0, 4, 6, 5, 1, 3, 2, 7];
a register sequence 29: [0, 6, 3, 4, 1, 5, 2, 7];
a register sequence 30: [0, 6, 3, 4, 1, 5, 2, 7];
a register sequence 31: [0, 6, 3, 4, 1, 5, 2, 7];
a register sequence 32: [0, 6, 3, 4, 1, 5, 2, 7];
a register sequence 33: [0, 6, 3, 4, 1, 5, 2, 7];
a register sequence 34: [0, 6, 3, 4, 1, 5, 2, 7];
a register sequence 35: [0, 6, 3, 4, 1, 5, 2, 7];
a register sequence 36: [0, 6, 3, 4, 1, 5, 2, 7];
a register sequence 37: [0, 6, 3, 4, 1, 5, 2, 7];
a register sequence 38: [0, 6, 3, 4, 1, 5, 2, 7];
a register sequence 39: [0, 6, 3, 4, 1, 5, 2, 7];
a register sequence 40: [0, 6, 3, 4, 1, 5, 2, 7];
a register sequence 41: [0, 6, 1, 5, 2, 4, 3, 7];
a register sequence 42: [0, 6, 1, 5, 2, 4, 3, 7];
a register sequence 43: [0, 6, 1, 5, 2, 4, 3, 7];
a register sequence 44: [0, 6, 1, 5, 2, 4, 3, 7];
a register sequence 45: [0, 6, 1, 5, 2, 4, 3, 7];
a register sequence 46: [0, 6, 1, 5, 2, 4, 3, 7];
a register sequence 47: [0, 6, 1, 5, 2, 4, 3, 7];
a register sequence 48: [0, 6, 1, 5, 2, 4, 3, 7];
a register sequence 49: [0, 6, 1, 5, 2, 4, 3, 7];
a register sequence 50: [0, 6, 1, 5, 2, 4, 3, 7];
a register sequence 51: [0, 6, 1, 5, 2, 4, 3, 7];
a register sequence 52: [0, 6, 1, 5, 2, 4, 3, 7];
a register sequence 53: [0, 6, 1, 5, 2, 4, 3, 7];
a register sequence 54: [0, 6, 1, 5, 2, 4, 3, 7];
a register sequence 55: [0, 6, 1, 5, 2, 4, 3, 7];
a register sequence 56: [0, 6, 1, 5, 2, 4, 3, 7];
a register sequence 57: [0, 6, 1, 5, 2, 4, 3, 7];
a register sequence 58: [0, 6, 1, 5, 2, 4, 3, 7];
a register sequence 59: [0, 6, 1, 5, 2, 4, 3, 7];
a register sequence 60: [0, 6, 1, 5, 2, 4, 3, 7];
a register sequence 61: [0, 6, 1, 5, 2, 4, 3, 7];
a register sequence 62: [0, 6, 1, 5, 2, 4, 3, 7];

a register sequence 63: [0, 6, 1, 5, 2, 4, 3, 7];
a register sequence 64: [0, 6, 1, 5, 2, 4, 3, 7];
a register sequence 65: [0, 6, 2, 5, 1, 4, 3, 7];
a register sequence 66: [0, 6, 2, 5, 1, 4, 3, 7];
a register sequence 67: [0, 6, 2, 5, 1, 4, 3, 7];
a register sequence 68: [0, 6, 2, 5, 1, 4, 3, 7];
a register sequence 69: [0, 6, 2, 5, 1, 4, 3, 7];
a register sequence 70: [0, 6, 2, 5, 1, 4, 3, 7];
a register sequence 71: [0, 6, 2, 5, 1, 4, 3, 7];
a register sequence 72: [0, 6, 2, 5, 1, 4, 3, 7];
a register sequence 73: [0, 6, 2, 5, 1, 4, 3, 7];
a register sequence 74: [0, 6, 2, 5, 1, 4, 3, 7];
a register sequence 75: [0, 6, 2, 5, 1, 4, 3, 7];
a register sequence 76: [0, 6, 2, 5, 1, 4, 3, 7];
a register sequence 77: [0, 4, 6, 5, 3, 2, 1, 7];
a register sequence 78: [0, 4, 6, 5, 3, 2, 1, 7];
a register sequence 79: [0, 4, 6, 5, 3, 2, 1, 7];
a register sequence 80: [0, 4, 6, 5, 3, 2, 1, 7];
a register sequence 81: [0, 6, 3, 4, 2, 5, 1, 7];
a register sequence 82: [0, 6, 3, 4, 2, 5, 1, 7];
a register sequence 83: [0, 6, 3, 4, 2, 5, 1, 7];
a register sequence 84: [0, 6, 3, 4, 2, 5, 1, 7];
a register sequence 85: [0, 6, 3, 4, 2, 5, 1, 7];
a register sequence 86: [0, 6, 3, 4, 2, 5, 1, 7];
a register sequence 87: [0, 6, 3, 4, 2, 5, 1, 7];
a register sequence 88: [0, 6, 3, 4, 2, 5, 1, 7];
a register sequence 89: [0, 6, 3, 4, 2, 5, 1, 7];
a register sequence 90: [0, 6, 3, 4, 2, 5, 1, 7];
a register sequence 91: [0, 6, 3, 4, 2, 5, 1, 7];
a register sequence 92: [0, 6, 3, 4, 2, 5, 1, 7];
a register sequence 93: [0, 6, 3, 4, 2, 5, 1, 7];
a register sequence 94: [0, 6, 3, 4, 2, 5, 1, 7];
a register sequence 95: [0, 6, 3, 4, 2, 5, 1, 7];
a register sequence 96: [0, 6, 3, 4, 2, 5, 1, 7];
a register sequence 97: [0, 6, 3, 4, 2, 5, 1, 7];
a register sequence 98: [0, 6, 3, 4, 2, 5, 1, 7];
a register sequence 99: [0, 6, 3, 4, 2, 5, 1, 7];
a register sequence 100: [0, 6, 3, 4, 2, 5, 1, 7];
a register sequence 101: [0, 6, 3, 4, 2, 5, 1, 7];
a register sequence 102: [0, 6, 3, 4, 2, 5, 1, 7];
a register sequence 103: [0, 6, 3, 4, 2, 5, 1, 7];
a register sequence 104: [0, 6, 3, 4, 2, 5, 1, 7];
a register sequence 105: [0, 6, 2, 4, 5, 3, 1, 7];
a register sequence 106: [0, 6, 2, 4, 5, 3, 1, 7];
a register sequence 107: [0, 6, 2, 4, 5, 3, 1, 7];
a register sequence 108: [0, 6, 2, 4, 5, 3, 1, 7];
a register sequence 109: [0, 6, 3, 5, 2, 1, 4, 7];
a register sequence 110: [0, 6, 3, 5, 2, 1, 4, 7];
a register sequence 111: [0, 6, 3, 5, 2, 1, 4, 7];
a register sequence 112: [0, 6, 3, 5, 2, 1, 4, 7];
a register sequence 113: [0, 6, 3, 5, 2, 1, 4, 7];
a register sequence 114: [0, 6, 3, 5, 2, 1, 4, 7];
a register sequence 115: [0, 6, 3, 5, 2, 1, 4, 7];
a register sequence 116: [0, 6, 3, 5, 2, 1, 4, 7];
a register sequence 117: [0, 5, 6, 2, 3, 1, 4, 7];
a register sequence 118: [0, 5, 6, 2, 3, 1, 4, 7];
a register sequence 119: [0, 5, 6, 2, 3, 1, 4, 7];
a register sequence 120: [0, 5, 6, 2, 3, 1, 4, 7];

a register sequence 121: [0, 5, 6, 2, 3, 1, 4, 7];
a register sequence 122: [0, 5, 6, 2, 3, 1, 4, 7];
a register sequence 123: [0, 5, 6, 2, 3, 1, 4, 7];
a register sequence 124: [0, 5, 6, 2, 3, 1, 4, 7];
a register sequence 125: [0, 5, 6, 1, 2, 4, 3, 7];
a register sequence 126: [0, 5, 6, 1, 2, 4, 3, 7];
a register sequence 127: [0, 5, 6, 1, 2, 4, 3, 7];
a register sequence 128: [0, 5, 6, 1, 2, 4, 3, 7];
a register sequence 129: [0, 5, 6, 1, 2, 4, 3, 7];
a register sequence 130: [0, 5, 6, 1, 2, 4, 3, 7];
a register sequence 131: [0, 5, 6, 1, 2, 4, 3, 7];
a register sequence 132: [0, 5, 6, 1, 2, 4, 3, 7];
a register sequence 133: [0, 6, 2, 5, 3, 4, 1, 7];
a register sequence 134: [0, 6, 2, 5, 3, 4, 1, 7];
a register sequence 135: [0, 6, 2, 5, 3, 4, 1, 7];
a register sequence 136: [0, 6, 2, 5, 3, 4, 1, 7];
a register sequence 137: [0, 6, 2, 5, 3, 4, 1, 7];
a register sequence 138: [0, 6, 2, 5, 3, 4, 1, 7];
a register sequence 139: [0, 6, 2, 5, 3, 4, 1, 7];
a register sequence 140: [0, 6, 2, 5, 3, 4, 1, 7];
a register sequence 141: [0, 6, 2, 5, 3, 4, 1, 7];
a register sequence 142: [0, 6, 2, 5, 3, 4, 1, 7];
a register sequence 143: [0, 6, 2, 5, 3, 4, 1, 7];
a register sequence 144: [0, 6, 2, 5, 3, 4, 1, 7];
a register sequence 145: [0, 6, 2, 5, 3, 4, 1, 7];
a register sequence 146: [0, 6, 2, 5, 3, 4, 1, 7];
a register sequence 147: [0, 6, 2, 5, 3, 4, 1, 7];
a register sequence 148: [0, 6, 2, 5, 3, 4, 1, 7];
a register sequence 149: [0, 6, 2, 5, 4, 1, 3, 7];
a register sequence 150: [0, 6, 2, 5, 4, 1, 3, 7];
a register sequence 151: [0, 6, 2, 5, 4, 1, 3, 7];
a register sequence 152: [0, 6, 2, 5, 4, 1, 3, 7];
a register sequence 153: [0, 6, 2, 5, 4, 1, 3, 7];
a register sequence 154: [0, 6, 2, 5, 4, 1, 3, 7];
a register sequence 155: [0, 6, 2, 5, 4, 1, 3, 7];
a register sequence 156: [0, 6, 2, 5, 4, 1, 3, 7];
a register sequence 157: [0, 5, 4, 6, 1, 2, 3, 7];
a register sequence 158: [0, 5, 4, 6, 1, 2, 3, 7];
a register sequence 159: [0, 5, 4, 6, 1, 2, 3, 7];
a register sequence 160: [0, 5, 4, 6, 1, 2, 3, 7];
a register sequence 161: [0, 5, 6, 1, 3, 4, 2, 7];
a register sequence 162: [0, 5, 6, 1, 3, 4, 2, 7];
a register sequence 163: [0, 5, 6, 1, 3, 4, 2, 7];
a register sequence 164: [0, 5, 6, 1, 3, 4, 2, 7];
a register sequence 165: [0, 6, 3, 5, 1, 4, 2, 7];
a register sequence 166: [0, 6, 3, 5, 1, 4, 2, 7];
a register sequence 167: [0, 6, 3, 5, 1, 4, 2, 7];
a register sequence 168: [0, 6, 3, 5, 1, 4, 2, 7];
a register sequence 169: [0, 6, 3, 5, 1, 4, 2, 7];
a register sequence 170: [0, 6, 3, 5, 1, 4, 2, 7];
a register sequence 171: [0, 6, 3, 5, 1, 4, 2, 7];
a register sequence 172: [0, 6, 3, 5, 1, 4, 2, 7];
a register sequence 173: [0, 6, 5, 1, 2, 3, 4, 7];
a register sequence 174: [0, 6, 5, 1, 2, 3, 4, 7];
a register sequence 175: [0, 6, 5, 1, 2, 3, 4, 7];
a register sequence 176: [0, 6, 5, 1, 2, 3, 4, 7];
a register sequence 177: [0, 5, 4, 6, 1, 3, 2, 7];
a register sequence 178: [0, 5, 4, 6, 1, 3, 2, 7];

a register sequence 179: [0, 5, 4, 6, 1, 3, 2, 7];
a register sequence 180: [0, 5, 4, 6, 1, 3, 2, 7];
a register sequence 181: [0, 6, 3, 5, 2, 4, 1, 7];
a register sequence 182: [0, 6, 3, 5, 2, 4, 1, 7];
a register sequence 183: [0, 6, 3, 5, 2, 4, 1, 7];
a register sequence 184: [0, 6, 3, 5, 2, 4, 1, 7];
a register sequence 185: [0, 6, 3, 5, 2, 4, 1, 7];
a register sequence 186: [0, 6, 3, 5, 2, 4, 1, 7];
a register sequence 187: [0, 6, 3, 5, 2, 4, 1, 7];
a register sequence 188: [0, 6, 3, 5, 2, 4, 1, 7];
a register sequence 189: [0, 6, 3, 5, 2, 4, 1, 7];
a register sequence 190: [0, 6, 3, 5, 2, 4, 1, 7];
a register sequence 191: [0, 6, 3, 5, 2, 4, 1, 7];
a register sequence 192: [0, 6, 3, 5, 2, 4, 1, 7];
a register sequence 193: [0, 6, 3, 5, 2, 4, 1, 7];
a register sequence 194: [0, 6, 3, 5, 2, 4, 1, 7];
a register sequence 195: [0, 6, 3, 5, 2, 4, 1, 7];
a register sequence 196: [0, 6, 3, 5, 2, 4, 1, 7];
a register sequence 197: [0, 6, 3, 5, 2, 4, 1, 7];
a register sequence 198: [0, 6, 3, 5, 2, 4, 1, 7];
a register sequence 199: [0, 6, 3, 5, 2, 4, 1, 7];
a register sequence 200: [0, 6, 3, 5, 2, 4, 1, 7];
a register sequence 201: [0, 6, 3, 5, 2, 4, 1, 7];
a register sequence 202: [0, 6, 3, 5, 2, 4, 1, 7];
a register sequence 203: [0, 6, 3, 5, 2, 4, 1, 7];
a register sequence 204: [0, 6, 3, 5, 2, 4, 1, 7];
a register sequence 205: [0, 6, 3, 5, 2, 4, 1, 7];
a register sequence 206: [0, 6, 3, 5, 2, 4, 1, 7];
a register sequence 207: [0, 6, 3, 5, 2, 4, 1, 7];
a register sequence 208: [0, 6, 3, 5, 2, 4, 1, 7];
a register sequence 209: [0, 5, 6, 2, 3, 4, 1, 7];
a register sequence 210: [0, 5, 6, 2, 3, 4, 1, 7];
a register sequence 211: [0, 5, 6, 2, 3, 4, 1, 7];
a register sequence 212: [0, 5, 6, 2, 3, 4, 1, 7];
a register sequence 213: [0, 5, 4, 6, 2, 3, 1, 7];
a register sequence 214: [0, 5, 4, 6, 2, 3, 1, 7];
a register sequence 215: [0, 5, 4, 6, 2, 3, 1, 7];
a register sequence 216: [0, 5, 4, 6, 2, 3, 1, 7];
a register sequence 217: [0, 5, 6, 2, 4, 1, 3, 7];
a register sequence 218: [0, 5, 6, 2, 4, 1, 3, 7];
a register sequence 219: [0, 5, 6, 2, 4, 1, 3, 7];
a register sequence 220: [0, 5, 6, 2, 4, 1, 3, 7];
a register sequence 221: [0, 5, 6, 1, 4, 3, 2, 7];
a register sequence 222: [0, 5, 6, 1, 4, 3, 2, 7];
a register sequence 223: [0, 5, 6, 1, 4, 3, 2, 7];
a register sequence 224: [0, 5, 6, 1, 4, 3, 2, 7];
a register sequence 225: [0, 6, 5, 2, 3, 1, 4, 7];
a register sequence 226: [0, 6, 5, 2, 3, 1, 4, 7];
a register sequence 227: [0, 6, 5, 2, 3, 1, 4, 7];
a register sequence 228: [0, 6, 5, 2, 3, 1, 4, 7];
a register sequence 229: [0, 5, 4, 6, 3, 2, 1, 7];
a register sequence 230: [0, 5, 4, 6, 3, 2, 1, 7];
a register sequence 231: [0, 5, 4, 6, 3, 2, 1, 7];
a register sequence 232: [0, 5, 4, 6, 3, 2, 1, 7];
a register sequence 233: [0, 6, 5, 2, 1, 4, 3, 7];
a register sequence 234: [0, 6, 5, 2, 1, 4, 3, 7];
a register sequence 235: [0, 6, 5, 2, 1, 4, 3, 7];
a register sequence 236: [0, 6, 5, 2, 1, 4, 3, 7];

a register sequence 237: [0, 6, 5, 3, 1, 4, 2, 7];
a register sequence 238: [0, 6, 5, 3, 1, 4, 2, 7];
a register sequence 239: [0, 6, 5, 3, 1, 4, 2, 7];
a register sequence 240: [0, 6, 5, 3, 1, 4, 2, 7];
a register sequence 241: [0, 6, 4, 5, 1, 3, 2, 7];
a register sequence 242: [0, 6, 4, 5, 1, 3, 2, 7];
a register sequence 243: [0, 6, 4, 5, 1, 3, 2, 7];
a register sequence 244: [0, 6, 4, 5, 1, 3, 2, 7];
a register sequence 245: [0, 6, 5, 1, 4, 3, 2, 7];
a register sequence 246: [0, 6, 5, 1, 4, 3, 2, 7];
a register sequence 247: [0, 6, 5, 1, 4, 3, 2, 7];
a register sequence 248: [0, 6, 5, 1, 4, 3, 2, 7];
a register sequence 249: [0, 6, 5, 3, 2, 4, 1, 7];
a register sequence 250: [0, 6, 5, 3, 2, 4, 1, 7];
a register sequence 251: [0, 6, 5, 3, 2, 4, 1, 7];
a register sequence 252: [0, 6, 5, 3, 2, 4, 1, 7];
a register sequence 253: [0, 6, 5, 2, 4, 3, 1, 7];
a register sequence 254: [0, 6, 5, 2, 4, 3, 1, 7];
a register sequence 255: [0, 6, 5, 2, 4, 3, 1, 7];
a register sequence 256: [0, 6, 5, 2, 4, 3, 1, 7];
a register sequence 257: [0, 6, 4, 5, 3, 2, 1, 7];
a register sequence 258: [0, 6, 4, 5, 3, 2, 1, 7];
a register sequence 259: [0, 6, 4, 5, 3, 2, 1, 7];
a register sequence 260: [0, 6, 4, 5, 3, 2, 1, 7];
a register sequence 261: [0, 6, 5, 4, 1, 3, 2, 7];
a register sequence 262: [0, 6, 5, 4, 1, 3, 2, 7];
a register sequence 263: [0, 6, 5, 4, 1, 3, 2, 7]; and
a register sequence 264: [0, 6, 5, 4, 1, 3, 2, 7].

2. The second sequence set may include the following sequences:

a sequence 1: [-1, 1, -1, -1, 1, -1, 1, -1];
a sequence 2: [-1, -1, -1, -1, 1, -1, 1, 1];
a sequence 3: [-1, 1, -1, -1, -1, -1, 1, 1];
a sequence 4: [-1, -1, -1, -1, -1, -1, 1, -1];
a sequence 5: [-1, 1, -1, -1, 1, -1, -1, 1];
a sequence 6: [-1, -1, -1, -1, 1, -1, -1, -1];
a sequence 7: [-1, 1, -1, -1, -1, -1, -1, -1];
a sequence 8: [-1, -1, -1, -1, -1, -1, -1, 1];
a sequence 9: [-1, 1, -1, -1, 1, -1, 1, -1];
a sequence 10: [-1, -1, -1, -1, 1, -1, 1, 1];
a sequence 11: [-1, 1, -1, -1, -1, -1, 1, 1];
a sequence 12: [-1, -1, -1, -1, -1, -1, 1, -1];
a sequence 13: [-1, 1, -1, -1, 1, -1, -1, 1];
a sequence 14: [-1, -1, -1, -1, 1, -1, -1, -1];
a sequence 15: [-1, 1, -1, -1, -1, -1, -1, -1];
a sequence 16: [-1, -1, -1, -1, -1, -1, -1, 1];
a sequence 17: [-1, 1, -1, -1, 1, 1, 1, 1];
a sequence 18: [-1, -1, -1, -1, 1, 1, 1, -1];
a sequence 19: [-1, 1, 1, -1, 1, 1, -1, 1];
a sequence 20: [-1, -1, 1, -1, 1, 1, -1, -1];
a sequence 21: [-1, 1, -1, 1, 1, -1, 1, 1];
a sequence 22: [-1, -1, -1, 1, 1, -1, 1, -1];
a sequence 23: [-1, 1, -1, -1, 1, -1, 1, -1];
a sequence 24: [-1, -1, -1, -1, 1, -1, 1, 1];
a sequence 25: [-1, 1, -1, 1, -1, -1, -1, 1];
a sequence 26: [-1, -1, -1, 1, -1, -1, -1, -1];
a sequence 27: [-1, 1, -1, -1, -1, -1, -1, -1];

a sequence 28: [-1, -1, -1, -1, -1, -1, -1, 1];
a sequence 29: [-1, 1, 1, 1, 1, 1, 1, 1];
a sequence 30: [-1, -1, 1, 1, 1, 1, 1, -1];
a sequence 31: [-1, 1, 1, -1, 1, 1, 1, -1];
a sequence 32: [-1, -1, 1, -1, 1, 1, 1, 1];
a sequence 33: [-1, 1, 1, -1, -1, 1, 1, 1];
a sequence 34: [-1, -1, 1, -1, -1, 1, 1, -1];
a sequence 35: [-1, 1, -1, 1, 1, 1, -1, 1];
a sequence 36: [-1, -1, -1, 1, 1, 1, -1, -1];
a sequence 37: [-1, 1, -1, -1, 1, 1, -1, -1];
a sequence 38: [-1, -1, -1, -1, 1, 1, -1, 1];
a sequence 39: [-1, 1, -1, -1, -1, 1, -1, 1];
a sequence 40: [-1, -1, -1, -1, -1, 1, -1, -1];
a sequence 41: [-1, 1, 1, 1, 1, -1, 1, -1];
a sequence 42: [-1, -1, 1, 1, 1, -1, 1, 1];
a sequence 43: [-1, 1, -1, 1, 1, -1, 1, 1];
a sequence 44: [-1, -1, -1, 1, 1, -1, 1, -1];
a sequence 45: [-1, 1, 1, -1, 1, -1, 1, 1];
a sequence 46: [-1, -1, 1, -1, 1, -1, 1, -1];
a sequence 47: [-1, 1, -1, -1, 1, -1, 1, -1];
a sequence 48: [-1, -1, -1, -1, 1, -1, 1, 1];
a sequence 49: [-1, 1, 1, -1, -1, -1, 1, -1];
a sequence 50: [-1, -1, 1, -1, -1, -1, 1, 1];
a sequence 51: [-1, 1, -1, -1, -1, -1, 1, 1];
a sequence 52: [-1, -1, -1, -1, -1, -1, 1, -1];
a sequence 53: [-1, 1, 1, 1, 1, -1, -1, 1];
a sequence 54: [-1, -1, 1, 1, 1, -1, -1, -1];
a sequence 55: [-1, 1, -1, 1, 1, -1, -1, -1];
a sequence 56: [-1, -1, -1, 1, 1, -1, -1, 1];
a sequence 57: [-1, 1, 1, -1, 1, -1, -1, -1];
a sequence 58: [-1, -1, 1, -1, 1, -1, -1, 1];
a sequence 59: [-1, 1, -1, -1, 1, -1, -1, 1];
a sequence 60: [-1, -1, -1, -1, 1, -1, -1, -1];
a sequence 61: [-1, 1, 1, -1, -1, -1, -1, 1];
a sequence 62: [-1, -1, 1, -1, -1, -1, -1, -1];
a sequence 63: [-1, 1, -1, -1, -1, -1, -1, -1];
a sequence 64: [-1, -1, -1, -1, -1, -1, -1, 1];
a sequence 65: [-1, 1, 1, 1, 1, 1, 1, 1];
a sequence 66: [-1, -1, 1, 1, 1, 1, 1, -1];
a sequence 67: [-1, 1, 1, 1, 1, 1, -1, 1, -1];
a sequence 68: [-1, -1, 1, 1, 1, -1, 1, 1];
a sequence 69: [-1, 1, 1, 1, -1, -1, 1, 1];
a sequence 70: [-1, -1, 1, 1, -1, -1, 1, -1];
a sequence 71: [-1, 1, -1, 1, 1, 1, -1, 1];
a sequence 72: [-1, -1, -1, 1, 1, 1, -1, -1];
a sequence 73: [-1, 1, -1, 1, 1, -1, -1, -1];
a sequence 74: [-1, -1, -1, 1, 1, -1, -1, 1];
a sequence 75: [-1, 1, -1, 1, -1, -1, -1, 1];
a sequence 76: [-1, -1, -1, 1, -1, -1, -1, -1];
a sequence 77: [-1, 1, -1, 1, 1, 1, 1, -1];
a sequence 78: [-1, -1, -1, 1, 1, 1, 1, 1];
a sequence 79: [-1, 1, -1, -1, -1, 1, -1, 1];
a sequence 80: [-1, -1, -1, -1, -1, 1, -1, -1];
a sequence 81: [-1, 1, 1, -1, 1, 1, 1, -1];
a sequence 82: [-1, -1, 1, -1, 1, 1, 1, 1];
a sequence 83: [-1, 1, -1, -1, 1, 1, 1, 1];
a sequence 84: [-1, -1, -1, -1, 1, 1, 1, -1];
a sequence 85: [-1, 1, 1, -1, 1, -1, 1, 1];

a sequence 86: [-1, -1, 1, -1, 1, -1, 1, -1];
a sequence 87: [-1, 1, -1, -1, 1, -1, 1, -1];
a sequence 88: [-1, -1, -1, -1, 1, -1, 1, 1];
a sequence 89: [-1, 1, 1, -1, -1, -1, 1, -1];
a sequence 90: [-1, -1, 1, -1, -1, -1, 1, 1];
a sequence 91: [-1, 1, -1, -1, -1, -1, 1, 1];
a sequence 92: [-1, -1, -1, -1, -1, -1, 1, -1];
a sequence 93: [-1, 1, 1, -1, 1, 1, -1, 1];
a sequence 94: [-1, -1, 1, -1, 1, 1, -1, -1];
a sequence 95: [-1, 1, -1, -1, 1, 1, -1, -1];
a sequence 96: [-1, -1, -1, -1, 1, 1, -1, 1];
a sequence 97: [-1, 1, 1, -1, 1, -1, -1, -1];
a sequence 98: [-1, -1, 1, -1, 1, -1, -1, 1];
a sequence 99: [-1, 1, -1, -1, 1, -1, -1, 1];
a sequence 100: [-1, -1, -1, -1, 1, -1, -1, -1];
a sequence 101: [-1, 1, 1, -1, -1, -1, -1, 1];
a sequence 102: [-1, -1, 1, -1, -1, -1, -1, -1];
a sequence 103: [-1, 1, -1, -1, -1, -1, -1, -1];
a sequence 104: [-1, -1, -1, -1, -1, -1, -1, 1];
a sequence 105: [-1, 1, 1, -1, -1, -1, 1, -1];
a sequence 106: [-1, -1, 1, -1, -1, -1, 1, 1];
a sequence 107: [-1, 1, -1, -1, -1, -1, -1, -1];
a sequence 108: [-1, -1, -1, -1, -1, -1, -1, 1];
a sequence 109: [-1, 1, 1, -1, -1, 1, 1, 1];
a sequence 110: [-1, -1, 1, -1, -1, 1, 1, -1];
a sequence 111: [-1, 1, 1, -1, -1, -1, 1, -1];
a sequence 112: [-1, -1, 1, -1, -1, -1, 1, 1];
a sequence 113: [-1, 1, -1, -1, -1, 1, -1, 1];
a sequence 114: [-1, -1, -1, -1, -1, 1, -1, -1];
a sequence 115: [-1, 1, -1, -1, -1, -1, -1, -1];
a sequence 116: [-1, -1, -1, -1, -1, -1, -1, 1];
a sequence 117: [-1, 1, 1, 1, -1, 1, 1, -1];
a sequence 118: [-1, -1, 1, 1, -1, 1, 1, 1];
a sequence 119: [-1, 1, 1, -1, -1, 1, 1, 1];
a sequence 120: [-1, -1, 1, -1, -1, 1, 1, -1];
a sequence 121: [-1, 1, -1, 1, -1, 1, -1, -1];
a sequence 122: [-1, -1, -1, 1, -1, 1, -1, 1];
a sequence 123: [-1, 1, -1, -1, -1, 1, -1, 1];
a sequence 124: [-1, -1, -1, -1, -1, 1, -1, -1];
a sequence 125: [-1, 1, 1, 1, -1, -1, 1, 1];
a sequence 126: [-1, -1, 1, 1, -1, -1, 1, -1];
a sequence 127: [-1, 1, 1, -1, -1, -1, 1, -1];
a sequence 128: [-1, -1, 1, -1, -1, -1, 1, 1];
a sequence 129: [-1, 1, -1, 1, -1, -1, -1, 1];
a sequence 130: [-1, -1, -1, 1, -1, -1, -1, -1];
a sequence 131: [-1, 1, -1, -1, -1, -1, -1, -1];
a sequence 132: [-1, -1, -1, -1, -1, -1, -1, 1];
a sequence 133: [-1, 1, 1, -1, 1, 1, 1, -1];
a sequence 134: [-1, -1, 1, -1, 1, 1, 1, 1];
a sequence 135: [-1, 1, -1, -1, 1, 1, 1, 1];
a sequence 136: [-1, -1, -1, -1, 1, 1, 1, -1];
a sequence 137: [-1, 1, 1, -1, 1, -1, 1, 1];
a sequence 138: [-1, -1, 1, -1, 1, -1, 1, -1];
a sequence 139: [-1, 1, -1, -1, 1, -1, 1, -1];
a sequence 140: [-1, -1, -1, -1, 1, -1, 1, 1];
a sequence 141: [-1, 1, 1, -1, 1, 1, -1, 1];
a sequence 142: [-1, -1, 1, -1, 1, 1, -1, -1];
a sequence 143: [-1, 1, -1, -1, 1, 1, -1, -1];

a sequence 144: [-1, -1, -1, -1, 1, 1, -1, 1];
a sequence 145: [-1, 1, 1, -1, 1, -1, -1, -1];
a sequence 146: [-1, -1, 1, -1, 1, -1, -1, 1];
a sequence 147: [-1, 1, -1, -1, 1, -1, -1, 1];
a sequence 148: [-1, -1, -1, -1, 1, -1, -1, -1];
a sequence 149: [-1, 1, -1, 1, 1, 1, 1, -1];
a sequence 150: [-1, -1, -1, 1, 1, 1, 1, 1];
a sequence 151: [-1, 1, -1, 1, 1, -1, 1, 1];
a sequence 152: [-1, -1, -1, 1, 1, -1, 1, -1];
a sequence 153: [-1, 1, 1, 1, 1, 1, -1, -1];
a sequence 154: [-1, -1, 1, 1, 1, 1, -1, 1];
a sequence 155: [-1, 1, 1, 1, 1, -1, -1, 1];
a sequence 156: [-1, -1, 1, 1, 1, -1, -1, -1];
a sequence 157: [-1, 1, 1, -1, -1, -1, 1, -1];
a sequence 158: [-1, -1, 1, -1, -1, -1, 1, 1];
a sequence 159: [-1, 1, 1, -1, 1, -1, -1, -1];
a sequence 160: [-1, -1, 1, -1, 1, -1, -1, 1];
a sequence 161: [-1, 1, 1, 1, -1, -1, 1, 1];
a sequence 162: [-1, -1, 1, 1, -1, -1, 1, -1];
a sequence 163: [-1, 1, -1, -1, -1, -1, -1, -1];
a sequence 164: [-1, -1, -1, -1, -1, -1, -1, 1];
a sequence 165: [-1, 1, 1, 1, 1, -1, 1, -1];
a sequence 166: [-1, -1, 1, 1, 1, -1, 1, 1];
a sequence 167: [-1, 1, 1, 1, -1, -1, 1, 1];
a sequence 168: [-1, -1, 1, 1, -1, -1, 1, -1];
a sequence 169: [-1, 1, -1, 1, 1, -1, -1, -1];
a sequence 170: [-1, -1, -1, 1, 1, -1, -1, 1];
a sequence 171: [-1, 1, -1, 1, -1, -1, -1, 1];
a sequence 172: [-1, -1, -1, 1, -1, -1, -1, -1];
a sequence 173: [-1, 1, -1, 1, 1, -1, 1, 1];
a sequence 174: [-1, -1, -1, 1, 1, -1, 1, -1];
a sequence 175: [-1, 1, 1, 1, 1, -1, -1, 1];
a sequence 176: [-1, -1, 1, 1, 1, -1, -1, -1];
a sequence 177: [-1, 1, -1, 1, 1, -1, 1, 1];
a sequence 178: [-1, -1, -1, 1, 1, -1, 1, -1];
a sequence 179: [-1, 1, -1, 1, -1, -1, -1, 1];
a sequence 180: [-1, -1, -1, 1, -1, -1, -1, -1];
a sequence 181: [-1, 1, 1, 1, 1, 1, 1, 1];
a sequence 182: [-1, -1, 1, 1, 1, 1, 1, -1];
a sequence 183: [-1, 1, 1, -1, 1, 1, 1, -1];
a sequence 184: [-1, -1, 1, -1, 1, 1, 1, 1];
a sequence 185: [-1, 1, -1, -1, 1, 1, 1, 1];
a sequence 186: [-1, -1, -1, -1, 1, 1, 1, -1];
a sequence 187: [-1, 1, 1, 1, -1, 1, 1, -1];
a sequence 188: [-1, -1, 1, 1, -1, 1, 1, 1];
a sequence 189: [-1, 1, 1, 1, 1, -1, 1, -1];
a sequence 190: [-1, -1, 1, 1, 1, -1, 1, 1];
a sequence 191: [-1, 1, 1, -1, 1, -1, 1, 1];
a sequence 192: [-1, -1, 1, -1, 1, -1, 1, -1];
a sequence 193: [-1, 1, -1, -1, 1, -1, 1, -1];
a sequence 194: [-1, -1, -1, -1, 1, -1, 1, 1];
a sequence 195: [-1, 1, -1, 1, 1, 1, -1, 1];
a sequence 196: [-1, -1, -1, 1, 1, 1, -1, -1];
a sequence 197: [-1, 1, 1, -1, 1, 1, -1, 1];
a sequence 198: [-1, -1, 1, -1, 1, 1, -1, -1];
a sequence 199: [-1, 1, -1, -1, 1, 1, -1, -1];
a sequence 200: [-1, -1, -1, -1, 1, 1, -1, 1];
a sequence 201: [-1, 1, -1, 1, -1, 1, -1, -1];

a sequence 202: [-1, -1, -1, 1, -1, 1, -1, 1];
a sequence 203: [-1, 1, -1, 1, 1, -1, -1, -1];
a sequence 204: [-1, -1, -1, 1, 1, -1, -1, 1];
a sequence 205: [-1, 1, 1, -1, 1, -1, -1, -1];
a sequence 206: [-1, -1, 1, -1, 1, -1, -1, 1];
a sequence 207: [-1, 1, -1, -1, 1, -1, -1, 1];
a sequence 208: [-1, -1, -1, -1, 1, -1, -1, -1];
a sequence 209: [-1, 1, -1, 1, 1, -1, 1, 1];
a sequence 210: [-1, -1, -1, 1, -1, 1, 1, -1];
a sequence 211: [-1, 1, 1, -1, 1, -1, -1, -1];
a sequence 212: [-1, -1, 1, -1, 1, -1, -1, 1];
a sequence 213: [-1, 1, -1, 1, 1, -1, 1, 1];
a sequence 214: [-1, -1, -1, 1, 1, -1, 1, -1];
a sequence 215: [-1, 1, -1, 1, -1, -1, -1, 1];
a sequence 216: [-1, -1, -1, 1, -1, -1, -1, -1];
a sequence 217: [-1, 1, 1, 1, -1, 1, 1, -1];
a sequence 218: [-1, -1, 1, 1, -1, 1, 1, 1];
a sequence 219: [-1, 1, -1, -1, -1, 1, -1, 1];
a sequence 220: [-1, -1, -1, -1, -1, 1, -1, -1];
a sequence 221: [-1, 1, 1, 1, -1, 1, 1, -1];
a sequence 222: [-1, -1, 1, 1, -1, 1, 1, 1];
a sequence 223: [-1, 1, -1, -1, -1, 1, -1, 1];
a sequence 224: [-1, -1, -1, -1, -1, 1, -1, -1];
a sequence 225: [-1, 1, 1, -1, -1, -1, 1, -1];
a sequence 226: [-1, -1, 1, -1, -1, -1, 1, 1];
a sequence 227: [-1, 1, -1, -1, -1, -1, -1, -1];
a sequence 228: [-1, -1, -1, -1, -1, -1, -1, 1];
a sequence 229: [-1, 1, -1, -1, 1, 1, 1, 1];
a sequence 230: [-1, -1, -1, -1, 1, 1, 1, -1];
a sequence 231: [-1, 1, -1, -1, -1, 1, -1, 1];
a sequence 232: [-1, -1, -1, -1, -1, 1, -1, -1];
a sequence 233: [-1, 1, 1, -1, -1, -1, 1, -1];
a sequence 234: [-1, -1, 1, -1, -1, -1, 1, 1];
a sequence 235: [-1, 1, -1, -1, -1, -1, -1, -1];
a sequence 236: [-1, -1, -1, -1, -1, -1, -1, 1];
a sequence 237: [-1, 1, 1, -1, -1, -1, 1, -1];
a sequence 238: [-1, -1, 1, -1, -1, -1, 1, 1];
a sequence 239: [-1, 1, -1, -1, -1, -1, -1, -1];
a sequence 240: [-1, -1, -1, -1, -1, -1, -1, 1];
a sequence 241: [-1, 1, 1, 1, -1, -1, 1, 1];
a sequence 242: [-1, -1, 1, 1, -1, -1, 1, -1];
a sequence 243: [-1, 1, -1, 1, -1, -1, -1, 1];
a sequence 244: [-1, -1, -1, 1, -1, -1, -1, -1];
a sequence 245: [-1, 1, 1, 1, -1, 1, 1, -1];
a sequence 246: [-1, -1, 1, 1, -1, 1, 1, 1];
a sequence 247: [-1, 1, -1, 1, -1, 1, -1, -1];
a sequence 248: [-1, -1, -1, 1, -1, 1, -1, 1];
a sequence 249: [-1, 1, 1, -1, -1, -1, 1, -1];
a sequence 250: [-1, -1, 1, -1, -1, -1, 1, 1];
a sequence 251: [-1, 1, -1, -1, -1, -1, -1, -1];
a sequence 252: [-1, -1, -1, -1, -1, -1, -1, 1];
a sequence 253: [-1, 1, 1, -1, -1, -1, 1, -1];
a sequence 254: [-1, -1, 1, -1, -1, -1, 1, 1];
a sequence 255: [-1, 1, -1, -1, -1, -1, -1, -1];
a sequence 256: [-1, -1, -1, -1, -1, -1, -1, 1];
a sequence 257: [-1, 1, 1, -1, -1, 1, 1, 1];
a sequence 258: [-1, -1, 1, -1, -1, 1, 1, -1];
a sequence 259: [-1, 1, -1, -1, -1, 1, -1, 1];

a sequence 260: [-1, -1, -1, -1, -1, 1, -1, -1];
a sequence 261: [-1, 1, -1, 1, 1, -1, 1, 1];
a sequence 262: [-1, -1, -1, 1, 1, -1, 1, -1];
a sequence 263: [-1, 1, 1, 1, 1, -1, -1, 1]; and
a sequence 264: [-1, -1, 1, 1, 1, -1, -1, -1].

3. The third sequence set may include the following sequences:

a sequence 1: [1, 1, -1, -1, 1, -1, 1, -1];
a sequence 2: [1, -1, -1, -1, 1, -1, 1, -1];
a sequence 3: [1, 1, -1, -1, -1, -1, 1, -1];
a sequence 4: [1, -1, -1, -1, -1, -1, 1, -1];
a sequence 5: [1, 1, -1, -1, 1, -1, -1, -1];
a sequence 6: [1, -1, -1, -1, 1, -1, -1, -1];
a sequence 7: [1, 1, -1, -1, -1, -1, -1, -1];
a sequence 8: [1, -1, -1, -1, -1, -1, -1, -1];
a sequence 9: [1, 1, -1, -1, 1, -1, 1, -1];
a sequence 10: [1, -1, -1, -1, 1, -1, 1, -1];
a sequence 11: [1, 1, -1, -1, -1, -1, 1, -1];
a sequence 12: [1, -1, -1, -1, -1, -1, 1, -1];
a sequence 13: [1, 1, -1, -1, 1, -1, -1, -1];
a sequence 14: [1, -1, -1, -1, 1, -1, -1, -1];
a sequence 15: [1, 1, -1, -1, -1, -1, -1, -1];
a sequence 16: [1, -1, -1, -1, -1, -1, -1, -1];
a sequence 17: [1, 1, -1, -1, 1, 1, 1, -1];
a sequence 18: [1, -1, -1, -1, 1, 1, 1, -1];
a sequence 19: [1, 1, 1, -1, 1, 1, -1, -1];
a sequence 20: [1, -1, 1, -1, 1, 1, -1, -1];
a sequence 21: [1, 1, -1, 1, 1, -1, 1, -1];
a sequence 22: [1, -1, -1, 1, 1, -1, 1, -1];
a sequence 23: [1, 1, -1, -1, 1, -1, 1, -1];
a sequence 24: [1, -1, -1, -1, 1, -1, 1, -1];
a sequence 25: [1, 1, -1, 1, -1, -1, -1, -1];
a sequence 26: [1, -1, -1, 1, -1, -1, -1, -1];
a sequence 27: [1, 1, -1, -1, -1, -1, -1, -1];
a sequence 28: [1, -1, -1, -1, -1, -1, -1, -1];
a sequence 29: [1, 1, 1, 1, 1, 1, 1, -1];
a sequence 30: [1, -1, 1, 1, 1, 1, 1, -1];
a sequence 31: [1, 1, 1, -1, 1, 1, 1, -1];
a sequence 32: [1, -1, 1, -1, 1, 1, 1, -1];
a sequence 33: [1, 1, 1, -1, -1, 1, 1, -1];
a sequence 34: [1, -1, 1, -1, -1, 1, 1, -1];
a sequence 35: [1, 1, -1, 1, 1, 1, -1, -1];
a sequence 36: [1, -1, -1, 1, 1, 1, -1, -1];
a sequence 37: [1, 1, -1, -1, 1, 1, -1, -1];
a sequence 38: [1, -1, -1, -1, 1, 1, -1, -1];
a sequence 39: [1, 1, -1, -1, -1, 1, -1, -1];
a sequence 40: [1, -1, -1, -1, -1, 1, -1, -1];
a sequence 41: [1, 1, 1, 1, 1, -1, 1, -1];
a sequence 42: [1, -1, 1, 1, 1, -1, 1, -1];
a sequence 43: [1, 1, -1, 1, 1, -1, 1, -1];
a sequence 44: [1, -1, -1, 1, 1, -1, 1, -1];
a sequence 45: [1, 1, 1, -1, 1, -1, 1, -1];
a sequence 46: [1, -1, 1, -1, 1, -1, 1, -1];
a sequence 47: [1, 1, -1, -1, 1, -1, 1, -1];
a sequence 48: [1, -1, -1, -1, 1, -1, 1, -1];
a sequence 49: [1, 1, 1, -1, -1, -1, 1, -1];
a sequence 50: [1, -1, 1, -1, -1, -1, 1, -1];

a sequence 51: [1, 1, -1, -1, -1, -1, 1, -1];
a sequence 52: [1, -1, -1, -1, -1, -1, 1, -1];
a sequence 53: [1, 1, 1, 1, 1, -1, -1, -1];
a sequence 54: [1, -1, 1, 1, 1, -1, -1, -1];
a sequence 55: [1, 1, -1, 1, 1, -1, -1, -1];
a sequence 56: [1, -1, -1, 1, 1, -1, -1, -1];
a sequence 57: [1, 1, 1, -1, 1, -1, -1, -1];
a sequence 58: [1, -1, 1, -1, 1, -1, -1, -1];
a sequence 59: [1, 1, -1, -1, 1, -1, -1, -1];
a sequence 60: [1, -1, -1, -1, 1, -1, -1, -1];
a sequence 61: [1, 1, 1, -1, -1, -1, -1, -1];
a sequence 62: [1, -1, 1, -1, -1, -1, -1, -1];
a sequence 63: [1, 1, -1, -1, -1, -1, -1, -1];
a sequence 64: [1, -1, -1, -1, -1, -1, -1, -1];
a sequence 655: [1, 1, 1, 1, 1, 1, 1, -1];
a sequence 66: [1, -1, 1, 1, 1, 1, 1, -1];
a sequence 67: [1, 1, 1, 1, 1, -1, 1, -1];
a sequence 68: [1, -1, 1, 1, 1, -1, 1, -1];
a sequence 69: [1, 1, 1, 1, -1, -1, 1, -1];
a sequence 70: [1, -1, 1, 1, -1, -1, 1, -1];
a sequence 71: [1, 1, -1, 1, 1, 1, -1, -1];
a sequence 72: [1, -1, -1, 1, 1, 1, -1, -1];
a sequence 73: [1, 1, -1, 1, 1, -1, -1, -1];
a sequence 74: [1, -1, -1, 1, 1, -1, -1, -1];
a sequence 75: [1, 1, -1, 1, -1, -1, -1, -1];
a sequence 76: [1, -1, -1, 1, -1, -1, -1, -1];
a sequence 77: [1, 1, -1, 1, 1, 1, 1, -1];
a sequence 78: [1, -1, -1, 1, 1, 1, 1, -1];
a sequence 79: [1, 1, -1, -1, -1, 1, -1, -1];
a sequence 80: [1, -1, -1, -1, -1, 1, -1, -1];
a sequence 81: [1, 1, 1, -1, 1, 1, 1, -1];
a sequence 82: [1, -1, 1, -1, 1, 1, 1, -1];
a sequence 83: [1, 1, -1, -1, 1, 1, 1, -1];
a sequence 84: [1, -1, -1, -1, 1, 1, 1, -1];
a sequence 85: [1, 1, 1, -1, 1, -1, 1, -1];
a sequence 86: [1, -1, 1, -1, 1, -1, 1, -1];
a sequence 87: [1, 1, -1, -1, 1, -1, 1, -1];
a sequence 88: [1, -1, -1, -1, 1, -1, 1, -1];
a sequence 89: [1, 1, 1, -1, -1, -1, 1, -1];
a sequence 90: [1, -1, 1, -1, -1, -1, 1, -1];
a sequence 91: [1, 1, -1, -1, -1, -1, 1, -1];
a sequence 92: [1, -1, -1, -1, -1, -1, 1, -1];
a sequence 93: [1, 1, 1, -1, 1, 1, -1, -1];
a sequence 94: [1, -1, 1, -1, 1, 1, -1, -1];
a sequence 95: [1, 1, -1, -1, 1, 1, -1, -1];
a sequence 96: [1, -1, -1, -1, 1, 1, -1, -1];
a sequence 97: [1, 1, 1, -1, 1, -1, -1, -1];
a sequence 98: [1, -1, 1, -1, 1, -1, -1, -1];
a sequence 99: [1, 1, -1, -1, 1, -1, -1, -1];
a sequence 100: [1, -1, -1, -1, 1, -1, -1, -1];
a sequence 101: [1, 1, 1, -1, -1, -1, -1, -1];
a sequence 102: [1, -1, 1, -1, -1, -1, -1, -1];
a sequence 103: [1, 1, -1, -1, -1, -1, -1, -1];
a sequence 104: [1, -1, -1, -1, -1, -1, -1, -1];
a sequence 105: [1, 1, 1, -1, -1, -1, 1, -1];
a sequence 106: [1, -1, 1, -1, -1, -1, 1, -1];
a sequence 107: [1, 1, -1, -1, -1, -1, -1, -1];
a sequence 108: [1, -1, -1, -1, -1, -1, -1, -1];

a sequence 109: [1, 1, 1, -1, -1, 1, 1, -1];
a sequence 110: [1, -1, 1, -1, -1, 1, 1, -1];
a sequence 111: [1, 1, 1, -1, -1, -1, 1, -1];
a sequence 112: [1, -1, 1, -1, -1, -1, 1, -1];
a sequence 113: [1, 1, -1, -1, -1, 1, -1, -1];
a sequence 114: [1, -1, -1, -1, -1, 1, -1, -1];
a sequence 115: [1, 1, -1, -1, -1, -1, -1, -1];
a sequence 116: [1, -1, -1, -1, -1, -1, -1, -1];
a sequence 117: [1, 1, 1, 1, -1, 1, 1, -1];
a sequence 118: [1, -1, 1, 1, -1, 1, 1, -1];
a sequence 119: [1, 1, 1, -1, -1, 1, 1, -1];
a sequence 120: [1, -1, 1, -1, -1, 1, 1, -1];
a sequence 121: [1, 1, -1, 1, -1, 1, -1, -1];
a sequence 122: [1, -1, -1, 1, -1, 1, -1, -1];
a sequence 123: [1, 1, -1, -1, -1, 1, -1, -1];
a sequence 124: [1, -1, -1, -1, -1, 1, -1, -1];
a sequence 125: [1, 1, 1, 1, -1, -1, 1, -1];
a sequence 126: [1, -1, 1, 1, -1, -1, 1, -1];
a sequence 127: [1, 1, 1, -1, -1, -1, 1, -1];
a sequence 128: [1, -1, 1, -1, -1, -1, 1, -1];
a sequence 129: [1, 1, -1, 1, -1, -1, -1, -1];
a sequence 130: [1, -1, -1, 1, -1, -1, -1, -1];
a sequence 131: [1, 1, -1, -1, -1, -1, -1, -1];
a sequence 132: [1, -1, -1, -1, -1, -1, -1, -1];
a sequence 133: [1, 1, 1, -1, 1, 1, 1, -1];
a sequence 134: [1, -1, 1, -1, 1, 1, 1, -1];
a sequence 135: [1, 1, -1, -1, 1, 1, 1, -1];
a sequence 136: [1, -1, -1, -1, 1, 1, 1, -1];
a sequence 137: [1, 1, 1, -1, 1, -1, 1, -1];
a sequence 138: [1, -1, 1, -1, 1, -1, 1, -1];
a sequence 139: [1, 1, -1, -1, 1, -1, 1, -1];
a sequence 140: [1, -1, -1, -1, 1, -1, 1, -1];
a sequence 141: [1, 1, 1, -1, 1, 1, -1, -1];
a sequence 142: [1, -1, 1, -1, 1, 1, -1, -1];
a sequence 143: [1, 1, -1, -1, 1, 1, -1, -1];
a sequence 144: [1, -1, -1, -1, 1, 1, -1, -1];
a sequence 145: [1, 1, 1, -1, 1, -1, -1, -1];
a sequence 146: [1, -1, 1, -1, 1, -1, -1, -1];
a sequence 147: [1, 1, -1, -1, 1, -1, -1, -1];
a sequence 148: [1, -1, -1, -1, 1, -1, -1, -1];
a sequence 149: [1, 1, -1, 1, 1, 1, 1, -1];
a sequence 150: [1, -1, -1, 1, 1, 1, 1, -1];
a sequence 151: [1, 1, -1, 1, 1, -1, 1, -1];
a sequence 152: [1, -1, -1, 1, 1, -1, 1, -1];
a sequence 153: [1, 1, 1, 1, 1, 1, -1, -1];
a sequence 154: [1, -1, 1, 1, 1, 1, -1, -1];
a sequence 155: [1, 1, 1, 1, 1, -1, -1, -1];
a sequence 156: [1, -1, 1, 1, 1, -1, -1, -1];
a sequence 157: [1, 1, 1, -1, -1, -1, 1, -1];
a sequence 158: [1, -1, 1, -1, -1, -1, 1, -1];
a sequence 159: [1, 1, 1, -1, 1, -1, -1, -1];
a sequence 160: [1, -1, 1, -1, 1, -1, -1, -1];
a sequence 161: [1, 1, 1, 1, -1, -1, 1, -1];
a sequence 162: [1, -1, 1, 1, -1, -1, 1, -1];
a sequence 163: [1, 1, -1, -1, -1, -1, -1, -1];
a sequence 164: [1, -1, -1, -1, -1, -1, -1, -1];
a sequence 165: [1, 1, 1, 1, 1, -1, 1, -1];
a sequence 166: [1, -1, 1, 1, 1, -1, 1, -1];

a sequence 167: [1, 1, 1, 1, -1, -1, 1, -1];
a sequence 168: [1, -1, 1, 1, -1, -1, 1, -1];
a sequence 169: [1, 1, -1, 1, 1, -1, -1, -1];
a sequence 170: [1, -1, -1, 1, 1, -1, -1, -1];
a sequence 171: [1, 1, -1, 1, -1, -1, -1, -1];
a sequence 172: [1, -1, -1, 1, -1, -1, -1, -1];
a sequence 173: [1, 1, -1, 1, 1, -1, 1, -1];
a sequence 174: [1, -1, -1, 1, 1, -1, 1, -1];
a sequence 175: [1, 1, 1, 1, 1, -1, -1, -1];
a sequence 176: [1, -1, 1, 1, 1, -1, -1, -1];
a sequence 177: [1, 1, -1, 1, 1, -1, 1, -1];
a sequence 178: [1, -1, -1, 1, 1, -1, 1, -1];
a sequence 179: [1, 1, -1, 1, -1, -1, -1, -1];
a sequence 180: [1, -1, -1, 1, -1, -1, -1, -1];
a sequence 181: [1, 1, 1, 1, 1, 1, 1, -1];
a sequence 182: [1, -1, 1, 1, 1, 1, 1, -1];
a sequence 183: [1, 1, 1, -1, 1, 1, 1, -1];
a sequence 184: [1, -1, 1, -1, 1, 1, 1, -1];
a sequence 185: [1, 1, -1, -1, 1, 1, 1, -1];
a sequence 186: [1, -1, -1, -1, 1, 1, 1, -1];
a sequence 187: [1, 1, 1, 1, -1, 1, 1, -1];
a sequence 188: [1, -1, 1, 1, -1, 1, 1, -1];
a sequence 189: [1, 1, 1, 1, 1, -1, 1, -1];
a sequence 190: [1, -1, 1, 1, 1, -1, 1, -1];
a sequence 191: [1, 1, 1, -1, 1, -1, 1, -1];
a sequence 192: [1, -1, 1, -1, 1, -1, 1, -1];
a sequence 193: [1, 1, -1, -1, 1, -1, 1, -1];
a sequence 194: [1, -1, -1, -1, 1, -1, 1, -1];
a sequence 195: [1, 1, -1, 1, 1, 1, -1, -1];
a sequence 196: [1, -1, -1, 1, 1, 1, -1, -1];
a sequence 197: [1, 1, 1, -1, 1, 1, -1, -1];
a sequence 198: [1, -1, 1, -1, 1, 1, -1, -1];
a sequence 199: [1, 1, -1, -1, 1, 1, -1, -1];
a sequence 200: [1, -1, -1, -1, 1, 1, -1, -1];
a sequence 201: [1, 1, -1, 1, -1, 1, -1, -1];
a sequence 202: [1, -1, -1, 1, -1, 1, -1, -1];
a sequence 203: [1, 1, -1, 1, 1, -1, -1, -1];
a sequence 204: [1, -1, -1, 1, 1, -1, -1, -1];
a sequence 205: [1, 1, 1, -1, 1, -1, -1, -1];
a sequence 206: [1, -1, 1, -1, 1, -1, -1, -1];
a sequence 207: [1, 1, -1, -1, 1, -1, -1, -1];
a sequence 208: [1, -1, -1, -1, 1, -1, -1, -1];
a sequence 209: [1, 1, -1, 1, 1, -1, 1, -1];
a sequence 210: [1, -1, -1, 1, 1, -1, 1, -1];
a sequence 211: [1, 1, 1, -1, 1, -1, -1, -1];
a sequence 212: [1, -1, 1, -1, 1, -1, -1, -1];
a sequence 213: [1, 1, -1, 1, 1, -1, 1, -1];
a sequence 214: [1, -1, -1, 1, 1, -1, 1, -1];
a sequence 215: [1, 1, -1, 1, -1, -1, -1, -1];
a sequence 216: [1, -1, -1, 1, -1, -1, -1, -1];
a sequence 217: [1, 1, 1, 1, -1, 1, 1, -1];
a sequence 218: [1, -1, 1, 1, -1, 1, 1, -1];
a sequence 219: [1, 1, -1, -1, -1, 1, -1, -1];
a sequence 220: [1, -1, -1, -1, -1, 1, -1, -1];
a sequence 221: [1, 1, 1, 1, -1, 1, 1, -1];
a sequence 222: [1, -1, 1, 1, -1, 1, 1, -1];
a sequence 223: [1, 1, -1, -1, -1, 1, -1, -1];
a sequence 224: [1, -1, -1, -1, -1, 1, -1, -1];

**EP 4 769 994 A1**

a sequence 225: [1, 1, 1, -1, -1, -1, 1, -1];
a sequence 226: [1, -1, 1, -1, -1, -1, 1, -1];
a sequence 227: [1, 1, -1, -1, -1, -1, -1, -1];
a sequence 228: [1, -1, -1, -1, -1, -1, -1, -1];
a sequence 229: [1, 1, -1, -1, 1, 1, 1, -1];
a sequence 230: [1, -1, -1, -1, 1, 1, 1, -1];
a sequence 231: [1, 1, -1, -1, -1, 1, -1, -1];
a sequence 232: [1, -1, -1, -1, -1, 1, -1, -1];
a sequence 233: [1, 1, 1, -1, -1, -1, 1, -1];
a sequence 234: [1, -1, 1, -1, -1, -1, 1, -1];
a sequence 235: [1, 1, -1, -1, -1, -1, -1, -1];
a sequence 236: [1, -1, -1, -1, -1, -1, -1, -1];
a sequence 237: [1, 1, 1, -1, -1, -1, 1, -1];
a sequence 238: [1, -1, 1, -1, -1, -1, 1, -1];
a sequence 239: [1, 1, -1, -1, -1, -1, -1, -1];
a sequence 240: [1, -1, -1, -1, -1, -1, -1, -1];
a sequence 241: [1, 1, 1, 1, -1, -1, 1, -1];
a sequence 242: [1, -1, 1, 1, -1, -1, 1, -1];
a sequence 243: [1, 1, -1, 1, -1, -1, -1, -1];
a sequence 244: [1, -1, -1, 1, -1, -1, -1, -1];
a sequence 245: [1, 1, 1, 1, -1, 1, 1, -1];
a sequence 246: [1, -1, 1, 1, -1, 1, 1, -1];
a sequence 247: [1, 1, -1, 1, -1, 1, -1, -1];
a sequence 248: [1, -1, -1, 1, -1, 1, -1, -1];
a sequence 249: [1, 1, 1, -1, -1, -1, 1, -1];
a sequence 250: [1, -1, 1, -1, -1, -1, 1, -1];
a sequence 251: [1, 1, -1, -1, -1, -1, -1, -1];
a sequence 252: [1, -1, -1, -1, -1, -1, -1, -1];
a sequence 253: [1, 1, 1, -1, -1, -1, 1, -1];
a sequence 254: [1, -1, 1, -1, -1, -1, 1, -1];
a sequence 255: [1, 1, -1, -1, -1, -1, -1, -1];
a sequence 256: [1, -1, -1, -1, -1, -1, -1, -1];
a sequence 257: [1, 1, 1, -1, -1, 1, 1, -1];
a sequence 258: [1, -1, 1, -1, -1, 1, 1, -1];
a sequence 259: [1, 1, -1, -1, -1, 1, -1, -1];
a sequence 260: [1, -1, -1, -1, -1, 1, -1, -1];
a sequence 261: [1, 1, -1, 1, 1, -1, 1, -1];
a sequence 262: [1, -1, -1, 1, 1, -1, 1, -1];
a sequence 263: [1, 1, 1, 1, 1, -1, -1, -1]; and
a sequence 264: [1, -1, 1, 1, 1, -1, -1, -1].

It may be understood that n=8, and N=256. When the register sequence is a register sequence $R1$ ($R1$ is an integer greater than 0 and less than 265) in the register sequence set, the second sequence is a sequence R1 in the second sequence set, and the third sequence is a sequence R1 in the third sequence set, the first generalized Golay sequence obtained based on the formula (6) and the formula (7) and the sequence R1 shown in Example 1 meet the preset relationship shown in the formula (1).

**Example 8:** n=7.

1. The register sequence set may include the following sequences:

a register sequence 1: [0, 5, 3, 2, 4, 1, 6];
a register sequence 2: [0, 5, 3, 2, 4, 1, 6];
a register sequence 3: [0, 5, 3, 2, 4, 1, 6];
a register sequence 4: [0, 5, 3, 2, 4, 1, 6];
a register sequence 5: [0, 5, 2, 4, 3, 1, 6];

63

a register sequence 6: [0, 5, 2, 4, 3, 1, 6];
a register sequence 7: [0, 5, 2, 4, 3, 1, 6];
a register sequence 8: [0, 5, 2, 4, 3, 1, 6];
a register sequence 9: [0, 5, 1, 4, 2, 3, 6];
a register sequence 10: [0, 5, 1, 4, 2, 3, 6];
a register sequence 11: [0, 5, 1, 4, 2, 3, 6];
a register sequence 12: [0, 5, 1, 4, 2, 3, 6];
a register sequence 13: [0, 5, 1, 3, 4, 2, 6];
a register sequence 14: [0, 5, 1, 3, 4, 2, 6];
a register sequence 15: [0, 5, 1, 3, 4, 2, 6];
a register sequence 16: [0, 5, 1, 3, 4, 2, 6];
a register sequence 17: [0, 4, 5, 2, 3, 1, 6];
a register sequence 18: [0, 4, 5, 2, 3, 1, 6];
a register sequence 19: [0, 4, 5, 2, 3, 1, 6];
a register sequence 20: [0, 4, 5, 2, 3, 1, 6];
a register sequence 21: [0, 4, 3, 5, 2, 1, 6];
a register sequence 22: [0, 4, 3, 5, 2, 1, 6];
a register sequence 23: [0, 4, 3, 5, 2, 1, 6];
a register sequence 24: [0, 4, 3, 5, 2, 1, 6];
a register sequence 25: [0, 4, 1, 3, 5, 2, 6];
a register sequence 26: [0, 4, 1, 3, 5, 2, 6];
a register sequence 27: [0, 4, 1, 3, 5, 2, 6];
a register sequence 28: [0, 4, 1, 3, 5, 2, 6];
a register sequence 29: [0, 3, 5, 4, 2, 1, 6];
a register sequence 30: [0, 3, 5, 4, 2, 1, 6];
a register sequence 31: [0, 3, 5, 4, 2, 1, 6];
a register sequence 32: [0, 3, 5, 4, 2, 1, 6];
a register sequence 33: [0, 3, 4, 2, 5, 1, 6];
a register sequence 34: [0, 3, 4, 2, 5, 1, 6];
a register sequence 35: [0, 3, 4, 2, 5, 1, 6];
a register sequence 36: [0, 3, 4, 2, 5, 1, 6];
a register sequence 37: [0, 3, 1, 5, 2, 4, 6];
a register sequence 38: [0, 3, 1, 5, 2, 4, 6];
a register sequence 39: [0, 3, 1, 5, 2, 4, 6];
a register sequence 40: [0, 3, 1, 5, 2, 4, 6];
a register sequence 41: [0, 2, 5, 3, 4, 1, 6];
a register sequence 42: [0, 2, 5, 3, 4, 1, 6];
a register sequence 43: [0, 2, 5, 3, 4, 1, 6];
a register sequence 44: [0, 2, 5, 3, 4, 1, 6];
a register sequence 45: [0, 2, 4, 5, 3, 1, 6];
a register sequence 46: [0, 2, 4, 5, 3, 1, 6];
a register sequence 47: [0, 2, 4, 5, 3, 1, 6];
a register sequence 48: [0, 2, 4, 5, 3, 1, 6];
a register sequence 49: [0, 2, 1, 5, 3, 4, 6];
a register sequence 50: [0, 2, 1, 5, 3, 4, 6];
a register sequence 51: [0, 2, 1, 5, 3, 4, 6]; and
a register sequence 52: [0, 2, 1, 5, 3, 4, 6].

2. The second sequence set may include the following sequences:

a sequence 1: [-1, 1, 1, 1, -1, 1, 1];
a sequence 2: [-1, -1, 1, 1, -1, 1, -1];
a sequence 3: [-1, 1, -1, 1, -1, 1, -1];
a sequence 4: [-1, -1, -1, 1, -1, 1, 1];
a sequence 5: [-1, 1, 1, -1, 1, 1, 1];
a sequence 6: [-1, -1, 1, -1, 1, 1, -1];
a sequence 7: [-1, 1, -1, -1, 1, 1, -1];
a sequence 8: [-1, -1, -1, -1, 1, 1, 1];

a sequence 9: [-1, 1, -1, -1, 1, 1, -1];
a sequence 10: [-1, -1, -1, -1, 1, 1, 1];
a sequence 11: [-1, 1, -1, -1, 1, -1, 1];
a sequence 12: [-1, -1, -1, -1, 1, -1, -1];
a sequence 13: [-1, 1, -1, 1, -1, 1, -1];
a sequence 14: [-1, -1, -1, 1, -1, 1, 1];
a sequence 15: [-1, 1, -1, 1, -1, -1, 1];
a sequence 16: [-1, -1, -1, 1, -1, -1, -1];
a sequence 17: [-1, 1, -1, 1, -1, 1, -1];
a sequence 18: [-1, -1, -1, 1, -1, 1, 1];
a sequence 19: [-1, 1, 1, -1, -1, 1, -1];
a sequence 20: [-1, -1, 1, -1, -1, 1, 1];
a sequence 21: [-1, 1, -1, -1, 1, 1, -1];
a sequence 22: [-1, -1, -1, -1, 1, 1, 1];
a sequence 23: [-1, 1, -1, -1, -1, 1, 1];
a sequence 24: [-1, -1, -1, -1, -1, 1, -1];
a sequence 25: [-1, 1, -1, 1, -1, 1, -1];
a sequence 26: [-1, -1, -1, 1, -1, 1, 1];
a sequence 27: [-1, 1, -1, -1, -1, 1, 1];
a sequence 28: [-1, -1, -1, -1, -1, 1, -1];
a sequence 29: [-1, 1, -1, -1, 1, 1, -1];
a sequence 30: [-1, -1, -1, -1, 1, 1, 1];
a sequence 31: [-1, 1, -1, 1, -1, 1, -1];
a sequence 32: [-1, -1, -1, 1, -1, 1, 1];
a sequence 33: [-1, 1, 1, 1, -1, 1, 1];
a sequence 34: [-1, -1, 1, 1, -1, 1, -1];
a sequence 35: [-1, 1, -1, 1, -1, 1, -1];
a sequence 36: [-1, -1, -1, 1, -1, 1, 1];
a sequence 37: [-1, 1, -1, -1, 1, 1, -1];
a sequence 38: [-1, -1, -1, -1, 1, 1, 1];
a sequence 39: [-1, 1, -1, -1, 1, -1, 1];
a sequence 40: [-1, -1, -1, -1, 1, -1, -1];
a sequence 41: [-1, 1, -1, -1, 1, 1, -1];
a sequence 42: [-1, -1, -1, -1, 1, 1, 1];
a sequence 43: [-1, 1, -1, -1, -1, 1, 1];
a sequence 44: [-1, -1, -1, -1, -1, 1, -1];
a sequence 45: [-1, 1, 1, -1, 1, 1, 1];
a sequence 46: [-1, -1, 1, -1, 1, 1, -1];
a sequence 47: [-1, 1, 1, -1, -1, 1, -1];
a sequence 48: [-1, -1, 1, -1, -1, 1, 1];
a sequence 49: [-1, 1, -1, 1, -1, -1, 1];
a sequence 50: [-1, -1, -1, 1, -1, -1, -1];
a sequence 51: [-1, 1, -1, -1, -1, -1, -1]; and
a sequence 52: [-1, -1, -1, -1, -1, -1, 1].

3. The third sequence set may include the following sequences:

a sequence 1: [1, 1, 1, 1, -1, 1, -1];
a sequence 2: [1, -1, 1, 1, -1, 1, -1];
a sequence 3: [1, 1, -1, 1, -1, 1, -1];
a sequence 4: [1, -1, -1, 1, -1, 1, -1];
a sequence 5: [1, 1, 1, -1, 1, 1, -1];
a sequence 6: [1, -1, 1, -1, 1, 1, -1];
a sequence 7: [1, 1, -1, -1, 1, 1, -1];
a sequence 8: [1, -1, -1, -1, 1, 1, -1];
a sequence 9: [1, 1, -1, -1, 1, 1, -1];
a sequence 10: [1, -1, -1, -1, 1, 1, -1];
a sequence 11: [1, 1, -1, -1, 1, -1, -1];

a sequence 12: [1, -1, -1, -1, 1, -1, -1];
a sequence 13: [1, 1, -1, 1, -1, 1, -1];
a sequence 14: [1, -1, -1, 1, -1, 1, -1];
a sequence 15: [1, 1, -1, 1, -1, -1, -1];
a sequence 16: [1, -1, -1, 1, -1, -1, -1];
a sequence 17: [1, 1, -1, 1, -1, 1, -1];
a sequence 18: [1, -1, -1, 1, -1, 1, -1];
a sequence 19: [1, 1, 1, -1, -1, 1, -1];
a sequence 20: [1, -1, 1, -1, -1, 1, -1];
a sequence 21: [1, 1, -1, -1, 1, 1, -1];
a sequence 22: [1, -1, -1, -1, 1, 1, -1];
a sequence 23: [1, 1, -1, -1, -1, 1, -1];
a sequence 24: [1, -1, -1, -1, -1, 1, -1];
a sequence 25: [1, 1, -1, 1, -1, 1, -1];
a sequence 26: [1, -1, -1, 1, -1, 1, -1];
a sequence 27: [1, 1, -1, -1, -1, 1, -1];
a sequence 28: [1, -1, -1, -1, -1, 1, -1];
a sequence 29: [1, 1, -1, -1, 1, 1, -1];
a sequence 30: [1, -1, -1, -1, 1, 1, -1];
a sequence 31: [1, 1, -1, 1, -1, 1, -1];
a sequence 32: [1, -1, -1, 1, -1, 1, -1];
a sequence 33: [1, 1, 1, 1, -1, 1, -1];
a sequence 34: [1, -1, 1, 1, -1, 1, -1];
a sequence 35: [1, 1, -1, 1, -1, 1, -1];
a sequence 36: [1, -1, -1, 1, -1, 1, -1];
a sequence 37: [1, 1, -1, -1, 1, 1, -1];
a sequence 38: [1, -1, -1, -1, 1, 1, -1];
a sequence 39: [1, 1, -1, -1, 1, -1, -1];
a sequence 40: [1, -1, -1, -1, 1, -1, -1];
a sequence 41: [1, 1, -1, -1, 1, 1, -1];
a sequence 42: [1, -1, -1, -1, 1, 1, -1];
a sequence 43: [1, 1, -1, -1, -1, 1, -1];
a sequence 44: [1, -1, -1, -1, -1, 1, -1];
a sequence 45: [1, 1, 1, -1, 1, 1, -1];
a sequence 46: [1, -1, 1, -1, 1, 1, -1];
a sequence 47: [1, 1, 1, -1, -1, 1, -1];
a sequence 48: [1, -1, 1, -1, -1, 1, -1];
a sequence 49: [1, 1, -1, 1, -1, -1, -1];
a sequence 50: [1, -1, -1, 1, -1, -1, -1];
a sequence 51: [1, 1, -1, -1, -1, -1, -1]; and
a sequence 52: [1, -1, -1, -1, -1, -1, -1].

It may be understood that n=7, and N=128. When the register sequence is a register sequence $R2$ ($R2$ is an integer greater than 0 and less than 53) in the register sequence set, the second sequence is a sequence R2 in the second sequence set, and the third sequence is a sequence $R2$ in the third sequence set, the first generalized Golay sequence obtained based on the formula (6) and the formula (7) and the sequence R2 shown in Example 2 meet the preset relationship shown in the formula (1).

**Example 9:** n=6.

1. The register sequence set may include the following sequences:

a register sequence 1: [0, 4, 3, 2, 1, 5];
a register sequence 2: [0, 4, 3, 2, 1, 5];
a register sequence 3: [0, 4, 3, 2, 1, 5];
a register sequence 4: [0, 4, 3, 2, 1, 5];

a register sequence 5: [0, 4, 2, 3, 1, 5];
a register sequence 6: [0, 4, 2, 3, 1, 5];
a register sequence 7: [0, 4, 2, 3, 1, 5];
a register sequence 8: [0, 4, 2, 3, 1, 5];
a register sequence 9: [0, 4, 2, 3, 1, 5];
a register sequence 10: [0, 4, 2, 3, 1, 5];
a register sequence 11: [0, 4, 2, 3, 1, 5];
a register sequence 12: [0, 4, 2, 3, 1, 5];
a register sequence 13: [0, 4, 1, 3, 2, 5];
a register sequence 14: [0, 4, 1, 3, 2, 5];
a register sequence 15: [0, 4, 1, 3, 2, 5];
a register sequence 16: [0, 4, 1, 3, 2, 5];
a register sequence 17: [0, 4, 1, 3, 2, 5];
a register sequence 18: [0, 4, 1, 3, 2, 5];
a register sequence 19: [0, 4, 1, 3, 2, 5];
a register sequence 20: [0, 4, 1, 3, 2, 5];
a register sequence 21: [0, 4, 1, 2, 3, 5];
a register sequence 22: [0, 4, 1, 2, 3, 5];
a register sequence 23: [0, 4, 1, 2, 3, 5];
a register sequence 24: [0, 4, 1, 2, 3, 5];
a register sequence 25: [0, 3, 4, 2, 1, 5];
a register sequence 26: [0, 3, 4, 2, 1, 5];
a register sequence 27: [0, 3, 4, 2, 1, 5];
a register sequence 28: [0, 3, 4, 2, 1, 5];
a register sequence 29: [0, 3, 4, 1, 2, 5];
a register sequence 30: [0, 3, 4, 1, 2, 5];
a register sequence 31: [0, 3, 4, 1, 2, 5];
a register sequence 32: [0, 3, 4, 1, 2, 5];
a register sequence 33: [0, 3, 4, 1, 2, 5];
a register sequence 34: [0, 3, 4, 1, 2, 5];
a register sequence 35: [0, 3, 4, 1, 2, 5];
a register sequence 36: [0, 3, 4, 1, 2, 5];
a register sequence 37: [0, 3, 2, 4, 1, 5];
a register sequence 38: [0, 3, 2, 4, 1, 5];
a register sequence 39: [0, 3, 2, 4, 1, 5];
a register sequence 40: [0, 3, 2, 4, 1, 5];
a register sequence 41: [0, 3, 2, 4, 1, 5];
a register sequence 42: [0, 3, 2, 4, 1, 5];
a register sequence 43: [0, 3, 2, 4, 1, 5];
a register sequence 44: [0, 3, 2, 4, 1, 5];
a register sequence 45: [0, 3, 2, 4, 1, 5];
a register sequence 46: [0, 3, 2, 4, 1, 5];
a register sequence 47: [0, 3, 2, 4, 1, 5];
a register sequence 48: [0, 3, 2, 4, 1, 5];
a register sequence 49: [0, 3, 2, 1, 4, 5];
a register sequence 50: [0, 3, 2, 1, 4, 5];
a register sequence 51: [0, 3, 2, 1, 4, 5];
a register sequence 52: [0, 3, 2, 1, 4, 5];
a register sequence 53: [0, 3, 1, 4, 2, 5];
a register sequence 54: [0, 3, 1, 4, 2, 5];
a register sequence 55: [0, 3, 1, 4, 2, 5];
a register sequence 56: [0, 3, 1, 4, 2, 5];
a register sequence 57: [0, 3, 1, 4, 2, 5];
a register sequence 58: [0, 3, 1, 4, 2, 5];
a register sequence 59: [0, 3, 1, 4, 2, 5];
a register sequence 60: [0, 3, 1, 4, 2, 5];
a register sequence 61: [0, 3, 1, 4, 2, 5];
a register sequence 62: [0, 3, 1, 4, 2, 5];

a register sequence 63: [0, 3, 1, 4, 2, 5];
a register sequence 64: [0, 3, 1, 4, 2, 5];
a register sequence 65: [0, 3, 1, 2, 4, 5];
a register sequence 66: [0, 3, 1, 2, 4, 5];
a register sequence 67: [0, 3, 1, 2, 4, 5];
a register sequence 68: [0, 3, 1, 2, 4, 5];
a register sequence 69: [0, 2, 4, 3, 1, 5];
a register sequence 70: [0, 2, 4, 3, 1, 5];
a register sequence 71: [0, 2, 4, 3, 1, 5];
a register sequence 72: [0, 2, 4, 3, 1, 5];
a register sequence 73: [0, 2, 3, 4, 1, 5];
a register sequence 74: [0, 2, 3, 4, 1, 5];
a register sequence 75: [0, 2, 3, 4, 1, 5];
a register sequence 76: [0, 2, 3, 4, 1, 5];
a register sequence 77: [0, 2, 3, 1, 4, 5];
a register sequence 78: [0, 2, 3, 1, 4, 5];
a register sequence 79: [0, 2, 3, 1, 4, 5];
a register sequence 80: [0, 2, 3, 1, 4, 5];
a register sequence 81: [0, 2, 3, 1, 4, 5];
a register sequence 82: [0, 2, 3, 1, 4, 5];
a register sequence 83: [0, 2, 3, 1, 4, 5];
a register sequence 84: [0, 2, 3, 1, 4, 5];
a register sequence 85: [0, 2, 1, 4, 3, 5];
a register sequence 86: [0, 2, 1, 4, 3, 5];
a register sequence 87: [0, 2, 1, 4, 3, 5];
a register sequence 88: [0, 2, 1, 4, 3, 5];
a register sequence 89: [0, 2, 1, 3, 4, 5];
a register sequence 90: [0, 2, 1, 3, 4, 5];
a register sequence 91: [0, 2, 1, 3, 4, 5];
a register sequence 92: [0, 2, 1, 3, 4, 5];
a register sequence 93: [0, 1, 4, 3, 2, 5];
a register sequence 94: [0, 1, 4, 3, 2, 5];
a register sequence 95: [0, 1, 3, 4, 2, 5];
a register sequence 96: [0, 1, 3, 4, 2, 5];
a register sequence 97: [0, 1, 2, 4, 3, 5];
a register sequence 98: [0, 1, 2, 4, 3, 5];
a register sequence 99: [0, 1, 2, 4, 3, 5];
a register sequence 100: [0, 1, 2, 4, 3, 5];
a register sequence 101: [0, 1, 2, 4, 3, 5];
a register sequence 102: [0, 1, 2, 4, 3, 5];
a register sequence 103: [0, 1, 2, 3, 4, 5];
a register sequence 104: [0, 1, 2, 3, 4, 5];
a register sequence 105: [0, 1, 2, 3, 4, 5]; and
a register sequence 106: [0, 1, 2, 3, 4, 5].

2. The second sequence set may include the following sequences:

a sequence 1: [-1, 1, -1, 1, 1, -1];
a sequence 2: [-1, -1, -1, 1, 1, 1];
a sequence 3: [-1, 1, 1, 1, -1, -1];
a sequence 4: [-1, -1, 1, 1, -1, 1];
a sequence 5: [-1, 1, 1, -1, 1, -1];
a sequence 6: [-1, -1, 1, -1, 1, 1];
a sequence 7: [-1, 1, -1, -1, 1, 1];
a sequence 8: [-1, -1, -1, -1, 1, -1];
a sequence 9: [-1, 1, 1, -1, -1, 1];
a sequence 10: [-1, -1, 1, -1, -1, -1];
a sequence 11: [-1, 1, -1, -1, -1, -1];

a sequence 12: [-1, -1, -1, -1, -1, 1];
a sequence 13: [-1, 1, 1, -1, 1, -1];
a sequence 14: [-1, -1, 1, -1, 1, 1];
a sequence 15: [-1, 1, -1, -1, 1, 1];
a sequence 16: [-1, -1, -1, -1, 1, -1];
a sequence 17: [-1, 1, 1, -1, -1, 1];
a sequence 18: [-1, -1, 1, -1, -1, -1];
a sequence 19: [-1, 1, -1, -1, -1, -1];
a sequence 20: [-1, -1, -1, -1, -1, 1];
a sequence 21: [-1, 1, -1, 1, 1, -1];
a sequence 22: [-1, -1, -1, 1, 1, 1];
a sequence 23: [-1, 1, 1, 1, -1, -1];
a sequence 24: [-1, -1, 1, 1, -1, 1];
a sequence 25: [-1, 1, -1, -1, 1, 1];
a sequence 26: [-1, -1, -1, -1, 1, -1];
a sequence 27: [-1, 1, 1, 1, -1, -1];
a sequence 28: [-1, -1, 1, 1, -1, 1];
a sequence 29: [-1, 1, -1, 1, 1, -1];
a sequence 30: [-1, -1, -1, 1, 1, 1];
a sequence 31: [-1, 1, -1, -1, 1, 1];
a sequence 32: [-1, -1, -1, -1, 1, -1];
a sequence 33: [-1, 1, 1, 1, -1, -1];
a sequence 34: [-1, -1, 1, 1, -1, 1];
a sequence 35: [-1, 1, 1, -1, -1, 1];
a sequence 36: [-1, -1, 1, -1, -1, -1];
a sequence 37: [-1, 1, 1, 1, 1, 1];
a sequence 38: [-1, -1, 1, 1, 1, -1];
a sequence 39: [-1, 1, 1, -1, 1, -1];
a sequence 40: [-1, -1, 1, -1, 1, 1];
a sequence 41: [-1, 1, -1, -1, 1, 1];
a sequence 42: [-1, -1, -1, -1, 1, -1];
a sequence 43: [-1, 1, 1, 1, -1, -1];
a sequence 44: [-1, -1, 1, 1, -1, 1];
a sequence 45: [-1, 1, 1, -1, -1, 1];
a sequence 46: [-1, -1, 1, -1, -1, -1];
a sequence 47: [-1, 1, -1, -1, -1, -1];
a sequence 48: [-1, -1, -1, -1, -1, 1];
a sequence 49: [-1, 1, -1, -1, 1, 1];
a sequence 50: [-1, -1, -1, -1, 1, -1];
a sequence 51: [-1, 1, 1, 1, -1, -1];
a sequence 52: [-1, -1, 1, 1, -1, 1];
a sequence 53: [-1, 1, 1, 1, 1, 1];
a sequence 54: [-1, -1, 1, 1, 1, -1];
a sequence 55: [-1, 1, -1, 1, 1, -1];
a sequence 56: [-1, -1, -1, 1, 1, 1];
a sequence 57: [-1, 1, 1, -1, 1, -1];
a sequence 58: [-1, -1, 1, -1, 1, 1];
a sequence 59: [-1, 1, -1, -1, 1, 1];
a sequence 60: [-1, -1, -1, -1, 1, -1];
a sequence 61: [-1, 1, 1, -1, -1, 1];
a sequence 62: [-1, -1, 1, -1, -1, -1];
a sequence 63: [-1, 1, -1, -1, -1, -1];
a sequence 64: [-1, -1, -1, -1, -1, 1];
a sequence 65: [-1, 1, -1, -1, 1, 1];
a sequence 66: [-1, -1, -1, -1, 1, -1];
a sequence 67: [-1, 1, 1, 1, -1, -1];
a sequence 68: [-1, -1, 1, 1, -1, 1];
a sequence 69: [-1, 1, -1, 1, 1, -1];

a sequence 70: [-1, -1, -1, 1, 1, 1];
a sequence 71: [-1, 1, -1, -1, 1, 1];
a sequence 72: [-1, -1, -1, -1, 1, -1];
a sequence 73: [-1, 1, -1, 1, 1, -1];
a sequence 74: [-1, -1, -1, 1, 1, 1];
a sequence 75: [-1, 1, -1, -1, 1, 1];
a sequence 76: [-1, -1, -1, -1, 1, -1];
a sequence 77: [-1, 1, -1, 1, 1, -1];
a sequence 78: [-1, -1, -1, 1, 1, 1];
a sequence 79: [-1, 1, -1, -1, 1, 1];
a sequence 80: [-1, -1, -1, -1, 1, -1];
a sequence 81: [-1, 1, 1, 1, -1, -1];
a sequence 82: [-1, -1, 1, 1, -1, 1];
a sequence 83: [-1, 1, 1, -1, -1, 1];
a sequence 84: [-1, -1, 1, -1, -1, -1];
a sequence 8: [-1, 1, -1, 1, 1, -1];
a sequence 86: [-1, -1, -1, 1, 1, 1];
a sequence 87: [-1, 1, -1, -1, 1, 1];
a sequence 88: [-1, -1, -1, -1, 1, -1];
a sequence 89: [-1, 1, 1, 1, -1, -1];
a sequence 90: [-1, -1, 1, 1, -1, 1];
a sequence 91: [-1, 1, 1, -1, -1, 1];
a sequence 92: [-1, -1, 1, -1, -1, -1];
a sequence 93: [-1, 1, -1, 1, 1, -1];
a sequence 94: [-1, -1, -1, 1, 1, 1];
a sequence 95: [-1, 1, -1, -1, 1, 1];
a sequence 96: [-1, -1, -1, -1, 1, -1];
a sequence 97: [-1, 1, -1, 1, 1, -1];
a sequence 98: [-1, -1, -1, 1, 1, 1];
a sequence 99: [-1, 1, -1, -1, 1, 1];
a sequence 100: [-1, -1, -1, -1, 1, -1];
a sequence 101: [-1, 1, 1, 1, -1, -1];
a sequence 102: [-1, -1, 1, 1, -1, 1];
a sequence 103: [-1, 1, -1, 1, 1, -1];
a sequence 104: [-1, -1, -1, 1, 1, 1];
a sequence 105: [-1, 1, 1, -1, -1, 1]; and
a sequence 106: [-1, -1, 1, -1, -1, -1].

3. The third sequence set may include the following sequences:

a sequence 1: [1, 1, -1, 1, 1, -1];
a sequence 2: [1, -1, -1, 1, 1, -1];
a sequence 3: [1, 1, 1, 1, -1, -1];
a sequence 4: [1, -1, 1, 1, -1, -1];
a sequence 5: [1, 1, 1, -1, 1, -1];
a sequence 6: [1, -1, 1, -1, 1, -1];
a sequence 7: [1, 1, -1, -1, 1, -1];
a sequence 8: [1, -1, -1, -1, 1, -1];
a sequence 9: [1, 1, 1, -1, -1, -1];
a sequence 10: [1, -1, 1, -1, -1, -1];
a sequence 11: [1, 1, -1, -1, -1, -1];
a sequence 12: [1, -1, -1, -1, -1, -1];
a sequence 13: [1, 1, 1, -1, 1, -1];
a sequence 14: [1, -1, 1, -1, 1, -1];
a sequence 15: [1, 1, -1, -1, 1, -1];
a sequence 16: [1, -1, -1, -1, 1, -1];
a sequence 17: [1, 1, 1, -1, -1, -1];
a sequence 18: [1, -1, 1, -1, -1, -1];

a sequence 19: [1, 1, -1, -1, -1, -1];
a sequence 20: [1, -1, -1, -1, -1, -1];
a sequence 21: [1, 1, -1, 1, 1, -1];
a sequence 22: [1, -1, -1, 1, 1, -1];
a sequence 23: [1, 1, 1, 1, -1, -1];
a sequence 24: [1, -1, 1, 1, -1, -1];
a sequence 25: [1, 1, -1, -1, 1, -1];
a sequence 26: [1, -1, -1, -1, 1, -1];
a sequence 27: [1, 1, 1, 1, -1, -1];
a sequence 28: [1, -1, 1, 1, -1, -1];
a sequence 29: [1, 1, -1, 1, 1, -1];
a sequence 30: [1, -1, -1, 1, 1, -1];
a sequence 31: [1, 1, -1, -1, 1, -1];
a sequence 32: [1, -1, -1, -1, 1, -1];
a sequence 33: [1, 1, 1, 1, -1, -1];
a sequence 34: [1, -1, 1, 1, -1, -1];
a sequence 35: [1, 1, 1, -1, -1, -1];
a sequence 36: [1, -1, 1, -1, -1, -1];
a sequence 37: [1, 1, 1, 1, 1, -1];
a sequence 38: [1, -1, 1, 1, 1, -1];
a sequence 39: [1, 1, 1, -1, 1, -1];
a sequence 40: [1, -1, 1, -1, 1, -1];
a sequence 41: [1, 1, -1, -1, 1, -1];
a sequence 42: [1, -1, -1, -1, 1, -1];
a sequence 43: [1, 1, 1, 1, -1, -1];
a sequence 44: [1, -1, 1, 1, -1, -1];
a sequence 45: [1, 1, 1, -1, -1, -1];
a sequence 46: [1, -1, 1, -1, -1, -1];
a sequence 47: [1, 1, -1, -1, -1, -1];
a sequence 48: [1, -1, -1, -1, -1, -1];
a sequence 49: [1, 1, -1, -1, 1, -1];
a sequence 50: [1, -1, -1, -1, 1, -1];
a sequence 51: [1, 1, 1, 1, -1, -1];
a sequence 52: [1, -1, 1, 1, -1, -1];
a sequence 53: [1, 1, 1, 1, 1, -1];
a sequence 54: [1, -1, 1, 1, 1, -1];
a sequence 55: [1, 1, -1, 1, 1, -1];
a sequence 56: [1, -1, -1, 1, 1, -1];
a sequence 57: [1, 1, 1, -1, 1, -1];
a sequence 58: [1, -1, 1, -1, 1, -1];
a sequence 59: [1, 1, -1, -1, 1, -1];
a sequence 60: [1, -1, -1, -1, 1, -1];
a sequence 61: [1, 1, 1, -1, -1, -1];
a sequence 62: [1, -1, 1, -1, -1, -1];
a sequence 63: [1, 1, -1, -1, -1, -1];
a sequence 64: [1, -1, -1, -1, -1, -1];
a sequence 65: [1, 1, -1, -1, 1, -1];
a sequence 66: [1, -1, -1, -1, 1, -1];
a sequence 67: [1, 1, 1, 1, -1, -1];
a sequence 68: [1, -1, 1, 1, -1, -1];
a sequence 69: [1, 1, -1, 1, 1, -1];
a sequence 70: [1, -1, -1, 1, 1, -1];
a sequence 71: [1, 1, -1, -1, 1, -1];
a sequence 72: [1, -1, -1, -1, 1, -1];
a sequence 73: [1, 1, -1, 1, 1, -1];
a sequence 74: [1, -1, -1, 1, 1, -1];
a sequence 75: [1, 1, -1, -1, 1, -1];
a sequence 76: [1, -1, -1, -1, 1, -1];

a sequence 77: [1, 1, -1, 1, 1, -1];
a sequence 78: [1, -1, -1, 1, 1, -1];
a sequence 79: [1, 1, -1, -1, 1, -1];
a sequence 80: [1, -1, -1, -1, 1, -1];
a sequence 81: [1, 1, 1, 1, -1, -1];
a sequence 82: [1, -1, 1, 1, -1, -1];
a sequence 83: [1, 1, 1, -1, -1, -1];
a sequence 84: [1, -1, 1, -1, -1, -1];
a sequence 85: [1, 1, -1, 1, 1, -1];
a sequence 86: [1, -1, -1, 1, 1, -1];
a sequence 87: [1, 1, -1, -1, 1, -1];
a sequence 88: [1, -1, -1, -1, 1, -1];
a sequence 89: [1, 1, 1, 1, -1, -1];
a sequence 90: [1, -1, 1, 1, -1, -1];
a sequence 91: [1, 1, 1, -1, -1, -1];
a sequence 92: [1, -1, 1, -1, -1, -1];
a sequence 93: [1, 1, -1, 1, 1, -1];
a sequence 94: [1, -1, -1, 1, 1, -1];
a sequence 95: [1, 1, -1, -1, 1, -1];
a sequence 96: [1, -1, -1, -1, 1, -1];
a sequence 97: [1, 1, -1, 1, 1, -1];
a sequence 98: [1, -1, -1, 1, 1, -1];
a sequence 99: [1, 1, -1, -1, 1, -1];
a sequence 100: [1, -1, -1, -1, 1, -1];
a sequence 101: [1, 1, 1, 1, -1, -1];
a sequence 102: [1, -1, 1, 1, -1, -1];
a sequence 103: [1, 1, -1, 1, 1, -1];
a sequence 104: [1, -1, -1, 1, 1, -1];
a sequence 105: [1, 1, 1, -1, -1, -1]; and
a sequence 106: [1, -1, 1, -1, -1, -1].

It may be understood that n=6, and N=64. When the register sequence is a register sequence $R3$ ($R3$ is an integer greater than 0 and less than 107) in the register sequence set, the second sequence is a sequence $R3$ in the second sequence set, and the third sequence is a sequence $R3$ in the third sequence set, the first generalized Golay sequence obtained based on the formula (6) and the formula (7) and the sequence $R3$ shown in Example 3 meet the preset relationship shown in the formula (1).

**Example 10:** n=5.

1. The register sequence set may include the following sequences:

a register sequence 1: [0, 1, 2, 3, 4];
a register sequence 2: [0, 1, 2, 3, 4];
a register sequence 3: [0, 2, 1, 3, 4];
a register sequence 4: [0, 2, 1, 3, 4];
a register sequence 5: [0, 2, 1, 3, 4];
a register sequence 6: [0, 2, 1, 3, 4];
a register sequence 7: [0, 3, 1, 2, 4];
a register sequence 8: [0, 3, 1, 2, 4];
a register sequence 9: [0, 3, 1, 2, 4];
a register sequence 10: [0, 3, 1, 2, 4];
a register sequence 11: [0, 1, 3, 2, 4];
a register sequence 12: [0, 1, 3, 2, 4];
a register sequence 13: [0, 1, 3, 2, 4];
a register sequence 14: [0, 1, 3, 2, 4];
a register sequence 15: [0, 2, 3, 1, 4];

a register sequence 16: [0, 2, 3, 1, 4];
a register sequence 17: [0, 2, 3, 1, 4];
a register sequence 18: [0, 2, 3, 1, 4];
a register sequence 19: [0, 3, 2, 1, 4];
a register sequence 20: [0, 3, 2, 1, 4];
a register sequence 21: [0, 3, 2, 1, 4];
a register sequence 22: [0, 3, 2, 1, 4];
a register sequence 23: [0, 3, 2, 1, 4];
a register sequence 24: [0, 3, 2, 1, 4];
a register sequence 25: [0, 3, 2, 1, 4];
a register sequence 26: [0, 3, 2, 1, 4];
a register sequence 27: [0, 3, 2, 1, 4];
a register sequence 28: [0, 3, 2, 1, 4];
a register sequence 29: [0, 3, 2, 1, 4];
a register sequence 30: [0, 3, 2, 1, 4];
a register sequence 31: [0, 3, 2, 1, 4];
a register sequence 32: [0, 3, 2, 1, 4];
a register sequence 33: [0, 3, 2, 1, 4];
a register sequence 34: [0, 3, 2, 1, 4];
a register sequence 35: [0, 3, 1, 2, 4];
a register sequence 36: [0, 3, 1, 2, 4];
a register sequence 37: [0, 3, 1, 2, 4];
a register sequence 38: [0, 3, 1, 2, 4];
a register sequence 39: [0, 3, 1, 2, 4];
a register sequence 40: [0, 3, 1, 2, 4];
a register sequence 41: [0, 3, 1, 2, 4];
a register sequence 42: [0, 3, 1, 2, 4];
a register sequence 43: [0, 3, 1, 2, 4];
a register sequence 44: [0, 3, 1, 2, 4];
a register sequence 45: [0, 3, 1, 2, 4];
a register sequence 46: [0, 3, 1, 2, 4];
a register sequence 47: [0, 3, 1, 2, 4];
a register sequence 48: [0, 3, 1, 2, 4];
a register sequence 49: [0, 3, 1, 2, 4];
a register sequence 50: [0, 3, 1, 2, 4];
a register sequence 51: [0, 2, 3, 1, 4];
a register sequence 52: [0, 2, 3, 1, 4];
a register sequence 53: [0, 2, 3, 1, 4];
a register sequence 54: [0, 2, 3, 1, 4];
a register sequence 55: [0, 2, 3, 1, 4];
a register sequence 56: [0, 2, 3, 1, 4];
a register sequence 57: [0, 2, 3, 1, 4];
a register sequence 58: [0, 2, 3, 1, 4];
a register sequence 59: [0, 2, 3, 1, 4];
a register sequence 60: [0, 2, 3, 1, 4];
a register sequence 61: [0, 2, 3, 1, 4];
a register sequence 62: [0, 2, 3, 1, 4];
a register sequence 63: [0, 2, 3, 1, 4];
a register sequence 64: [0, 2, 3, 1, 4];
a register sequence 65: [0, 2, 3, 1, 4];
a register sequence 66: [0, 2, 3, 1, 4];
a register sequence 67: [0, 2, 1, 3, 4];
a register sequence 68: [0, 2, 1, 3, 4];
a register sequence 69: [0, 2, 1, 3, 4];
a register sequence 70: [0, 2, 1, 3, 4];
a register sequence 71: [0, 2, 1, 3, 4];
a register sequence 72: [0, 2, 1, 3, 4];
a register sequence 73: [0, 2, 1, 3, 4];

a register sequence 74: [0, 2, 1, 3, 4];
a register sequence 75: [0, 2, 1, 3, 4];
a register sequence 76: [0, 2, 1, 3, 4];
a register sequence 77: [0, 2, 1, 3, 4];
a register sequence 78: [0, 2, 1, 3, 4];
a register sequence 79: [0, 2, 1, 3, 4];
a register sequence 80: [0, 2, 1, 3, 4];
a register sequence 81: [0, 2, 1, 3, 4];
a register sequence 82: [0, 2, 1, 3, 4];
a register sequence 83: [0, 1, 3, 2, 4];
a register sequence 84: [0, 1, 3, 2, 4];
a register sequence 85: [0, 1, 3, 2, 4];
a register sequence 86: [0, 1, 3, 2, 4];
a register sequence 87: [0, 1, 3, 2, 4];
a register sequence 88: [0, 1, 3, 2, 4];
a register sequence 89: [0, 1, 3, 2, 4];
a register sequence 90: [0, 1, 3, 2, 4];
a register sequence 91: [0, 1, 3, 2, 4];
a register sequence 92: [0, 1, 3, 2, 4];
a register sequence 93: [0, 1, 3, 2, 4];
a register sequence 94: [0, 1, 3, 2, 4];
a register sequence 95: [0, 1, 2, 3, 4];
a register sequence 96: [0, 1, 2, 3, 4];
a register sequence 97: [0, 1, 2, 3, 4];
a register sequence 98: [0, 1, 2, 3, 4];
a register sequence 99: [0, 1, 2, 3, 4];
a register sequence 100: [0, 1, 2, 3, 4];
a register sequence 101: [0, 1, 2, 3, 4];
a register sequence 102: [0, 1, 2, 3, 4];
a register sequence 103: [0, 1, 2, 3, 4];
a register sequence 104: [0, 1, 2, 3, 4];
a register sequence 105: [0, 1, 2, 3, 4]; and
a register sequence 106: [0, 1, 2, 3, 4].

2. The second sequence set may include the following sequences:

a sequence 1: [-1, -1, -1, 1, -1];
a sequence 2: [-1, 1, -1, -1, -1];
a sequence 3: [-1, -1, 1, -1, -1];
a sequence 4: [-1, -1, -1, 1, -1];
a sequence 5: [-1, 1, 1, 1, -1];
a sequence 6: [-1, 1, -1, -1, -1];
a sequence 7: [-1, -1, 1, 1, -1];
a sequence 8: [-1, -1, -1, 1, 1];
a sequence 9: [-1, -1, 1, -1, -1];
a sequence 10: [-1, -1, -1, -1, 1];
a sequence 11: [-1, -1, 1, 1, -1];
a sequence 12: [-1, -1, -1, 1, -1];
a sequence 13: [-1, 1, 1, -1, -1];
a sequence 14: [-1, 1, -1, -1, -1];
a sequence 15: [-1, -1, 1, 1, -1];
a sequence 16: [-1, -1, -1, 1, 1];
a sequence 17: [-1, -1, 1, -1, -1];
a sequence 18: [-1, -1, -1, -1, 1];
a sequence 19: [-1, 1, 1, 1, 1];
a sequence 20: [-1, 1, 1, 1, -1];
a sequence 21: [-1, -1, 1, 1, 1];
a sequence 22: [-1, -1, 1, 1, -1];

a sequence 23: [-1, 1, -1, 1, 1];
a sequence 24: [-1, 1, -1, 1, -1];
a sequence 25: [-1, -1, -1, 1, 1];
a sequence 26: [-1, -1, -1, 1, -1];
a sequence 27: [-1, 1, 1, -1, 1];
a sequence 28: [-1, 1, 1, -1, -1];
a sequence 29: [-1, -1, 1, -1, 1];
a sequence 30: [-1, -1, 1, -1, -1];
a sequence 31: [-1, 1, -1, -1, 1];
a sequence 32: [-1, 1, -1, -1, -1];
a sequence 33: [-1, -1, -1, -1, 1];
a sequence 34: [-1, -1, -1, -1, -1];
a sequence 35: [-1, 1, 1, 1, 1];
a sequence 36: [-1, 1, 1, 1, -1];
a sequence 37: [-1, -1, 1, 1, 1];
a sequence 38: [-1, -1, 1, 1, -1];
a sequence 39: [-1, 1, -1, 1, 1];
a sequence 40: [-1, 1, -1, 1, -1];
a sequence 41: [-1, -1, -1, 1, 1];
a sequence 42: [-1, -1, -1, 1, -1];
a sequence 43: [-1, 1, 1, -1, 1];
a sequence 44: [-1, 1, 1, -1, -1];
a sequence 45: [-1, -1, 1, -1, 1];
a sequence 46: [-1, -1, 1, -1, -1];
a sequence 47: [-1, 1, -1, -1, 1];
a sequence 48: [-1, 1, -1, -1, -1];
a sequence 49: [-1, -1, -1, -1, 1];
a sequence 50: [-1, -1, -1, -1, -1];
a sequence 51: [-1, 1, 1, 1, 1];
a sequence 52: [-1, 1, 1, 1, -1];
a sequence 53: [-1, -1, 1, 1, 1];
a sequence 54: [-1, -1, 1, 1, -1];
a sequence 55: [-1, 1, -1, 1, 1];
a sequence 56: [-1, 1, -1, 1, -1];
a sequence 57: [-1, -1, -1, 1, 1];
a sequence 58: [-1, -1, -1, 1, -1];
a sequence 59: [-1, 1, 1, -1, 1];
a sequence 60: [-1, 1, 1, -1, -1];
a sequence 61: [-1, -1, 1, -1, 1];
a sequence 62: [-1, -1, 1, -1, -1];
a sequence 63: [-1, 1, -1, -1, 1];
a sequence 64: [-1, 1, -1, -1, -1];
a sequence 65: [-1, -1, -1, -1, 1];
a sequence 66: [-1, -1, -1, -1, -1];
a sequence 67: [-1, 1, 1, 1, 1];
a sequence 68: [-1, 1, 1, 1, -1];
a sequence 69: [-1, -1, 1, 1, 1];
a sequence 70: [-1, -1, 1, 1, -1];
a sequence 71: [-1, 1, -1, 1, 1];
a sequence 72: [-1, 1, -1, 1, -1];
a sequence 73: [-1, -1, -1, 1, 1];
a sequence 74: [-1, -1, -1, 1, -1];
a sequence 75: [-1, 1, 1, -1, 1];
a sequence 76: [-1, 1, 1, -1, -1];
a sequence 77: [-1, -1, 1, -1, 1];
a sequence 78: [-1, -1, 1, -1, -1];
a sequence 79: [-1, 1, -1, -1, 1];
a sequence 80: [-1, 1, -1, -1, -1];

a sequence 81: [-1, -1, -1, -1, 1];
a sequence 82: [-1, -1, -1, -1, -1];
a sequence 83: [-1, 1, 1, 1, -1];
a sequence 84: [-1, -1, 1, 1, 1];
a sequence 85: [-1, 1, -1, 1, 1];
a sequence 86: [-1, 1, -1, 1, -1];
a sequence 87: [-1, -1, -1, 1, 1];
a sequence 88: [-1, -1, -1, 1, -1];
a sequence 89: [-1, 1, 1, -1, -1];
a sequence 90: [-1, -1, 1, -1, 1];
a sequence 91: [-1, 1, -1, -1, 1];
a sequence 92: [-1, 1, -1, -1, -1];
a sequence 93: [-1, -1, -1, -1, 1];
a sequence 94: [-1, -1, -1, -1, -1];
a sequence 95: [-1, 1, 1, 1, 1];
a sequence 96: [-1, -1, 1, 1, -1];
a sequence 97: [-1, 1, -1, 1, 1];
a sequence 98: [-1, 1, -1, 1, -1];
a sequence 99: [-1, -1, -1, 1, 1];
a sequence 100: [-1, -1, -1, 1, -1];
a sequence 101: [-1, 1, 1, -1, 1];
a sequence 102: [-1, -1, 1, -1, -1];
a sequence 103: [-1, 1, -1, -1, 1];
a sequence 104: [-1, 1, -1, -1, -1];
a sequence 105: [-1, -1, -1, -1, 1]; and
a sequence 106: [-1, -1, -1, -1, -1].

3. The third sequence set may include the following sequences:

a sequence 1: [1, -1, -1, -1, -1];
a sequence 2: [1, 1, -1, 1, -1];
a sequence 3: [1, -1, 1, 1, -1];
a sequence 4: [1, -1, -1, -1, -1];
a sequence 5: [1, 1, 1, -1, -1];
a sequence 6: [1, 1, -1, 1, -1];
a sequence 7: [1, 1, 1, 1, -1];
a sequence 8: [1, 1, -1, 1, -1];
a sequence 9: [1, 1, 1, -1, -1];
a sequence 10: [1, 1, -1, -1, -1];
a sequence 11: [1, -1, 1, -1, -1];
a sequence 12: [1, -1, -1, -1, -1];
a sequence 13: [1, 1, 1, 1, -1];
a sequence 14: [1, 1, -1, 1, -1];
a sequence 15: [1, 1, 1, 1, -1];
a sequence 16: [1, 1, -1, 1, -1];
a sequence 17: [1, 1, 1, -1, -1];
a sequence 18: [1, 1, -1, -1, -1];
a sequence 19: [1, 1, 1, 1, -1];
a sequence 20: [1, 1, 1, 1, -1];
a sequence 21: [1, -1, 1, 1, -1];
a sequence 22: [1, -1, 1, 1, -1];
a sequence 23: [1, 1, -1, 1, -1];
a sequence 24: [1, 1, -1, 1, -1];
a sequence 25: [1, -1, -1, 1, -1];
a sequence 26: [1, -1, -1, 1, -1];
a sequence 27: [1, 1, 1, -1, -1];
a sequence 28: [1, 1, 1, -1, -1];
a sequence 29: [1, -1, 1, -1, -1];

a sequence 30: [1, -1, 1, -1, -1];
a sequence 31: [1, 1, -1, -1, -1];
a sequence 32: [1, 1, -1, -1, -1];
a sequence 33: [1, -1, -1, -1, -1];
a sequence 34: [1, -1, -1, -1, -1];
a sequence 35: [1, 1, 1, 1, -1];
a sequence 36: [1, 1, 1, 1, -1];
a sequence 37: [1, -1, 1, 1, -1];
a sequence 38: [1, -1, 1, 1, -1];
a sequence 39: [1, 1, -1, 1, -1];
a sequence 40: [1, 1, -1, 1, -1];
a sequence 41: [1, -1, -1, 1, -1];
a sequence 42: [1, -1, -1, 1, -1];
a sequence 43: [1, 1, 1, -1, -1];
a sequence 44: [1, 1, 1, -1, -1];
a sequence 45: [1, -1, 1, -1, -1];
a sequence 46: [1, -1, 1, -1, -1];
a sequence 47: [1, 1, -1, -1, -1];
a sequence 48: [1, 1, -1, -1, -1];
a sequence 49: [1, -1, -1, -1, -1];
a sequence 50: [1, -1, -1, -1, -1];
a sequence 51: [1, 1, 1, 1, -1];
a sequence 52: [1, 1, 1, 1, -1];
a sequence 53: [1, -1, 1, 1, -1];
a sequence 54: [1, -1, 1, 1, -1];
a sequence 55: [1, 1, -1, 1, -1];
a sequence 56: [1, 1, -1, 1, -1];
a sequence 57: [1, -1, -1, 1, -1];
a sequence 58: [1, -1, -1, 1, -1];
a sequence 59: [1, 1, 1, -1, -1];
a sequence 60: [1, 1, 1, -1, -1];
a sequence 61: [1, -1, 1, -1, -1];
a sequence 62: [1, -1, 1, -1, -1];
a sequence 63: [1, 1, -1, -1, -1];
a sequence 64: [1, 1, -1, -1, -1];
a sequence 65: [1, -1, -1, -1, -1];
a sequence 66: [1, -1, -1, -1, -1];
a sequence 67: [1, 1, 1, 1, -1];
a sequence 68: [1, 1, 1, 1, -1];
a sequence 69: [1, -1, 1, 1, -1];
a sequence 70: [1, -1, 1, 1, -1];
a sequence 71: [1, 1, -1, 1, -1];
a sequence 72: [1, 1, -1, 1, -1];
a sequence 73: [1, -1, -1, 1, -1];
a sequence 74: [1, -1, -1, 1, -1];
a sequence 75: [1, 1, 1, -1, -1];
a sequence 76: [1, 1, 1, -1, -1];
a sequence 77: [1, -1, 1, -1, -1];
a sequence 78: [1, -1, 1, -1, -1];
a sequence 79: [1, 1, -1, -1, -1];
a sequence 80: [1, 1, -1, -1, -1];
a sequence 81: [1, -1, -1, -1, -1];
a sequence 82: [1, -1, -1, -1, -1];
a sequence 83: [1, 1, 1, 1, -1];
a sequence 84: [1, -1, 1, 1, -1];
a sequence 85: [1, 1, -1, 1, -1];
a sequence 86: [1, 1, -1, 1, -1];
a sequence 87: [1, -1, -1, 1, -1];

a sequence 88: [1, -1, -1, 1, -1];
a sequence 89: [1, 1, 1, -1, -1];
a sequence 90: [1, -1, 1, -1, -1];
a sequence 91: [1, 1, -1, -1, -1];
a sequence 92: [1, 1, -1, -1, -1];
a sequence 93: [1, -1, -1, -1, -1];
a sequence 94: [1, -1, -1, -1, -1];
a sequence 95: [1, 1, 1, 1, -1];
a sequence 96: [1, -1, 1, 1, -1];
a sequence 97: [1, 1, -1, 1, -1];
a sequence 98: [1, 1, -1, 1, -1];
a sequence 99: [1, -1, -1, 1, -1];
a sequence 100: [1, -1, -1, 1, -1];
a sequence 101: [1, 1, 1, -1, -1];
a sequence 102: [1, -1, 1, -1, -1];
a sequence 103: [1, 1, -1, -1, -1];
a sequence 104: [1, 1, -1, -1, -1];
a sequence 105: [1, -1, -1, -1, -1]; and
a sequence 106: [1, -1, -1, -1, -1].

It may be understood that n=5, and N=32. When the register sequence is a register sequence $R3$ ($R3$ is an integer greater than 0 and less than 107) in the register sequence set, the second sequence is a sequence $R3$ in the second sequence set, and the third sequence is a sequence $R3$ in the third sequence set, the first generalized Golay sequence obtained based on the formula (6) and the formula (7) and the sequence $R3$ shown in Example 4 meet the preset relationship shown in the formula (1).

**Example 11:** n=4.

1. The register sequence set may include the following sequences:

a register sequence 1: [0, 2, 1, 3];
a register sequence 2: [0, 2, 1, 3];
a register sequence 3: [0, 2, 1, 3];
a register sequence 4: [0, 2, 1, 3];
a register sequence 5: [0, 2, 1, 3];
a register sequence 6: [0, 2, 1, 3];
a register sequence 7: [0, 1, 2, 3]; and
a register sequence 8: [0, 1, 2, 3].

2. The second sequence set may include the following sequences:

a sequence 1: [-1, 1, 1, 1];
a sequence 2: [-1, 1, 1, -1];
a sequence 3: [-1, -1, 1, 1];
a sequence 4: [-1, -1, 1, -1];
a sequence 5: [-1, 1, -1, 1];
a sequence 6: [-1, -1, -1, -1];
a sequence 7: [-1, 1, 1, -1]; and
a sequence 8: [-1, -1, 1, 1].

3. The third sequence set may include the following sequences:

a sequence 1: [1, 1, 1, -1];
a sequence 2: [1, 1, 1, -1];
a sequence 3: [1, -1, 1, -1];
a sequence 4: [1, -1, 1, -1];

a sequence 5: [1, 1, -1, -1];
a sequence 6: [1, -1, -1, -1];
a sequence 7: [1, 1, 1, -1]; and
a sequence 8: [1, -1, 1, -1].

It may be understood that n=4, and N=16. When the register sequence is a register sequence R4 (R4 is an integer greater than 0 and less than 9) in the register sequence set, the second sequence is a sequence R4 in the second sequence set, and the third sequence is a sequence R4 in the third sequence set, the first generalized Golay sequence obtained based on the formula (6) and the formula (7) and the sequence R4 shown in Example 5 meet the preset relationship shown in the formula (1).

**Example 12:** n=3.

The register sequence set may include the following sequences:

a register sequence 1: [1, 0, 2];
a register sequence 2: [0, 1, 2];
a register sequence 3: [0, 1, 2];
a register sequence 4: [1, 0, 2];
a register sequence 5: [1, 0, 2];
a register sequence 6: [1, 0, 2];
a register sequence 7: [0, 1, 2];
a register sequence 8: [0, 1, 2];
a register sequence 9: [0, 1, 2];
a register sequence 10: [0, 1, 2];
a register sequence 11: [0, 1, 2];
a register sequence 12: [0, 1, 2]; and
a register sequence 13: [0, 1, 2].

The second sequence set may include the following sequences:

a sequence 1: [-1, 1, 1];
a sequence 2: [-1, 1, -1];
a sequence 3: [-1, -1, -1];
a sequence 4: [1, -1, -1];
a sequence 5: [-1, -1, -1];
a sequence 6: [-1, -1, 1];
a sequence 7: [1, -1, -1];
a sequence 8: [-1, 1, -1];
a sequence 9: [-1, 1, -1];
a sequence 10: [-1, -1, 1];
a sequence 11: [1, -1, -1];
a sequence 12: [-1, -1, 1]; and
a sequence 13: [1, 1, 1].

The third sequence set may include the following sequences:

a sequence 1: [1, 1, -1];
a sequence 2: [-1, -1, -1];
a sequence 3: [1, 1, -1];
a sequence 4: [1, -1, -1];
a sequence 5: [1, -1, -1];
a sequence 6: [-1, -1, -1];
a sequence 7: [1, 1, -1];
a sequence 8: [1, 1, -1];
a sequence 9: [-1, 1, -1];
a sequence 10: [1, -1, -1];
a sequence 11: [1, -1, -1];

a sequence 12: [-1, -1, -1]; and

a sequence 13: [1, 1, 1].

It may be understood that n=3, and N=8. When the register sequence is a register sequence $R5$ ($R5$ is an integer greater than 0 and less than 14) in the register sequence set, the second sequence is a sequence $R5$ in the second sequence set, and the third sequence is a sequence $R5$ in the third sequence set, the first generalized Golay sequence obtained based on the formula (6) and the formula (7) and the sequence $R5$ shown in Example 6 meet the preset relationship shown in the formula (1).

It may be further understood that the sequences included in the sequence sets shown in Example 7 to Example 12 are merely used to describe a correspondence between the first sequence and the register sequence, the second sequence, and the third sequence more clearly. Therefore, the register sequence set includes a plurality of same sequences, the second sequence set includes a plurality of same sequences, and the third sequence set includes a plurality of same sequences. A manner of storing the correspondence between the first sequence and the register sequence, the second sequence, and the third sequence is not limited in this application. In addition, during specific implementation, register sequence sets, second sequence sets, or third sequence sets corresponding to different lengths may include more or fewer sequences than the sequences shown in Example 7 to Example 12.

The sequence included in the register sequence set, the second sequence set, or the third sequence set is not limited in this application, and a quantity of sequences included in the register sequence set, the second sequence set, or the third sequence set is not limited either. For example, the register sequence set may include only one sequence, and the sequence may be any one of the sequences included in the register sequence set shown in Example 7 to Example 12. Alternatively, the register sequence set includes a plurality of sequences with different lengths, and the plurality of sequences with different lengths may be from the sequences included in the register sequence set shown in Example 7 to Example 12.

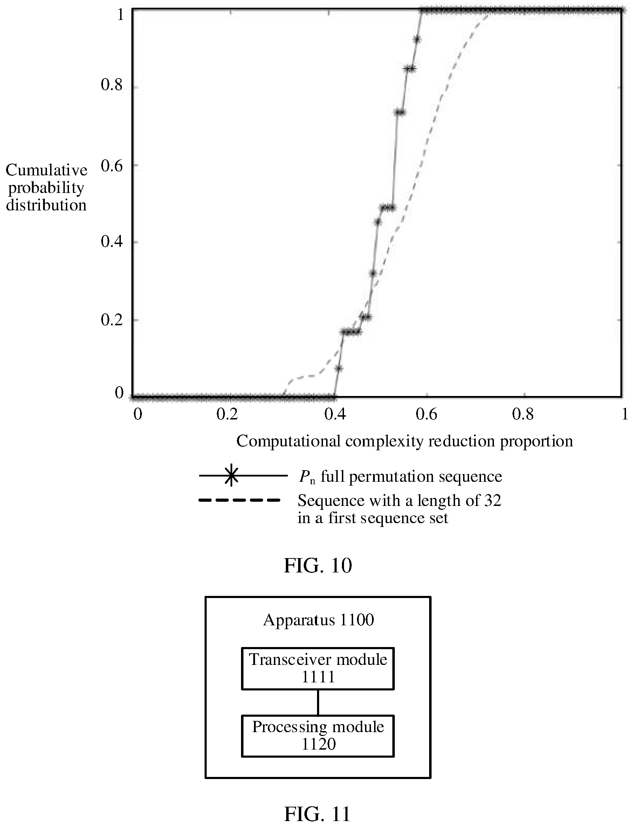

When the second device performs correlation detection by using a first generalized Golay sequence generated by using the sequence shown in Example 7 to Example 12, complexity of sequence correlation detection during synchronization can be greatly reduced. The following uses all register sequences that may be included in the register sequence set shown in Example 9 as an example. With reference to FIG. 10, computational complexity needed when the second device performs correlation detection on a first sequence generated by using the sequence shown in Example 9 is described.

FIG. 10 is a diagram of cumulative probability distribution of a computational complexity reduction proportion of a sequence in a candidate set of a first sequence when N=32 according to an embodiment of this application. As shown in FIG. 10, a horizontal coordinate indicates a computational complexity reduction proportion, and a vertical coordinate indicates cumulative probability distribution. A $P_n$ full permutation sequence is a sequence that includes 0 and 1 and that is related to a generalized Golay sequence with a length of N=32 in a generalized Golay sequence set. When a sliding window size L is equal to eight, correlation on a received signal and a local sequence needs to be performed for nine times, and N-1=31 additions need to be performed for each correlation. Therefore, total baseline computational complexity is computation of (N-1)×(L+1) additions. It can be learned from FIG. 10 that computational complexity of the first sequence with a length of N=32 provided in this application is reduced by 40% to 55% compared with the baseline complexity.

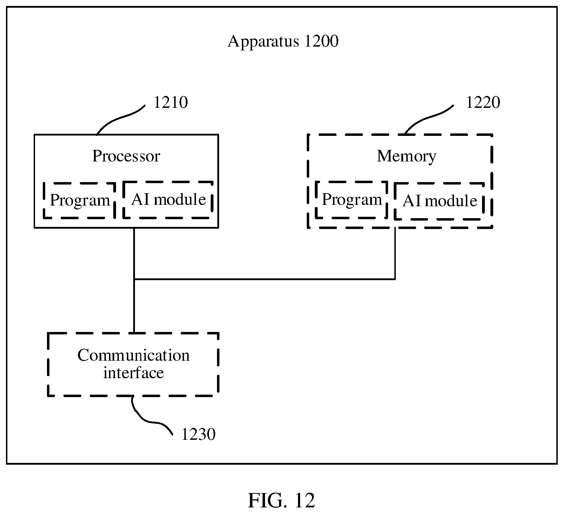

The foregoing describes in detail the method provided in embodiments of this application with reference to FIG. 1 to FIG. 10. The following describes in detail apparatuses provided in embodiments of this application with reference to FIG. 11 and FIG. 12.

FIG. 11 and FIG. 12 are diagrams of structures of possible apparatuses according to embodiments of this application. These apparatuses may be configured to implement functions of the first device or the second device in the foregoing method embodiments, and therefore can also implement beneficial effects of the foregoing method embodiments.

FIG. 11 is a block diagram of an apparatus according to an embodiment of this application. As shown in FIG. 11, the apparatus 1100 includes a transceiver module 1110 and a processing module 1120.

In a possible design, the apparatus 1100 is configured to implement functions of the first device in the method embodiment shown in FIG. 3. For example, the apparatus 1100 may correspond to the terminal device (or the access network device) in FIG. 1.

For example, the transceiver module 1110 is configured to receive a first signal. The processing module 1120 may be configured to: detect the first signal, and determine a start location and/or an end location of a first sequence in the first signal, where the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i \neq P_j$, where values of i and j are integers from 1 to n-1; and a value of k is any integer from 1 to n, n is a positive integer, a length of the first sequence is N, and N= 2". The processing module 1120 is specifically configured to detect the first signal by using $1^{st}$-level to $(n-1)^{th}$-level registers in the n-level register.

For more detailed descriptions of the transceiver module 1110 and the processing module 1120, directly refer to related descriptions in the embodiment shown in FIG. 3. Details are not described herein again.

In another possible design, the apparatus 1100 is configured to implement functions of the second device in the method embodiment shown in FIG. 3. For example, the apparatus 1100 may correspond to the access network device (or the terminal device) in FIG. 1.

For example, the processing module 1120 is configured to determine a first signal based on a first sequence, where the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_m$ is n-1; when i≠j, $P_i \neq P_j$, where values of i and j are integers from 0 to n-1; and a value of k is any integer from 1 to n, n is a positive integer, a length of the first sequence is N, and N= $2^n$. The transceiver module 1110 is configured to send the first signal.

For more detailed descriptions of the transceiver module 1110 and the processing module 1120, directly refer to related descriptions in the embodiment shown in FIG. 3. Details are not described herein again.

It should be noted that the apparatus 1100 may include a sending module but does not include a receiving module. Alternatively, the apparatus 1100 may include a receiving module but does not include a sending module. This may be specifically determined based on whether the foregoing solutions performed by the apparatus 1100 include a sending action and a receiving action. It may be understood that because the apparatus 1100 has a communication function, the apparatus 1100 may also be referred to as a communication apparatus.

FIG. 12 is another block diagram of an apparatus according to an embodiment of this application. As shown in FIG. 12, the apparatus 1200 includes one or more processors 1210. The processor 1210 may be a general-purpose processor, a dedicated processor, or the like, for example, may be a baseband processor or a central processing unit. The baseband processor may be configured to process a communication protocol and communication data. The central processing unit may be configured to: control an apparatus (for example, a first device, a second device, or a chip), execute a software program, and process data of the software program.

Optionally, in a design, the processor 1210 may include a program (which may also be sometimes referred to as code or instructions), and the program may be run on the processor 1210, to enable the apparatus 1200 to perform the method performed by the first device or the second device in the foregoing method embodiments. In another possible design, the apparatus 1200 includes a circuit (not shown in FIG. 12), and the circuit is configured to implement functions of the first device or the second device in the foregoing method embodiments.

For example, the processor 1210 may be configured to execute a computer program or instructions in a memory, to implement steps performed by the first device or the second device in the method embodiment shown in any one of embodiments shown in FIG. 3.

Optionally, the apparatus 1200 may include one or more memories 1220, and the memory 1220 stores a program (which may also be sometimes referred to as code or instructions). The program may be run on the processor 1210, to enable the apparatus 1200 to perform the method performed by the first device or the second device in the foregoing embodiments.

Optionally, the processor 1210 and/or the memory 1220 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 1210 and/or the memory 1220 may further store data. The processor and the memory may be separately disposed, or may be integrated together.

Optionally, the apparatus 1200 may further include a communication interface 1230. The processor 1210 may also be sometimes referred to as a processing unit, and controls an apparatus (for example, the first device or the second device). The communication interface 1230 may also be sometimes referred to as a transceiver unit, a transceiver machine, a transceiver circuit, a transceiver, or the like, and is configured to implement a transceiver function of the apparatus.

Optionally, the apparatus 1200 further includes the communication interface 1230. The processor 1210 and the communication interface 1230 are coupled to each other. It may be understood that the communication interface 1230 may be a transceiver or an input/output interface.

It may be understood that because the apparatus 1200 has a communication function, the apparatus 1200 may also be referred to as a communication apparatus.

When the apparatus 1200 is configured to implement the method in FIG. 3, the processor 1210 is configured to perform functions of the foregoing processing unit, and the communication interface 1230 is configured to perform functions of the foregoing transceiver module. Whether the communication interface 1230 is used for sending or receiving may be specifically determined based on whether the apparatus 1200 is configured to perform a sending action or a receiving action in the solution performed by the apparatus 1200.

When the apparatus 1200 is a chip used in the first device, the chip implements functions of the first device in the foregoing method embodiments. The chip in the first device receives a signal from another module (for example, a radio frequency module or an antenna) in the first device, where the signal may be sent by the second device to the first device. Alternatively, the chip in the first device sends a signal to another module (for example, a radio frequency module or an antenna) in the first device, where the signal may be sent by the first device to the second device.

When the apparatus 1200 is a chip used in the second device, the chip implements functions of the second device in the foregoing method embodiments. The chip in the second device receives a signal from another module (for example, a radio frequency module or an antenna) in the second device, where the signal may be sent by the first device to the second device. Alternatively, the chip in the second device sends a signal to another module (for example, a radio frequency module or an antenna) in the second device, where the signal may be sent by the second device to the first device.

It may be understood that when the apparatus 1200 is the first device or the second device, the communication interface 1230 may be a transceiver, and may specifically include a transmitter and a receiver. The transmitter is configured to send a signal, and the receiver is configured to receive a signal. When the apparatus 1200 is a chip used in the first device or the second device, the communication interface 1230 may be an input/output circuit. The input circuit may be configured to perform receiving, and the output interface may be configured to perform sending.

It should be noted that, the foregoing method embodiments may be applied to the processor, or implemented by the processor. The processor may be an integrated circuit chip and has a signal processing capability. In an implementation process, steps in the foregoing method embodiments may be completed by using a hardware integrated logical circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or a part of the methods provided in the foregoing embodiments may be implemented by software, hardware, firmware, or any combination thereof. When the software is used to implement embodiments, all or a part of embodiments may be implemented in a form of a computer program product. The computer program product may include one or more computer instructions. When the computer program instructions are loaded and executed on a computer, all or a part of procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic disk), an optical medium (for example, a DVD), a semiconductor medium (for example, a solid-state drive solid-state drive (SSD)), or the like.

This application further provides a computer-readable medium storing a computer program. When the computer program is executed by a computer, functions of the foregoing method embodiments are implemented.

This application further provides a computer program product including instructions. When the computer program product is executed by a computer, functions of the foregoing method embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to some technologies, or a part of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving a first signal; and
   detecting the first signal, and determining a start location and/or an end location of a first sequence in the first signal, wherein the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i \neq P_j$, wherein values of i and j are integers from 1 to n-1; and a value of k is any integer from 1 to n, n is a positive integer, a length of the first sequence is N, and N= $2^n$ ; and
   the detecting the first signal comprises:
   detecting the first signal by using $1^{st}$-level to $(n-1)^{th}$-level registers in the n-level register.

2. A communication method, comprising:

determining a first signal based on a first sequence, wherein the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i \neq P_j$, wherein values of i and j are integers from 0 to n-1; and a value of k is any integer from 1 to n, n is a positive integer, a length of the first sequence is N, and N= $2^n$ ; and

sending the first signal.

3. A communication method, comprising:

determining, by a first device, a first signal based on a first sequence, wherein the first sequence and a first generalized Golay sequence meet a preset relationship, an n-level register is configured to generate the first generalized Golay sequence, a storage depth of a $k^{th}$-level register in the n-level register is $2^{P_k}$, a value of $P_k$ is an integer from 0 to n-1, and a value of $P_n$ is n-1; when i≠j, $P_i \neq P_j$, wherein values of i and j are integers from 0 to n-1; and a value of k is any integer from 1 to n, n is a positive integer, a length of the first sequence is N, and N= $2^n$ ;
sending, by the first device, the first signal to a second device; and
detecting, by the second device, the first signal, and determining a start location and/or an end location of the first sequence in the first signal; and
the detecting, by the second device, the first signal comprises:
detecting, by the second device, the first signal by using $1^{st}$-level to $(n-1)^{th}$-level registers in the n-level register.

4. The method according to any one of claims 1 to 3, wherein the preset relationship satisfies any one of the following:

$$Y_q = 1 - 2X_q, \quad Y_q = 2X_q - 1, \quad Y_q = 1 - 2X_{N+1-q}, \text{ or } Y_q = 2X_{N+1-q} - 1,$$

wherein
$Y_q$ is a $q^{th}$ element in the first generalized Golay sequence, $X_q$ is a $q^{th}$ element in the first sequence, $X_{N+1-q}$ is an $(N+1-q)^{th}$ element in the first sequence, and a value of $q$ is any integer from 1 to N.

5. The method according to any one of claims 1 to 4, wherein a value of an element in the first sequence is 0 or 1, and a quantity of elements 0 and a quantity of elements 1 in the first sequence are the same.

6. The method according to any one of claims 1 to 5, wherein N=256, and the first sequence is any one of the following sequences, or the first sequence is an equivalent sequence of any one of the following sequences:

[0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 0, 1, 0, 1, 0, 1, 0, 1];
[0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 0, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 0, 1, 1, 0, 1, 0, 0, 0, 1, 1, 0, 1, 0, 0, 1, 1, 0, 0, 1, 1, 0, 0, 1, 1, 0, 1, 0, 1, 0, 1, 1, 0, 1, 0, 0, 1, 0, 1, 1, 0, 1, 0, 1, 0, 1, 0, 0, 1, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0, 1, 0, 1];
[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 1, 0, 1, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 0, 1, 1, 0, 1, 0, 1, 0, 1, 0, 0, 1, 0, 1, 0, 1, 0, 1, 0, 1, 1, 0, 1, 0, 0, 1, 1, 0, 0, 1];
[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 0, 1, 1, 0, 1, 0, 0, 1, 1, 0, 1, 0, 1, 0, 1, 0, 0, 1, 0, 1, 0, 1, 0, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 1, 0, 0, 1, 0, 1, 1, 0, 1, 0, 0, 0, 1, 1, 0, 0, 1, 1, 0, 0, 1, 1, 0, 0, 1, 0, 1, 1, 0, 1, 0, 0, 1, 1, 0, 0, 1, 1, 0, 1, 0, 0, 1, 1, 0, 0, 1];

[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1,
0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 1, 0,
0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 0,
1, 0, 1, 1, 0, 0, 1, 1, 0, 1, 0, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 0, 1,
1, 0, 0, 1, 1, 0, 0, 1, 1, 0, 0, 1, 0, 1, 0, 1, 1, 0, 1, 0, 0, 0, 1, 0, 1, 1, 0, 1, 0, 1, 0, 0, 1, 1, 0, 0, 1, 0, 1, 1, 0, 0, 1, 1, 0, 0, 1, 0, 1, 1,
0, 1, 0, 1, 0, 1, 0, 0, 1, 0, 1];

[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 0, 1, 0, 1, 1, 0, 1, 0, 0, 1, 0, 1, 0,
1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 0, 1, 1,
0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0,
1, 0, 0, 1, 1, 0, 0, 1, 0, 1, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0, 0,
1, 1, 0, 0, 1, 1, 0, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 0, 1, 1, 0, 0, 1, 0, 1, 1, 0,
1, 0, 1, 0, 1, 0, 0, 1, 0, 1];

[0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1,
0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0,
1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 0,
1, 1, 0, 1, 0, 1, 0, 1, 0, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 0, 0, 1, 0, 1,
0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0, 1, 0, 1, 0, 1, 0, 1, 0, 0, 1, 0,
1, 1, 0, 0, 1, 1, 0, 1, 0, 0, 1];

[0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1, 0, 1, 1, 0, 1, 0, 0, 1, 0, 1, 1, 0, 0,
1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1,
0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 1,
0, 0, 1, 0, 1, 0, 1, 0, 1, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0,
1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 0,
1, 1, 0, 0, 1, 1, 0, 1, 0, 0, 1];

[0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 0, 1, 1,
0, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0,
1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0,
1, 1, 0, 1, 0, 1, 0, 1, 0, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 0, 0, 1, 1, 0,
1, 0, 0, 1, 1, 0, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1,
0, 1, 0, 0, 1, 0, 1, 0, 1, 0, 1];

[0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 1, 0, 0,
1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1,
0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 1, 0, 1,
0, 0, 1, 0, 1, 0, 1, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1,
0, 1, 1, 0, 1, 0, 0, 1, 0, 1, 1, 0, 0, 1, 0, 1, 0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 1,
0, 1, 0, 0, 1, 0, 1, 0, 1, 0, 1];

[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 1,
0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 1, 0,
1, 0, 1, 0, 1, 0, 0, 1, 0, 1, 1, 0, 1, 0, 1, 0, 1, 0, 1, 1, 0, 1, 0, 0, 1, 1, 0, 0, 1, 0, 1, 1, 0, 0, 1, 1, 0, 1, 0, 0, 1, 1, 0, 1, 0, 0, 1, 1, 0, 1, 0, 1,
0, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1,
1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 0, 1, 1, 0, 0, 1, 1, 0, 0, 1, 0, 1, 1,
0, 1, 0, 1, 0, 1, 0, 0, 1, 0, 1];

[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 0, 1, 0, 1, 1, 0, 1, 0, 0, 1, 0, 1, 0,
1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 1, 0,
0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 1, 0, 1, 0, 1, 0, 0, 1, 1, 0,
1, 0, 1, 0, 1, 0, 1, 0, 1, 0, 1, 0, 1, 1, 0, 1, 0, 0, 1, 0, 1, 1, 0, 1, 0, 0, 0, 1, 0, 1, 1, 0, 1, 0, 0, 1, 1, 0, 1, 0, 1, 0, 1, 0, 1, 0, 1, 0, 1, 0, 0, 1,
1, 0, 0, 1, 1, 0, 0, 1, 1, 0, 0, 1, 0, 1, 0, 1, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 0, 1, 0, 1, 1,
0, 1, 0, 1, 0, 1, 0, 0, 1, 0, 1];

[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 0, 1, 1, 0, 0, 1, 1, 0, 0, 1, 1, 0, 1,
0, 1, 0, 0, 1, 0, 1, 1, 0, 1, 0, 0, 0, 1, 0, 1, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0,
0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 0, 0,
1, 0, 1, 1, 0, 0, 1, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 1, 0,
0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 1, 0, 1, 0, 1, 0, 0, 1, 1, 0, 0,
1, 1, 0, 1, 0, 0, 1, 1, 0, 0, 1];

[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 0, 1, 1, 0, 0, 1, 1, 0, 0, 1, 1, 0, 1, 0,
1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1,
1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 1,

0, 1, 0, 0, 1, 1, 0, 0, 1, 0, 1, 1, 0, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1];

[0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 0, 1, 0, 1, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 0, 1];

[0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 1, 0, 1, 0, 0, 1];

[0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 1, 0, 0, 1, 0, 1, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 1, 0, 1, 0, 0, 1, 0, 1, 0, 1, 0, 1, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 0, 1, 1, 0, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 0, 1, 0, 1, 0, 1, 1, 0, 0, 1, 0, 1, 0, 1, 1, 0, 0, 1, 1, 0, 1, 0, 0, 1, 0, 1, 0, 1, 0, 1];

[0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 1, 0, 0, 1, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 0, 0, 1];

[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 0, 1, 0, 1, 0, 1, 1, 0, 1, 0, 0, 1, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 0, 1, 1, 0, 1, 0, 0, 1, 0, 1, 0, 1, 1, 0, 0, 1, 1, 0, 0, 1, 0, 1, 0, 1, 0, 0, 1, 1, 0, 0, 1, 0, 1, 0, 1, 0, 0, 1];

[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 0, 1, 1, 0, 1, 0, 0, 1, 0, 1, 0, 1, 0, 1, 1, 0, 1, 0, 1, 0, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 0, 1, 0, 1, 0, 1, 0, 1, 1, 0, 1, 0, 0, 1, 0, 1, 0, 1, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 1, 0, 0, 1, 0, 1, 0, 1, 0, 0, 1];

[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 0, 1, 1, 0, 1, 0, 0, 1, 0, 1, 0, 1, 0, 1, 1, 0, 1, 0, 1, 0, 0, 1, 0, 1, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 0, 1, 0, 1, 0, 1, 1, 0, 1, 0, 0, 1, 0, 1, 0, 1, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 1, 0, 0, 1, 0, 1, 0, 1, 0, 0, 1];

[0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 0, 1, 0, 1, 0, 1, 0, 1, 1, 0, 0, 1, 0, 1, 1, 0, 0, 1, 1, 0, 0, 1, 1, 0, 0, 1, 1, 0, 1, 0, 1, 0, 0, 1, 0, 1, 0, 0, 1, 1, 0, 1, 0, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 1, 0, 1, 0, 1, 0, 0, 1, 0, 1, 0, 1, 0, 1, 1, 0, 1, 0, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 0, 1, 0, 1, 0, 1, 0, 0, 1, 0];

[0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 0, 1, 0, 1, 0, 1, 0, 1, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 0, 0, 1];

[0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 1, 0, 0, 1, 1, 0, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 0, 1, 0, 1, 0, 1, 1, 0, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1];

[0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 0, 1, 1, 0, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0,
0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 1, 0, 1,
0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 1, 0, 0,
1, 0, 1, 0, 1, 1, 0, 0, 1, 1, 0, 1, 0, 1, 0, 0, 1, 0, 1, 0, 1, 1, 0, 0, 1, 1, 0, 1, 0, 0, 0, 1, 0, 1, 1, 0, 0, 1, 0, 1, 0, 1, 0, 1, 1, 0, 0, 1, 0, 1,
1, 0, 0, 1, 0, 1, 0, 1, 0, 1];
[0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 0, 1, 0,
1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 0, 1,
0, 1, 1, 0, 1, 0, 1, 0, 0, 1, 1, 0, 0, 1, 1, 0, 1, 0, 0, 0, 1, 0, 1, 0, 1, 1, 0, 0, 1, 1, 0, 0, 1, 1, 0, 0, 1, 1, 0, 1, 0, 1, 0, 0, 0, 1, 0, 1, 0, 1, 1,
0, 0, 1, 1, 0, 1, 0, 1, 0,0, 1, 0, 1, 0, 1, 0, 1, 0, 1, 0, 1, 1, 0,0, 1, 0, 1, 1, 0, 0, 1, 0, 1, 0, 1, 0, 1, 1, 0,0, 1, 0, 1, 1, 0, 1, 0, 0, 1, 1,
0, 0, 1, 0, 1, 0, 1, 1, 0, 1, 0, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 1, 0, 1, 0,
1, 0, 0, 1, 1, 0, 1, 0, 0, 1];
[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 0, 1, 1, 0, 1, 0, 1, 0, 0, 1, 1, 0, 0, 1, 1,
0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 1, 0, 1,
0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 0, 1, 1, 0, 0, 1, 0, 1, 0, 1, 0, 1, 1, 0, 1, 0, 0, 1, 1,
0, 0, 1, 1, 0, 1, 0, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 1, 0,
0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1,
0, 1, 0, 0, 1, 1, 0, 1, 0, 0, 1];
[0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1,
0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0,
1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 0,
1, 1, 0, 0, 1, 0, 1, 0, 1, 1, 0, 1, 0, 0, 0, 1, 0, 1, 0, 1, 0, 1, 1, 0, 0, 1, 0, 1, 1, 0, 0, 1, 0, 1, 0, 1, 0, 1, 1, 0, 1, 0, 0, 1, 0, 1, 0, 1, 0, 1, 1, 0, 0, 1, 0, 1, 1, 0, 1, 0, 1, 0,
1, 0,0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 1, 0, 1, 0,
1, 0, 1, 0, 0, 1, 1, 0, 1, 0, 0, 1];
[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 1, 0, 0, 1, 0, 1, 0, 1, 1, 0, 0, 1, 1, 0, 0,
1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0,
1, 0, 0, 1, 0, 1, 0, 1, 1, 0,0, 1, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 0, 1, 0, 1, 1, 0, 0, 1,
1, 0, 0, 1, 0, 1, 0, 1, 1, 0, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 0, 0, 1, 1,
0, 0, 1, 0, 1, 0, 1, 1, 0, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 1, 0, 1, 0, 1, 0,
1, 0, 0, 1, 1, 0, 1, 0, 0, 1];
[0, 1, 0, 1, 0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1, 0, 1, 1, 0, 1, 0, 1, 0, 0, 1, 0, 1, 1, 0, 1, 0, 0, 0, 1, 0,
1, 0, 1, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1,
1, 0, 1, 0, 1, 0, 0, 1, 1, 0, 0, 1, 0, 1, 1, 0, 0, 1, 0, 1, 1, 0, 1, 0, 0, 0, 1, 0, 1, 1, 0, 1, 0, 1, 0, 0, 0, 1, 0, 1, 1, 0, 1, 0, 1, 0, 0, 0, 1, 1, 0,
1, 0,0, 1, 1, 0, 0, 1, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1,
0, 1, 0, 1, 0, 1, 0, 0, 1, 0, 1, 0, 1, 1, 0, 1, 0, 0, 1, 0, 1, 1, 0, 1, 0,0, 1, 0, 1, 1,0, 0, 1, 1, 0, 1, 0, 0, 1, 1, 0, 0, 1, 0, 1, 0, 1, 0, 1, 0, 1, 0,
1, 0, 1, 0, 1, 0, 1, 0, 1];
[0, 1, 0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1, 0, 1, 1, 0, 1, 0, 1, 0, 0, 1, 0, 1, 1, 0, 1, 0, 0, 0, 1, 0,
1, 0, 1, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 1, 0,0, 1, 1, 0, 0, 1, 1, 0, 0, 1, 1, 0,0, 1, 1, 0, 0,
1, 0, 1, 1, 0,0, 1, 1, 0, 1, 0,0, 1, 1, 0, 1, 0, 0, 1, 0, 1, 1, 0, 1, 0, 0, 0, 1, 0, 1, 1, 0, 1, 0, 0, 0, 1, 0, 1, 1, 0, 1, 0, 0, 0, 1, 0, 1, 1, 0, 0, 0, 1, 0,
1, 1, 0, 0, 1, 1, 0, 1, 0, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0,
1, 0, 1, 0, 1, 0, 0, 1, 0, 1, 0, 1, 1, 0, 1, 0, 0, 0, 1, 0, 1, 1, 0,0, 1, 0, 1, 1, 0, 0, 1, 1, 0, 1, 0, 0, 0, 1, 0, 1, 1, 0, 0, 1, 0, 1, 0, 1, 0, 1, 0, 1, 0,
0, 1, 0, 1, 0, 1, 0, 1];
[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 0, 1, 1,
0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0,0, 1, 1, 0, 0, 1, 1, 0, 0, 1, 1,0, 0, 1, 0, 1, 1,
0, 1, 0,0, 1, 1, 0, 0, 1, 0, 1, 1, 0, 1, 0, 1, 0, 0, 1, 0, 1, 1, 0, 1, 0, 0, 0, 1, 0, 1, 1, 0, 1, 0, 0, 0, 1, 0, 1, 1, 0, 1, 0, 0, 0, 1, 0, 1, 1, 0, 1, 0, 0, 1,
0, 0, 1, 1, 0, 0, 1, 0, 1, 1, 0, 1, 0, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 1,
0, 1, 0, 1, 0, 1, 1, 0, 1, 0, 0, 0, 1, 1, 0, 1, 0, 0, 0, 1, 0, 1, 1, 0, 1, 0, 0, 0, 1, 0, 1, 1, 0, 1, 0, 0, 0, 1, 0, 1, 0, 1, 0, 1, 1, 0, 0, 1, 1, 0, 1, 0, 0, 1, 0, 1, 0, 1, 0, 1,
0, 1, 0, 1, 0, 1, 0, 1];
[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 0, 1, 1, 0,
0, 1, 0, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 0,
0, 1, 0, 1, 1, 0, 0, 1, 1, 0, 1, 0, 0, 1, 0, 1, 0, 1, 1, 0, 1, 0,0, 0, 1, 0, 1, 1, 0, 1, 0, 1, 0, 0, 0, 1, 0, 1, 1, 0, 1, 0, 1, 0, 1, 0, 1, 0, 1, 0,0, 0, 1,
0, 1, 1, 0, 0, 0, 1, 1, 0, 1, 0,0, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 0, 1, 0,
1, 0, 0, 1, 1, 0, 1, 0, 0, 1, 1, 0, 1, 0, 0, 0, 1, 0, 1, 1, 0, 1, 0, 0, 0, 1, 0, 1, 1, 0, 1, 0, 0, 0, 1, 0, 1, 0, 1, 0, 1, 1, 0, 0, 1, 1, 0, 1, 0, 0, 1, 0, 1, 0, 1, 0, 1, 0,
0, 1, 0, 1, 0, 1, 0, 1];
[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 1, 0, 1,
0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 0, 1,
0, 1, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 1, 0, 1, 0, 0,0, 1, 0, 1, 1, 0, 1, 0, 1, 0,0, 1, 1, 0,
1, 0,0, 1, 0, 1, 0, 1, 1, 0, 1, 0, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0,
1, 0,0, 1, 1, 0,0, 1, 0, 1, 1, 0, 1, 0, 1, 0,0, 1, 0, 1, 1, 0, 1, 0,0, 1, 0, 1, 0, 1, 0, 1, 0, 1, 0, 1, 1, 0, 1, 0, 1, 0, 1, 0, 1, 0, 1, 0, 0, 1, 1, 0,

0, 1, 1, 0, 0, 1, 1, 0, 0, 1];

[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 1,
0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0,0, 1, 0, 1, 0, 1, 0, 1, 0, 1, 0, 1, 0, 1, 0, 1, 1, 0,
1, 0, 0, 1, 0, 1, 0, 1, 0, 1, 1, 0, 1,0,0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 0, 1, 0,
1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 1, 0,
1,0,0, 1, 1,0,0, 1, 0, 1, 1, 0, 1, 0, 1,0,0, 1, 0, 1, 1, 0, 1, 0,0, 1, 0, 1, 0, 1, 0, 1, 0, 1, 1, 0, 1, 0, 1, 0, 1, 0, 1, 0,0, 1, 1, 0,
0, 1, 1, 0, 0, 1, 1, 0, 0, 1];

[0, 1, 0, 1, 1, 0, 1, 0, 1, 0, 1,0,0, 1, 0, 1, 0, 1, 1, 0, 1, 0, 1, 0,0, 1, 0, 1, 1, 0, 1, 0, 1,0,0, 1, 0, 1, 1, 0, 0, 1, 1, 0, 1, 0,0, 1, 1,0,0, 1, 0, 1,
0, 1, 0, 1, 0, 1, 0, 1, 0, 1, 0, 1, 0, 1, 0, 1, 1, 0, 1,0,0, 1, 0, 1, 1, 0, 1, 0,0, 1, 1, 0, 1, 0,0, 1, 1, 0, 1, 0,0, 1, 1, 0, 0, 1, 0, 1, 1, 0, 0, 1, 1,
0, 0, 1, 1, 0, 0, 1, 1, 0, 0, 1, 1, 0, 0, 1, 0, 1, 0, 1, 0, 1, 1, 0, 1, 0, 1, 0, 1, 0, 1,0,0, 1, 0, 1, 0, 1, 0, 1, 1, 0, 1, 0, 1, 0, 1, 0,0, 1, 1,0,0,
1, 1, 0, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 0, 1,
0, 1, 0, 1, 0, 1, 0, 1, 0, 1, 1,0,0, 1, 1, 0, 1,0,0, 1, 1,0,0, 1, 0, 1, 1, 0, 1, 0,0, 1, 0, 1, 1, 0, 1, 0,0, 1, 0, 1, 0, 1, 1, 0, 1, 0,
1, 0, 1, 0, 0, 1, 0, 1];

[0, 1, 0, 1, 1, 0, 1, 0, 1, 0, 1,0,0, 1, 0, 1, 0, 1, 1, 0, 1, 0, 1, 0,0, 1, 0, 1, 1, 0, 1, 0, 1,0,0, 1, 0, 1, 1, 0, 0, 1, 1, 0, 1, 0,0, 1, 1,0,0, 1, 0, 1,
0, 1, 0, 1, 0, 1, 0, 1, 0, 1, 0, 1, 1, 0, 1, 0,0, 1, 0, 1, 1, 0, 1, 0,0, 1, 0, 1, 1,0,0, 1, 0, 1, 1, 0, 0, 1, 1, 0, 1, 0,0, 1, 1, 0, 0, 1,
1,0,0, 1, 1,0,0, 1, 1, 0, 1, 0, 1, 0, 1, 0, 1, 0,0, 1, 0, 1, 0, 1, 0, 1, 1, 0, 1, 0, 1, 0, 1, 0, 1, 0,0, 1, 0, 1, 0, 1, 0, 1, 1, 0, 0, 1, 1, 0,
0, 1, 1, 0, 0, 1, 1, 0, 0, 1, 1, 0, 0, 1, 0, 1, 1, 0, 0, 1, 1, 0, 1, 0,0, 1, 1, 0, 1, 0,0, 1, 0, 1, 1, 0, 1, 0, 0, 1, 0, 1, 0, 1, 0, 1, 0, 1, 0,
1, 0, 1, 0, 1, 0, 1, 0, 1, 1,0,0, 1, 1, 0, 1,0,0, 1, 1,0,0, 1, 0, 1, 1, 0, 1, 0,0, 1, 0, 1, 1, 0, 1, 0,0, 1, 0, 1, 0, 1, 1, 0, 1, 0, 1, 0, 1,
0, 1, 0, 0, 1, 0, 1];

[0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1,
0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1,
1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 1,
0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0,
1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 1, 1,
0, 1, 0, 1, 0, 1, 0, 0, 1, 0, 1];

[0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1,
0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0,
0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 0,
1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 1, 0, 1, 1, 0, 1, 0,
1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 1, 1,
0, 1, 0, 1, 0, 1, 0, 0, 1, 0, 1];

[0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1,
0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1,
0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 1, 0, 1,
0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0,
0, 1, 1, 0, 0, 1, 1, 0, 0, 1, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0,
1, 1, 0, 0, 1, 1, 0, 1, 0, 0, 1];

[0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1,
0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0,
1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0,
1, 0, 1, 0, 1, 0, 1, 0, 1, 0, 1, 1, 0, 1, 0, 0, 0, 1, 0, 1, 0, 1, 0, 1, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0,
0, 1, 1, 0, 0, 1, 1, 0, 0, 1, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0,
1, 1, 0, 0, 1, 1, 0, 1, 0, 0, 1];

[0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 1, 0, 0, 1, 1, 0, 1, 0, 0, 1, 0, 1, 1, 0, 1, 0, 0, 0, 1, 1,
0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0,0, 1, 0, 1, 0,
1, 1, 0, 1,0,0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 1,
0, 1, 0, 0, 1, 0, 1, 1, 0, 1, 0, 1, 0, 1,0,0, 1, 0, 1, 1, 0, 0, 1, 1, 0, 1, 0,0, 1, 0, 1, 1,0,0, 1, 1,0,0, 1, 1,0,0, 1, 1, 0, 1, 0, 0, 1, 1, 0, 0,
1, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1,
0, 1, 0, 1, 0, 1, 0, 1];

[0, 1, 0, 1, 0, 1, 0, 1, 0, 1, 0, 1, 0, 1, 1, 0, 1, 0, 0, 0, 1, 0, 1, 0, 1, 0, 1, 1, 0, 1, 0, 0, 1, 0, 1, 1, 0, 1, 0, 0, 1, 1, 0, 0, 1, 1, 0, 1, 0, 1, 0, 0, 0, 1, 1,
0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 0, 1, 0, 1, 1, 0,
1, 0, 1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1,
1, 0, 1, 0, 1, 0, 1, 0, 1, 0, 1, 1, 0, 1, 0, 0, 0, 1, 0, 1, 0, 1, 0, 1, 1, 0, 1, 0, 0, 1, 0, 1, 1, 0, 1, 0, 1, 0, 1, 1, 0, 1, 0, 0, 1, 0, 1, 1, 0,
0, 1, 1, 0, 0, 1, 1, 0, 0, 1, 1, 0, 1, 0, 1, 0, 1, 0, 0, 1, 0, 1, 0, 1, 0, 1, 0, 1, 0, 1, 1, 0, 1, 0, 0, 1, 0, 1, 0, 1, 0, 1,
0, 1, 0, 1, 0, 1, 0, 1, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1,
0, 1, 0, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 0, 1,
1, 0, 1, 0, 0, 1, 1, 0, 1, 0, 0, 1, 1, 0, 0, 1, 1,0,0, 1, 0, 1, 1, 0, 0, 1, 1,0,0, 1, 1,0,0, 1, 1,0,0, 1, 1,0,0, 1, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 0, 0, 1, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1];

[0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 1, 0, 1, 0, 1, 0, 0, 1, 1, 0, 1, 0, 0, 1, 0, 1, 1, 0, 1, 0, 1, 0, 1, 0, 1, 0, 1, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 0, 1];

[0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 1, 0, 1, 0, 0, 1, 1, 0, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 0, 1, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 0, 1, 0, 1, 0, 0, 1, 0, 1, 0, 1, 0, 1, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1];

[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 0, 1, 1, 0, 1, 0, 1, 0, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 1, 0, 1, 0, 1, 0, 1, 0, 1, 0, 1, 1, 0, 1, 0, 1, 0, 1, 0, 0, 1, 1, 0, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1];

[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 1, 0, 1, 1, 0, 1, 0, 0, 1, 1, 0, 0, 1, 1, 0, 0, 1];

[0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 1, 0, 1, 0, 1, 1, 0, 1, 0, 0, 1, 0, 1, 0, 1, 0, 1, 0, 1, 0, 0, 1, 0, 1, 1, 0, 1, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1];

[0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 1, 0, 0, 1, 1, 0, 1];

[0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 1, 0, 1, 1, 0, 1, 0, 1, 0, 1, 0, 0, 1, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1];

[0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 1, 0, 1,

0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1,
0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 0, 1, 1, 0, 1,
0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0,
0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1,
0, 1, 0, 0, 1, 0, 1, 0, 1, 0, 1];
[0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 1, 0, 0, 1, 1, 0, 0, 1, 0, 1, 0, 1, 1, 0, 1,
0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0,
1, 0, 0, 1, 0, 1, 0, 1, 0, 1, 1, 0, 1, 0, 1, 0, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 0, 1, 0,
1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 0, 1, 1, 0, 0,
1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1,
0, 0, 1, 0, 1, 0, 1, 0, 1];
[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 0, 1, 1, 0, 1, 0, 1, 0, 1, 0, 0, 1, 0, 1, 1,
0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1,
1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0,
1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0, 1, 0,
1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1,
0, 1, 0, 0, 1, 1, 0, 0, 1];
[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 0, 1, 1, 0, 1, 0, 1, 0, 1, 0, 0, 1, 0, 1, 1,
0, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 0, 1, 1, 0, 1, 0, 1, 0, 0, 1, 0, 1, 1, 0, 1, 0, 1, 0,
0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1,
0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 1, 0, 1, 0,
1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1,
0, 1, 0, 0, 1, 1, 0, 0, 1];
[0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 1, 0, 0, 1, 0, 1,
1, 0, 0, 1, 1, 0, 0, 1, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0,
1, 0, 1, 0, 1, 0, 1, 1, 0, 1, 0, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0,
1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1,
1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0,
1, 0, 1, 0, 1, 0, 1];
[0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 0, 1, 1, 0, 1, 0, 0, 1, 0,
1, 1, 0, 0, 1, 1, 0, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0,
1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 1, 0, 1, 0, 1, 0, 0,
1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1,
1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0,
1, 0, 1, 0, 1, 0, 1];
[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 1, 0, 1, 0, 1, 0, 0,
1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0,
1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1,
1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 0, 1,
0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 0, 1, 1, 0, 0, 1, 0, 1, 1, 0, 1, 0, 0, 1, 0, 1, 1, 0,
1, 0, 0, 1, 1, 0, 0, 1];
[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 1, 0, 1, 0, 1, 0, 0,
1, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 1, 0, 1, 1, 0, 1, 0, 0, 1, 0, 1, 1, 0, 0, 1,
1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0,
1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 0, 1, 0,
1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0,
0, 1, 0, 0, 1, 1, 0, 0, 1];
[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0,
1, 1, 0, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0,
1, 0, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 1, 0, 0, 1, 0, 1, 0, 1, 0,
1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0,
1, 0, 1, 0, 1, 0, 0, 1, 0, 1];
[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0,
1, 1, 0, 1, 0, 0, 1, 0, 1, 1, 0, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0,
1, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0,
0, 1, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 0, 1,
0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1];

[0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0,
1, 0, 1, 1, 0, 1, 0, 0, 1, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0,
0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 0, 1, 1,
0, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0,
0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0,
1, 1, 0, 0, 1, 1, 0, 1, 0, 0, 1];

[0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0,
1, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1,
1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 0,
1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0,
0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0,
1, 1, 0, 0, 1, 1, 0, 1, 0, 0, 1];

[0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0,
1, 0, 1, 1, 0, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 1, 0, 1, 0, 1, 0, 0, 1, 1, 0, 0, 1, 0, 1, 1, 0, 0, 1,
1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1,
0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1,
1, 0, 1, 0, 1, 0, 1, 0, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 0, 1, 0, 1, 0,
1, 0, 1, 0, 1, 0, 1, 0, 1, 0, 1];

[0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0,
1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 1, 0, 0, 1, 1, 0,
0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 0,
1, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1,
1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 1, 0, 0, 1, 0, 1, 0, 1, 0,
1, 0, 1, 0, 1, 0, 1, 0, 1, 0, 1];

[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 0, 0, 1, 1,
0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 0, 1,
1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 1,
0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 0, 1, 0, 1, 0,
0, 1, 0, 1, 0, 1, 0, 1, 1, 0, 1, 0, 1, 0, 0, 1, 1, 0, 1, 0, 0, 1, 0, 1, 1, 0, 1, 0, 0, 0, 1, 1, 0, 0, 1, 0, 1, 1, 0, 1, 0, 0, 1, 1, 0, 0, 1, 0, 1, 0, 1, 0,
1, 0, 1, 0, 1, 0, 1, 0, 1, 0, 1];

[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 0, 0, 1, 1,
0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0,
0, 1, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 1, 0, 1, 0,
0, 1, 0, 1, 0, 1, 0, 1, 1, 0, 1, 0, 0, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 1, 0,
1, 0, 1, 0, 1, 0, 1, 0, 1, 0, 1];

[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 1,
0, 0, 1, 0, 1, 1, 0, 0, 1, 1, 0, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1,
0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 1,
0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0,
1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 0, 1, 1,
0, 0, 1, 1, 0, 0, 1, 1, 0, 0, 1];

[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 1,
0, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0,
1, 0, 1, 0, 1, 0, 1, 0, 1, 0, 1, 0, 0, 1, 1, 0, 0, 1, 1, 0, 1, 0, 0, 1, 1, 0, 1, 0, 1, 0, 0, 1, 1, 0, 1, 0, 0, 1, 0, 1, 0, 1, 1, 0, 1, 0, 0, 1, 0, 1, 1, 0,
1, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 1, 0,
1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 0, 1, 1,
0, 0, 1, 1, 0, 0, 1, 1, 0, 0, 1];

[0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 0,
1, 0, 1, 0, 1, 0, 1, 0, 1, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1,
1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0,
0, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0,
0, 1, 0, 1, 0, 1, 0, 1, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0,
0, 1, 0, 1, 0, 1, 0, 0, 1, 0, 1];

[0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 1, 0, 0, 1, 1, 0, 0, 1, 0, 1, 0,
1, 0, 1, 0, 1, 0, 1, 0, 1, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1,
1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0,
0, 1, 0, 1, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 0, 1,
0, 1, 0, 1, 0, 1, 0, 0, 1, 0, 1];

1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0, 1, 0, 1,
0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 1,
0, 1, 0, 1, 0, 1, 0, 0, 1, 0, 1];
[0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1,
0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 1, 0, 1,
1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 1,
0, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0,
1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 0, 1, 1,
0, 1, 0, 1, 0, 1, 0, 0, 1, 0, 1]
[0, 1, 0, 1, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1,
0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 1, 0,
0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 0,
1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0,
1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1,
0, 1, 0, 1, 0, 1, 0, 0, 1, 0, 1];
[0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1,
0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 0, 1,
0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 1,
0, 0, 1, 0, 1, 0, 1, 0, 1, 1, 0, 1, 0, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1,
1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 0, 1, 0, 1, 1, 0, 1, 0, 1, 0, 0, 1, 0, 1, 1, 0, 1, 0, 1, 0, 0, 1,
0, 1, 1, 0, 0, 1, 1, 0, 1, 0, 0, 1];
[0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 0, 1, 0, 1, 0, 1, 1, 0, 1, 0, 1, 0, 1, 0,
1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 1, 0, 1,
0, 0, 1, 0, 1, 0, 1, 0, 1, 1, 0, 1, 0, 0, 1, 1, 0, 1, 0, 1, 0, 0, 1, 0, 1, 1, 0, 1, 0, 1, 0, 0, 1, 1, 0, 0, 1, 0, 1, 1, 0, 1, 0, 1, 0, 0, 1, 0, 1,
1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 1, 0, 0, 1, 1, 0, 0, 1, 0, 1, 1, 0, 0,
1, 1, 0, 0, 1, 1, 0, 0, 1, 1, 0, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 0, 1, 0, 1, 1,
0, 0, 1, 1, 0, 1, 0, 0, 1];
[0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 0, 1,
0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1,
0, 1, 1, 0, 1, 0, 1, 0, 1, 0, 0, 1, 1, 0, 1, 0, 1, 0, 1, 0, 1, 0, 0, 1, 0, 1, 0, 1, 1, 0, 0, 1, 1, 0, 0, 1, 1, 0, 1, 0, 1, 0, 1, 0, 0, 1, 0, 1, 0, 1, 1, 0, 0, 1, 1, 0,
1, 0, 1, 0, 0, 1, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 1, 0,
1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 1,
0, 0, 1, 0, 1, 0, 1];
[0, 1, 0, 1, 0, 1, 1, 0, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 1, 0, 1, 0, 0, 1, 1, 0, 0, 1, 0, 1,
1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 0, 1,
0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 1, 0, 1, 0, 1, 0, 0,
1, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 0, 1, 0, 1,
1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1,
0, 0, 1, 0, 1, 0, 1];
[0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 1,
0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 0, 1, 1, 0, 0, 1, 0, 1, 1, 0, 0, 1, 0, 1, 0, 1, 1, 0, 0,
1, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 0,
0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 1,
0, 1, 0, 1, 0, 1, 0, 1, 1, 0, 0, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1,
0, 0, 1, 0, 1, 1, 0, 0, 1];
[0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 0,
1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0,
0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 0,
1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1,
0, 1, 0, 1, 0, 1, 0, 1, 0, 0, 1, 1, 0, 0, 1, 0, 1, 0, 1, 0, 1, 1, 0, 0, 1, 0, 1, 1, 0, 0, 1, 1, 0, 0, 1, 0, 1, 0, 1, 0,
1, 1, 0, 0, 1, 0, 1, 1, 0, 0, 1];
[0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1,
0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1,
1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1,
0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 0, 1,
1, 0, 0, 1, 0, 1, 1, 0, 0, 1, 1, 0, 0, 1, 0, 1, 1, 0, 0, 1, 1, 0, 1, 0, 1, 0, 0, 1, 1, 0, 1, 0, 0, 1, 0, 1, 0, 1, 0, 1, 1, 0, 1, 0, 1, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 1, 0, 1, 0, 0, 0, 1, 0, 1, 1, 0, 1, 0, 0, 0, 1, 1,

0, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0,
0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0,
1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1,
1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0,
1, 0, 1, 0, 1, 0, 1, 0, 1, 0, 1];
[0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 1, 0, 0, 1, 1, 0, 0, 1, 0, 1, 1, 0, 1,
0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1,
1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 0,
1, 0, 1, 1, 0, 1, 0, 0, 1, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0,
0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 1,
0, 1, 0, 0, 1, 0, 1, 0, 1, 0, 1];
[0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1,
0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0,
1, 0, 1, 1, 0, 1, 0, 0, 0, 1, 0, 1, 1, 0, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0,
1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 0,
1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 1, 0, 1,
0, 0, 1, 0, 1, 0, 1, 0, 1];
[0, 1, 0, 1, 0, 1, 0, 1, 0, 1, 0, 1, 0, 1, 0, 1, 1, 0, 1, 0, 1, 0, 0, 1, 0, 1, 0, 1, 0, 1, 0, 1, 1, 0, 1, 0, 1, 0, 1, 0, 0, 1, 0, 1, 0, 1, 1, 0, 1, 0, 0, 0, 1, 0, 1, 1, 0, 0,
1, 1, 0, 0, 1, 1, 0, 1, 0, 0, 1, 1, 0, 0, 1, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0,
1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0,
1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 1, 0, 0, 1,
1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 0, 1, 0, 1,
0, 1, 0, 1, 0, 1, 0, 1];
[0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 0, 0, 1, 1,
0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 1, 0, 1, 0, 0, 1, 1,
0, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0,
1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 1, 0, 0, 1,
1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 0, 1, 0, 1, 0, 1, 0, 1,
0, 1, 0, 1, 0, 1, 0, 1];
[0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 0, 1, 0, 1, 1, 0, 0, 1, 0, 1,
1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 0, 1, 0,
1, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1,
0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 0, 1,
0, 1, 0, 1, 0, 1];
[0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 1, 0, 0, 1, 0, 1,
1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0,
1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 0, 1, 1, 0, 0, 1, 0, 1, 0, 1, 0, 1,
1, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 0, 1, 1, 0,
0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1,
0, 0, 1, 0, 1, 0, 1, 0, 1];
[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0,
1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0,
0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1, 1, 0, 0, 1, 1, 0, 0, 1, 1,
0, 0, 1, 1, 0, 1, 0, 0, 1, 1, 0, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 0, 0, 1,
0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 0,
1, 0, 1, 1, 0, 1, 0, 0, 1, 0, 1];
[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0,
1, 1, 0, 1, 0, 0, 1, 1, 0, 0, 1, 0, 1, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1,
1, 0, 0, 1, 1, 0, 1, 0, 0, 1, 1, 0, 0, 1, 1, 0, 1, 0, 1, 0, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0,
1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 0, 1,
0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 0,
1, 0, 1, 1, 0, 1, 0, 0, 1, 0, 1];
[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0,
1, 1, 0, 1, 0, 0, 1, 0, 1, 1, 0, 1, 0, 0, 1, 0, 1, 0, 1, 1, 0, 1, 0, 1, 0, 0, 1, 0, 1, 0, 1, 1, 0, 1, 0, 0, 1, 0, 1, 1, 0, 1, 0, 1, 0, 1, 0, 1, 0, 1,
0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 1,
1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1,
0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 1, 0, 0, 0,
1, 0, 1, 1, 0, 1, 0, 0, 1, 0, 1];
[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0,
0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 1, 0, 0,
1, 1, 0, 0, 1, 1, 0, 0, 1, 1, 0, 0, 1, 1, 0, 1, 0, 1, 0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0,
1, 0, 0, 1, 0, 1, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 0, 1, 0, 1, 1,

0, 1, 0, 1, 0, 1, 0, 0, 1, 0, 1];

[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 1, 0, 0, 1, 1, 0, 1, 0, 0, 1, 1, 0, 0, 1, 0, 1, 1, 0, 0, 1, 1, 0, 1, 0, 0, 1, 0, 1, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 0, 1, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 1, 0, 0, 1, 0, 1, 1, 0, 1, 0, 0, 1, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 0, 0, 1, 1, 0, 0, 1, 1, 0, 0, 1];

[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 0, 1, 0, 1, 0, 1, 0, 1, 1, 0, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 1, 0, 0, 1, 1, 0, 0, 1];

[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 1, 0, 0, 1, 1, 0, 0, 1, 1, 0, 0, 1, 0, 1, 1, 0, 1, 0, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 0, 1, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 0, 1, 0, 1, 0, 1, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 0, 1, 1, 0, 1, 0, 1, 0, 1, 0, 0, 1, 1, 0, 0, 1, 1, 0, 1, 0, 0, 1, 1, 0, 0, 1, 0, 1, 1, 0, 0, 1, 1, 0, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 0, 1, 1, 0, 1, 0, 1, 0, 1, 0, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1];

[0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 0, 1, 1, 0, 1, 0, 0, 1, 0, 1, 1, 0, 1, 0, 1, 0, 1, 0, 0, 1, 1, 0, 0, 1, 0, 1, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 1, 0, 0, 1, 0, 1, 0, 1, 0, 0, 1, 1];

0, 0, 1, 1, 0, 0, 1, 1, 0, 0, 1];

[0, 1, 1, 0, 0, 1, 1, 0, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 1, 0, 0, 1, 1, 0, 0, 1];

[0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 0, 0, 1, 0, 1, 0, 1, 0, 1, 1, 0, 1, 0, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1];

[0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 0, 1, 0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0,

0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1,
1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1,
0, 0, 1, 0, 1, 1, 0, 1, 0, 0, 1];

[0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0,
1, 0, 1, 1, 0, 1, 0, 1, 0, 1, 0, 0, 1, 0, 1, 1, 0, 0, 1, 0, 1, 1, 0, 0, 1, 1, 0, 1, 0, 1, 0, 0, 1, 0, 1, 1, 0, 0, 1, 1, 0, 0, 1, 1, 0, 0, 1,
0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 0,
1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 0, 1,
1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1,
0, 0, 1, 0, 1, 1, 0, 1, 0, 0, 1];

[0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0,
1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0,
1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 0, 1, 0,
1, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0,
1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 0, 0, 1, 0, 1,
1, 0, 0, 1, 1, 0, 1, 0, 0, 1];

[0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0,
1, 0, 1, 1, 0, 1, 0, 0, 1, 0, 1, 1, 0, 1, 0, 1, 0, 0, 1, 0, 1, 1, 0, 1, 0, 0, 1, 1, 0, 0, 1, 1, 0, 0, 1, 1, 0, 1, 0, 0, 1, 1, 0, 0, 1, 1, 0, 0, 1, 0, 1,
0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 1, 0, 1,
0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 0, 1, 1, 0, 1, 0,
0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0,
1, 1, 0, 0, 1, 1, 0, 1, 0, 0, 1];

[0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1,
0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 1, 0,
1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 1,
0, 1, 0, 0, 0, 1, 1, 0, 1, 0, 0, 1, 0, 1, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 0, 0, 1,
0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 1, 0, 1, 0, 0, 1, 0, 1, 0, 1, 1, 0, 1, 0, 0, 1, 1, 0, 0,
1, 1, 0, 0, 1, 0, 1, 0, 1, 0, 1, 0, 1];

[0, 1, 0, 1, 0, 1, 0, 1, 1, 0, 0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1,
1, 0, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 0, 1, 0, 1, 0, 1,
0, 1, 1, 0, 1, 0, 0, 1, 1, 0, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 0,
1, 0, 1, 1, 0, 1, 0, 1, 0, 0, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 0, 1,
0, 1, 1, 0, 0, 1, 0, 1, 1, 0, 1, 0, 0, 1, 1, 0, 0, 1, 1, 0, 1, 0, 1, 0, 1, 0, 1, 0, 1, 0, 1, 0, 0, 1, 1, 0, 1, 0, 0, 1, 0, 1, 0, 1, 1, 0, 1, 0, 0, 1, 1, 0, 0,
1, 1, 0, 0, 1, 0, 1, 0, 1, 0, 1];

[0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 0, 1, 1, 0, 0, 1, 0, 1, 1, 0, 1, 0, 1, 0, 1, 0, 0, 1, 0, 1, 1,
0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0,
0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 1, 0,
1, 0, 1, 1, 0, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 1, 0, 1, 0, 0, 1, 0, 1, 1, 0, 0, 0, 1,
0, 1, 1, 0, 0, 1, 0, 1, 1, 0, 1, 0, 0, 0, 1, 1, 0, 0, 1, 1, 0, 1, 0, 1, 0, 1, 0, 1, 0, 1, 0, 0, 1, 1, 0, 1, 0, 0, 0, 1, 0, 1, 0, 1, 1, 0, 1, 0, 0, 0, 1, 0, 1, 0,
1, 1, 0, 0, 1, 0, 1, 0, 1, 0, 1];

[0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 0, 1, 1, 0, 0, 1, 0, 1, 1, 0, 1, 0, 1, 0, 1, 0, 0, 1, 0, 1, 1,
0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 1, 0, 1, 0, 1, 0, 1, 0, 0, 1, 0, 1, 0, 1,
1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 0,
1, 0, 1, 1, 0, 1, 0, 1, 0, 0, 0, 1, 1, 0, 0, 1, 0, 1, 1, 0, 1, 0, 1, 0, 0, 1, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 0, 1,
0, 1, 1, 0, 0, 1, 0, 1, 1, 0, 1, 0, 0, 0, 1, 1, 0, 0, 1, 1, 0, 1, 0, 1, 0, 1, 0, 1, 0, 1, 0, 0, 1, 1, 0, 1, 0, 0, 0, 1, 0, 1, 0, 1, 1, 0, 1, 0, 0, 0, 1, 0, 1, 0,
1, 1, 0, 0, 1, 0, 1, 0, 1, 0, 1];

[0, 1, 0, 1, 1, 0, 0, 1, 0, 1, 0, 1, 1, 0, 0, 1, 0, 1, 1, 0, 1, 0, 1, 0, 0, 1, 1, 0, 1, 0, 1, 0, 1, 0, 1, 0, 1, 0, 0, 1, 0, 1, 0, 1, 0, 1, 1, 0, 1, 0, 1,
0, 0, 1, 1, 0, 1, 0, 0, 1, 1, 0, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 0, 1, 0, 1, 0, 1, 1, 0,
1, 0, 1, 0, 0, 1, 1, 0, 1, 0, 0, 1, 0, 1, 0, 0, 1, 1, 0, 0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 1, 0, 0,
1, 0, 1, 0, 1, 1, 0, 0, 1, 0, 1, 0, 1, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 0, 1,
1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 0, 1, 0, 1, 1, 0, 0, 1, 0, 1, 1, 0, 0,
1, 0, 1, 0, 1, 1, 0, 0, 1, 0, 1];

[0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 1,

0, 1, 0, 1, 0, 0, 1, 0, 1, 0, 1, 0, 1, 1, 0, 0, 1, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 0, 1, 0, 0, 1, 0, 1, 0, 1, 0, 1, 1, 0, 1, 0, 0, 1, 0, 1, 0, 1, 1, 0, 0, 1, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 0, 1, 0, 0, 1, 0, 1, 1, 0, 0, 1, 1, 0, 1, 0, 0, 0, 1, 1, 0, 1, 0, 1, 0, 0, 1];

[0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 0, 1, 0, 1, 0, 1, 1, 0, 0, 1, 1, 0, 1, 0, 1, 0, 0, 1, 1, 0, 0, 1, 0, 1, 0, 1, 1, 0, 0, 1, 0, 1, 0, 0, 1, 1, 0, 1, 0, 0, 1, 1, 0, 1, 0, 0, 1, 1, 0, 1, 0, 1, 0, 0, 1, 1, 0, 0, 1];

[0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 1, 0, 1, 0, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1];

[0, 1, 0, 1, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 1, 0, 0, 1, 0, 1, 1, 0, 0, 1, 0, 1, 0, 1, 1, 0, 0, 1, 0, 1, 1, 0, 1, 0, 0, 1, 1, 0, 1, 0, 1, 0, 0, 1, 1, 0, 0, 1, 1, 0, 1, 0, 1, 0, 1, 0, 0, 1, 1, 0, 0, 1, 1, 0, 1, 0, 1, 0, 1, 0, 0, 1, 1, 0, 0, 1, 0, 1, 0, 1, 0, 0, 1, 1, 0, 0, 1, 1, 0, 1, 0, 1, 0, 0, 0, 1, 1, 0, 0, 1, 1, 0, 1, 0, 1, 0, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 0, 1, 0, 1, 0, 1, 1, 0, 0, 1, 0, 1, 0, 1, 0, 1, 0, 1, 0, 0, 1, 0, 1, 0, 1, 1, 0, 0, 1, 0, 1, 0, 1, 0, 1, 0, 1, 0, 0, 1, 0, 1, 0, 1, 0, 1, 1, 0, 1, 0, 0, 0, 1, 1, 0, 0, 1, 0, 1];

[0, 1, 1, 0, 1, 0, 1, 0, 1, 0, 0, 1, 0, 1, 0, 1, 1, 0, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 0, 1, 1, 0, 1, 0, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 0, 0, 1, 1, 0, 0, 1, 0, 1, 1, 0, 0, 1, 0, 1, 1, 0, 0, 1, 0, 1, 0, 1, 1, 0, 0, 1, 0, 1, 0, 1, 0, 0, 1, 1, 0, 0, 1, 0, 1, 0, 1, 1, 0, 0, 1, 1, 0, 1, 0, 0, 1, 0, 1, 0, 1, 1, 0, 0, 1, 1, 0, 1, 0, 0, 1, 0, 1, 0, 1, 1, 0, 0, 1, 0, 1, 0, 1, 0, 0, 1, 1, 0, 1, 0, 1, 0, 1, 0, 0, 1];

[0, 1, 1, 0, 1, 0, 1, 0, 1, 0, 0, 1, 0, 1, 0, 1, 1, 0, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 0, 1, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 1, 0, 1, 0, 0, 0, 1, 1, 0, 1, 0, 1, 0, 0, 1, 1, 0, 1, 0, 1, 0, 0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1];

[0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 0, 1, 1, 0, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1];

[0, 1, 0, 1, 0, 1, 0, 1, 1, 0, 0, 1, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 0, 1, 1, 0, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 0, 1, 0, 1, 0, 1, 0, 0, 1];

[0, 1, 0, 1, 0, 1, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 1, 0, 1, 0, 1, 0, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 0, 1, 1, 0, 0, 1, 0, 1, 0, 1, 0, 0, 1, 1, 0, 0, 1, 0, 1, 1, 0, 1, 0, 0, 1, 1, 0, 1, 0, 0, 1, 0, 1, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 0, 1, 0, 1, 1, 0, 1, 0, 1, 0, 0, 1, 1, 0, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 1, 0, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 0, 1, 0, 1, 0, 1, 1, 0, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 0, 1, 0, 0, 1, 0, 1, 0, 1, 1, 0, 0, 1, 0, 1, 1, 0, 0, 1, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 1, 0, 1, 0, 0, 1, 1, 0, 0, 1, 0, 1, 0, 1, 0, 1, 0, 1, 0, 0, 1, 1, 0, 1, 0, 1, 0, 0, 1, 1, 0, 0, 1, 0, 1, 1, 0, 0, 1, 1, 0, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 0, 1, 0, 0, 1, 0, 1, 0, 1, 1, 0, 0, 1, 1, 0, 0, 1, 0, 1, 0, 1, 0, 1, 0, 1, 0, 1, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 0, 1, 1, 0, 0, 1, 0, 1, 1, 0, 0, 1, 1, 0, 1, 0, 0, 1, 0, 1, 0, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 1, 0, 0, 1, 1, 0, 1, 0, 1, 0, 0, 1, 0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 1, 0, 0, 1, 0, 1, 1, 0, 0, 1, 1, 0, 0, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 0, 1, 0, 0, 1, 1, 0, 1, 0, 1, 0, 1, 0, 1, 0, 0, 1, 0, 1, 0, 1, 0, 0, 1, 1, 0, 1, 0, 1, 0, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 1, 0, 1, 1, 0, 0, 1, 0, 1, 1, 0, 0, 1, 1, 0, 0, 1, 1, 0, 0, 1, 1, 0, 0, 1, 0, 1, 0, 1, 1, 0, 1, 0, 1, 0, 1, 0, 1, 0, 0, 1, 0, 1, 0, 1, 0, 1, 1, 0, 0, 1, 0, 1, 0, 1, 1, 0, 0, 1, 0, 1, 0, 1, 0, 1, 0, 1, 0, 0, 1, 1, 0, 0, 1, 0, 1, 0, 1, 1, 0, 0, 1, 0, 1, 0, 1, 0, 1, 0, 1, 0, 1, 0, 0, 1, 1, 0, 1, 0, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 0, 1, 1, 0, 0, 1, 0, 1, 0, 1, 1, 0, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 0, 1, 0, 1, 1, 0, 0, 0,

1, 1, 0, 1, 0, 1, 0, 0, 1, 0, 1];

[0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 1,
0, 0, 1, 1, 0, 0, 1, 0, 1, 0, 1, 1, 0, 1, 0, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1,
0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 1, 0, 1, 0, 0, 1, 1, 0, 0,
1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 0, 0, 1, 0, 1,
1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 0,
1, 1, 0, 0, 1, 0, 1, 0, 1, 0, 1];

[0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 1, 0, 0, 1, 0,
1, 1, 0, 0, 1, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 1, 0,
1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1,
0, 0, 1, 1, 0, 1, 0, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 1, 0, 1, 0, 1, 0,
0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 1, 0, 0, 1, 0,
1, 1, 0, 0, 1, 0, 1, 0, 1, 0, 1];

[0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 0, 1, 0, 1, 1, 0, 1, 0, 1, 0, 1, 0, 0, 1, 1, 0, 0, 1, 1,
0, 0, 1, 0, 1, 1, 0, 0, 1, 0, 1, 0, 1, 0, 1, 1, 0, 1, 0, 1, 0, 1, 0, 1, 0, 0, 1, 1, 0, 1, 0, 1, 0, 0, 1, 0, 1, 1, 0, 0, 1, 1, 0, 1, 0, 1, 0, 1, 0, 0, 1, 0, 1, 0, 1,
0, 1, 0, 1, 0, 1, 1, 0, 0, 1, 0, 1, 1, 0, 1, 0, 0, 1, 1, 0, 0, 1, 0, 1, 0, 1, 0, 1, 1, 0, 1, 0, 0, 1, 0, 1, 1, 0, 1, 0, 1, 0, 1, 0, 0, 1, 1, 0, 0, 1, 0, 1, 1,
0, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0,
1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 0, 1, 0, 1, 1, 0, 0, 1, 1, 0, 0,
1, 1, 0, 1, 0, 1, 0, 0, 1, 0, 1];

[0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 0,
1, 1, 0, 1, 0, 0, 1, 1, 0, 1, 0, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0,
1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 0, 1, 1, 0, 1, 0, 1, 0, 0,
1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 0, 1, 0, 1,
0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0,
1, 1, 0, 1, 0, 1, 0, 0, 1, 0, 1];

[0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1,
0, 1, 0, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0,
0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 0, 1, 1, 0, 1, 0, 1, 0, 1,
0, 1, 0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 1, 0,
1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 0,
1, 0, 1, 0, 1, 1, 0, 0, 1, 0, 1];

[0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 0,
1, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 0, 1,
1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 1, 0, 0, 1, 1, 0, 0, 1, 0, 1, 1, 0, 0, 1, 0, 1, 0,
1, 0, 1, 1, 0, 0, 1, 0, 1, 0, 1, 1, 0, 0, 1, 0, 1, 1, 0, 0, 1, 0, 1, 1, 0, 0, 1, 0, 1, 0, 0, 1, 1, 0, 1, 0, 1, 0, 1, 0, 0, 1, 1, 0, 1, 0, 1, 0, 0, 0, 1, 1, 0, 0, 0, 1,
0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 0,
1, 0, 1, 0, 1, 1, 0, 0, 1, 0, 1];

[0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 1,
0, 0, 1, 1, 0, 1, 0, 0, 1, 1, 0, 0, 1, 0, 1, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0,
1, 0, 0, 1, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1,
0, 0, 1, 0, 1, 0, 1, 1, 0, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1,
0, 1, 1, 0, 0, 1, 0, 1, 1, 0, 0, 1, 0, 1, 0, 1, 0, 1, 1, 0, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1,
0, 0, 1, 1, 0, 1, 0, 1, 0, 0, 1];

[0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0,
1, 1, 0, 0, 1, 0, 1, 1, 0, 0, 1, 1, 0, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 0, 1,
0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 1, 0, 1, 0, 1, 0, 1, 0, 0, 1, 0, 1, 0, 1, 1, 0, 0,
1, 1, 0, 1, 0, 1, 0, 0, 1, 1, 0, 1, 0, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1,
1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 0, 1, 0, 1, 0, 1,
0, 0, 1, 1, 0, 1, 0, 1, 0, 0, 1];

[0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 0, 1, 1, 0, 1,
0, 1, 0, 1, 0, 0, 1, 1, 0, 1, 0, 1, 0, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1,
1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 0, 1, 1, 0, 0, 1, 0, 1, 0, 1, 1, 0, 0, 1, 0, 1, 0, 1,
0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 0, 1,
0, 1, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 0, 1, 1,
0, 1, 0, 0, 1, 1, 0, 0, 1, 0, 1];

[0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 1, 0, 0, 1, 0,
1, 0, 1, 0, 1, 1, 0, 0, 1, 0, 1, 0, 1, 1, 0, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0,
0, 1, 0, 1, 0, 1, 0, 1, 1, 0, 1, 0, 1, 0, 0, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 0, 1, 1, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 1, 0,
1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 0, 1, 1,
0, 1, 0, 0, 1, 1, 0, 0, 1, 0, 1];
[0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 0, 1, 1,
0, 0, 1, 1, 0, 1, 0, 1, 0, 0, 1, 1, 0, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 1, 0, 0, 1,
0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 1,
0, 0, 1, 0, 1, 1, 0, 0, 1, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 0, 1, 0, 1,
1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0,
1, 1, 0, 1, 0, 1, 0, 1, 0, 0, 1];
[0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 1, 0, 1, 0, 1, 0, 1, 0, 0,
1, 1, 0, 0, 1, 0, 1, 0, 1, 1, 0, 0, 1, 0, 1, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 1, 0,
1, 0, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 0, 1, 1, 0, 1, 0, 1, 0, 1, 0, 1, 0, 0,
1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 1, 0,
0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0,
1, 1, 0, 1, 0, 1, 0, 1, 0, 0, 1];
[0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 0, 1, 0, 1, 0, 1, 0, 1, 1, 0, 1, 0, 1,
0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0,
1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1,
0, 1, 0, 1, 0, 0, 1, 0, 1, 0, 1, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 0, 0, 1,
0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 0, 1, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1, 1, 0, 1, 0, 1, 0, 0, 1, 0, 1, 0, 1, 0, 1, 1, 0, 1, 0, 1, 0, 1,
0, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 1, 0,
0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0,
1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 1, 0, 1, 0, 0, 1, 0, 1, 1, 0, 1, 0, 0, 1, 0, 1, 1, 0, 0, 1,
0, 1, 1, 0, 1, 0, 0, 1, 0, 1, 1, 0, 1, 0, 1, 0, 0, 0, 1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 0, 1, 0, 1, 0, 1, 0,
1, 0, 1, 0, 1, 0, 1, 0, 1, 0, 1];
[0, 1, 0, 1, 1, 0, 1, 0, 0, 1, 0, 1, 1, 0, 1, 0, 0, 0, 1, 1, 0, 1, 0, 0, 0, 1, 1, 0, 0, 1, 0, 1, 1, 0, 0, 1, 0, 1, 1, 0, 1, 0, 1, 0, 1, 0, 1, 0, 0, 1, 0, 1, 0, 1, 0, 1, 1,
0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0,
1, 0, 0, 1, 0, 1, 0, 1, 0, 1, 1, 0, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 0, 1, 1, 0, 1, 0, 0, 1, 0, 1, 0,
1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0,
0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0,
1, 0, 1, 1, 0, 1, 0, 0, 0, 1, 0, 1];
[0, 1, 0, 1, 1, 0, 1, 0, 0, 1, 0, 1, 1, 0, 1, 0, 0, 0, 1, 1, 0, 1, 0, 0, 0, 1, 1, 0, 1, 0, 0, 0, 1, 1, 0, 0, 1, 1, 0, 0, 1, 1, 0, 0, 1, 0, 1, 1, 0, 1, 0, 1, 0, 1, 0, 1, 1,
0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1,
0, 1, 1, 0, 1, 0, 1, 0, 1, 0, 0, 1, 0, 1, 0, 1, 1, 0, 1, 0, 0, 0, 1, 0, 1, 1, 0, 1, 0, 0, 0, 1, 1, 0, 0, 1, 0, 1, 0, 1, 1, 0, 1, 0, 1, 0, 0, 1, 0, 1, 1, 0, 1, 0, 1, 0,
0, 1, 0, 1, 0, 1, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 1, 0,
0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 1, 0, 0, 1, 1, 0, 1, 0, 0,
1, 0, 1, 1, 0, 1, 0, 0, 0, 1, 0, 1];
[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 0,
1, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 1, 0, 0, 1, 0, 1, 0, 1, 1, 0, 0, 1, 0, 1, 0, 1, 0, 1, 1, 0, 1, 0, 1, 0, 0,
1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1,
0, 1, 0, 0, 1, 0, 1, 0, 1, 0, 1, 0, 1, 1, 0, 0, 1, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 1, 0,
1, 0, 0, 1, 0, 1, 1, 0, 1, 0, 0, 0, 1, 1, 0, 1, 0, 0, 0, 1, 0, 1, 0, 1, 1, 0, 1, 0, 0, 1, 1, 0, 0, 1, 1, 0, 1, 0, 0, 1, 1, 0, 0, 1, 0, 1, 0, 1, 0, 1, 0,
1, 0, 1, 0, 1, 0, 1, 0, 1, 0, 1];
[0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 0, 1, 1, 0, 1, 0, 1, 0, 0, 1, 1, 0, 1, 0, 1, 0, 1, 0, 1, 0, 1, 0, 1, 0, 1, 0,
1, 1, 0, 0, 1, 1, 0, 0, 1, 1, 0, 0, 1, 1, 0, 0, 1, 0, 1, 0, 1, 0, 1, 1, 0, 1, 0, 0, 1, 1, 0, 1, 0, 0, 1, 0, 1, 0, 1, 1, 0, 0, 1, 0, 1, 1, 0, 0, 1, 1, 0,
1, 0, 1, 0, 1, 0, 0, 1, 0, 1, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0,
1, 0, 0, 1, 0, 1, 1, 0, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0,
1, 0, 0, 1, 0, 1, 1, 0, 1, 0, 0, 0, 1, 1, 0, 1, 0, 0, 0, 1, 0, 1, 0, 1, 0, 1, 0, 1, 1, 0, 1, 0, 0, 1, 1, 0, 0, 1, 1, 0, 1, 0, 0, 1, 1, 0, 1, 0, 1, 0, 0, 0,
1, 0, 1, 1, 0, 1, 0, 0, 0, 1, 0, 1];
[0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 1, 0, 1, 0, 0, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 0, 1, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1];

[0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 1, 0, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0, 1, 0, 1, 1, 0, 0, 1, 1, 0, 0, 1, 1, 0, 0, 1];

[0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 0, 1, 0, 1, 0, 1, 1, 0, 1, 0, 0, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 0, 1, 1, 0, 0, 1, 1, 0, 1, 0, 0, 1, 1, 0, 1, 0, 0, 1, 0, 1, 1, 0, 0, 1, 0, 1, 0, 1, 0, 1, 1, 0, 1, 0, 1, 0, 1, 0, 1, 0, 1, 0, 1, 0, 1, 1, 0, 0, 1, 1, 0, 0, 1, 1, 0, 0, 1];

[0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 1, 0, 0, 1, 1, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 0, 1, 1, 0, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1];

[0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 0, 1, 0, 1, 1, 0, 1, 0, 1, 0, 1, 0, 1, 0, 0, 1, 0, 1, 1, 0, 1];

[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 0, 1, 1, 0, 1, 0, 0, 1, 0, 1, 1, 0, 1, 0, 0, 1, 1, 0, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 0, 1, 1, 0, 0, 1, 1, 0, 0, 1];

[0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 1, 0, 1, 0, 1, 0, 0, 1, 1, 0, 1, 0, 0, 1, 0, 1, 1, 0, 1, 0, 0, 1, 1, 0, 1, 0, 1, 0, 0, 1, 0, 1, 1, 0, 1, 0, 0, 1, 1, 0, 1, 0, 1, 0];

[0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 1, 0, 1, 0, 0, 1, 1, 0, 0, 1, 1, 0, 0, 1, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 1, 0, 0, 1, 0, 1, 0, 1, 1, 0, 1, 0, 0, 1, 1, 0, 1, 0, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 1, 0, 0, 1, 1, 0, 0, 1, 0, 1, 1, 0, 0, 1, 1, 0, 1, 0, 0, 1, 0, 1, 1, 0, 1, 0, 0, 1, 1, 0, 0, 1, 1, 0, 0, 1, 0, 1, 0, 1, 1, 0, 0, 1, 1, 0, 1, 0, 0, 1, 0, 1, 1, 0, 0, 1, 0, 1, 0, 1, 1, 0, 0, 1, 1, 0, 1];

[0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1, 1, 0, 1, 0, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 1, 0, 1, 0, 0, 1, 0, 1, 0, 1, 1, 0, 1, 0, 0, 1, 0, 1, 1, 0, 1, 0, 0, 1,

0, 0, 1, 1, 0, 1, 0, 0, 1, 0, 1];

[0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 1,
0, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0,
1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 0, 1, 0, 1, 1, 0, 0, 1, 1,
0, 1, 0, 0, 1, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0,
1, 0, 1, 0, 0, 1, 1, 0, 0, 1, 1, 0, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 0, 1, 0, 1, 1, 0, 1,
0, 0, 1, 1, 0, 1, 0, 0, 1, 0, 1];

[0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 1,
0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1,
1, 0, 1, 0, 0, 1, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 0, 1, 1, 0, 1, 0, 0, 1, 0, 1, 0, 1, 0,
1, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0,
0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 0,
1, 0, 1, 0, 1, 1, 0, 1, 0, 0, 1];

[0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 0, 1, 0, 1, 1, 0, 0, 1, 0, 1, 0, 1, 1,
0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0,
0, 1, 0, 1, 1, 0, 1, 0, 1, 0, 0, 1, 0, 1, 0, 1, 1, 0, 1, 0, 0, 1, 1, 0, 1, 0, 1, 0, 0, 1, 1, 0, 0, 1, 0, 1, 1, 0, 0, 1, 0, 1, 1, 0, 1, 0, 1, 0, 1,
0, 0, 1, 0, 1, 0, 1, 1, 0, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0,
0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 0,
1, 0, 1, 0, 1, 1, 0, 1, 0, 0, 1];

[0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1,
0, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 0, 1,
0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 0, 1, 1, 0, 0, 1, 1, 0, 0,
1, 1, 0, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 1, 0, 1, 0, 1, 0, 1, 0, 1, 0, 1, 0,
0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 0,
1, 1, 0, 0, 1, 0, 1, 0, 1, 0, 1];

[0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1,
0, 0, 1, 0, 1, 1, 0, 0, 1, 0, 1, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 0,
1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1,
0, 0, 1, 1, 0, 0, 1, 0, 1, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0,
0, 1, 0, 1, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 0, 1, 1, 0, 1, 0, 1, 0, 1, 0, 1, 0, 0, 1, 1, 0, 0,
1, 1, 0, 0, 1, 0, 1, 0, 1, 0, 1];

[0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 1, 0, 1, 1, 0, 0, 1, 1, 0, 1, 0, 0, 1, 1,
0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 0, 1, 1, 0, 0, 1,
1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0,
1, 0, 1, 0, 1, 0, 1, 1, 0, 0, 1, 1, 0, 0, 1, 1, 0, 1, 0, 0, 1, 0, 1, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0,
1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 0, 1, 0, 1, 0, 1, 0, 1, 0, 1, 1, 0, 0, 1, 0, 1, 1, 0, 0, 1, 1,
0, 1, 0, 1, 0, 0, 1, 1, 0, 0, 1];

[0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 1, 0, 1, 1, 0, 0, 1, 1, 0, 1, 0, 0, 1, 1,
0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 1, 0, 0, 1, 1, 0,
0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1,
0, 1, 0, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1,
1, 0, 0, 1, 0, 1, 1, 0, 0, 1, 0, 1, 0, 0, 1, 1, 0, 1, 0, 0, 1, 1, 0, 1, 0, 0, 1, 0, 1, 1, 0, 0, 1, 0, 1, 0, 1, 0, 1, 0, 1, 1, 0, 0, 1, 0, 1, 1, 0, 0, 1, 0, 1, 1,
0, 1, 0, 1, 0, 0, 1, 1, 0, 0, 1];

[0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 1, 0, 1, 0, 1, 1, 0, 0, 1, 1, 0, 0, 1, 0, 1, 1,
0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 1, 0, 0, 1, 1, 0,
0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1,
0, 1, 0, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 0, 1, 1, 0, 1, 0, 0, 1, 0, 1, 1, 0, 1, 0,
1, 0, 0, 1, 0, 1, 1, 0, 0, 1, 0, 1, 0, 0, 1, 1, 0, 1, 0, 0, 1, 1, 0, 1, 0, 0, 1, 0, 1, 1, 0, 0, 1, 0, 1, 0, 1, 0, 1, 0, 1, 1, 0, 0, 1, 0, 1, 1, 0, 0, 1, 0, 1, 1,
0, 1, 0, 1, 0, 0, 1, 1, 0, 0, 1];

[0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 1,
0, 0, 1, 0, 1, 0, 1, 1, 0, 0, 1, 1, 0, 1, 0, 1, 0, 1, 0, 1, 0, 0, 1, 1, 0, 1, 0, 1, 0, 1, 0, 1, 0, 0, 1, 0, 1, 0, 1, 1, 0, 0, 1, 0, 1, 0, 1, 0, 1, 1, 0, 1, 0,
1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0,
1, 1, 0, 1, 0, 1, 0, 1, 0, 0, 1, 1, 0, 0, 1, 0, 1, 0, 0, 1, 1, 0, 1, 0, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 0, 1,
1, 0, 0, 1, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 0, 1, 0, 1, 1,
0, 0, 1, 1, 0, 1, 0, 1, 0, 0, 1];

[0, 1, 1, 0, 1, 0, 1, 0, 0, 1, 1, 0, 0, 1, 0, 1, 0, 1, 1, 0, 1, 0, 1, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1,
1, 0, 1, 0, 1, 0, 0, 1, 1, 0, 0, 1, 0, 1, 1, 0, 1, 0, 0, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1,
0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 1, 0, 0, 1, 1, 0, 0, 1, 1,
0, 1, 0, 1, 0, 1, 0, 0, 1, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 0, 0, 1, 1, 0, 1, 0, 1, 0,
1, 0, 0, 1, 1, 0, 0, 1, 0, 1, 0, 1, 1, 0, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1,
0, 0, 1, 1, 0, 1, 0, 1, 0, 0, 1];

[0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 1,
0, 1, 0, 0, 1, 1, 0, 0, 1, 0, 1, 0, 1, 1, 0, 0, 1, 0, 1, 0, 1, 1, 0, 1, 0, 0, 1, 0, 1, 1, 0, 1, 0, 0, 1, 1, 0, 0, 1, 0, 1, 0, 1, 0, 1, 1, 0, 0, 1, 0, 1, 0, 1, 1, 0, 0, 1, 0, 1, 1, 0, 0, 1, 0, 1, 1,
0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 0, 0, 1, 1,

0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 0, 1, 1, 0,
1, 0, 1, 0, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 1, 0, 1,
0, 1, 0, 0, 1, 1, 0, 0, 1, 0, 1];
[0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0,
1, 0, 1, 1, 0, 0, 1, 1, 0, 1, 0, 1, 0, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1,
1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 0, 1, 1, 0, 0, 1, 0, 1, 0, 1, 0, 1, 1, 0, 0, 1, 0,
1, 1, 0, 0, 1, 0, 1, 0, 1, 0, 1, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 0, 1, 1, 0, 0, 1,
0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1,
0, 1, 0, 0, 1, 1, 0, 0, 1, 0, 1];
[0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 0, 1, 0, 1, 1, 0, 0, 1, 1, 0, 0, 1, 1,
0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0,
0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 0, 1, 0, 1, 1, 0, 1, 0, 1, 0, 0, 1, 0, 1, 1, 0, 1, 0, 1,
0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 1, 0,
1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 1, 1, 0, 0,
1, 1, 0, 0, 1, 0, 1, 0, 1, 0, 1];
[0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 0,
1, 0, 1, 1, 0, 1, 0, 0, 1, 1, 0, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 0, 1,
1, 0, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 0,
1, 0, 1, 0, 1, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 0, 1,
0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 1, 1, 0, 0,
1, 1, 0, 0, 1, 0, 1, 0, 1, 0, 1];
[0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 0, 1, 0, 1, 1,
0, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 1, 0, 0, 1, 0, 1, 0, 1, 0, 1, 0, 1, 0, 1, 1, 0, 0, 1, 1, 0, 0, 1,
0, 1, 1, 0, 1, 0, 1, 0, 1, 0, 0, 1, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 0, 1, 1,
0, 1, 0, 0, 0, 1, 0, 1, 0, 1, 1, 0, 1, 0, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 0, 0, 1, 0, 1,
0, 1, 0, 1, 1, 0, 0, 1, 1, 0, 0, 1, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 0, 1, 1,
0, 1, 0, 0, 1, 1, 0, 1, 0, 0, 1];
[0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 0,
1, 1, 0, 0, 1, 1, 0, 0, 1, 0, 1, 0, 1, 0, 1, 1, 0, 1, 0, 1, 0, 0, 1, 0, 1, 0, 1, 1, 0, 1, 0, 1, 0, 0, 1, 0, 1, 0, 1, 0, 1, 0, 1, 0, 1, 1, 0, 0, 1, 1, 0, 1, 0,
1, 0, 0, 1, 0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 0,
1, 0, 1, 1, 0, 1, 0, 1, 0, 0, 1, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 1, 0, 1, 0, 0,
1, 0, 1, 0, 0, 1, 1, 0, 0, 1, 1, 0, 0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0, 0, 1, 0, 1, 1,
0, 1, 0, 0, 1, 1, 0, 1, 0, 0, 1];
[0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1,
0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 1, 0, 0, 1, 0, 1,
1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 0, 1, 1,
0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 0, 1, 1, 0, 0, 1, 1, 0, 1, 0, 1, 0, 1, 0, 1, 0,
1, 0, 1, 0, 1, 0, 1, 1, 0, 1, 0, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1,
0, 1, 0, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 1, 0, 0, 1, 0, 1, 1, 0, 1, 0, 1, 0,
0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 0, 1, 1, 0, 1, 0,
1, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0,
0, 1, 0, 1, 0, 1, 0, 1, 1, 0, 1, 0, 0, 1, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 0,
1, 0, 1, 0, 1, 0, 1, 0, 1, 0, 1];
[0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 1,
0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 0, 0, 1, 1, 0, 0, 1, 1, 0, 1, 0, 0, 1, 0, 1, 0, 1, 1, 0, 1, 0, 0, 0, 1,
0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 0, 0, 1, 0, 1, 1, 0, 0, 1, 1, 0, 1, 0, 0, 1, 0, 1, 1, 0, 1, 0, 0, 1, 1, 0, 1,
0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 1, 0, 1, 0,
1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 1, 0, 0, 1, 1,
0, 0, 1, 1, 0, 0, 1, 1, 0, 0, 1];
[0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 1,
0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 1, 0,
1, 0, 1, 0, 1, 0, 1, 0, 1, 0, 1, 0, 0, 1, 1, 0, 1, 0, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 0, 1, 0,
1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 0, 1, 0, 1, 0, 1, 1, 0, 1, 0, 0, 1, 1, 0, 0, 1, 0, 1, 1, 0,
1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 1, 0, 0, 1, 1, 0, 0, 1, 1,
0, 0, 1, 1, 0, 0, 1, 1, 0, 0, 1];
[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 1, 0, 0, 1, 0, 1, 0, 0, 0, 1, 1,

0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1,
1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 1,
0, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0,
1, 0, 1, 0, 1, 0, 1, 0, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 1,
0, 1, 0, 1, 0, 1, 0, 0, 1, 0, 1];
[0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1,
0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 1, 0,
0, 1, 0, 1, 1, 0, 0, 1, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 0,
1, 0, 1, 1, 0, 0, 1, 1, 0, 1, 0, 0, 1, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 1, 0, 1,
0, 1, 0, 1, 0, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0,
1, 0, 1, 0, 1, 0, 0, 1, 0, 1];
[0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 1,
0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 0, 1,
0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 1, 0, 1, 0, 1,
0, 0, 1, 0, 1, 0, 1, 0, 1, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 1, 0,
0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0,
1, 1, 0, 0, 1, 1, 0, 1, 0, 0, 1];
[0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 1, 0, 1, 0, 1,
0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 1, 0,
1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 0,
1, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1, 1, 0,
0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0,
1, 1, 0, 0, 1, 1, 0, 1, 0, 0, 1];
[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1,
0, 0, 1, 1, 0, 1, 0, 1, 0, 0, 1, 0, 1, 0, 1, 0, 1, 0, 1, 1, 0, 1, 0, 1, 0, 0, 1, 1, 0, 0, 1, 0, 1, 0, 1, 0, 1, 1, 0, 0, 1, 0, 1, 1, 0, 0, 1, 0, 1,
1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 0, 1, 0, 1, 0, 1, 1, 0, 1, 0, 1, 0, 0, 1, 1, 0, 1, 0, 1,
0, 1, 0, 0, 1, 1, 0, 1, 0, 0, 1, 1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 0, 1, 0, 1,
0, 1, 1, 0, 1, 0, 1, 0, 0, 1, 1, 0, 1, 0, 1, 0, 1, 0, 0, 1, 1, 0, 1, 0, 0, 0, 1, 1, 0, 0, 1, 1, 0, 0, 1, 1, 0, 0, 1, 0, 1, 1, 0, 0, 1, 1,
0, 1, 0, 1, 0, 0, 1, 0, 1, 0, 1];
[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 1,
0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0,
0, 1, 1, 0, 1, 0, 0, 0, 1, 1, 0, 1, 0, 1, 0, 1, 0, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 0,
1, 0, 1, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 0, 1,
0, 1, 1, 0, 1, 0, 1, 0, 1, 0, 0, 1, 1, 0, 1, 0, 0, 0, 1, 1, 0, 0, 1, 1, 0, 0, 1, 1, 0, 0, 1, 1, 0, 0, 1, 0, 1, 1, 0, 0, 1, 0, 1, 0, 1, 1, 0, 0, 1, 1,
0, 1, 0, 1, 0, 0, 1, 0, 1, 0, 1];
[0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1, 0, 1, 1, 0, 0, 1, 0, 1, 0, 1, 1,
0, 0, 1, 1, 0, 1, 0, 1, 0, 0, 1, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 1, 0,
0, 1, 1, 0, 1, 0, 0, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 0, 1, 0,
1, 0, 1, 1, 0, 0, 1, 0, 1, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 0, 0, 1, 0, 1,
0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 1,
0, 1, 0, 1, 0, 0, 1, 0, 1, 0, 1];
[0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 1, 0, 0, 1, 1, 0, 0, 1, 0, 1, 0, 1, 1,
0, 0, 1, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 0, 1, 0, 1,
1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1,
0, 1, 0, 0, 1, 1, 0, 1, 0, 0, 1, 1, 0, 1, 0, 0, 1, 1, 0, 1, 0, 0, 1, 1, 0, 1, 0, 1, 0, 0, 1, 1, 0, 0, 1, 1, 0, 1, 0, 1, 0, 0, 1, 1, 0, 1, 0, 1, 0, 1, 0, 0, 1, 1,
0, 1, 0, 1, 0, 0, 1, 0, 1, 0, 1];
[0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0,
1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 0, 1,
1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 0, 1,
0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0,
1, 1, 0, 0, 1, 0, 1, 0, 1, 0, 1];
[0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1,
0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0,
0, 1, 1, 0, 0, 1, 0, 1, 0, 1, 1, 0, 1, 0, 0, 1, 1, 0, 0, 1, 0, 1, 1, 0, 0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 0, 1, 0, 1];

[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 1, 0, 1, 0, 0, 1, 0, 1, 1, 0, 1, 0, 1, 0, 0, 1, 0, 1, 0, 1, 1, 0, 0, 1, 1, 0, 0, 1, 0, 1, 0, 1, 1, 0, 1, 0, 1, 0, 0, 1, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 1, 0, 0, 1, 1, 0, 1, 0, 0, 1];

[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 1, 0, 1, 1, 0, 1, 0, 1, 0, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 0, 1, 0, 1, 0, 1, 1, 0, 0, 1, 1, 0, 0, 1, 0, 1, 0, 1, 1, 0, 1, 0, 0, 1, 0, 1, 0, 1, 1, 0, 0, 1, 1, 0, 0, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1];

[0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 0, 1, 0, 0, 1, 1, 0, 1, 0, 0, 1, 0, 1, 1, 0, 1, 0, 0, 1, 1, 0, 1, 0, 0, 1, 1, 0, 1, 0, 0, 1, 1, 0, 0, 1, 0, 1, 0, 1, 1, 0, 1, 0, 0, 1, 0, 1, 1, 0, 1, 0, 0, 1, 1, 0, 1, 0, 0, 1, 1, 0, 1, 0, 0, 1, 1, 0, 0, 1, 0, 1, 0, 1, 1, 0, 1, 0, 0, 1, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 1, 0, 1, 0, 0, 1, 1, 0, 0, 1, 0, 1, 0, 1, 0, 1, 0, 1, 0, 1, 0, 1];

[0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 0, 1, 0, 1, 0, 1, 0, 0, 1, 0, 1, 1, 0, 1, 0, 0, 1, 0, 1, 0, 1, 0, 1, 0, 1, 0, 0, 1, 0, 1, 0, 1, 0, 1, 0, 1, 0, 1];

[0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 1, 0, 1, 0, 0, 1, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 0, 1, 0, 1, 0, 0, 1, 1, 0, 1, 0, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 1, 0, 1, 0, 0, 1, 0, 1, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 0, 0, 1, 1, 0, 1, 0, 0, 1, 0, 1, 0, 1, 0, 1, 0, 1];

[0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 1, 0, 1, 0, 1, 0, 1, 0, 1, 0, 1, 0, 0, 1, 0, 1, 0, 1, 1, 0, 1, 0, 1, 0, 1, 0, 1, 0, 1, 0, 1, 0, 1, 0, 1, 1, 0, 1, 0, 1, 0, 0, 1, 1, 0, 0, 1, 0, 1, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 1, 0, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 1, 0, 1, 0, 1, 0, 0, 1, 0, 1, 0, 1, 1, 0, 0, 1, 0, 1, 1, 0, 1, 0, 1, 0, 0, 1, 0, 1, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 1, 0, 1, 0, 1, 0, 1, 0, 1];

[0, 1, 0, 1, 0, 1, 0, 1, 1, 0, 1, 0, 1, 0, 1, 0, 0, 1, 1, 0, 1, 0, 1, 0, 0, 1, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 1, 0, 0, 1, 0, 1, 1, 0, 1, 0, 0, 1, 1, 0, 1, 0, 1, 0, 0, 1, 0, 1, 1, 0, 0, 1, 1, 0, 1, 0, 0, 1, 0, 1, 0, 0, 1, 0, 1, 0, 1, 0, 1];

[0, 1, 0, 1, 0, 1, 0, 1, 1, 0, 1, 0, 1, 0, 1, 0, 0, 1, 1, 0, 1, 0, 1, 0, 0, 1, 1, 0, 0, 1, 0, 1, 0, 1, 0, 1, 0, 1, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 1, 0, 0, 1, 0, 1, 1, 0, 1, 0, 0, 1, 1, 0, 0, 1, 0, 1, 0, 1, 1, 0, 0, 1, 1, 0, 0, 1, 1, 0, 1, 0, 1];

[0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 0, 1, 0, 1, 1, 0, 0, 1, 1, 0, 0, 1, 1, 0, 0, 1, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 0, 0, 1, 0, 1, 1, 0, 1, 0, 0, 1, 0, 1];

[0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 0, 1, 0, 1, 0, 1, 0, 1, 0, 1, 0, 1, 0, 1, 0, 0, 1, 0, 1, 1, 0, 0, 1, 1, 0, 1, 0, 0, 1, 0, 1];

[0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 1, 0, 1, 0, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 1, 0, 0, 1, 1, 0, 1, 0, 0, 1, 1, 0, 1, 0, 0, 1, 0, 1, 1, 0, 1, 0, 0, 1, 1, 0, 1, 0, 1, 0, 1, 0, 1, 0, 0, 1, 0, 1, 0, 1, 1, 0, 1, 0, 0, 1, 0, 1, 0, 1, 1, 0, 1, 0, 0, 1, 1, 0, 0, 1, 1, 0, 0, 1, 0, 1, 0, 1, 1, 0, 1, 0, 0, 1, 1, 0, 1, 0, 0, 1, 1, 0, 1, 0, 1, 0, 1];

[0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 0, 1, 0, 1, 1, 0, 0, 1, 0, 1, 1, 0, 0, 1, 0, 1, 0, 1, 1, 0, 1, 0, 1, 0, 1, 0, 1, 0, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1,
0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 1, 0, 0,
1, 0, 1, 1, 0, 1, 0, 0, 1, 0, 1];
[0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 1,
0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 0, 1, 0, 1,
0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0,
1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 1, 0, 0, 1,
1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 1,
0, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 0, 1, 1, 0, 1, 0, 1, 0, 0, 1, 1, 0, 0, 1, 0, 1, 1, 0, 1, 0,
1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 1,
0, 0, 1, 0, 1, 1, 0, 1, 0,0, 1, 0, 1, 0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1,
1, 0, 0, 1, 0, 1, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 0,
1, 1, 0, 0, 1, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 0, 1, 1, 0, 1, 0, 0, 1, 1, 0,
1, 0, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0,
0, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0,
0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 0,
1, 0, 1, 0, 1, 0, 1, 0, 1, 0, 1];
[0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0,
1, 1, 0, 0, 1, 1, 0, 1, 0, 0, 1, 1, 0, 0, 1, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 0, 1,
0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0,
1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 0, 1, 1, 0,
0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 0,
1, 0, 1, 0, 1, 0, 1, 0, 1, 0, 1];
[0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 1, 0, 0, 1, 1, 0, 1, 0, 0, 1, 1, 0, 1, 0, 0, 1, 0, 1, 0,
1, 1, 0, 0, 1, 1, 0, 0, 1, 1, 0, 0, 1, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0,
1, 0, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 1, 0, 0, 1, 1, 0, 0, 1, 1, 0, 0, 1, 1, 0, 0, 1, 0,
1, 1, 0, 1, 0, 1, 0, 1, 0,0, 1, 0, 1, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 1, 0, 0, 1,
1, 0, 0, 1, 1, 0, 0, 1, 1, 0, 0, 1, 0, 1, 0, 1, 1, 0, 1, 0, 0, 1, 0, 1, 1, 0, 1, 0, 0, 1, 1, 0, 1, 0, 0, 1, 1,0, 0, 1, 0, 1, 1, 0, 1, 0, 1, 0, 1,
0, 1, 0, 0, 1, 0, 1, 0, 1, 0, 1];
[0, 1, 0, 1, 0, 1, 0, 1, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 1, 0, 1, 0, 0, 1, 0, 1, 0,
1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 1, 0, 0, 1, 0, 1, 1, 0, 1, 0, 0, 1, 0, 1,
0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1,
0, 0, 1, 0, 1, 0, 1, 0, 1, 1, 0, 1, 0, 1, 0, 0, 1, 0, 1, 1, 0, 1, 0, 1, 0, 0, 1, 0, 1, 1, 0, 0, 1, 0, 1, 1, 0, 1, 0, 0, 1, 1, 0, 1, 0, 1, 0, 1, 0, 1,
1, 0, 0, 1, 1, 0, 0, 1, 1, 0, 0, 1, 0, 1, 0, 1, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 1, 0, 1, 0, 1,
0, 1, 0, 0, 1, 0, 1, 0, 1, 0, 1];
[0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 1, 0, 0, 1, 0, 1, 1, 0, 1, 0, 0, 0, 1, 0,
1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1,
1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1,
0, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1,
0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0,
1, 1, 0, 1, 0, 0, 1, 1, 0, 0, 1];
[0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 0, 1, 1, 0, 1, 0, 1, 0, 1, 0, 0, 1, 0, 1, 1, 0, 1, 0, 0, 0, 1, 0,
1, 0, 1, 0, 1, 0, 1, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 1, 0, 0,
0, 1, 0, 1, 1, 0, 0, 1, 1, 0, 1,0, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 1, 0, 0,
1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 1,
0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 0, 1, 1, 0, 0,
1, 1, 0, 1, 0, 0, 1, 1, 0, 0, 1];
[0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 0, 1, 1, 0, 1, 0, 0, 0, 1, 1,
0, 1, 0, 1, 0, 1, 0, 0, 1, 0, 1, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0,
0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 1,
0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 0, 1, 0, 1,
0, 1, 0, 1, 1, 0, 1, 0, 1, 0, 1, 0, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1,
0, 0, 1, 1, 0, 0, 1, 1, 0, 0, 1];
[0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 0, 1, 0, 1, 1, 0, 0, 1, 1, 0, 1, 0, 0, 0, 1, 1,

0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1];
[0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 1, 0, 1, 0, 1, 0, 1, 0, 0, 1, 0, 1, 0, 1, 0, 1, 0, 1, 1, 0, 1, 0, 1, 0, 1, 0, 1, 0, 0, 1, 0, 1, 0, 1, 1, 0, 0, 1, 1, 0, 1, 0, 0, 1, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 0, 1, 0, 1, 0, 1, 0, 1, 0, 0, 1, 0, 1, 1, 0, 0, 1, 1, 0, 1, 0, 0, 1, 1, 0, 0, 1];
[0, 1, 1, 0, 0, 1, 1, 0, 1, 0, 0, 1, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1, 1, 0, 0, 1];
[0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 0, 1, 0];
[0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 1, 0, 0, 1, 1, 0, 1, 0, 0, 1, 0, 1, 0, 1, 0, 1, 0, 1, 0, 1, 1, 0, 0, 1, 0, 1, 0, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 1, 0, 0, 1];
[0, 1, 1, 0, 0, 1, 1, 0, 1, 0, 0, 1, 1, 0, 0, 1, 1, 0, 1, 0, 0, 1, 0, 1, 0, 1, 0, 1, 0, 1, 1, 0, 1, 0, 1, 0, 0, 1, 1, 0, 1, 0, 1, 0, 0, 1, 0, 1, 1, 0, 0, 1, 1, 0, 0, 1, 1, 0, 0, 1, 1, 0, 1, 0, 1, 0, 0, 1, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 0, 1, 1, 0, 1, 0, 0, 1, 1, 0, 0, 1, 0, 1, 1, 0, 1, 0, 1, 0, 0, 1, 1, 0, 1, 0, 0, 1, 0, 1, 1, 0, 1, 0, 1, 0, 1, 0, 0, 1, 1, 0, 1, 0, 0, 1, 0, 1, 0, 1, 0, 1, 0, 1, 0, 1, 0, 1, 0, 0, 1, 0, 1, 0, 1, 0, 1, 0, 1, 1, 0, 0, 1, 0];
[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 0];
[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 0, 1, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 1, 0, 1, 0, 1, 0];
[0, 1, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 1, 0, 0, 1, 1, 0, 0, 1, 1, 0, 1, 0, 1, 0, 0, 1, 1, 0, 0, 1, 0, 1, 0];
[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 0, 1, 1, 0, 0, 1, 1, 0, 0, 1];

1, 1, 0, 1, 0, 0, 1, 1, 0, 0, 1];

[0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0,
1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 1, 0, 1, 0, 0, 1, 0, 1, 1, 0, 1, 0, 0, 1,
1, 0, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 1,
0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 1, 0, 0, 1, 0, 1, 0, 1,
0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 1, 0, 0,
1, 1, 0, 1, 0, 0, 1, 1, 0, 0, 1];

[0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 0, 1, 0, 1, 0, 1, 0, 1, 0, 1, 0, 1, 1, 0, 1, 0, 1, 0, 1,
0, 0, 1, 1, 0, 0, 1, 0, 1, 1, 0, 1, 0, 0, 0, 1, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1,
0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1,
0, 1, 0, 1, 0, 0, 1, 0, 1, 1, 0, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1,
0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0,
1, 0, 1, 0, 1, 0, 1, 0, 1, 0, 1];

[0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 1, 0, 1, 0, 1, 0, 0, 1, 0, 1, 0,
1, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0,
1, 0, 0, 1, 0, 1, 1, 0, 1, 0, 1, 0, 1, 0, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 0,
1, 0, 1, 0, 1, 1, 0, 1, 0, 0, 1, 0, 1, 0, 1, 1, 0, 0, 1, 1, 0, 0, 1, 0, 1, 0, 0, 1, 1, 0, 1, 0, 1, 0, 1, 0, 1, 0, 0, 1, 0, 1, 1, 0, 1, 0, 0, 1, 1, 0,
1, 0, 0, 1, 0, 1, 1, 0, 0, 1, 1, 0, 1, 0, 1, 0, 0, 1, 0, 1, 0, 1, 0, 1, 0, 1, 0, 1, 0, 1, 1, 0, 1, 0, 0, 1, 0, 1, 1, 0, 0, 1, 1, 0, 1, 0, 1, 0, 1, 0, 0,
1, 0, 1, 0, 1, 0, 1, 0, 1, 0, 1];

[0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 0, 1, 1, 0, 1, 0, 1, 0, 0, 1, 0, 1, 1, 0, 0, 1, 1, 0, 1,
0, 1, 0, 0, 1, 0, 1, 0, 1, 0, 1, 0, 1, 0, 1, 0, 1, 1, 0, 0, 1, 1, 0, 0, 1, 1, 0, 1, 0, 1, 0, 0, 1, 1, 0, 1, 0, 1, 0, 1, 0, 0, 1, 0, 1, 1, 0, 1, 0, 1, 0,
0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 1,
0, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 1, 0, 1, 0, 1,
0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0,
0, 1, 0, 1, 1, 0, 1, 0, 0, 1];

[0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 1, 0, 0, 1, 1, 0, 0, 1, 0,
1, 0, 1, 1, 0, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 0, 1,
1, 0, 0, 1, 1, 0, 0, 1, 1, 0, 1, 0, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0,
1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1,
0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 0, 1, 0, 1, 0, 1, 0, 1, 0, 1, 1, 0, 1, 0, 1, 0, 0, 1, 1,
0, 0, 1, 0, 1, 1, 0, 1, 0, 0, 1];

[0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0,
1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1,
0, 1, 1, 0, 1, 0, 1, 0, 0, 1, 1, 0, 0, 1, 1, 0, 1, 0, 1, 0, 1, 0, 1, 1, 0, 0, 1, 1, 0, 0, 1, 1, 0, 1, 0, 1, 0, 1, 0, 0, 1, 1, 0, 0, 1, 1, 0, 0, 1, 0, 1, 0, 1,
1, 1, 0, 0, 1, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0,
1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 0,
1, 1, 0, 0, 1, 0, 1, 0, 1, 0, 1];

[0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1, 1, 0, 1, 0, 1, 0, 1, 0, 1, 0, 0, 1, 1, 0, 1, 0, 0, 0, 1, 1,
0, 1, 0, 1, 0, 1, 0, 0, 1, 1, 0, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0,
1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 0, 1, 1,
0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0, 0, 1,
0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 0, 1, 0, 1, 0, 0, 1, 0,
1, 1, 0, 0, 1, 0, 1, 0, 1, 0, 1];

[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 0,
1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1,
1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 1, 0, 1, 0, 1,
0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1,
0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0,
1, 0, 0, 1, 1, 0, 1, 0, 0, 1];

[0, 1, 1, 0, 1, 0, 0, 1, 1, 0, 1, 0, 1, 0, 1, 0, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1,
0, 0, 1, 0, 1, 1, 0, 0, 1, 0, 1, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0,
0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 0, 1, 1, 0, 0, 1, 0, 1, 0,
1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 1, 0, 1, 0,
1, 0, 1, 0, 0, 1, 1, 0, 1, 0, 0, 1, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 1, 0, 1,
0, 1, 0, 0, 1, 1, 0, 1, 0, 0, 1];

[0, 1, 0, 1, 0, 1, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 1, 0, 0, 1, 1, 0, 1,
0, 0, 1, 0, 1, 1, 0, 1, 0, 1, 0, 0, 1, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 1, 0,
0, 1, 1, 0, 0, 1, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 1, 0, 0, 1, 0, 1, 0, 1, 1, 0, 0, 1, 1, 0, 0, 1, 0,
1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0,
1, 0, 1, 0, 0, 1, 1, 0, 1, 0, 0, 1, 1, 0, 1, 0, 1, 0, 1, 0, 0, 1, 1, 0, 1, 0, 0, 1, 0, 1, 0, 1, 0, 1, 1, 0, 0, 1, 0, 1, 1, 0, 1, 0, 1, 0, 1, 0, 1,
0, 1, 0, 0, 1, 1, 0, 1, 0, 0, 1];

[0, 1, 0, 1, 0, 1, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 1, 0, 1, 1, 0, 0, 1, 1, 0, 1,
0, 0, 1, 0, 1, 1, 0, 1, 0, 1, 0, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0,
1, 0, 0, 1, 0, 1, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 0, 1, 1, 0, 0, 1, 1, 0, 0, 1, 1,

0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 1, 0, 1, 0, 0, 1, 0, 1, 1, 0, 1, 0,
0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 1,
0, 0, 1, 0, 1, 0, 1, 0, 1, 0, 1];
[0, 1, 0, 1, 0, 1, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0,
1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 1, 0, 0, 1,
0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 0,
1, 0, 1, 1, 0, 0, 1, 0, 1, 1, 0, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 0, 1, 0, 1, 0, 1,
1, 0, 1, 0, 1, 0, 0, 0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 1, 0, 0, 1, 0, 1, 1, 0, 1, 0, 0, 1, 1,
0, 0, 1, 0, 1, 0, 1, 0, 1, 0, 1];
[0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1,
0, 0, 1, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 0, 1, 0, 1,
0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 1, 0, 1, 0, 0, 1, 1, 0, 0,
1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 1, 0, 1, 0,
1, 0, 1, 0, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 1, 0, 0, 1, 0,
1, 1, 0, 1, 0, 1, 0, 0, 1, 0, 1];
[0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 0, 1, 0,
1, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 0, 1, 1, 0,
1, 0, 1, 0, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 0, 1, 0, 1, 1, 0, 0, 1, 1,
0, 0, 1, 1, 0, 0, 1, 0, 1, 0, 1, 0, 1, 0, 1, 1, 0, 1, 0, 1, 0, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1,
0, 1, 0, 1, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 0, 1, 1, 0, 1, 0, 0, 1, 0,
1, 1, 0, 1, 0, 1, 0, 0, 1, 0, 1];
[0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1,
0, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 1, 0,
0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 1,
0, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1,
0, 1, 1, 0, 1, 0, 0, 1, 1, 0, 0, 1, 0, 1, 0, 1, 0, 1, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0,
1, 0, 1, 0, 1, 0, 1, 0, 1, 0, 1];
[0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 1, 0, 1, 0, 0, 1, 0, 1, 0,
1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 0, 1,
1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0,
1, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0,
1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0, 0, 1, 0, 1, 1, 0, 0, 1, 1, 0, 1, 0, 1, 0, 1, 0, 0,
1, 0, 1, 0, 1, 0, 1, 0, 1, 0, 1];
[0, 1, 1, 0, 1, 0, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 0, 1, 1, 0, 1, 0, 0, 1, 0, 1, 1, 0, 0, 1, 1, 0, 1,
0, 1, 0, 0, 1, 0, 1, 0, 1, 0, 1, 0, 1, 0, 1, 0, 1, 1, 0, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1,
0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 1,
0, 1, 0, 1, 0, 0, 1, 0, 1, 1, 0, 1, 0, 0, 1, 1, 0, 0, 1, 1, 0, 0, 1, 1, 0, 1, 0, 0, 1, 1, 0, 1, 0, 1, 0, 1, 0, 0, 1, 1, 0, 1, 0, 1, 0, 1, 0, 1, 0,
1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1,
0, 0, 1, 0, 1, 1, 0, 1, 0, 0, 1];
[0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 1, 0, 0, 1, 0,
1, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0,
1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0,
1, 0, 1, 0, 1, 1, 0, 1, 0, 0, 1, 0, 1, 0, 1, 1, 0, 0, 1, 0, 1, 0, 1, 1, 0, 1, 0, 0, 1, 0, 1, 1, 0, 1, 0, 0, 1, 0, 1, 0, 1, 0, 1, 0, 0, 1, 0, 1, 1, 0, 1, 0, 0, 1, 0, 1,
0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 1,
0, 0, 1, 0, 1, 1, 0, 1, 0, 0, 1];
[0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 0, 1, 1, 0, 1, 0, 1, 0, 0, 1, 0, 1, 0,
1, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0,
0, 1, 1, 0, 0, 1, 0, 1, 0, 1, 1, 0, 1, 0, 1, 0, 1, 0, 1, 0, 0, 1, 1, 0, 1, 0, 0, 1, 1, 0, 0, 1, 0, 1, 1, 0, 1, 0, 0, 1, 0, 1, 0, 1, 0, 1, 0, 1, 0,
1, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 0, 1, 0, 1, 1, 0, 1, 0, 0, 1, 0, 1, 1, 0, 1, 0, 0, 0, 1,
0, 1, 1, 0, 0, 1, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 1, 0, 1, 0, 0, 1, 0, 1, 1, 0, 1, 0, 1,
0, 1, 0, 0, 1, 1, 0, 1, 0, 0, 1];
[0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 0, 1, 1, 0, 1, 0, 0, 1, 0, 1, 0, 1, 0,
1, 0, 1, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1,
1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 0, 0, 1, 1, 0, 1, 0, 1, 0, 1, 0, 0, 1, 0, 1,
0, 1, 1, 0, 1, 0, 1, 0, 1, 0, 0, 1, 1, 0, 0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 1, 0, 1, 0, 0, 1,
0, 1, 0, 0, 1, 1, 0, 1, 0, 0, 1];
[0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 1, 0, 0, 1, 1, 0, 0, 1, 1, 0, 1, 0, 1, 0, 1, 1, 0, 0, 1, 0, 1, 1, 0, 1, 0, 0, 0, 1, 0, 1, 0, 1, 0, 1, 0, 1, 0, 1, 1, 0, 0, 1, 0, 1, 1, 0, 1, 0, 0, 0, 1, 0, 1, 1, 0, 0, 1, 0, 1, 0, 1, 0, 1, 1, 0, 1, 0, 0, 0, 1, 0, 1, 0, 1, 0, 1, 1, 0, 1, 0, 0, 0, 1, 0, 1, 0, 1, 0, 1, 1, 0, 1, 0, 1, 0, 1, 0, 1, 0, 1, 0, 1;
0, 1, 0, 0, 1, 1, 0, 1, 0, 0, 1];

[0, 1, 1, 0, 1, 0, 0, 1, 1, 0, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 1, 0, 1, 0, 0, ...];

[0, 1, 0, 1, 0, 1, 1, 0, 0, 1, 0, 1, 1, 0, 0, 1, 1, 0, 1, 0, 1, 0, 0, 1, 1, 0, 1, 0, 0, ...];

[0, 1, 0, 1, 0, 1, 1, 0, 0, 1, 0, 1, 1, 0, 0, 1, 1, 0, 1, 0, 1, 0, 0, 1, 1, 0, 1, 0, 0, ...];

[0, 1, 1, 0, 0, 1, 0, 1, 1, 0, 0, 1, 0, 1, 0, 1, 1, 0, 0, 1, 1, 0, 1, 0, 0, 1, 1, 0, 1, ...];

[0, 1, 1, 0, 0, 1, 0, 1, 1, 0, 0, 1, 0, 1, 0, 1, 1, 0, 0, 1, 1, 0, 1, 0, 0, 1, 1, 0, 1, ...];

[0, 1, 1, 0, 1, 0, 1, 0, 0, 1, 1, 0, 1, 0, 1, 0, 1, 0, 1, 0, 0, 1, 1, 0, 0, 1, 0, 1, 1, ...];

[0, 1, 1, 0, 1, 0, 1, 0, 0, 1, 1, 0, 1, 0, 1, 0, 1, 0, 1, 0, 0, 1, 1, 0, 0, 1, 0, 1, 1, ...];

[0, 1, 1, 0, 1, 0, 1, 0, 1, 0, 0, 1, 0, 1, 0, 1, 1, 0, 1, 0, 0, 1, 1, 0, 1, 0, 1, 0, 0, ...];

[0, 1, 1, 0, 1, 0, 1, 0, 1, 0, 0, 1, 0, 1, 0, 1, 1, 0, 1, 0, 0, 1, 1, 0, 1, 0, 0, 1, 1, ...];

1, 1, 0, 1, 0, 1, 0, 1, 0, 0, 1];
[0, 1, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 1, 0, 0, 1, 0, 1, 1, 0, 0, 1, 1, 0, 0, 1, 0, 1, 0, 1, 0, 1, 1,
0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 1, 0, 0, 1, 1, 0,
0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1, 0, 0, 1, 0, 1, 1, 0, 1, 0, 0, 1, 0,
1, 0, 1, 0, 1, 1, 0, 0, 1, 1, 0, 0, 1, 1, 0, 0, 1, 0, 1, 1, 0, 1, 0, 1, 0, 0, 1, 0, 1, 0, 1, 0, 1, 0, 1, 0, 1, 1, 0, 0, 1, 1, 0, 1, 0, 0, 1,
0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1,
0, 1, 0, 1, 0, 0, 1, 1, 0, 0, 1];
[0, 1, 1, 0, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1, 1, 0, 0, 1, 1, 0, 0, 1, 0, 1, 0, 1, 0, 1, 1,
0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 0, 1, 1, 0, 0, 1,
1, 0, 0, 1, 1, 0, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 1, 0, 1, 0, 0, 1, 1, 0, 1, 0, 1, 1, 0, 1,
0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1,
0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1,
0, 1, 0, 1, 0, 0, 1, 1, 0, 0, 1];
[0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 0,
1, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1,
1, 0, 1, 0, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 0, 1, 0,
1, 1, 0, 1, 0, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 0, 1, 1, 0, 0, 1, 0, 1, 1, 0, 1, 0, 0, 1,
1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 1, 0, 1, 0, 1, 0, 0, 1, 0, 1, 1,
0, 1, 0, 0, 1, 1, 0, 1, 0, 0, 1];
[0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 0,
1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0,
0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 1, 0, 1,
0, 0, 1, 0, 1, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1,
1, 0, 0, 1, 0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 1,
0, 1, 0, 0, 1, 1, 0, 1, 0, 0, 1];
[0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 1, 0, 0, 1, 0, 1, 0, 1, 1, 0, 1,
0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 0, 1, 1, 0, 0, 1, 0, 1, 0, 1, 1, 0, 1, 0, 0, 0, 1,
0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 1, 0, 0, 1, 1,
0, 1, 0, 0, 0, 1, 1, 0, 1, 0, 1, 0, 1, 0, 1, 0, 0, 1, 0, 1, 1, 0, 1, 0, 1, 0, 1, 0, 0, 0, 1, 1, 0, 0, 1, 1, 0, 1, 0, 0, 1, 0, 1, 0, 1, 1, 0, 0, 1, 1, 0, 0, 1, 1, 0,
1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1,
0, 1, 0, 1, 0, 0, 1, 1, 0, 0, 1];
[0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 0, 1, 0, 1, 1, 0, 0, 1, 0, 1, 0, 1, 1, 0, 1,
0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 0, 1, 1, 0,
1, 0, 1, 0, 1, 0, 0, 1, 1, 0, 1, 0, 0, 1, 1, 0, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 0, 1, 1, 0, 0,
1, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 1, 0,
1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1,
0, 1, 0, 1, 0, 0, 1, 1, 0, 0, 1];
[0, 1, 1, 0, 1, 0, 0, 1, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 0, 1, 0,
1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 0, 1,
0, 1, 1, 0, 1, 0, 1, 0, 0, 1, 1, 0, 0, 1, 1, 0, 1, 0, 0, 1, 0, 1, 0, 1, 1, 0, 0, 1, 1, 0, 0, 1, 1, 0, 0, 1, 0, 1, 0, 1, 0, 1, 0, 1, 0, 1, 1, 0, 0, 0,
1, 1, 0, 0, 1, 0, 1, 0, 1, 0, 1, 0, 1, 1, 0, 1, 0, 0, 1, 0, 1, 0, 1, 1, 0, 0, 1, 0, 1, 1, 0, 1, 0, 1, 0, 0, 1, 1, 0, 0, 1, 0, 1, 1, 0,
0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 0, 1, 0, 1, 1,
0, 1, 0, 1, 0, 0, 1, 1, 0, 0, 1];
[0, 1, 1, 0, 1, 0, 0, 1, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 1, 0, 0, 1, 1, 0, 0, 1, 0, 1, 0,
1, 0, 1, 1, 0, 1, 0, 1, 0, 0, 1, 1, 0, 0, 1, 1, 0, 0, 1, 0, 1, 1, 0, 1, 0, 0, 1, 1, 0, 1, 0, 1, 0, 1, 0, 1, 0, 1, 1, 0, 0, 1, 0, 1, 1, 0, 1, 0,
1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 0, 1, 1, 0, 1, 0, 0, 0, 1, 1,
0, 0, 1, 1, 0, 1, 0, 1, 0, 0, 1, 0, 1, 1, 0, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 0, 1, 1, 0,
0, 1, 1, 0, 1, 0, 1, 0, 1, 0, 0, 1, 0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 0, 1, 0, 1, 1, 0, 1, 0, 1, 0, 1,
0, 1, 0, 0, 1, 1, 0, 1, 0, 0, 1];
[0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1,
0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 1, 0,
0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 1,
0, 1, 0, 0, 0, 1, 1, 0, 0, 1, 1, 0, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 1, 0,
0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 1, 0, 1, 0, 1, 0, 0,
1, 0, 1, 0, 1, 0, 1, 0, 1, 0, 1];
[0, 1, 0, 1, 0, 1, 0, 1, 0, 1, 1, 0, 1, 0, 1, 0, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1,
0, 1, 0, 1, 0, 1, 0, 0, 1, 0, 1, 1, 0, 1, 0, 1, 0, 1, 0, 1, 0, 1, 0, 1, 0, 1, 1, 0, 1, 0, 1, 0, 1, 1, 0, 0, 1, 1, 0, 1, 0, 0, 1, 0, 1, 1, 0, 0, 1,
1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0,
0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 1, 0, 1, 0, 1, 0, 0,
1, 0, 1, 0, 1, 0, 1, 0, 1, 0, 1];
[0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 0,
1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 0, 1,
1, 0, 1, 0, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0, 1, 0, 1, 0, 1, 0, 1, 0, 0, 1, 0, 1, 0, 1, 1,
0, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 1, 0, 1, 0, 1, 0,
1, 0, 1, 0, 1, 0, 1, 0, 0, 1, 0, 1, 0, 1, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 0, 1, 0,
1, 0, 1, 1, 0, 1, 0, 0, 0, 1, 0, 1];
[0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0,
1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0,
0, 1, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 0,
1, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 1, 0, 1, 0,
1, 0, 1, 0, 1, 0, 0, 1, 0, 1, 0, 1, 1, 0, 0, 1, 1, 0, 1, 0, 0, 1, 0, 1, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 1, 0,
1, 0, 1, 1, 0, 1, 0, 0, 0, 1, 0, 1];
[0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1,
0, 0, 1, 1, 0, 0, 1, 1, 0, 0, 1, 0, 1, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0,
1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 0,
1, 0, 1, 0, 1, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 1, 0, 1, 0, 1, 0, 0, 1,
0, 1, 1, 0, 0, 1, 1, 0, 0, 1, 1, 0, 0, 1, 0, 1, 0, 1, 0, 1, 1, 0, 1, 0, 0, 1, 0, 1, 0, 1, 1, 0, 1, 0, 0, 1, 0, 1, 1, 0, 0, 1, 1, 0, 1, 0, 1, 0, 1,
0, 1, 0, 1, 0, 1, 0, 0, 1, 0, 1];
[0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 0, 1, 0, 1, 1,
0, 0, 1, 1, 0, 0, 1, 1, 0, 0, 1, 0, 1, 1, 0, 1, 0, 1, 0, 1, 0, 0, 1, 0, 1, 0, 1, 0, 1, 0, 1, 0, 1, 1, 0, 0, 1, 1, 0, 1, 0, 0, 1, 0, 1, 1, 0, 0, 1,
0, 1, 1, 0, 1, 0, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 1, 0, 1,
0, 1, 0, 0, 1, 0, 1, 1, 0, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 0, 1,
0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 1,
0, 1, 0, 1, 0, 1, 0, 0, 1, 0, 1];
[0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0,
1, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1,
1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 0, 1, 1,
0, 0, 1, 1, 0, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0,
1, 0, 1, 0, 1, 0, 1, 0, 1, 0, 0, 1, 0, 1, 0, 1, 0, 1, 0, 1, 0, 1, 1, 0, 0, 1, 1, 0, 1, 0, 0, 1, 0, 1, 1, 0, 1, 0, 1, 0, 1, 0, 0, 1, 0, 1, 1, 0, 1,
0, 1, 0, 1, 0, 1, 0, 0, 1, 1, 0, 0,
1, 1, 0, 0, 1, 1, 0, 1, 0, 0, 1];
[0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0,
1, 0, 1, 0, 1, 0, 1, 0, 1, 1, 0, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0,
0, 1, 0, 1, 1, 0, 1, 0, 0, 1, 1, 0, 0, 1, 0, 1, 0, 1, 0, 1, 0, 1, 0, 1, 1, 0, 1, 0, 0, 1, 0, 1, 1, 0, 1, 0, 1, 0, 1, 0, 1, 0, 1, 0, 1, 1, 0, 1, 0, 0, 1, 0, 1, 1, 0, 1, 0, 1, 0,
1, 1, 0, 0, 1, 0, 1, 1, 0, 1, 0, 1, 0, 1, 0, 0, 1, 1, 0, 0, 1, 1, 0, 1, 0, 1, 0, 1, 0, 1, 0, 1, 1, 0, 0, 1, 1, 0, 1, 0, 1, 0, 1, 0, 1, 0, 1, 0, 0,
0, 1, 0, 1, 0, 1, 0, 1, 0, 1, 0, 1, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0,
1, 1, 0, 0, 1, 1, 0, 1, 0, 0, 1];
[0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 1,
0, 1, 0, 0, 1, 0, 1, 1, 0, 0, 1, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1,
0, 1, 0, 1, 0, 0, 1, 1, 0, 0, 1, 1, 0, 0, 1, 0, 1, 1, 0, 1, 0, 1, 0, 1, 0, 0, 1, 1, 0, 0, 1, 0, 1, 1, 0, 0, 1, 0, 1, 1, 0, 1, 0, 1, 0, 0, 1, 1, 0,
0, 0, 1, 1, 0, 0, 1, 0, 1, 0, 1, 0, 1, 1, 0, 0, 1, 1, 0, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1,
0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 0, 1, 0,
1, 1, 0, 0, 1, 1, 0, 1, 0, 0, 1];
[0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 1,
0, 1, 0, 0, 1, 0, 1, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1,
0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 0,
1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0,
0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 0, 1, 0,
1, 1, 0, 1, 0, 1, 0, 0, 1, 0, 1];
[0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 0, 1, 0, 1, 0,
1, 1, 0, 1, 0, 0, 1, 0, 1, 0, 1, 1, 0, 1, 0, 0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 0, 1,
1, 0, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 0,
1, 0, 1, 0, 1, 1, 0, 0, 1, 1, 0, 0, 1, 0, 1, 0, 1, 0, 1, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0,
0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 1, 0, 0, 1, 1,
0, 1, 0, 0, 1, 1, 0, 1, 0, 0, 1];
[0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 0, 1, 0, 1, 1, 0, 1, 0, 1, 0, 0, 1, 0, 1, 0, 1, 1, 0, 1, 0, 0, 1, 0, 1, 1, 0, 1, 0, 1, 0, 0, 1, 0, 1, 1, 0, 1, 0, 1, 0, 0, 1, 0, 1, 1, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 0, 1, 1, 0, 1, 0, 1, 0, 1, 0, 1, 0, 1, 0, 0, 1, 1, 0, 0, 1, 1, 0, 0, 1, 0, 1, 0, 1, 0,
0, 1, 0, 1, 0, 1, 1, 0, 1, 0, 0, 1, 0, 1, 0, 1, 0, 1, 0, 1, 0, 1, 1, 0, 0, 1, 1, 0, 1, 0, 1, 0, 1, 0, 1, 0, 1, 0, 0, 1, 1, 0, 1, 0, 1, 0, 1, 0, 1, 0, 0, 1, 1, 0, 0, 1, 1, 0, 0, 1, 0, 1, 0, 1, 0,
0, 1, 0, 0, 1, 1, 0, 0, 1, 0, 1, 0, 1, 0, 1, 0, 1, 0, 1, 1, 0, 0, 1, 1, 0, 1, 0, 1, 0, 1, 0, 1, 0, 1, 0, 0, 1, 1, 0, 0, 1, 1, 0, 0, 1, 0, 1, 1,
0, 1, 0, 0, 1, 1, 0, 1, 0, 0, 1];
[0, 1, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0,
1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 1, 0, 0, 1, 0, 1, 0, 1, 1, 0, 0, 1, 1, 0,
1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 1,
0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 0, 1, 1, 0,
0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1,
0, 1, 0, 1, 0, 0, 1, 0, 1, 0, 1];
[0, 1, 0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 1, 1, 0, 0,
1, 0, 1, 0, 1, 1, 0, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1,
0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 1, 0, 0, 1, 1, 0, 1, 0, 1, 0, 1, 0, 0,
1, 1, 0, 1, 0, 0, 0, 1, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 0, 1, 0, 1, 0, 1, 1, 0,
0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1,
0, 1, 0, 1, 0, 0, 1, 0, 1, 0, 1];
[0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1,
0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0,
0, 1, 1, 0, 1, 0, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1,
0, 1, 0, 0, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1,
0, 1, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0,
1, 1, 0, 0, 1, 0, 1, 1, 0, 0, 1];
[0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 1, 0, 1, 0, 0, 1, 0, 1, 0, 1, 1,
0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 0, 1,
1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 0, 1, 0, 1, 1, 0, 1, 0, 1, 0, 1, 0, 1, 0, 0, 1, 0, 1, 0, 1, 1, 0, 0, 1, 0, 1, 0,
1, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0,
0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0,
1, 1, 0, 0, 1, 0, 1, 1, 0, 0, 1];
[0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1, 0,
1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1,
0, 1, 0, 1, 0, 1, 1, 0, 0, 1, 0, 1, 1, 0, 0, 1, 1, 0, 0, 1, 0, 1, 0, 1, 1, 0, 0, 1, 0, 1, 0, 1, 1, 0, 1, 0, 1, 0, 0, 1, 0, 1, 1, 0, 1, 0, 1, 0, 1, 0, 0, 1, 1, 0, 0, 1, 0, 1, 1,
0, 1, 0, 0, 0, 1, 1, 0, 1, 0, 1, 0, 1, 0, 1, 0, 0, 1, 0, 1, 0, 1, 1, 0, 0, 1, 1, 0, 0, 1, 1, 0, 1, 0, 0, 0, 1, 1, 0, 0, 1, 1, 0, 0, 1, 0, 1, 0, 1, 0, 1, 0, 1, 0, 0, 1, 0, 1,
1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0,
1, 1, 0, 0, 1, 0, 1, 0, 1, 0, 1];
[0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 0, 1, 0,
1, 1, 0, 0, 1, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0,
1, 0, 1, 0, 1, 0, 0, 1, 1, 0, 1, 0, 1, 0, 0, 1, 0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 0,
1, 0, 1, 1, 0, 0, 1, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 0, 1, 0, 1,
1, 0, 1, 0, 1, 0, 0, 1, 1, 0, 0, 1, 0, 1, 1, 0, 1, 0, 1, 0, 0, 1, 1, 0, 0, 1, 1, 0, 0, 1, 0, 1, 0, 1, 1, 0, 0, 1, 0, 1, 0, 1, 0, 1, 0, 1, 0, 1, 0,
1, 1, 0, 0, 1, 0, 1, 0, 1, 0, 1];
[0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1,
0, 0, 1, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0,
1, 0, 0, 1, 0, 1, 0, 1, 1, 0, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 1,
0, 0, 1, 1, 0, 1, 0, 1, 0, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1, 0,
1, 1, 0, 0, 1, 0, 1, 0, 1, 0, 1]; or
[0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1,
0, 0, 1, 0, 1, 1, 0, 0, 1, 0, 1, 0, 1, 0, 1, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1,
0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1,
1, 0, 0, 1, 0, 1, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 1, 0, 0, 1, 1, 0, 1, 0, 1, 0, 1, 0, 0, 1,
1, 0, 1, 1, 0, 0, 1, 0, 1, 1, 0, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 0, 1, 0, 1, 1, 0, 0, 1, 1, 0,
1, 0, 1, 0, 0, 1, 0, 1].

7. The method according to any one of claims 1 to 5, wherein N=128, and the first sequence is any one of the following sequences, or the first sequence is an equivalent sequence of any one of the following sequences:

[0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 1, 0, 1, 0, 0, 1, 0, 1, 1,

0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1];

[0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 0, 0, 1, 0, 1, 1, 0, 1, 0, 0, 1, 1, 0, 1, 0, 0, 1, 0, 1, 1, 0, 1, 0, 1, 0, 0, 1, 0, 1, 0, 1, 0, 1, 0, 1];

[0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1];

[0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 1, 0, 1, 0, 1, 0, 0, 1, 0, 1, 1, 0, 1, 0, 1, 0, 0, 1, 0, 1, 0, 1, 0, 1, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1];

[0, 1, 0, 1, 0, 1, 0, 1, 0, 1, 1, 0, 0, 1, 1, 0, 1, 0, 1, 0, 0, 1, 0, 1, 0, 1, 1, 0, 1, 0, 1, 0, 0, 1, 0, 1, 0, 1, 1, 0, 1, 0, 1, 0, 0, 1, 1, 0, 1, 0, 0, 0, 1, 1, 0, 0, 1, 0, 1, 0, 0, 1, 1, 0, 0, 1, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 0, 1, 1, 0, 1, 0, 1, 0, 1, 0, 0, 1, 1, 0, 0, 1, 0, 1, 0, 1, 0, 1, 0, 1, 0, 1];

[0, 1, 0, 1, 0, 1, 0, 1, 0, 1, 1, 0, 0, 1, 1, 0, 1, 0, 1, 0, 0, 1, 0, 1, 0, 1, 1, 0, 1, 0, 1, 0, 0, 1, 1, 0, 1, 0, 0, 1, 0, 1, 1, 0, 0, 1, 0, 1, 1, 0, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 0, 1, 0, 1];

[0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 0, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 0, 1, 0, 1];

[0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 1, 0, 1, 0, 1, 0, 1, 0, 1, 0, 0, 1, 1, 0, 1, 0, 0, 1, 1, 0, 1, 0, 1, 0, 1, 0];

[0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 1, 0, 1, 0, 0, 1, 0, 1, 1, 0, 1, 0, 0, 1, 1, 0, 0, 1, 1, 0, 0, 1];

[0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 1, 0, 1, 0, 0, 1, 0, 1, 1, 0, 1, 0, 0, 1, 1, 0, 0, 1, 1, 0, 0, 1];

[0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 1, 0, 1, 0, 1, 0, 0, 1, 0, 1, 1, 0, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 0, 0, 1, 0, 1, 0, 1, 0, 1, 1, 0, 1, 0, 1, 0, 0, 1, 0, 1, 1, 0, 1, 0, 0, 1, 1, 0, 0, 1];

[0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 0, 1, 0, 1, 1, 0, 1, 0, 1, 0, 1, 0, 1];

[0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 0, 1, 0, 1, 0, 1, 1, 0, 0, 1, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 1, 0, 0, 1, 0, 1, 0, 1, 1, 0, 0, 1, 1, 0, 0, 1, 0, 1, 1, 0, 0, 1, 0, 1, 0, 1, 1, 0, 0, 1, 1, 0, 0, 1];

[0, 1, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 1, 0, 0, 1, 0, 1, 0, 1, 1, 0, 0, 1, 1, 0, 1, 0, 0, 1];

[0, 1, 1, 0, 1, 0, 0, 1, 0, 1, 0, 1, 1, 0, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 1, 0, 1, 0, 0, 1, 1, 0, 0, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 0, 1];

[0, 1, 1, 0, 1, 0, 0, 1, 0, 1, 0, 1, 1, 0, 1, 0, 1, 0, 0, 1, 1, 0, 0, 1, 0, 1, 0, 1, 0, 1, 0, 1, 1, 0, 1, 0, 0, 1, 1, 0, 0, 1, 1, 0, 1, 0, 1, 0, 1, 0, 0, 1, 1, 0, 0, 1, 1, 0, 0, 1, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 1, 0, 1];

[0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 1, 0, 1, 0, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 0, 1, 0, 1, 0, 1, 0, 1];

[0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 0, 0, 1, 0, 1, 0, 1, 1, 0, 0, 1, 1, 0, 0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 1, 0, 0, 1, 0, 1];

[0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 1, 0, 0, 1, 0, 1, 0, 1, 0, 1, 1, 0, 0, 1, 0, 1, 1, 0, 0, 1, 1, 0, 0, 1, 0, 1, 1, 0, 1, 0, 0, 1, 0, 1, 0, 1, 1, 0, 0, 1, 1, 0, 0, 1, 0, 1, 0, 1, 0, 1, 0, 1, 0, 1, 0, 1, 0, 1, 0, 1];

[0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 0, 1, 0, 0, 1, 1, 0, 0, 1, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 1, 0, 0, 1, 1, 0, 0, 1, 0, 1];

1, 0, 0, 1, 1, 0, 1, 0, 1, 0, 0, 1, 0, 1, 0, 1, 1, 0, 0, 1, 1, 0, 1, 0, 1, 0, 0, 1, 0, 1];

[0, 1, 0, 1, 0, 1, 1, 0, 1, 0, 1, 0, 1, 0, 0, 1, 0, 1, 0, 1, 0, 1, 1, 0, 0, 1, 0, 1, 0, 1, 1, 0, 1, 0, 1, 0, 0, 1, 1, 0, 1, 0, 1, 0, 0, 1, 1, 0, 1,
0, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 1, 0, 1, 0, 1, 0, 0, 1, 1, 0, 1, 0, 0, 1,
1, 0, 1, 0, 1, 0, 0, 1, 1, 0, 1, 0, 1, 0, 0, 1, 1, 0, 1, 0, 1, 0, 1, 0, 0, 1, 0, 1, 0, 1];

[0, 1, 0, 1, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 0,
1, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0,
0, 1, 0, 1, 0, 1, 1, 0, 0, 1, 0, 1, 0, 1, 0, 1, 1, 0, 1, 0, 1, 0, 1, 0, 0, 1, 0, 1, 0, 1];

[0, 1, 0, 1, 1, 0, 0, 1, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1,
0, 1, 0, 1, 0, 0, 1, 0, 1, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0,
0, 1, 1, 0, 1, 0, 1, 0, 0, 1, 1, 0, 1, 0, 1, 0, 0, 1, 1, 0, 1, 0, 0, 1, 1, 0, 0, 1, 0, 1];

[0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0,
1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1,
1, 0, 0, 1, 0, 1, 0, 1, 1, 0, 0, 1, 0, 1, 1, 0, 0, 1, 1, 0, 1, 0, 0, 1, 1, 0, 0, 1, 0, 1];

[0, 1, 1, 0, 0, 1, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 1, 0, 1,
0, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1,
1, 0, 0, 1, 1, 0, 1, 0, 1, 0, 1, 0, 1, 0, 0, 1, 0, 1, 0, 1, 0, 1, 1, 0, 0, 1, 1, 0, 0, 1];

[0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 0, 1, 0, 1, 1, 0, 0, 1, 0, 1, 1, 0, 1, 0, 0,
1, 0, 1, 1, 0, 1, 0, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0,
0, 1, 1, 0, 0, 1, 0, 1, 0, 1, 0, 1, 0, 1, 0, 1, 0, 1, 0, 1, 1, 0, 0, 1, 1, 0, 0, 1, 0, 1];

[0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 0, 1, 0, 1, 1,
0, 1, 0, 0, 1, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 1, 0, 1, 0,
0, 1, 1, 0, 0, 1, 1, 0, 1, 0, 1, 0, 1, 0, 1, 0, 1, 0, 1, 0, 1, 0, 1, 0, 0, 1, 1, 0, 0, 1];

[0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 1, 0, 1, 0, 1, 0, 0, 1, 0, 1, 0,
1, 0, 1, 1, 0, 1, 0, 1, 0, 0, 1, 1, 0, 1, 0, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1,
1, 0, 0, 1, 1, 0, 0, 1, 0, 1, 0, 1, 0, 1, 1, 0, 1, 0, 1, 0, 1, 0, 1, 0, 0, 1, 1, 0, 0, 1];

[0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 1, 0, 1,
0, 1, 0, 0, 1, 1, 0, 0, 1, 0, 1, 1, 0, 0, 1, 1, 0, 0, 1, 1, 0, 1, 0, 1, 0, 1, 0, 0, 1, 1, 0, 1, 0, 0, 1, 1, 0, 1, 0, 1, 0, 0, 1, 1, 0, 1, 0, 1, 0, 0, 1,
1, 0, 0, 1, 0, 1, 1, 0, 0, 1, 1, 0, 1, 0, 0, 1, 1, 0, 1, 0, 1, 0, 1, 0, 0, 1, 0, 1, 0, 1];

[0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 1, 0, 0, 1, 0, 1, 1, 0, 0, 1, 1, 0, 0, 1, 1, 0, 1, 0, 1, 0, 1, 0, 0, 1, 1,
0, 1, 0, 0, 1, 1, 0, 1, 0, 1, 0, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 1, 0,
0, 1, 1, 0, 1, 0, 1, 0, 0, 1, 1, 0, 1, 0, 1, 0, 0, 1, 0, 1, 0, 1, 1, 0, 0, 1, 0, 1, 0, 1];

[0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 0, 1,
1, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1,
1, 0, 1, 0, 1, 0, 1, 0, 0, 1, 0, 1, 0, 1, 1, 0, 0, 1, 1, 0, 1, 0, 0, 1, 1, 0, 0, 1, 0, 1];

[0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 0, 1, 1, 0, 0,
1, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0,
0, 1, 0, 1, 0, 1, 1, 0, 0, 1, 0, 1, 0, 1, 0, 1, 1, 0, 0, 1, 0, 1, 0, 1, 1, 0, 0, 1, 0, 1];

[0, 1, 0, 1, 0, 1, 0, 1, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1,
0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0,
1, 0, 0, 1, 0, 1, 1, 0, 1, 0, 0, 1, 0, 1, 1, 0, 1, 0, 1, 0, 1, 0, 0, 1, 0, 1, 0, 1, 0, 1];

[0, 1, 0, 1, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1, 1, 1,
0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 0, 1, 0, 1, 1, 0, 0, 1,
0, 1, 1, 0, 1, 0, 1, 0, 1, 0, 0, 1, 0, 1, 0, 1, 0, 1, 0, 1, 0, 1, 0, 1, 0, 1, 0, 1];

[0, 1, 0, 1, 0, 1, 0, 1, 0, 1, 0, 1, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 0, 1, 1, 0, 0, 1,
1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 0, 1, 0, 1, 1, 0, 0, 1,
0, 1, 1, 0, 1, 0, 1, 0, 1, 0, 0, 1, 0, 1, 0, 1, 0, 1, 0, 1, 0, 1, 0, 1, 0, 1, 0, 1];

[0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0,
1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1,
0, 1, 1, 0, 1, 0, 0, 1, 0, 1, 1, 0, 1, 0, 1, 0, 1, 0, 1, 0, 0, 1, 0, 1, 0, 1, 0, 1];

[0, 1, 0, 1, 0, 1, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0,
1, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 1, 0];

[0, 1, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1,
0, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1,
0, 1, 1, 0, 0, 1, 1, 0, 1, 0, 0, 1, 1, 0, 1, 0, 1, 0, 1, 0, 1, 0, 0, 1, 1, 0, 0, 1];

[0, 1, 1, 0, 0, 1, 1, 0, 1, 0, 1, 0, 1, 0, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 1, 1,
0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0,
1, 0, 0, 1, 0, 1, 0, 1, 1, 0, 1, 0, 0, 1, 0, 1, 0, 1, 0, 1, 0, 1, 0, 0, 1, 1, 0, 0, 1];

[0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 1,
0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 1, 0,
1, 0, 0, 1, 0, 1, 1, 0, 0, 1, 0, 1, 1, 0, 1, 0, 1, 0, 1, 0, 1, 0, 1, 0, 0, 1, 1, 0, 0, 1];

[0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 0, 1, 0, 1, 1, 0, 1, 0, 0, 1, 0,
1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 0, 1,
0, 1, 1, 0, 1, 0, 1, 0, 0, 1, 0, 1, 1, 0, 0, 1, 0, 1, 0, 1, 0, 1, 1, 0, 0, 1, 1, 0, 0, 1];

[0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 1, 0, 0, 1, 0, 1, 1,
0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1,
1, 0, 1, 0, 0, 1, 0, 1, 1, 0, 1, 0, 0, 1, 0, 1, 0, 1, 1, 0, 1, 0, 1, 0, 1, 0, 0, 1, 0, 1];

[0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 1, 0, 0, 1, 1, 0, 1, 0, 1, 0, 1, 0, 1, 0, 1, 0, 1, 0, 1, 0, 1,
0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0,
0, 1, 1, 0, 0, 1, 1, 0, 0, 1, 1, 0, 0, 1, 1, 0, 1, 0, 1, 0, 1, 0, 0, 1, 0, 1, 0, 1, 0, 1];

[0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 0,
1, 1, 0, 1, 0, 0, 1, 1, 0, 0, 1, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0,
0, 1, 0, 1, 1, 0, 1, 0, 0, 1, 0, 1, 1, 0, 0, 1, 0, 1, 1, 0, 1, 0, 1, 0, 1, 0, 0, 1, 0, 1];

[0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0,
1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1,
1, 0, 0, 1, 1, 0, 0, 1, 1, 0, 0, 1, 1, 0, 1, 0, 1, 0, 1, 0, 1, 0, 0, 1, 0, 1, 0, 1, 0, 1];

[0, 1, 0, 1, 0, 1, 0, 1, 1, 0, 0, 1, 1, 0, 0, 1, 0, 1, 1, 0, 1, 0, 0, 1, 1, 0, 1, 0, 1, 0, 0, 1, 1, 0, 1, 0, 1, 0, 1, 0, 0, 1, 1, 0, 0, 1, 1, 0, 0,
1, 0, 1, 0, 1, 0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 0, 1, 1, 0, 1, 0, 1, 0, 1, 0, 0, 1, 0, 1,
0, 1, 1, 0, 0, 1, 0, 1, 0, 1, 0, 1, 0, 1, 1, 0, 1, 0, 0, 1, 1, 0, 1, 0, 0, 1, 0, 1];

[0, 1, 0, 1, 1, 0, 1, 0, 0, 1, 1, 0, 1, 0, 0, 1, 0, 1, 0, 1, 0, 1, 0, 1, 0, 1, 1, 0, 0, 1, 1, 0, 1, 0, 1, 0, 0, 1, 0, 1, 0, 1, 1, 0, 1, 0, 1, 0, 0, 1, 0,
1, 0, 1, 0, 1, 0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 1, 0, 1, 0,
1, 0, 1, 0, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1];

[0, 1, 0, 1, 0, 1, 0, 1, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 1, 0, 0, 1,
0, 1, 1, 0, 1, 0, 0, 1, 1, 0, 1, 0, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 0, 1,
1, 0, 0, 1, 1, 0, 0, 1, 0, 1, 0, 1, 0, 1, 1, 0, 0, 1, 0, 1, 1, 0, 1, 0, 1, 0, 0, 1, 0, 1];

[0, 1, 0, 1, 1, 0, 1, 0, 1, 0, 0, 1, 0, 1, 1, 0, 0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0,
1, 0, 1, 0, 1, 0, 1, 1, 0, 0, 1, 1, 0, 0, 1, 1, 0, 1, 0, 0, 1, 1, 0, 1, 0, 0, 1, 0, 1, 0, 1, 1, 0, 0, 1, 1, 0, 1, 0, 1, 0, 1, 0, 1, 0, 1, 0, 1, 0,
0, 1, 0, 1, 1, 0, 1, 0, 1, 0, 0, 1, 0, 1, 0, 1, 1, 0, 0, 1, 1, 0, 0, 1, 0, 1, 0, 1, 0, 1];

[0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 0, 1, 0, 1, 0, 1, 0, 1, 1, 0, 0, 1, 0, 1, 0, 1, 1, 0, 1,
0, 1, 0, 1, 0, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 1, 0, 0, 1, 1, 0, 0, 1, 0, 1, 0, 1,
0, 1, 1, 0, 0, 1, 0, 1, 0, 1, 1, 0, 0, 1, 0, 1, 0, 1, 1, 0, 1, 0, 1, 0, 1, 0, 1, 0, 0, 1];

[0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 0, 1, 0, 1, 1, 0, 0, 1, 0, 1, 0, 1, 1, 0, 0, 1, 0, 1, 0, 1, 1, 0, 0, 1, 1,
0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0,
1, 0, 0, 1, 1, 0, 1, 0, 1, 0, 0, 1, 1, 0, 1, 0, 1, 0, 0, 1, 1, 0, 0, 1, 0, 1, 1, 0, 0, 1];

[0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1,
0, 1, 0, 1, 1, 0, 1, 0, 1, 0, 1, 0, 0, 1, 1, 0, 0, 1, 1, 0, 1, 0, 0, 1, 1, 0, 0, 1, 0, 1, 1, 0, 0, 1, 1, 0, 1, 0, 1, 0, 1, 0, 0, 1, 1, 0, 1, 0, 0, 1,
0, 1, 0, 1, 1, 0, 0, 1, 0, 1, 0, 1, 1, 0, 0, 1, 0, 1, 0, 1, 1, 0, 1, 0, 1, 0, 1, 0, 0, 1]; or

[0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 0, 1, 1, 0, 1, 0, 1, 0, 0, 1, 1, 0, 0,
1, 0, 1, 1, 0, 0, 1, 1, 0, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 0, 1,
1, 0, 0, 1, 1, 0, 1, 0, 1, 0, 0, 1, 1, 0, 1, 0, 1, 0, 0, 1, 1, 0, 0, 1, 0, 1, 1, 0, 0, 1].

8. The method according to any one of claims 1 to 5, wherein N=64, and the first sequence is any one of the following sequences, or the first sequence is an equivalent sequence of any one of the following sequences:

[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1,
0, 0, 1, 1, 0, 1, 0, 1, 0, 0, 1, 0, 1, 0, 1];

[0, 1, 0, 1, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 1, 0, 0, 1, 0, 1, 1, 0, 0, 1, 0, 1, 0, 1, 1,
0, 0, 1, 1, 0, 1, 0, 1, 0, 0, 1, 0, 1, 0, 1];

[0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 1, 0, 1, 0, 1, 0, 1, 0, 0, 1, 1, 0, 1, 0, 0, 1, 1, 0, 1,
0, 1, 0, 1, 0, 0, 1, 0, 1, 0, 1, 1, 0, 0];

[0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 0, 1, 0, 1, 0, 1, 1, 0, 0, 1, 0, 1, 1, 0, 0, 1, 1,
0, 1, 0, 1, 0, 0, 1, 0, 1, 0, 1, 1, 0, 0];

[0, 1, 0, 1, 0, 1, 0, 1, 1, 0, 0, 1, 0, 1, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1,
0, 0, 1, 0, 1, 1, 0, 0, 1, 0, 1, 0, 1, 0, 1];

[0, 1, 0, 1, 0, 1, 0, 1, 1, 0, 0, 1, 0, 1, 1, 0, 1, 0, 1, 0, 1, 0, 0, 1, 0, 1, 0, 1, 1, 0, 0, 1, 1, 0, 0, 1, 1, 0, 0, 1, 1, 0, 1, 0, 1, 0, 1, 0, 0, 1, 0, 1, 1,
0, 0, 1, 0, 1, 1, 0, 0, 1, 0, 1, 0, 1, 0];

[0, 1, 0, 1, 1, 0, 1, 0, 1, 0, 0, 1, 1, 0, 0, 1, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 0,
1, 1, 0, 0, 1, 1, 0, 1, 0, 0, 1, 0, 1];

[0, 1, 0, 1, 1, 0, 1, 0, 1, 0, 0, 1, 1, 0, 0, 1, 1, 0, 1, 0, 1, 0, 1, 0, 1, 0, 0, 1, 1, 0, 1, 0, 0, 1, 1, 0, 0, 1, 0, 1, 1, 0, 0, 1, 0, 1, 1, 0, 0, 1, 0, 1, 0, 1, 0, 1, 0, 1, 1, 0, 0, 1, 1, 0, 1, 0, 1, 0, 0, 1, 0, 1];

[0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1];

[0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0, 0, 1, 1, 0, 0, 1];

[0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 1, 0, 0, 1, 1, 0, 1, 0, 1, 0, 1, 0, 0, 1, 0, 1, 0, 1, 0, 0, 1, 1, 0, 1, 0, 0, 1];

[0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0, 1, 0, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1];

[0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 0, 1, 1, 0, 0, 1, 1, 0, 1, 0, 0, 1, 1, 0, 1, 0, 0, 1, 1, 0, 1, 0, 1, 1, 0, 0, 1, 0, 1, 0, 1, 0, 1];

[0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 0, 1, 0, 1];

[0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 1, 0, 1, 0, 1, 0, 0, 1, 0, 1, 1, 0, 1, 0, 1, 0, 0, 1, 1, 0, 0, 1];

[0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 0, 1, 0, 1, 0, 1, 0, 1, 0, 0, 1, 1, 0, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 1, 0, 0, 1, 0, 1, 0, 1, 1, 0, 0, 1];

[0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 1, 0, 1, 1, 0, 1, 0, 1, 0, 1, 0, 1, 0, 0, 1, 1, 0, 1, 0, 0, 1, 0, 1, 0, 0, 1, 1, 0, 0, 1];

[0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 1, 0, 1, 1, 0, 0, 1];

[0, 1, 1, 0, 1, 0, 0, 1, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 0, 1];

[0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 0, 1, 0, 0, 1, 0, 1, 0, 1, 1, 0, 0, 1];

[0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1];

[0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 0, 1, 1, 0, 0, 1, 0, 1];

[0, 1, 0, 1, 0, 1, 1, 0, 1, 0, 1, 0, 0, 1, 1, 0, 1, 0, 0, 1, 1, 0, 1, 0, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 1, 0, 0, 1, 1, 0, 0, 1, 0, 1];

[0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 1, 1, 0, 0, 1, 1, 0, 1, 0, 0, 1, 1, 0, 0, 1, 0, 1, 0, 1];

[0, 1, 0, 1, 1, 0, 0, 1, 1, 0, 1, 0, 0, 0, 1, 1, 0, 1, 0, 1, 0, 1, 0, 0, 0, 1, 1, 0, 1, 0, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 1, 0, 0, 1, 0, 0, 1, 1, 0, 0, 1, 0, 1, 0, 1, 1, 0, 0, 1];

[0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1];

[0, 1, 1, 0, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1];

[0, 1, 1, 0, 0, 1, 0, 1, 1, 0, 0, 1, 1, 0, 1, 0, 0, 1, 1, 0, 1, 0, 1, 0, 0, 1, 0, 1, 0, 1, 1, 0, 0, 1, 1, 0, 0, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0];

[0, 1, 0, 1, 0, 1, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 0, 1, 1, 0, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 0];

1, 0, 1, 1, 0, 1, 0, 0, 1, 0, 1, 0, 1, 0, 1];

[0, 1, 0, 1,0, 1, 0, 1, 1, 0, 1, 0, 0, 1, 0, 1, 0, 1, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1, 0, 1];

[0, 1, 0, 1,0, 1, 0, 1, 0, 1, 1, 0, 1, 0, 1, 0, 0, 1, 0, 1, 1,0, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 0, 1, 0, 1, 1, 0, 1, 0, 0, 1, 0, 1, 0, 1, 0, 1];

[0, 1, 0, 1,0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1];

[0, 1, 0, 1, 1,0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 0, 1, 0, 1];

[0, 1, 0, 1, 1, 0, 1, 0, 1, 0, 1, 0, 1, 0, 1, 0, 0, 1, 1, 0, 0, 1,0, 1, 1, 0, 1, 0, 0, 1, 1, 0, 0, 1,0, 1, 1, 0, 0, 1, 1, 0, 0, 1, 1, 0, 0, 1, 0, 1, 0, 1, 0, 1, 1, 0, 1, 0, 0, 1, 0, 1];

[0, 1, 1, 0, 0, 1, 1, 0, 0, 1, 1,0, 1, 0, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1];

[0, 1, 1, 0, 0, 1, 1, 0, 1, 0, 0, 1, 0, 1, 1, 0, 0, 1, 0, 1, 1, 0, 1,0, 1, 0, 1, 0, 1, 0, 1, 0, 0, 1, 0, 1, 0, 1, 0, 1, 1, 0, 1, 0, 1, 0, 0, 1, 0, 1, 0, 1, 1, 0, 1, 0, 0, 1, 1, 0, 0, 1, 1, 0, 0, 1];

[0, 1, 1, 0, 0, 1, 1, 0, 0, 1, 1,0, 1, 0, 0, 1, 1, 0, 1, 0, 0, 1,0, 1, 1, 0, 1, 0, 1, 0, 1,0, 1, 0, 0, 1, 0, 1, 0, 1, 0, 1, 0, 1, 0, 1, 1, 0, 1, 0, 1, 0, 1,0, 1, 0, 1, 1, 0, 1, 0, 0, 1, 1, 0, 0, 1];

[0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 1, 0, 0, 1, 1, 0, 1, 0, 0, 1, 1, 0, 0, 1];

[0, 1, 1,0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 1];

[0, 1, 1,0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1];

[0, 1, 1,0, 1,0, 1, 0, 0, 1, 1, 0, 0, 1, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 0, 1, 1, 0, 1, 0, 0, 1, 0, 1, 0, 1, 0, 0, 1];

[0, 1, 1,0, 1, 0, 1, 0, 1, 0, 0, 1, 1, 0, 1, 0, 0, 1, 0, 1, 1, 0, 0, 1, 1, 0, 1, 0, 1, 0, 0, 1, 1, 0, 0, 1, 0, 1, 0, 1, 0, 1, 1, 0, 0, 1, 0, 1, 0, 1, 0, 1, 0, 1, 0, 1, 0, 0, 1];

[0, 1, 0, 1,0, 1, 1, 0, 0, 1,0, 1, 1, 0, 0, 1, 1, 0, 0, 1, 1, 0, 1, 0, 1, 0, 0, 1, 0, 1, 0, 1, 1, 0, 1, 0, 1, 0, 1, 0, 0, 1, 1, 0, 1, 0, 0, 1, 1, 0, 1, 0, 0, 1, 0, 1, 0, 1];

[0, 1, 0, 1,0, 1, 1, 0, 1, 0, 1, 0, 0, 1, 1, 0, 1, 0, 0, 1, 1, 0, 1, 0, 0, 1, 1, 0, 1, 0, 1, 0, 0, 1, 0, 1, 0, 1, 1, 0, 1, 0, 1, 0, 1, 0, 0, 1, 1, 0, 0, 1, 1, 0, 0, 1, 0, 1, 0, 1];

[0, 1, 0, 1,0, 1, 0, 1, 1, 0, 0, 1, 1, 0, 0, 1, 1, 0, 1, 0, 0, 1, 0, 1, 0, 1, 1, 0, 1, 0, 1, 0, 0, 1, 0, 1, 1, 0, 1, 0, 0, 1, 1, 0, 1, 0, 0, 1, 0, 1, 0, 1, 0, 1];

[0, 1, 0, 1,0, 1, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 1, 0, 1, 0, 0, 1, 1, 0, 1, 0, 0, 1, 1, 0, 1, 0, 0, 1, 0, 1, 0, 1];

[0, 1, 1, 0, 0, 1, 1, 0, 0, 1, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 1, 0, 0, 1];

[0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 1, 0, 1, 0, 0, 1, 0, 1, 0, 1, 0, 1, 0];

[0, 1, 0, 1, 0, 1, 0, 1, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 0, 1, 1, 0, 0, 1];

[0, 1, 1, 0, 0, 1, 1, 0, 0, 1, 0, 1, 0, 1, 0, 1, 1, 0, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 0, 1, 0, 1];

[0, 1, 1, 0, 0, 1, 1, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 0, 1, 0, 1, 0, 0, 1, 1, 0, 0, 1, 1, 0, 0, 1];

[0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 1, 0, 1];

[0, 1, 0, 1, 1, 0, 1, 0, 1, 0, 0, 1, 0, 1, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 1, 0, 0, 1, 1, 0, 1, 0, 0, 1, 0, 1];

[0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 1, 0, 1];

[0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 1, 0, 0, 1, 0, 1, 0, 1, 0, 1, 0, 1, 0, 1, 1, 0, 0, 1, 0];

1, 1, 0, 0, 1, 0, 1, 1, 0, 1, 0, 1, 0, 0, 1];

[0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 1, 0, 0, 1, 1, 0, 1, 0, 0, 1, 0, 1, 0, 1];

[0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 0, 0, 1, 0, 1, 1, 0, 0, 1, 1, 0, 0, 1, 0, 1, 0, 1];

[0, 1, 0, 1, 0, 1, 0, 1, 0, 1, 1, 0, 0, 1, 1, 0, 1, 0, 1, 0, 1, 0, 0, 1, 0, 1, 0, 1, 1, 0, 1, 0, 1, 0, 0, 1, 1, 0, 0, 1, 1, 0, 0, 1, 1, 0, 1, 0, 1, 0, 1, 0, 1, 0, 0, 1, 1, 0, 1, 0, 0, 1, 1, 0, 1, 0, 0, 1, 0, 1];

[0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 1, 0, 1, 0, 1, 0, 0, 1, 0, 1, 0, 1, 1, 0, 1, 0, 1, 0, 1, 0, 0, 1, 1, 0, 0, 1, 0, 1, 0, 1, 0, 1, 0, 1];

[0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1];

[0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 1, 0, 0, 1, 0, 1, 1, 0, 1, 0, 0, 1, 1, 0, 0, 1, 0, 1, 0, 1, 0, 1];

[0, 1, 0, 1, 0, 1, 0, 1, 1, 0, 1, 0, 0, 1, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 0, 1, 0, 1, 0, 1, 0, 0, 1, 1, 0, 1, 0, 1, 0, 1, 0, 1, 0, 1, 0, 0, 1, 0, 1];

[0, 1, 0, 1, 1, 0, 1, 0, 1, 0, 1, 0, 1, 0, 1, 0, 0, 1, 1, 0, 1, 0, 1, 0, 0, 1, 0, 1, 1, 0, 0, 1, 1, 0, 0, 1, 1, 0, 1, 0, 1, 0, 0, 1, 1, 0, 0, 1, 1, 0, 0, 1, 0, 1, 1, 0, 1, 0, 1, 0, 1, 0, 1, 0, 0, 1, 1, 0, 1, 0, 0, 1, 0, 1];

[0, 1, 0, 1, 0, 1, 0, 1, 1, 0, 0, 1, 0, 1, 1, 0, 0, 1, 1, 0, 0, 1, 1, 0, 0, 1, 0, 1, 0, 1, 0, 0, 1, 0, 1, 1, 0, 1, 0, 1, 0, 1, 0, 1, 0, 0, 1, 1, 0, 1, 0, 0, 0, 1, 0, 1, 1, 0, 0, 1, 1, 0, 0, 1, 0, 1, 0, 1];

[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 0, 1, 0, 1];

[0, 1, 1, 0, 0, 1, 1, 0, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 0, 1, 0, 1, 0, 0, 1, 0, 1, 0, 0, 1, 1, 0, 1, 0, 0, 1];

[0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 0, 1, 0, 0, 1, 1, 0, 1, 0, 1, 0, 0, 0, 1, 1, 0, 0, 1];

[0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1];

[0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 0, 1, 0, 1, 0, 1, 0, 0, 1, 1, 0, 1, 0, 1];

[0, 1, 1, 0, 0, 1, 1, 0, 0, 1, 0, 1, 1, 0, 1, 0, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 0, 1, 1, 0, 1, 0, 1, 0, 1, 0, 1, 0, 0, 0, 1, 0, 1, 0, 1, 0, 1, 0, 1, 1, 0, 1, 0, 0, 0, 1];

[0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1];

[0, 1, 1, 0, 0, 1, 0, 1, 0, 1, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 1];

[0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 0, 1, 0, 1];

[0, 1, 1, 0, 1, 0, 1, 0, 0, 1, 1, 0, 1, 0, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 0, 1, 0, 1, 1, 0, 0, 1, 0, 1, 0, 1, 0, 0, 1, 1, 0, 1, 0, 1, 0, 1];

[0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 0, 1, 0, 1, 0, 1, 1, 0, 0, 1, 0, 1];

[0, 1, 1, 0, 1, 0, 1, 0, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 0, 1, 0, 1, 0, 1, 0, 1, 0, 0, 1, 0, 1, 0, 1, 0, 1, 1, 0, 0, 1, 1, 0, 0, 1, 0, 1, 0, 1];

[0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 0, 1, 1, 0, 1, 0, 1, 0, 1, 0, 0, 1, 0, 1, 0, 0, 1, 1, 0, 1, 0, 1, 0, 1, 0, 0, 1];

[0, 1, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 1, 0, 0, 1, 0, 1];

[0, 1, 0, 1, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 0, 1];

[0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1];

[0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 1, 0, 0, 1, 0, 1];

[0, 1, 0, 1, 1, 0, 0, 1, 1, 0, 0, 1, 0, 1, 0, 1, 1, 0, 1, 0, 1, 0, 0, 1, 1, 0, 1, 0, 0, 1, 0, 1, 0, 1, 1, 0, 1, 0, 1, 0, 1, 0, 1, 0, 1, 0, 0, 1, 1, 0, 0, 1, 1, 0, 1, 0, 1, 0, 0, 1, 0, 1, 0, 1];

[0, 1, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 0, 1, 1, 0, 1, 0, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 0, 0, 1, 1, 0, 1, 0, 0, 1, 1, 0, 0, 1, 1, 0, 0, 1];

[0, 1, 1, 0, 0, 1, 1, 0, 0, 1, 1, 0, 1, 0, 0, 1, 1, 0, 1, 0, 1, 0, 1, 0, 0, 1, 0, 1, 1, 0, 0, 1, 0, 1, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 0, 1, 1, 0, 1];

[0, 1, 0, 1, 0, 1, 0, 1, 1, 0, 0, 1, 1, 0, 1, 0, 1, 0, 1, 0, 1, 0, 1, 0, 0, 0, 1, 1, 0, 0, 1, 1, 0, 1, 0, 1, 0, 0, 1, 0, 1,

0, 1, 0, 1, 0, 1, 0, 1, 0, 0, 1, 1, 0, 0, 1];

[0, 1, 1, 0, 0, 1, 1, 0, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1];

[0, 1, 0, 1, 1, 0, 0, 1, 0, 1, 0, 1, 1, 0, 0, 1, 0, 1, 0, 1, 0, 1, 1, 0, 1, 0, 1, 0, 1, 0, 1, 0, 0, 1, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1];

[0, 1, 1, 0, 1, 0, 1, 0, 0, 1, 1, 0, 1, 0, 1, 0, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 1, 0, 0, 1, 0, 1];

[0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 0, 1, 0, 1, 0, 0, 1, 1, 0, 1, 0, 1];

[0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1];

[0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 0, 1, 1, 0, 0, 1, 0, 1, 1, 0, 0, 1, 0, 1];

[0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1];

[0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 0, 1, 0, 1, 1, 0, 0, 1, 1, 0, 1, 0, 1, 0, 1, 0, 0, 1, 0];

[0, 1, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 0];

[0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 1, 0, 0, 1, 0, 1]; or

[0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1].

9. The method according to any one of claims 1 to 5, wherein N=32, and the first sequence is any one of the following sequences, or the first sequence is an equivalent sequence of any one of the following sequences:

[0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0];

[0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0];

[0, 1, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0];

[0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 1, 0];

[0, 1, 0, 1, 0, 1, 1, 0, 0, 1, 1, 0, 0, 1, 0, 1, 1, 0, 1, 0, 1, 0, 0, 1, 1, 0, 0, 1, 1, 0, 1, 0];

[0, 1, 1, 0, 0, 1, 0, 1, 1, 0, 1, 0, 1, 0, 0, 1, 1, 0, 0, 1, 1, 0, 1, 0, 0, 1, 0, 1, 0, 1, 1, 0];

[0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1];

[0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1];

[0, 1, 0, 1, 1, 0, 0, 1, 1, 0, 1, 0, 0, 1, 1, 0, 1, 0, 1, 0, 1, 0, 0, 1, 0, 1, 0, 1, 1, 0, 1, 0];

[0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0];

[0, 1, 1, 0, 0, 1, 1, 0, 0, 1, 0, 1, 1, 0, 1, 0, 1, 0, 0, 1, 1, 0, 0, 1, 1, 0, 1, 0, 0, 1, 0, 1];

[0, 1, 1, 0, 0, 1, 1, 0, 0, 1, 0, 1, 0, 0, 1, 0, 1, 1, 0, 0, 1, 1, 0, 0, 1, 0, 1, 0, 1, 1, 0, 1, 0];

[0, 1, 0, 1, 1, 0, 1, 0, 0, 1, 1, 0, 0, 1, 1, 0, 1, 0, 1, 0, 0, 1, 0, 1, 1, 0, 0, 1, 1, 0, 0, 1];

[0, 1, 0, 1, 1, 0, 1, 0, 1, 0, 0, 1, 1, 0, 0, 1, 1, 0, 1, 0, 0, 1, 0, 1, 1, 0, 0, 1, 1, 0, 0, 1, 0];

[0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1];

[0, 1, 0, 1, 1, 0, 1, 0, 1, 0, 0, 1, 0, 0, 1, 1, 0, 0, 1, 1, 0, 1, 0, 0, 1, 1, 0, 1, 0, 0, 1, 0, 1];

[0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0];

[0, 1, 1, 0, 1, 0, 0, 1, 1, 0, 1, 0, 0, 1, 0, 1, 0, 1, 0, 1, 1, 0, 1, 0, 1, 0, 0, 1, 0, 1, 1, 0];

[0, 1, 0, 1, 0, 1, 1, 0, 0, 1, 0, 1, 1, 0, 0, 1, 0, 1, 1, 0, 0, 1, 0, 1, 0, 1, 1, 0, 1, 0, 1, 0];

[0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1];

[0, 1, 0, 1, 0, 1, 1, 0, 0, 1, 0, 1, 1, 0, 0, 1, 1, 0, 0, 1, 0, 1, 1, 0, 0, 1, 0, 1, 0, 1, 0, 1];

[0, 1, 0, 1, 0, 1, 1, 0, 1, 0, 1, 0, 0, 1, 1, 0, 1, 0, 0, 1, 1, 0, 1, 0, 0, 1, 1, 0, 1, 0, 1, 0];

[0, 1, 0, 1, 1, 0, 0, 1, 0, 1, 0, 1, 0, 1, 1, 0, 0, 1, 1, 0, 1, 0, 1, 0, 0, 1, 1, 0, 0, 1, 0, 1];

[0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 1, 0];

[0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0];

[0, 1, 0, 1, 1, 0, 0, 1, 1, 0, 1, 0, 1, 0, 0, 1, 1, 0, 0, 1, 0, 1, 0, 1, 1, 0, 0, 1, 0, 1];

[0, 1, 1, 0, 0, 1, 0, 1, 0, 1, 1, 0, 1, 0, 1, 0, 0, 1, 0, 1, 0, 1, 1, 0, 0, 1, 0, 1, 1, 0, 0, 1];

[0, 1, 1, 0, 0, 1, 0, 1, 0, 1, 1, 0, 1, 0, 1, 0, 1, 0, 1, 0, 0, 1, 1, 0, 1, 0, 0, 1, 1, 0];

[0, 1, 1, 0, 0, 1, 0, 1, 1, 0, 0, 1, 0, 1, 0, 1, 0, 1, 0, 1, 1, 0, 1, 0, 1, 0, 0, 1, 1, 0];

[0, 1, 1, 0, 0, 1, 0, 1, 1, 0, 0, 1, 0, 1, 0, 1, 1, 0, 1, 0, 1, 0, 0, 1, 0, 1, 0, 1, 1, 0, 0, 1];

[0, 1, 1, 0, 1, 0, 1, 0, 0, 1, 1, 0, 0, 1, 0, 1, 0, 1, 0, 1, 1, 0, 0, 1, 0, 1, 0, 1, 0, 1, 1, 0];

[0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1];
[0, 1, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1];
[0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0];
[0, 1, 0, 1, 0, 1, 1, 0, 0, 1, 1, 0, 0, 1, 0, 1, 0, 1, 0, 1, 1, 0, 0, 1, 0, 1, 1, 0, 1, 0, 1, 0];
[0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 1];
[0, 1, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1];
[0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0];
[0, 1, 1, 0, 0, 1, 0, 1, 0, 1, 0, 1, 1, 0, 0, 1, 1, 0, 1, 0, 1, 0, 1, 0, 0, 1, 0, 1, 1, 0, 0, 1];
[0, 1, 1, 0, 0, 1, 0, 1, 0, 1, 0, 1, 1, 0, 1, 0, 0, 1, 0, 1, 0, 1, 1, 0, 1, 0, 0, 1, 1, 0];
[0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0];
[0, 1, 1, 0, 0, 1, 0, 1, 1, 0, 1, 0, 1, 0, 0, 1, 1, 0, 0, 1, 0, 1, 0, 1, 0, 1, 0, 1, 1, 0, 0, 1];
[0, 1, 0, 1, 1, 0, 0, 1, 0, 1, 1, 0, 1, 0, 1, 0, 0, 1, 0, 1, 0, 1, 1, 0, 0, 1, 1, 0, 0, 1, 0, 1];
[0, 1, 0, 1, 1, 0, 0, 1, 0, 1, 1, 0, 1, 0, 1, 0, 0, 1, 0, 1, 0, 1, 0, 0, 1, 1, 0, 0, 1, 1, 0, 1, 0];
[0, 1, 0, 1, 1, 0, 0, 1, 1, 0, 0, 1, 0, 1, 0, 1, 0, 1, 0, 1, 1, 0, 1, 0, 0, 1, 1, 0, 1, 0];
[0, 1, 0, 1, 1, 0, 0, 1, 1, 0, 0, 1, 0, 1, 0, 1, 1, 0, 1, 0, 1, 0, 0, 1, 0, 1, 1, 0, 0, 1, 0, 1];
[0, 1, 1, 0, 1, 0, 1, 0, 0, 1, 0, 1, 1, 0, 0, 1, 0, 1, 1, 0, 0, 1, 0, 1, 0, 1, 0, 1, 0, 1, 1, 0];
[0, 1, 1, 0, 1, 0, 1, 0, 0, 1, 0, 1, 1, 0, 0, 1, 1, 0, 0, 1, 1, 0, 1, 0, 1, 0, 1, 0, 1, 0, 0, 1];
[0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1];
[0, 1, 1, 0, 1, 0, 1, 0, 1, 0, 1, 0, 0, 1, 1, 0, 1, 0, 0, 1, 1, 0, 1, 0, 0, 1, 0, 1, 0, 1, 1, 0];
[0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0];
[0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1];
[0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1];
[0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0];
[0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1];
[0, 1, 0, 1, 0, 1, 0, 1, 1, 0, 0, 1, 0, 1, 1, 0, 1, 0, 1, 0, 0, 1, 1, 0, 0, 1, 0, 1, 0, 1, 1, 0];
[0, 1, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0];
[0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1];
[0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 0, 1];
[0, 1, 1, 0, 0, 1, 1, 0, 0, 1, 0, 1, 1, 0, 1, 0, 1, 0, 1, 0, 1, 0, 1, 0, 0, 1, 0, 1, 1, 1, 0];
[0, 1, 1, 0, 1, 0, 0, 1, 0, 1, 0, 1, 0, 1, 0, 1, 0, 1, 1, 0, 1, 0, 0, 1, 1, 0, 0, 1, 1, 0];
[0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1];
[0, 1, 1, 0, 0, 1, 1, 0, 1, 0, 1, 0, 0, 1, 0, 1, 0, 1, 0, 1, 0, 1, 1, 0, 0, 1, 0, 1, 1, 0];
[0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1];
[0, 1, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1];
[0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0];
[0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0];
[0, 1, 0, 1, 0, 1, 1, 0, 0, 1, 1, 0, 0, 1, 0, 1, 1, 0, 1, 0, 1, 0, 0, 1, 0, 1, 1, 0, 0, 1, 0, 1];
[0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1];
[0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0];
[0, 1, 1, 0, 0, 1, 0, 1, 0, 1, 0, 1, 1, 0, 0, 1, 1, 0, 0, 1, 0, 1, 1, 0, 1, 0, 1, 0, 1, 0, 0, 1];
[0, 1, 1, 0, 0, 1, 0, 1, 0, 1, 0, 1, 1, 0, 1, 0, 0, 1, 1, 0, 1, 0, 0, 1, 0, 1, 0, 1, 0, 1, 1, 0];
[0, 1, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0];
[0, 1, 1, 0, 1, 0, 1, 0, 0, 1, 0, 1, 1, 0, 0, 1, 1, 0, 1, 0, 0, 1, 0, 1, 0, 1, 0, 1, 1, 0, 0, 1];
[0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1];
[0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0];
[0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0];
[0, 1, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1];
[0, 1, 1, 0, 0, 1, 0, 1, 1, 0, 1, 0, 1, 0, 0, 1, 0, 1, 1, 0, 0, 1, 0, 1, 0, 1, 0, 1, 0, 1, 1, 0];
[0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1];
[0, 1, 1, 0, 1, 0, 1, 0, 1, 0, 1, 0, 0, 1, 1, 0, 0, 1, 1, 0, 1, 0, 1, 0, 1, 0, 0, 1, 1, 0, 0, 1];
[0, 1, 1, 0, 1, 0, 1, 0, 1, 0, 1, 0, 0, 1, 1, 0, 0, 1, 0, 1, 0, 1, 1, 0, 1, 0, 0, 1, 1, 0];
[0, 1, 0, 1, 0, 1, 0, 1, 1, 0, 1, 0, 1, 0, 0, 1, 1, 0, 1, 0, 0, 1, 0, 1, 1, 0, 0, 1, 1, 0, 0, 1];
[0, 1, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1];
[0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1];
[0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 1, 0];
[0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0];
[0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1];
[0, 1, 0, 1, 1, 0, 1, 0, 0, 1, 1, 0, 0, 1, 1, 0, 1, 0, 1, 0, 1, 0, 1, 0, 0, 1, 0, 1, 1, 0];

[0, 1, 1, 0, 1, 0, 0, 1, 0, 1, 0, 1, 0, 1, 0, 1, 0, 1, 1, 0, 0, 1, 1, 0, 0, 1, 0, 1, 1, 0, 1, 0];
[0, 1, 0, 1, 1, 0, 1, 0, 1, 0, 0, 1, 1, 0, 0, 1, 0, 1, 0, 1, 0, 1, 0, 1, 1, 0, 0, 1, 0, 1, 1, 0];
[0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1];
[0, 1, 1, 0, 1, 0, 0, 1, 1, 0, 1, 0, 1, 0, 1, 0, 0, 1, 1, 0, 0, 1, 1, 0, 1, 0, 1, 0, 0, 1, 0, 1];
[0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0];
[0, 1, 0, 1, 0, 1, 1, 0, 0, 1, 0, 1, 1, 0, 0, 1, 0, 1, 0, 1, 0, 1, 1, 0, 1, 0, 1, 0, 0, 1, 1, 0];
[0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0];
[0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 0, 1];
[0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0];
[0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0];
[0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1];
[0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1];
[0, 1, 0, 1, 1, 0, 0, 1, 1, 0, 1, 0, 1, 0, 0, 1, 0, 1, 0, 1, 1, 0, 0, 1, 0, 1, 0, 1, 0, 1, 1, 0];
[0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1];
[0, 1, 1, 0, 1, 0, 1, 0, 1, 0, 0, 1, 1, 0, 1, 0, 0, 1, 1, 0, 1, 0, 1, 0, 0, 1, 1, 0, 0, 1, 0, 1]; or
[0, 1, 1, 0, 1, 0, 1, 0, 1, 0, 0, 1, 1, 0, 1, 0, 0, 1, 0, 1, 0, 1, 1, 0, 0, 1, 1, 0, 1, 0].

10. The method according to any one of claims 1 to 5, wherein N=16, and the first sequence is any one of the following sequences, or the first sequence is an equivalent sequence of any one of the following sequences:

[0, 1, 0, 1, 0, 1, 1, 0, 0, 1, 1, 0, 0, 1, 0, 1];
[0, 1, 0, 1, 0, 1, 1, 0, 1, 0, 0, 1, 1, 0, 1, 0];
[0, 1, 0, 1, 1, 0, 0, 1, 0, 1, 1, 0, 1, 0, 1, 0];
[0, 1, 0, 1, 1, 0, 0, 1, 1, 0, 0, 1, 0, 1, 0, 1];
[0, 1, 1, 0, 0, 1, 0, 1, 0, 1, 0, 1, 0, 1, 1, 0];
[0, 1, 1, 0, 1, 0, 1, 0, 1, 0, 1, 0, 0, 1, 1, 0];
[0, 1, 0, 1, 0, 1, 1, 0, 1, 0, 1, 0, 0, 1, 1, 0]; or
[0, 1, 1, 0, 0, 1, 0, 1, 0, 1, 1, 0, 1, 0, 1, 0].

11. The method according to any one of claims 1 to 5, wherein N=8, and the first sequence is any one of the following sequences, or the first sequence is an equivalent sequence of any one of the following sequences:

[0, 0, 1, 1, 0, 1, 1, 0];
[0, 1, 0, 0, 1, 0, 1, 1];
[0, 1, 1, 0, 1, 0, 0, 1];
[0, 1, 0, 0, 1, 1, 1, 0];
[0, 1, 1, 0, 1, 1, 0, 0];
[0, 1, 1, 1, 0, 0, 1, 0];
[0, 0, 1, 0, 1, 1, 0, 1];
[0, 1, 0, 1, 1, 0, 0, 1];
[0, 1, 0, 0, 1, 0, 0, 0];
[0, 1, 1, 0, 0, 1, 0, 1];
[0, 0, 1, 0, 1, 1, 1, 0];
[0, 1, 1, 1, 0, 1, 0, 0]; or
[0, 0, 0, 1, 0, 0, 1, 0].

12. The method according to any one of claims 1 to 11, wherein the $q^{th}$ element $Y_q = a_{M+1}(q)$ in the first generalized Golay sequence satisfies:

$$a_{k+1}(q) = a_k(q) + W_{1,k} b_k \left( q - 2^{P_k} \right),$$

and

$$b_{k+1}(q) = a_k(q) - W_{2,k} b_k \left( q - 2^{P_k} \right),$$

wherein
$a_{M+1}(q)$ is $a_k(q)$ when k=M+1, $a_1(q) = \delta(q-1)$, $b_1(q) = \delta(q-1)$, and the value of q is any integer from 1 to N; when $q=1$, $\delta(q-1) = 1$, or when $q \neq 1$, $\delta(q-1) = 0$; and $W_{1,k}$ is a $k^{th}$ element in a second sequence $[W_1]$, $W_{2,k}$ is a $k^{th}$ element in a third sequence $[W_2]$, lengths of both the second sequence $[W_1]$ and the third sequence $[W_2]$ are n, values of elements in the second sequence are 1 and/or -1, and values of elements in the third sequence are 1 and/or -1.

13. A communication apparatus, comprising a module configured to perform the method according to any one of claims 1 to 12.

14. A processing apparatus, comprising a memory and a processor, wherein

   the memory is configured to store program code; and
   the processor is configured to invoke the program code to implement the method according to any one of claims 1 to 12.

15. The apparatus according to claim 14, wherein the processing apparatus is a chip or a chip system.

16. A communication system, comprising a first device and a second device, wherein the second device is configured to implement the method according to claim 1 and any one of claims 4 to 12, and the first device is configured to implement the method according to claim 2 and any one of claims 4 to 12.

17. A computer-readable storage medium, wherein the computer-readable storage medium stores a computer program, and when the computer program is executed by a processor, an electronic device is enabled to perform the method according to any one of claims 1 to 12.

18. A computer program product, comprising a computer program, wherein when the computer program is run, the computer is enabled to perform the method according to any one of claims 1 to 12.

FIG. 1

| Preamble | Data |
|----------|------|

(a)

| Data | Postamble |
|------|-----------|

(b)

| Preamble | Data | Postamble |
|----------|------|-----------|

(c)

| Preamble | Data | Mid-amble | Data | Postamble |
|----------|------|-----------|------|-----------|

(d)

FIG. 2

300

**FIG. 3**

**FIG. 4**

**FIG. 5**

FIG. 6

FIG. 7

FIG. 8

FIG. 9

FIG. 10

FIG. 11

Apparatus 1200

1210

Processor

Program    AI module

1220

Memory

Program    AI module

Communication
interface

1230

FIG. 12

## INTERNATIONAL SEARCH REPORT

| International application No. |
|---|
| **PCT/CN2024/116120** |

### A.    CLASSIFICATION OF SUBJECT MATTER

H04L5/00(2006.01)i

According to International Patent Classification (IPC) or to both national classification and IPC

### B.    FIELDS SEARCHED

Minimum documentation searched (classification system followed by classification symbols)

IPC:H04L,H04B,H03M

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE: 格雷码, 广义, 前导码, 中导码, 后导码, 序列, 检测, 解码, 寄存器, 存储, 编码, 深度, 长度, Golay, generalized, code, preamble, sequence, detection, modulation, decod+, length

### C.    DOCUMENTS CONSIDERED TO BE RELEVANT

| Category* | Citation of document, with indication, where appropriate, of the relevant passages | Relevant to claim No. |
|---|---|---|
| A | US 2010309958 A1 (ISMAIL LAKKIS) 09 December 2010 (2010-12-09) claims 1-29, and description, paragraphs 97-144 | 1-18 |
| A | CN 110324045 A (BENZHENG INFORMATION TECHNOLOGY (SHANGHAI) CO., LTD.) 11 October 2019 (2019-10-11) entire document | 1-18 |
| A | US 2004109405 A1 (SAMSUNG ELECTRONICS CO., LTD.) 10 June 2004 (2004-06-10) entire document | 1-18 |
| A | US 2010272157 A1 (ISMAIL LAKKIS) 28 October 2010 (2010-10-28) entire document | 1-18 |
| A | US 2019265947 A1 (STMICROELECTRONICS S.R.L.) 29 August 2019 (2019-08-29) entire document | 1-18 |
| A | US 2021278521 A1 (QUALCOMM INC.) 09 September 2021 (2021-09-09) entire document | 1-18 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2024** | **10 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116120**

| Patent document cited in search report | | | Publication date (day/month/year) | Patent family member(s) | | | Publication date (day/month/year) |
|---|---|---|---|---|---|---|---|
| US | 2010309958 | A1 | 09 December 2010 | US | 2014314126 | A1 | 23 October 2014 |
| CN | 110324045 | A | 11 October 2019 | None | | | |
| US | 2004109405 | A1 | 10 June 2004 | KR | 20040048547 | A | 10 June 2004 |
| US | 2010272157 | A1 | 28 October 2010 | US | 2014348212 | A1 | 27 November 2014 |
| US | 2019265947 | A1 | 29 August 2019 | EP | 3531560 | A1 | 28 August 2019 |
| | | | | CN | 110187918 | A | 30 August 2019 |
| US | 2021278521 | A1 | 09 September 2021 | None | | | |

Form PCT/ISA/210 (patent family annex) (July 2022)

**EP 4 769 994 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311243077